# EUROPÄISCHE PATENTSCHRIFT

(11) **EP 2 886 627 B1**
(45) Veröffentlichungstag und Bekanntmachung des Hinweises auf die Patenterteilung: **15.05.2019**
(21) Anmeldenummer: 14004008.0
(22) Anmeldetag: 27.11.2014
(51) Int. Cl.: C09K 19/30, C09K 19/32, C09K 19/56, C09K 19/04, C09K 19/12

(54) **Flüssigkristallines Medium**
Liquid crystalline medium
Milieu cristallin liquide

(30) Priorität: 19.12.2013 DE 102013021683
(43) Veröffentlichungstag der Anmeldung: 24.06.2015
(73) Patentinhaber: Merck Patent GmbH, 64293 Darmstadt (DE)
(72) Erfinder: Hirschmann, Harald, 64291 Darmstadt (DE); Bauer, Monika, 63500 Seligenstadt (DE); Windhorst, Martina, 64839 Muenster (DE); Reuter, Marcus, 64295 Darmstadt (DE); Reiffenrath, Volker, 64380 Rossdorf (DE); Bremer, Matthias, 64295 Darmstadt (DE)

(56) Entgegenhaltungen:
- EP-A1- 2 319 898
- EP-A1- 2 380 947
- WO-A2-02/093244
- DE-A1- 10 241 301
- JP-A- H0 952 852
- US-A1- 2011 272 630

## Beschreibung

Die Erfindung betrifft ein flüssigkristallines Medium, welches mindestens eine Verbindung der Formel I-6, 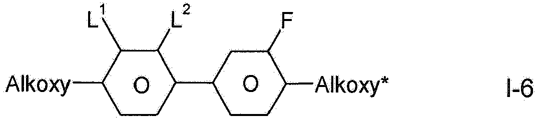 worin
- Alkoxy und Alkoxy*: jeweils unabhängig voneinander einen geradkettigen Alkoxyrest mit 1-6 C-Atomen, und
- L¹ und L²: jeweils unabhängig voneinander F oder Cl
bedeuten,
und 20-50 Gew.% der Verbindung der Formel 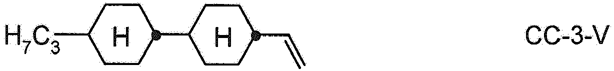 enthält.

Derartige Medien sind insbesondere für elektrooptische Anzeigen mit einer Aktivmatrix-Adressierung basierend auf dem ECB-Effekt sowie für IPS-Anzeigen (In plane switching) oder FFS-Anzeigen (Fringe Field Switching) zu verwenden.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homeotrope Randorientierung auf (VA-Technologie = Vertical Aligned). Auch bei Anzeigen, die den sogenannten IPS- oder FFS-Effekt verwenden, können dielektrisch negative Flüssigkristallmedien zum Einsatz kommen.

Anzeigen, die den ECB-Effekt verwenden, haben sich als sogenannte VAN- (Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden.

Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Es besteht somit immer noch ein großer Bedarf nach MFK-Anzeigen mit schnellen Schaltzeiten bei gleichzeitig großem Arbeitstemperaturbereich, und niedriger Schwellenspannung, mit deren Hilfe verschiedene Graustufen erzeugt werden können.

Der Nachteil der häufig verwendeten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Wesentlich bessere Blickwinkelabhängigkeiten weisen VA-Displays auf und werden daher hauptsächlich für Fernseher und Monitore verwendet. Hier besteht jedoch weiterhin der Bedarf die Schaltzeiten zu verbessern, insbesondere im Hinblick auf die Verwendung für Fernseher mit "Frame Rates" (Bildwechselfrequenz/Wiederholraten) von mehr als 60 Hz. Dabei dürfen allerdings die Eigenschaften, wie beispielsweise die Tieftemperaturstabilität nicht verschlechtert werden.

JP H09 52852 A, EP 2 380 947, EP 2 319 898 A1 und US 2011/272630 A1 offenbaren nematische Flüssigkristallmedien und DE 102 41 3901 A1 und WO 02/093244 richten sich auf Medien mit einer isotropen, blauen Phase.

Der Erfindung liegt die Aufgabe zugrunde, Flüssigkristall-Mischungen, insbesondere für Monitor- und TV-Anwendungen, welche auf dem ECB- oder auf dem IPS- oder FFS-Effekt beruhen, bereitzustellen, die die oben angegebenen Nachteile nicht oder nur in geringerem Maße aufweisen. Insbesondere muss für Monitore und Fernseher gewährleistet sein, dass diese auch bei extrem hohen und extrem niedrigen Temperaturen arbeiten und gleichzeitig sehr niedrige Schaltzeiten aufweisen und gleichzeitig ein verbessertes Reliability-Verhalten, insbesondere kein oder ein deutlich verringertes Image-Sticking nach langen Laufzeiten aufweisen.

Überraschenderweise ist es möglich das Verhältnis aus Rotationsviskositäten γ1 und den elastischen Konstanten zu verringern damit die Schaltzeiten zu verbessern, wenn man polare Verbindungen der allgemeinen Formel I-6 in Flüssigkristallmischungen verwendet, insbesondere in LC-Mischungen mit negativer dielektrischer Anisotropie, vorzugsweise für VA-, IPS- und FFS-Displays, ferner für PM (passive matrix)-VA-Displays.

Die Verbindungen der Formel I-6 weisen überraschenderweise gleichzeitig sehr niedrige Rotationsviskositäten und hohe Absolutwerte der dielektrischen Anisotropie auf. Daher können Flüssigkristallmischungen, vorzugsweise VA-, IPS- und FFS-Mischungen, hergestellt werden, die niedrige Schaltzeiten, gleichzeitig gute Phaseneigenschaften und ein gutes Tieftemperaturverhalten aufweisen.

Gegenstand der Erfindung ist somit ein flüssigkristallines Medium, welches mindestens eine Verbindung der Formel I-6 enthält.

Die erfindungsgemäßen Mischungen zeigen vorzugsweise sehr breite nematische Phasenbereiche mit Klärpunkten ≥ 68 °C, vorzugsweise ≥ 70 °C, sehr günstige Werte für die kapazitive Schwelle, relativ hohe Werte für die Holding Ratio und gleichzeitig sehr gute Tieftemperaturstabilitäten bei -20 °C und -30 °C sowie niedrige Rotationsviskositäten und kurze Schaltzeiten. Die erfindungsgemäßen Mischungen zeichnen sich weiterhin dadurch aus, dass zusätzlich zur Verbesserung der Rotationsviskosität γ1, relativ hohe Werte der elastischen Konstanten K₃₃ zur Verbesserung der Schaltzeiten zu beobachten sind.

Einige bevorzugte Ausführungsformen der erfindungsgemäßen Mischungen werden im Folgenden genannt.

In den Verbindungen der Formel I-6 bedeuten die Endgruppen jeweils unabhängig voneinander vorzugsweise geradkettiges Alkoxy, insbesondere OC₂H₅, OC₃H₇, OC₄H₉, OC₅H₁₁ oder OC₆H₁₃ und insbesondere Ethoxy, Butoxy, Pentoxy oder Hexoxy.

Bevorzugte eingesetzte weitere Verbindungen sind die Verbindungen der Formeln I-1 bis I-5 und I-7 bis I-11, 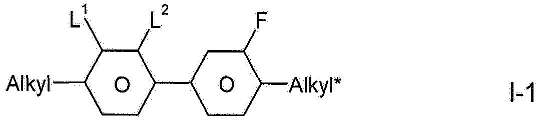 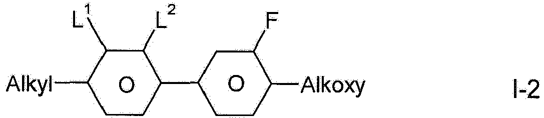 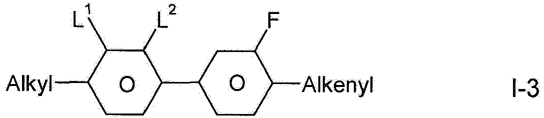 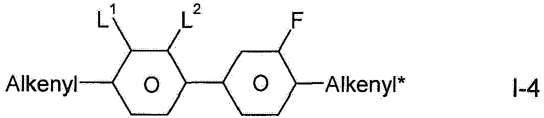 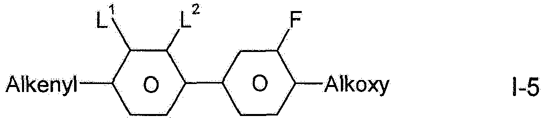 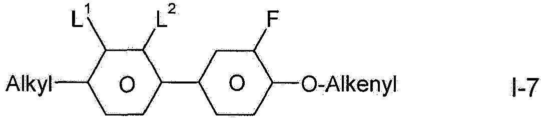 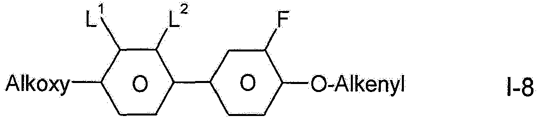 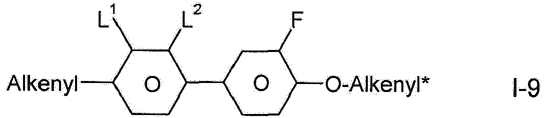 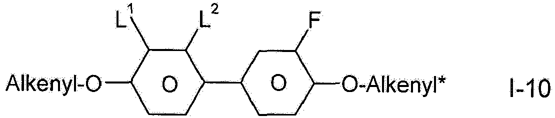 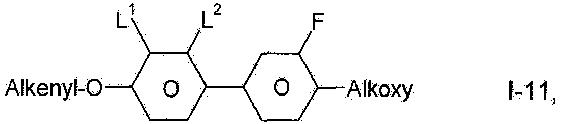 worin
Alkyl und Alkyl* jeweils unabhängig voneinander einen geradkettigen Alkylrest mit 1-6 C-Atomen, Alkenyl und Alkenyl* jeweils unabhängig voneinander einen geradkettigen Alkenylrest mit 2-6 C-Atomen, Alkoxy und Alkoxy* jeweils unabhängig voneinander einen geradkettigen Alkoxyrest mit 1-6 C-Atomen, und L¹ und L² jeweils unabhängig voneinander F oder Cl bedeuten.

In den Verbindungen der Formeln I-1 bis I-11 bedeuten L¹ und L² jeweils unabhängig voneinander vorzugsweise F oder Cl, insbesondere F. Besonders bevorzugt sind die Verbindungen der Formeln I-6, I-8 und I-11. Vorzugsweise bedeutet in der Formel I-6 L¹ = L² = F.

Ganz besonders bevorzugt enthält die erfindungsgemäße Mischung mindestens eine Verbindung der Formel I-2A, I-6A oder I-6B:

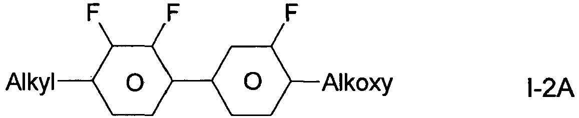

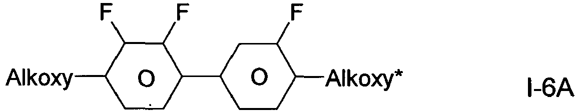

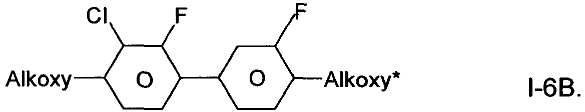

Ganz besonders bevorzugt enthalten die erfindungsgemäßen Mischungen mindestens eine Verbindung aus der folgenden Gruppe:

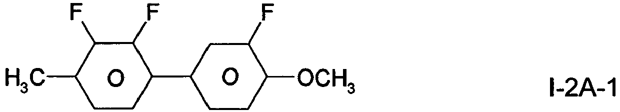

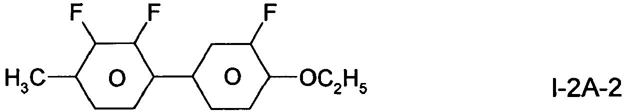

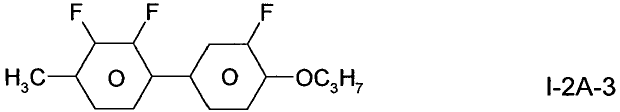

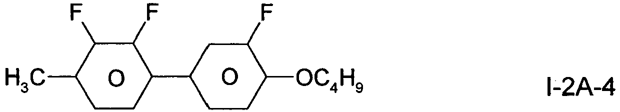

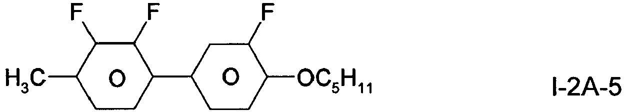

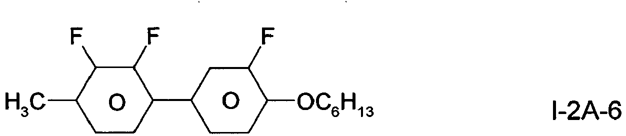

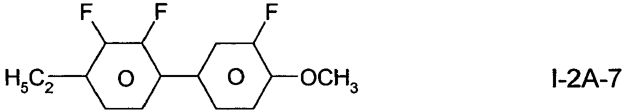

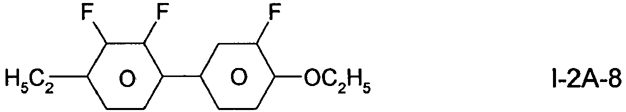

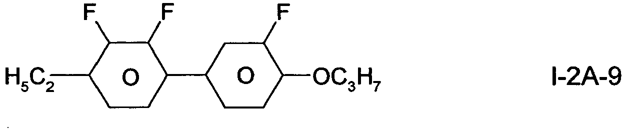

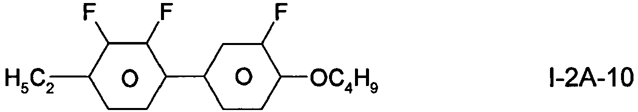

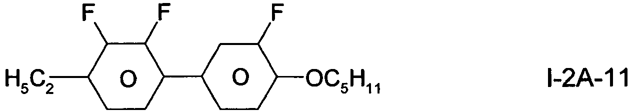

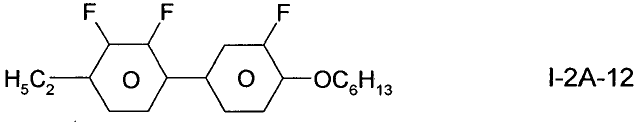

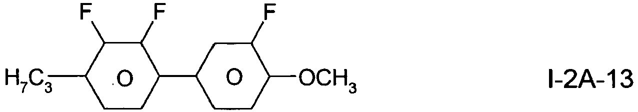

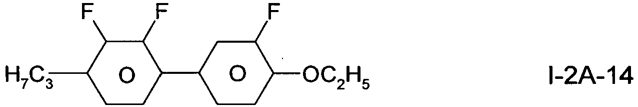

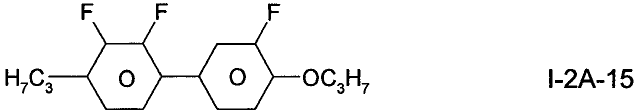

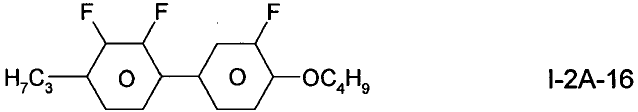

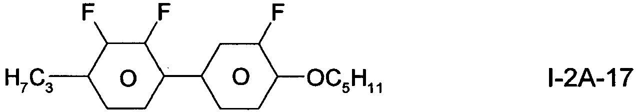

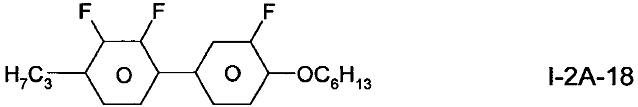

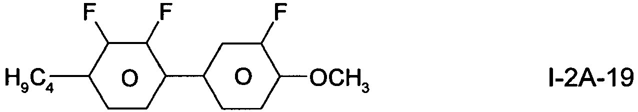

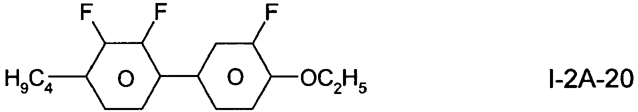

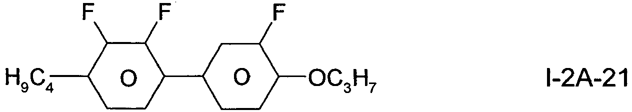

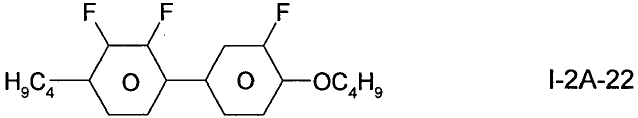

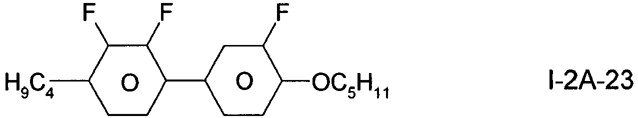

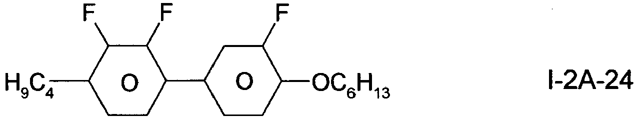

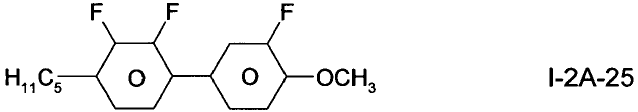

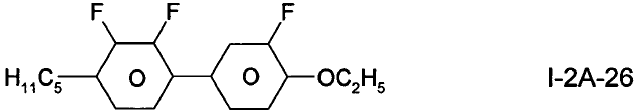

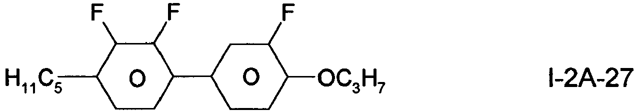

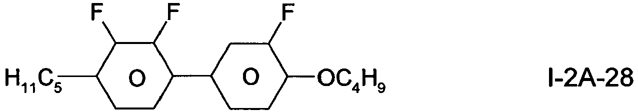

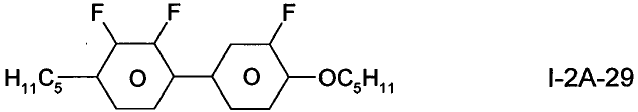

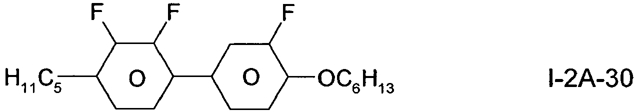

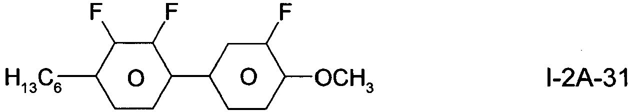

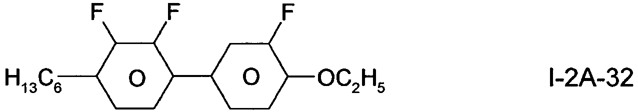

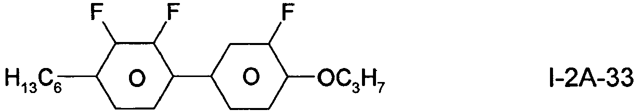

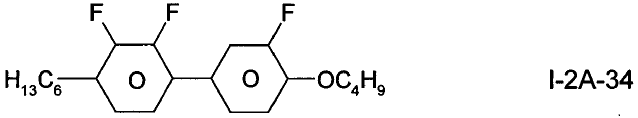

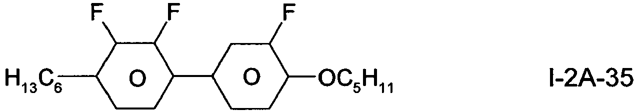

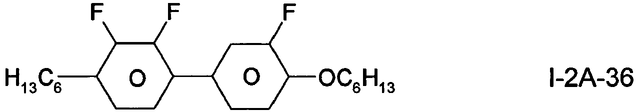

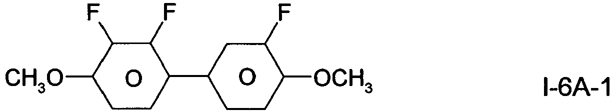

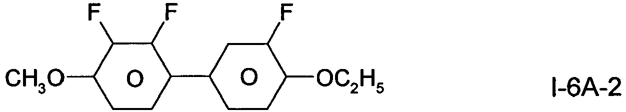

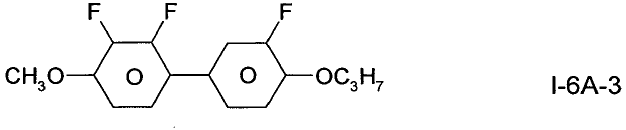

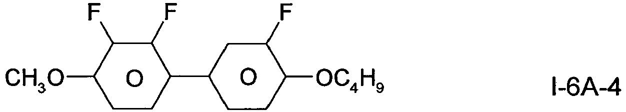

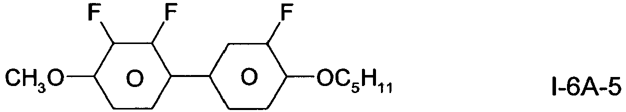

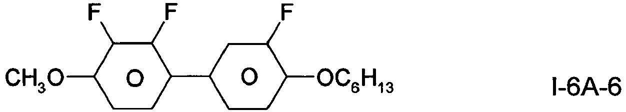

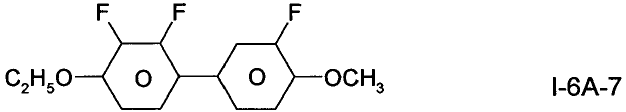

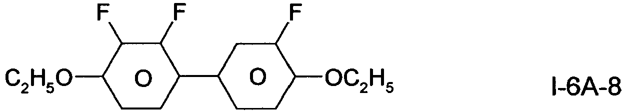

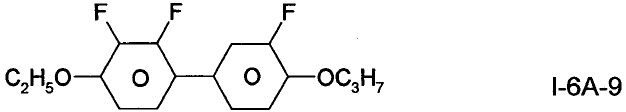

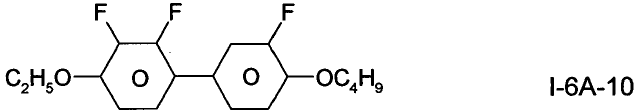

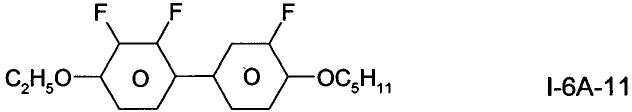

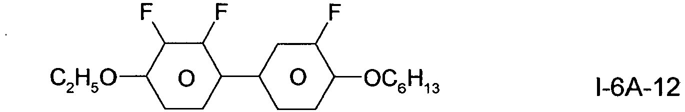

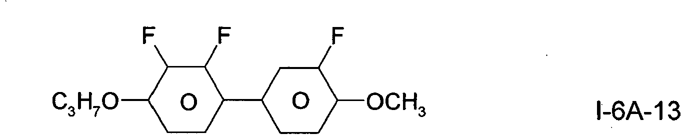

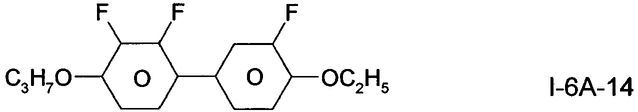

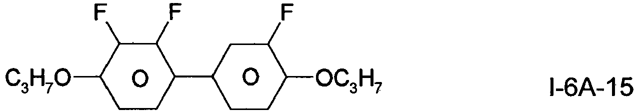

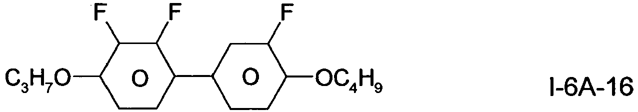

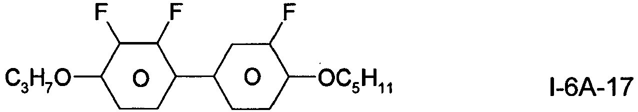

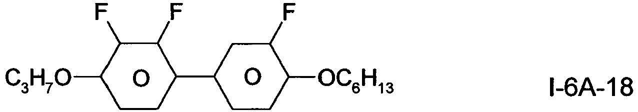

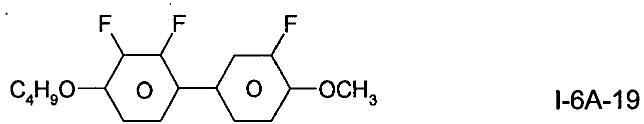

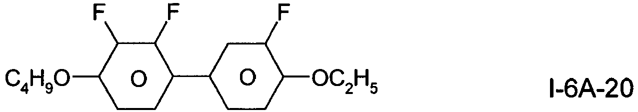

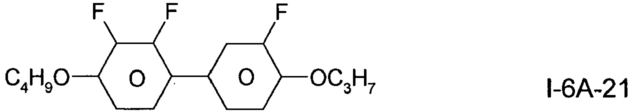

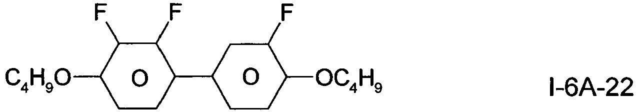

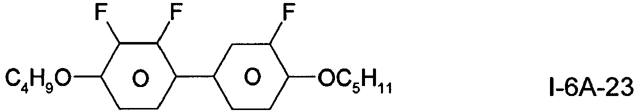

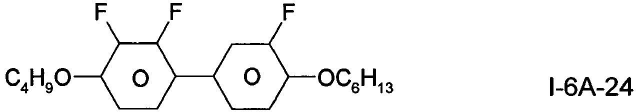

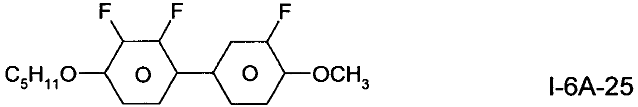

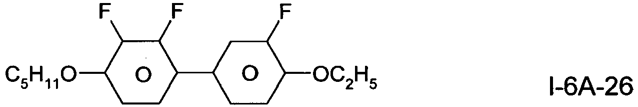

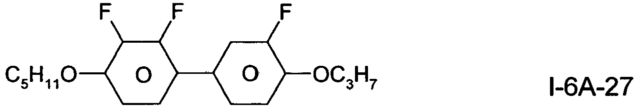

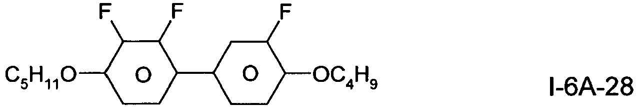

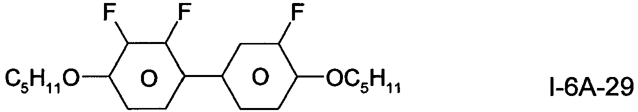

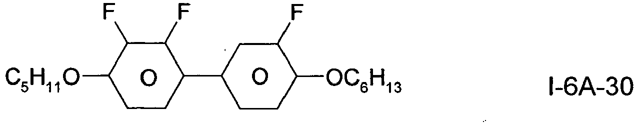

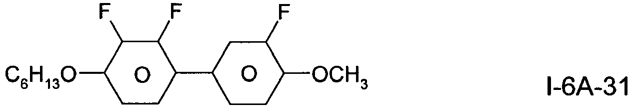

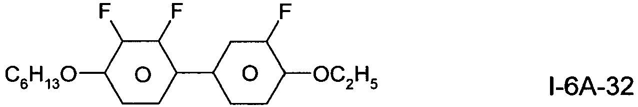

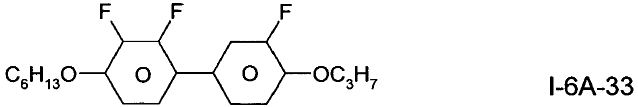

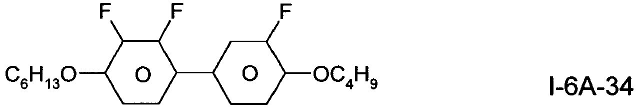

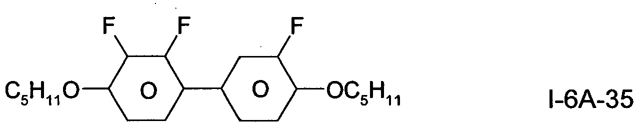

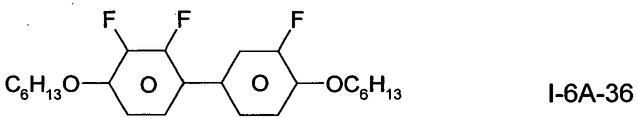

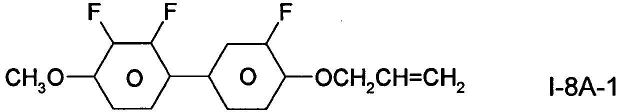

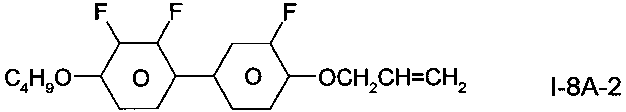

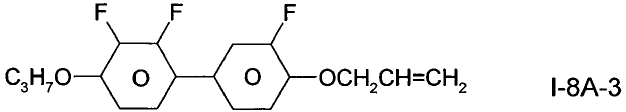

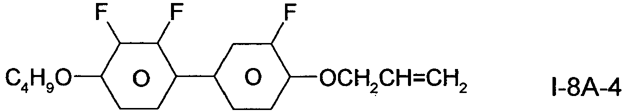

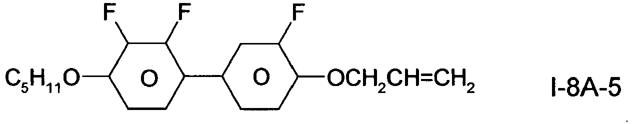

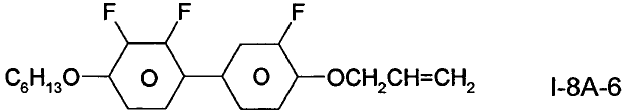

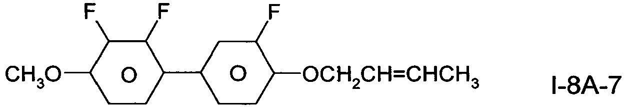

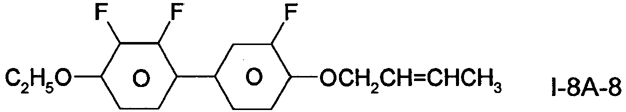

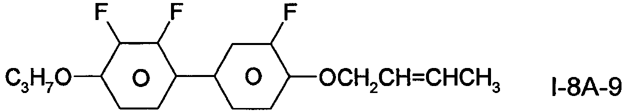

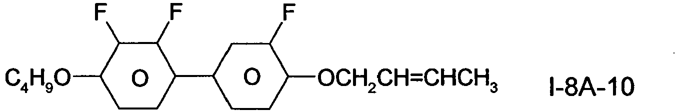

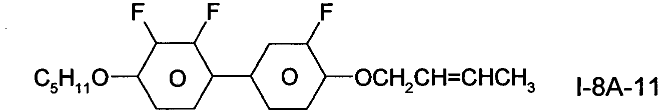

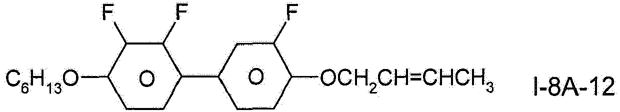

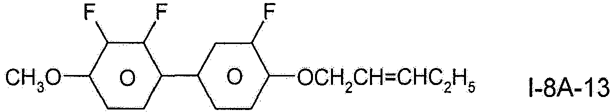

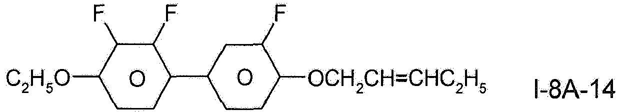

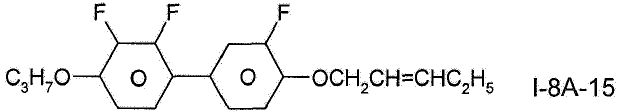

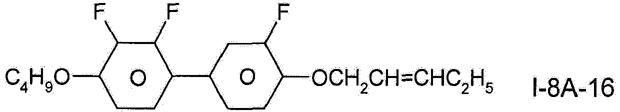

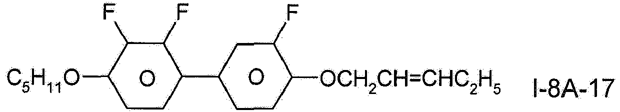

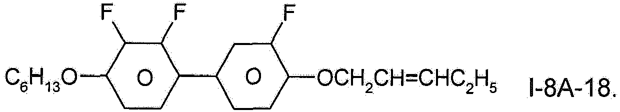

In den Verbindungen der Formel I-1 bis I-11 und den Unterformeln bedeuten L¹ und L² jeweils unabhängig voneinander vorzugsweise F oder Cl, insbesondere F. R¹ und R^{1*} bedeuten vorzugsweise beide Alkoxy.

Bevorzugte verwendete Verbindungen sind weiterhin die Verbindungen der Formeln I-12 bis I-21, wobei L⁴ = H ist, 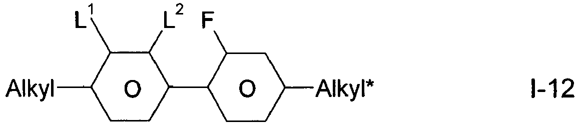 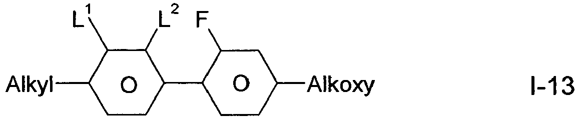 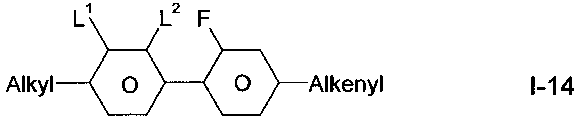 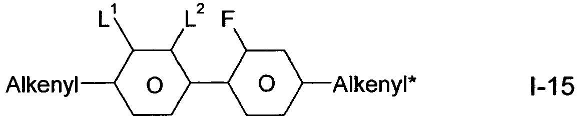 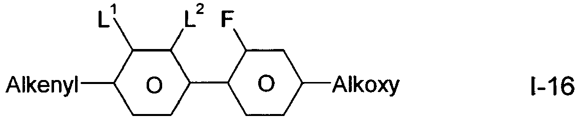 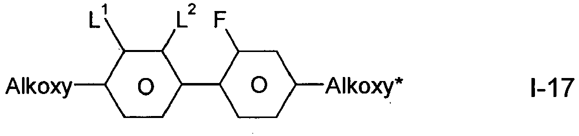 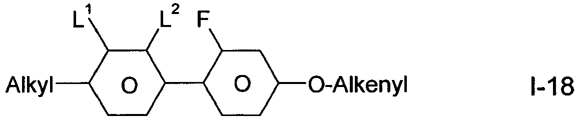 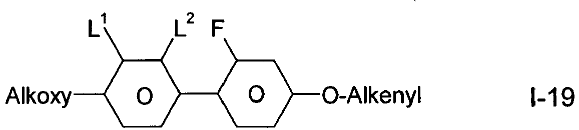 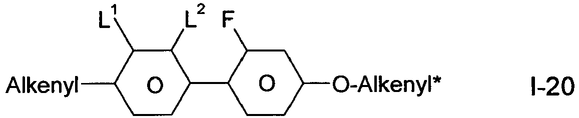 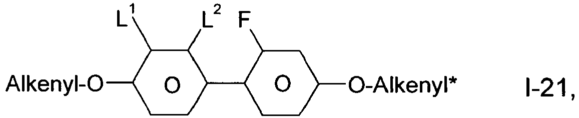 worin
Alkyl und Alkyl* jeweils unabhängig voneinander einen geradkettigen Alkylrest mit 1-6 C-Atomen, Alkenyl und Alkenyl* jeweils unabhängig voneinander einen geradkettigen Alkenylrest mit 2-6 C-Atomen, Alkoxy und Alkoxy* jeweils unabhängig voneinander einen geradkettigen Alkoxyrest mit 1-6 C-Atomen, und L¹ und L² jeweils unabhängig voneinander F oder Cl bedeuten.

In den Verbindungen der Formeln I-12 bis I-21 bedeuten L¹ und L² jeweils unabhängig voneinander vorzugsweise F oder Cl, insbesondere F. Besonders bevorzugt sind die Verbindungen der Formel I-17.

Ganz besonders bevorzugt enthält die erfindungsgemäße Mischung mindestens eine Verbindung der Formel I-17A, I-17B oder I-19A:

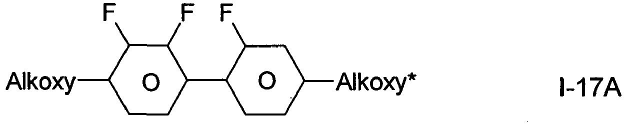

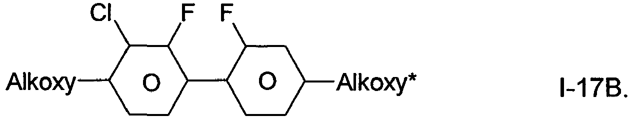

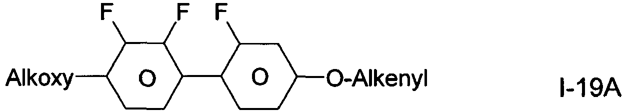

Ganz besonders bevorzugt enthalten die erfindungsgemäßen Mischungen mindestens eine Verbindung aus der folgenden Gruppe:

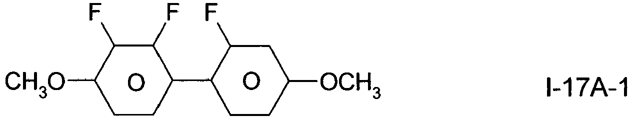

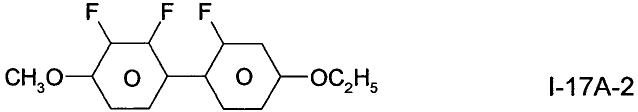

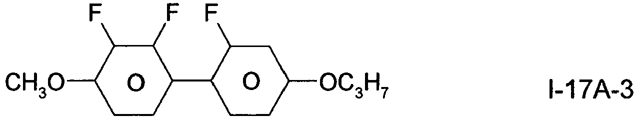

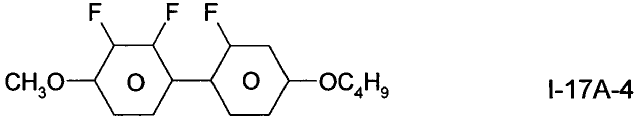

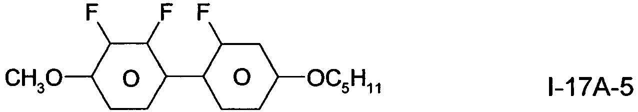

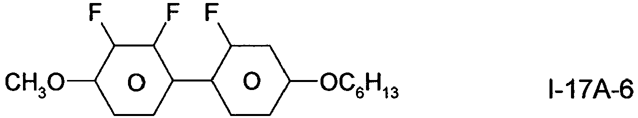

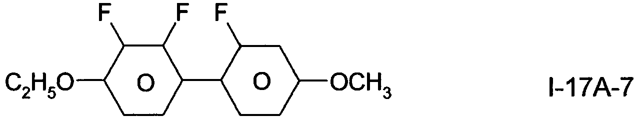

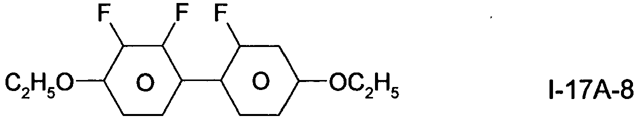

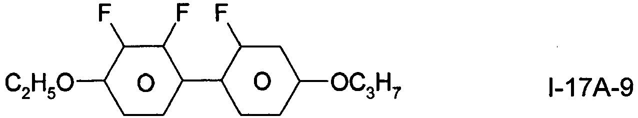

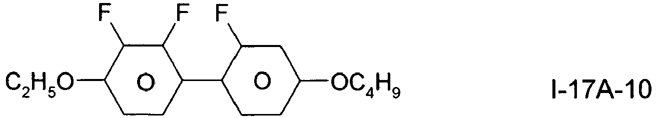

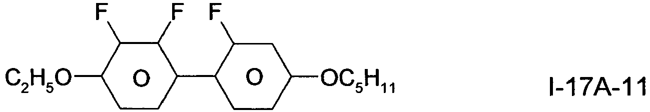

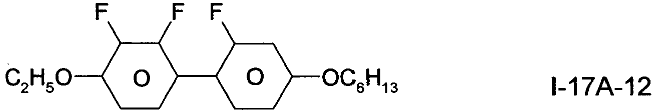

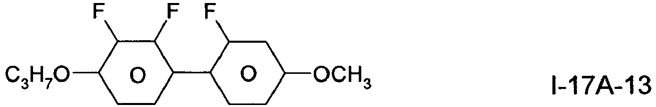

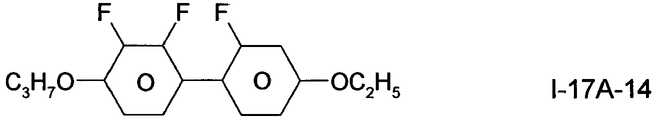

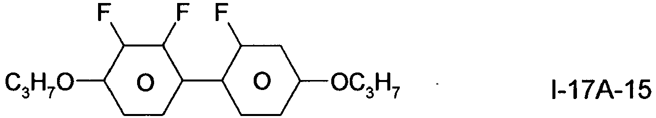

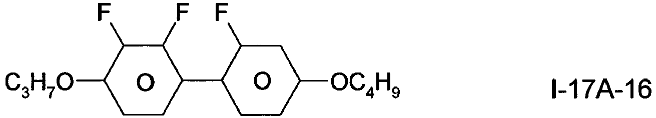

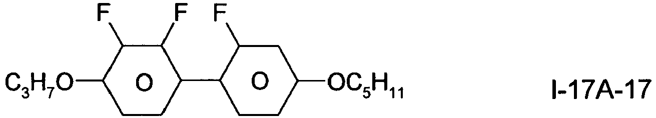

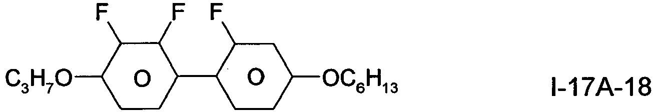

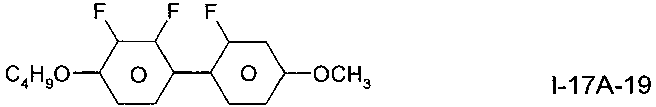

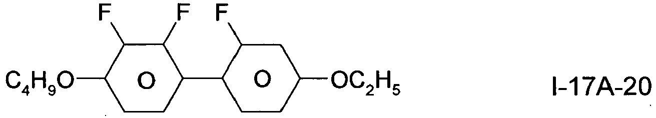

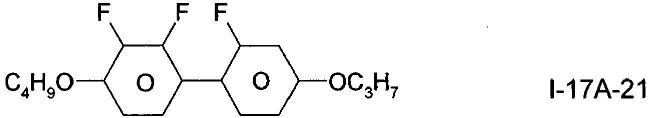

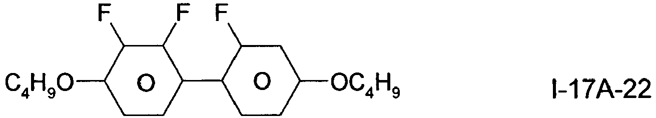

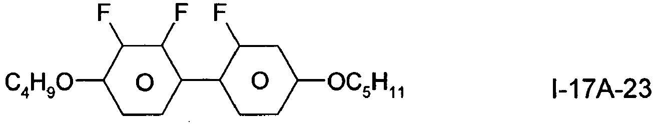

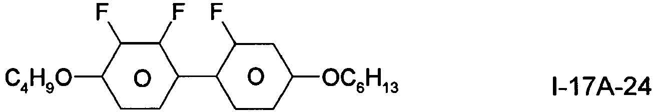

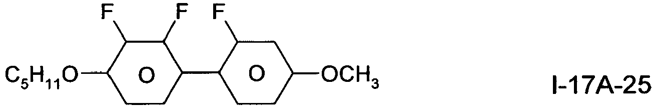

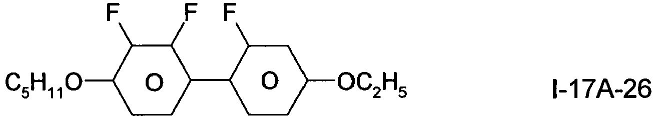

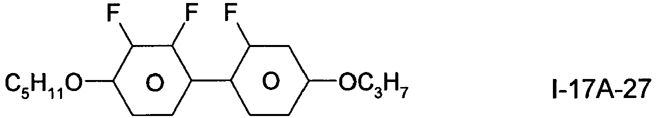

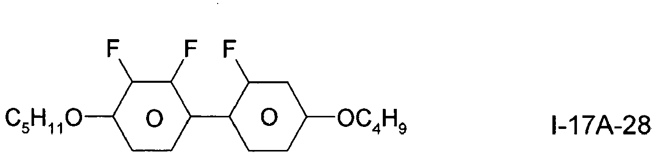

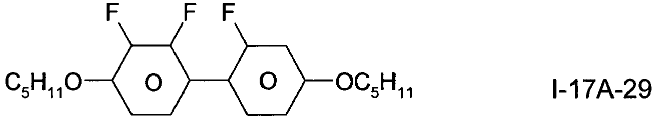

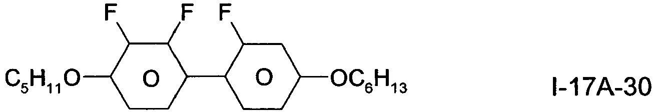

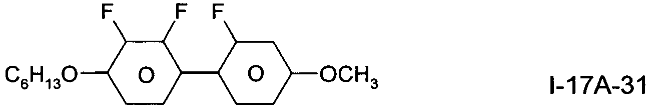

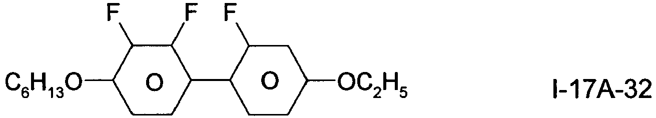

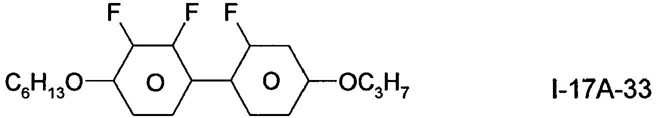

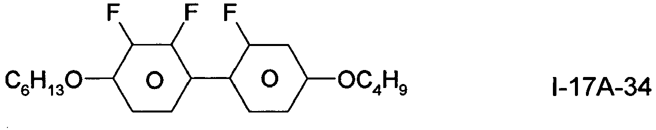

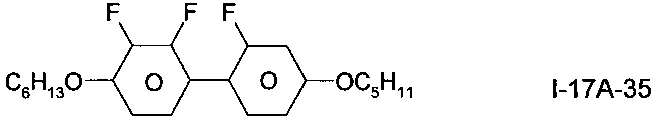

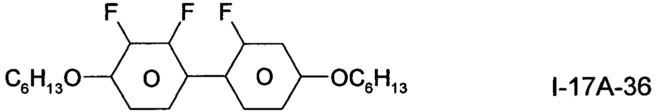

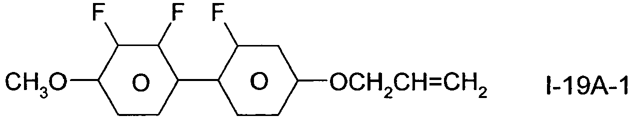

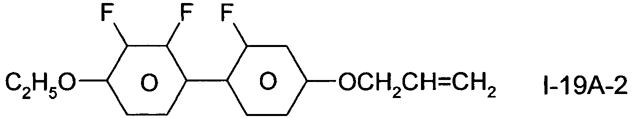

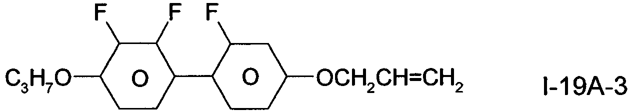

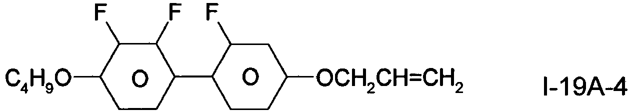

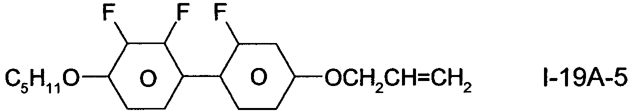

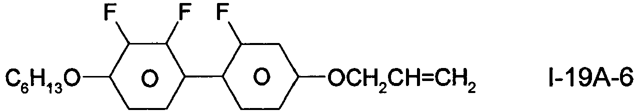

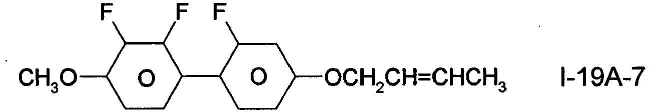

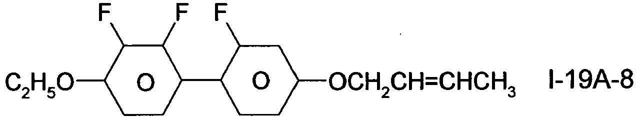

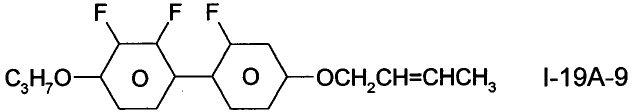

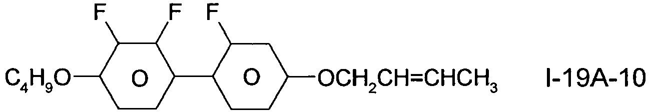

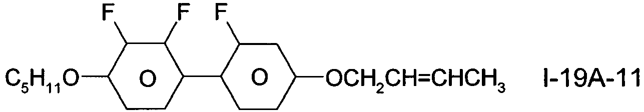

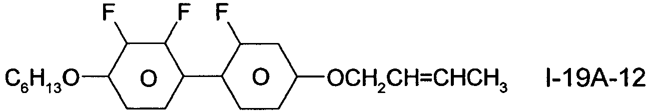

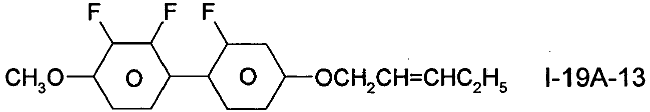

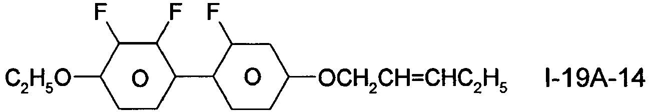

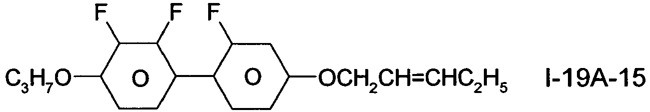

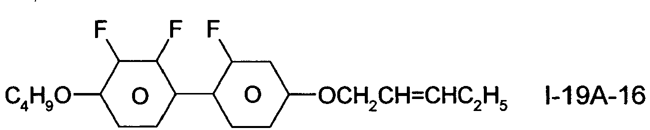

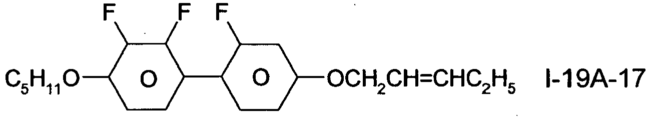

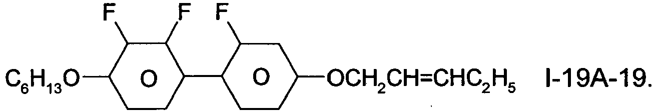

Bevorzugte verwendete Verbindungen sind weiterhin die Verbindungen der Formeln I-22 bis I-31, wobei L³ = L⁴ = F ist, 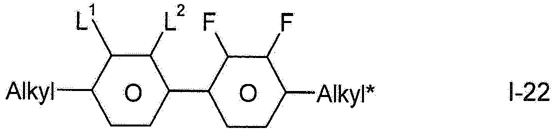 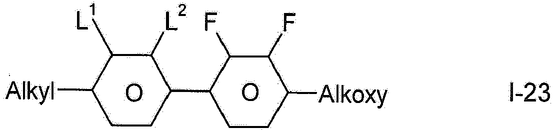 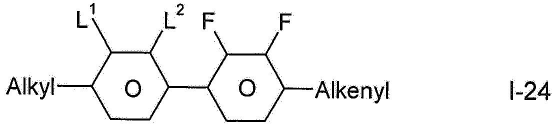 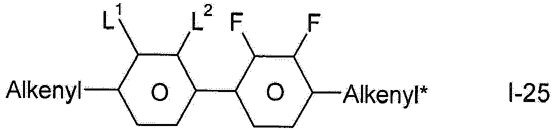 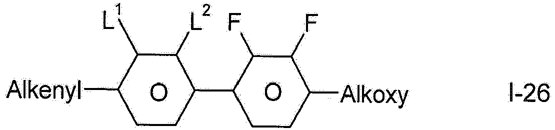 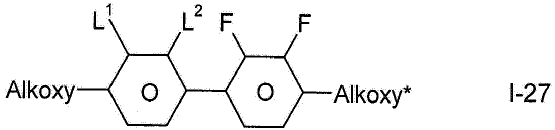 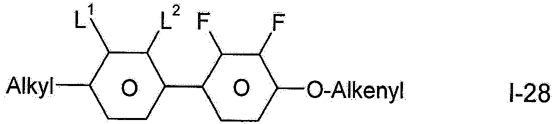 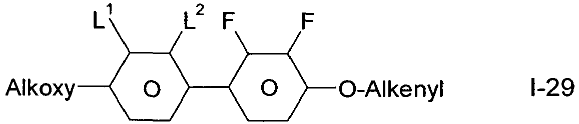 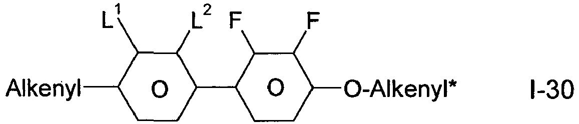 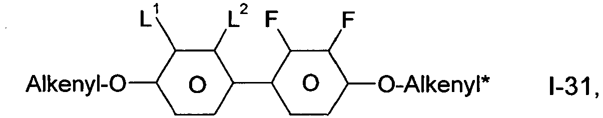 worin
Alkyl und Alkyl* jeweils unabhängig voneinander einen geradkettigen Alkylrest mit 1-6 C-Atomen, Alkenyl und Alkenyl* jeweils unabhängig voneinander einen geradkettigen Alkenylrest mit 2-6 C-Atomen, Alkoxy und Alkoxy* jeweils unabhängig voneinander einen geradkettigen Alkoxyrest mit 1-6 C-Atomen, und L¹ und L² jeweils unabhängig voneinander F oder Cl bedeuten.

In den Verbindungen der Formeln I-22 bis I-31 bedeuten L¹ und L² jeweils unabhängig voneinander vorzugsweise F oder Cl, insbesondere F. Besonders bevorzugt sind die Verbindungen der Formel I-27, I-29 und I-30.

Ganz besonders bevorzugt enthält die erfindungsgemäße Mischung mindestens eine Verbindung der Formel I-27A, I-27B oder I-29A:

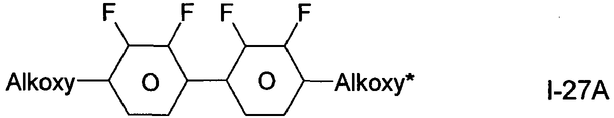

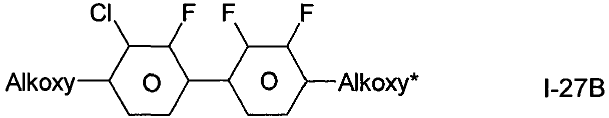

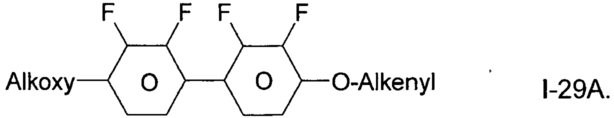

Ganz besonders bevorzugt enthalten die erfindungsgemäßen Mischungen mindestens eine Verbindung aus der folgenden Gruppe:

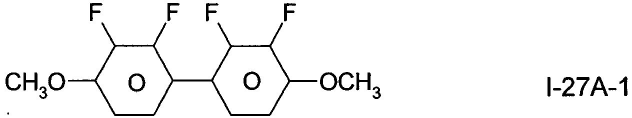

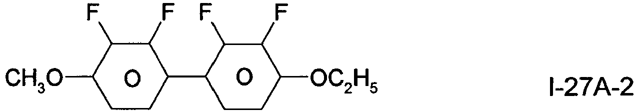

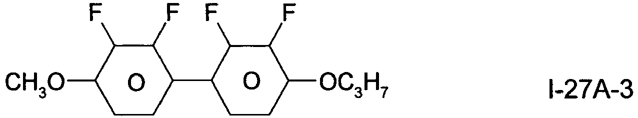

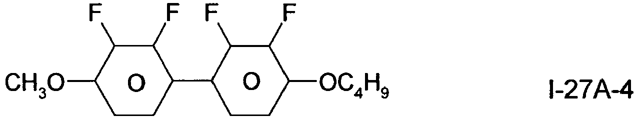

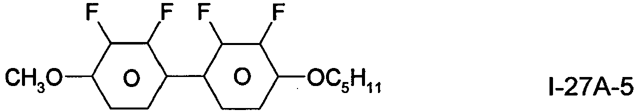

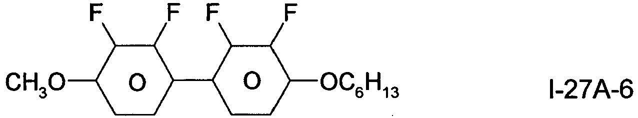

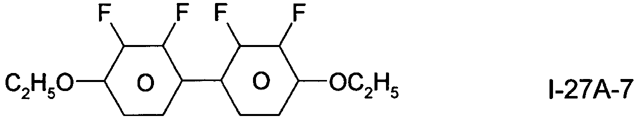

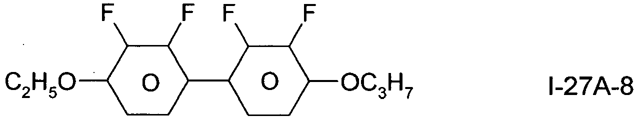

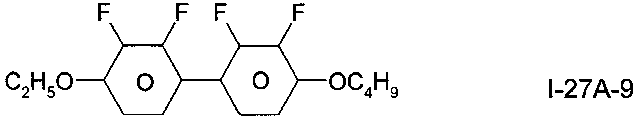

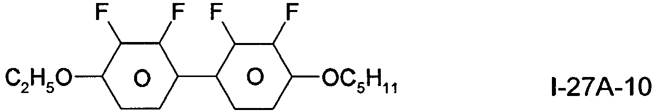

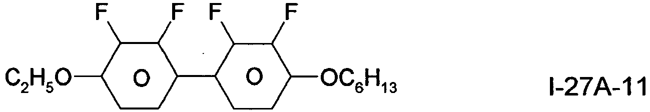

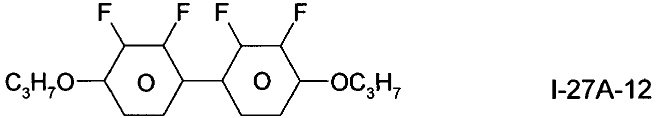

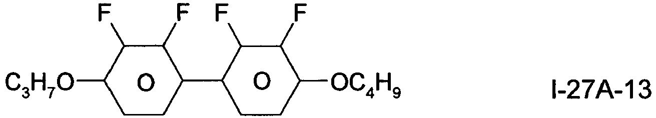

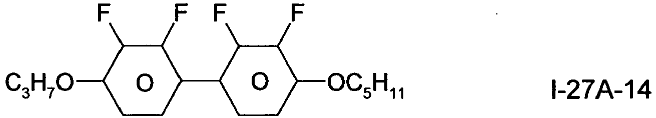

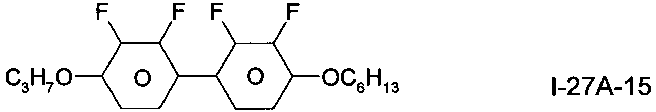

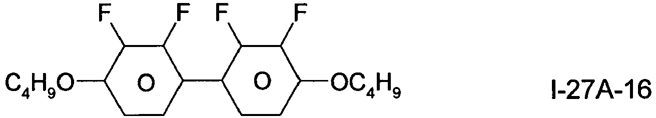

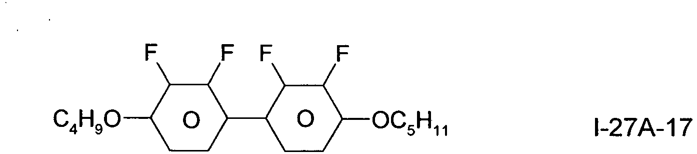

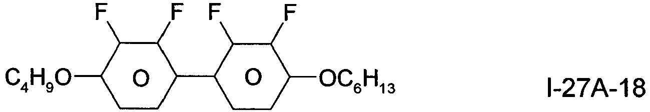

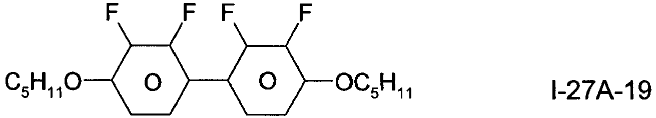

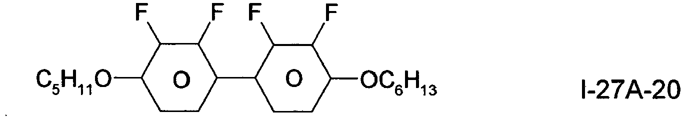

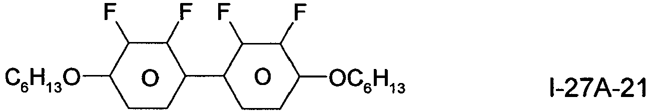

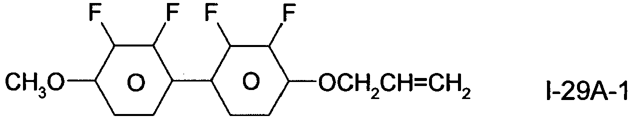

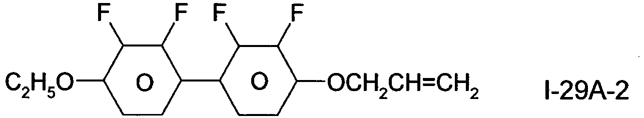

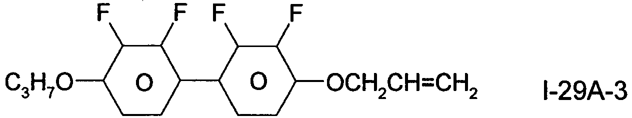

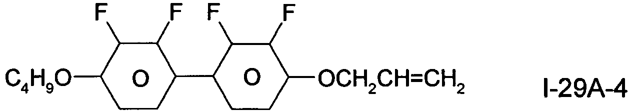

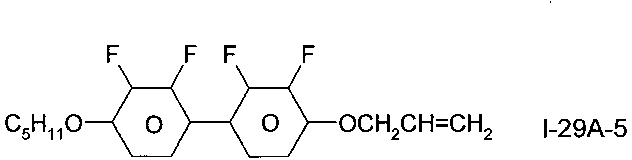

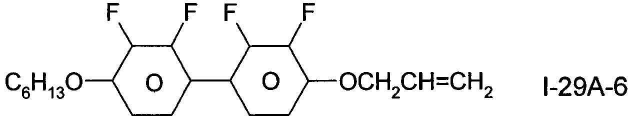

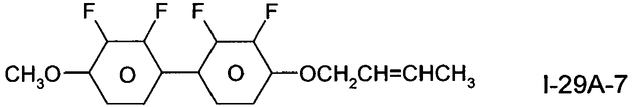

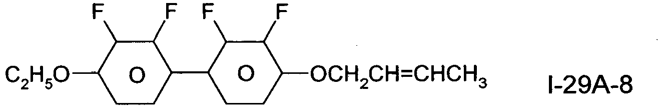

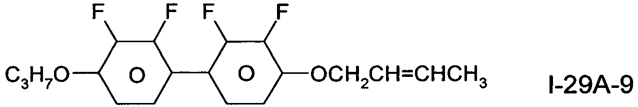

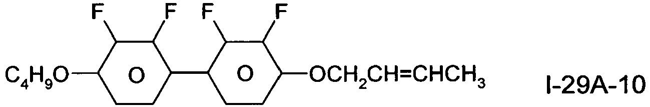

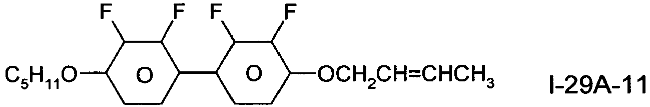

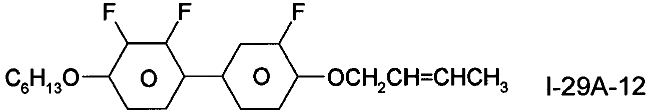

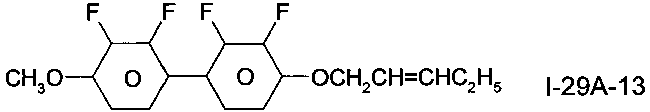

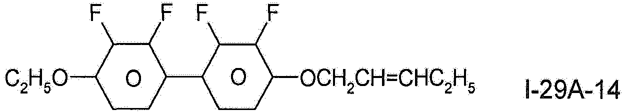

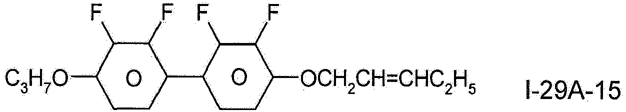

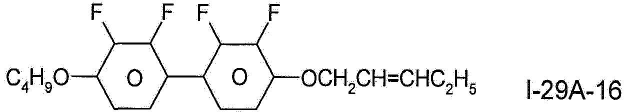

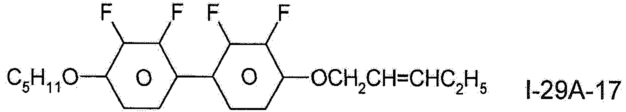

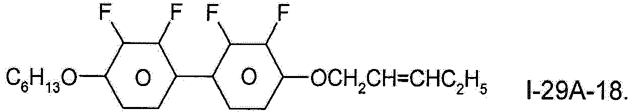

Die Verbindungen der Formeln I-1 bis I-31 können beispielsweise wie folgt hergestellt werden:

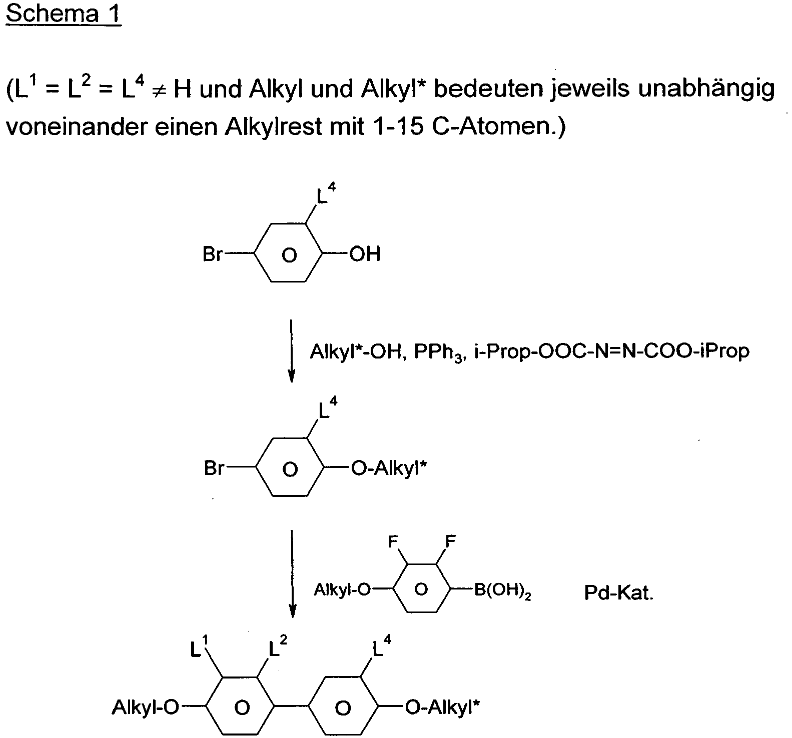

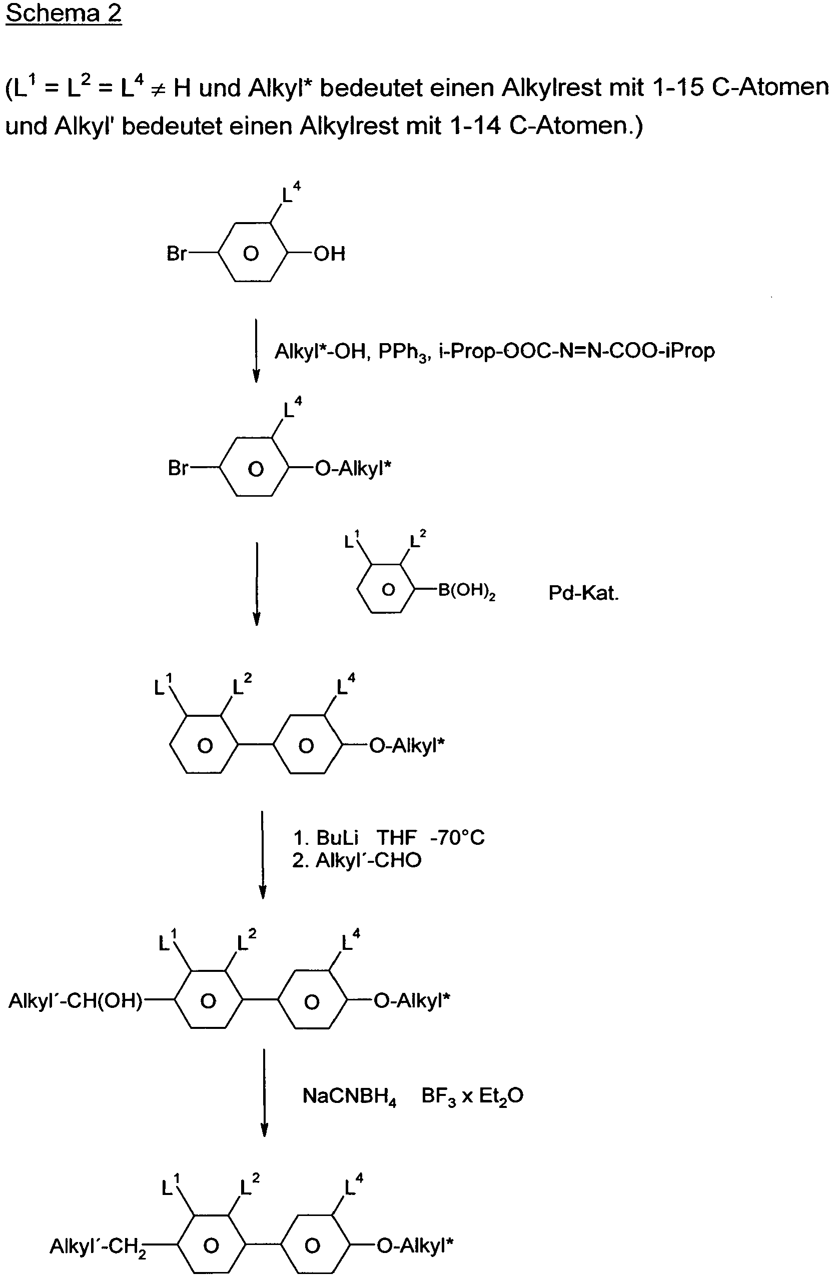

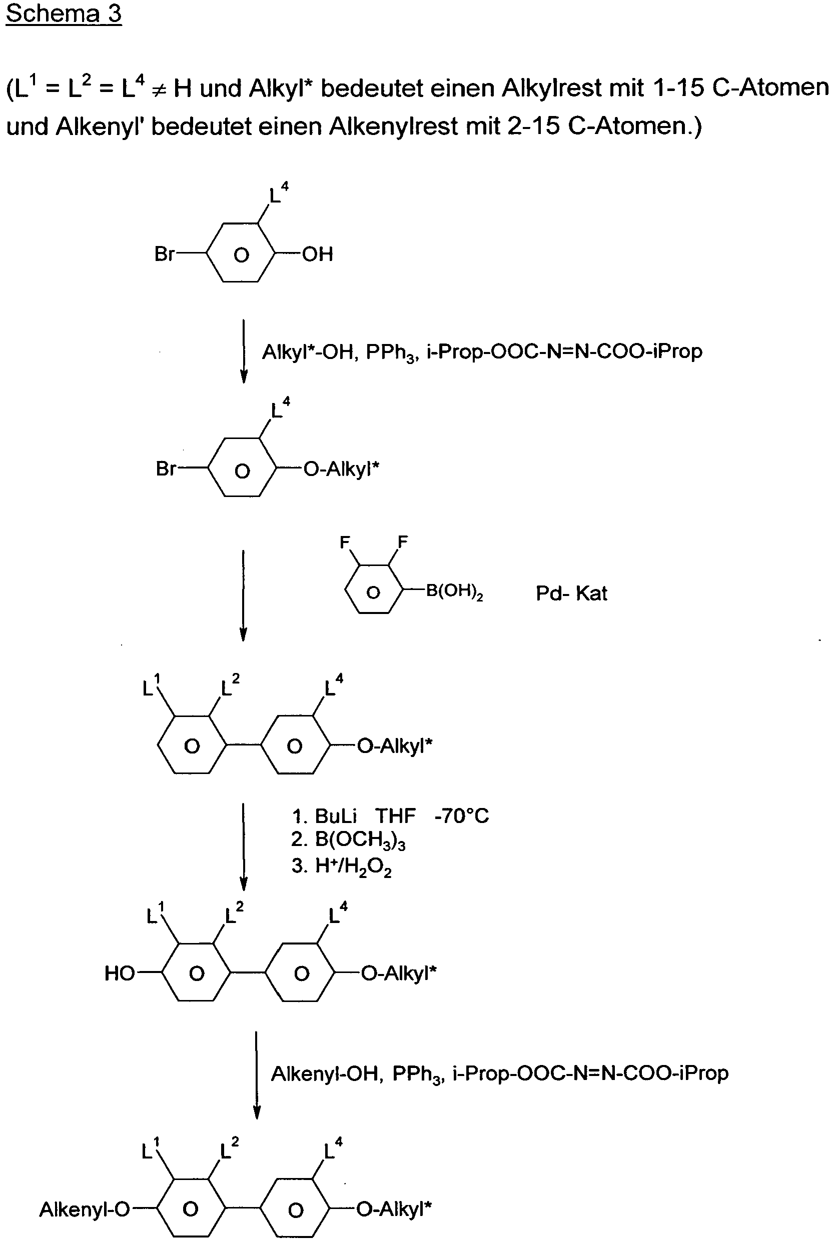

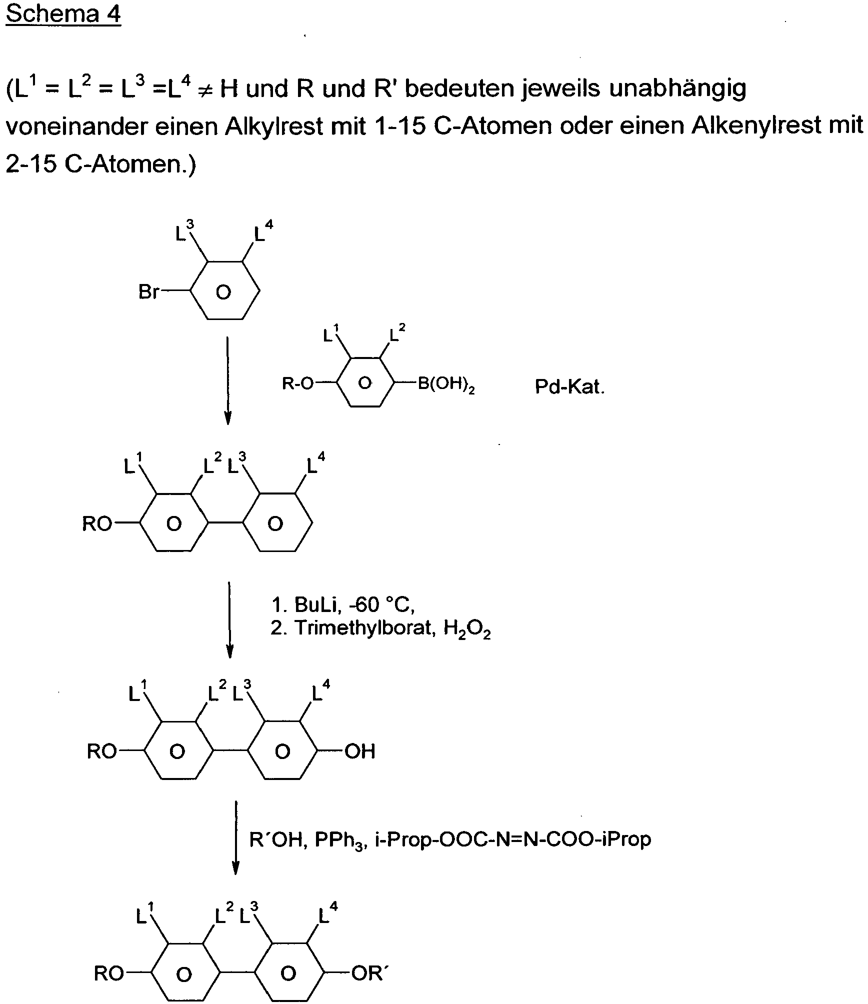

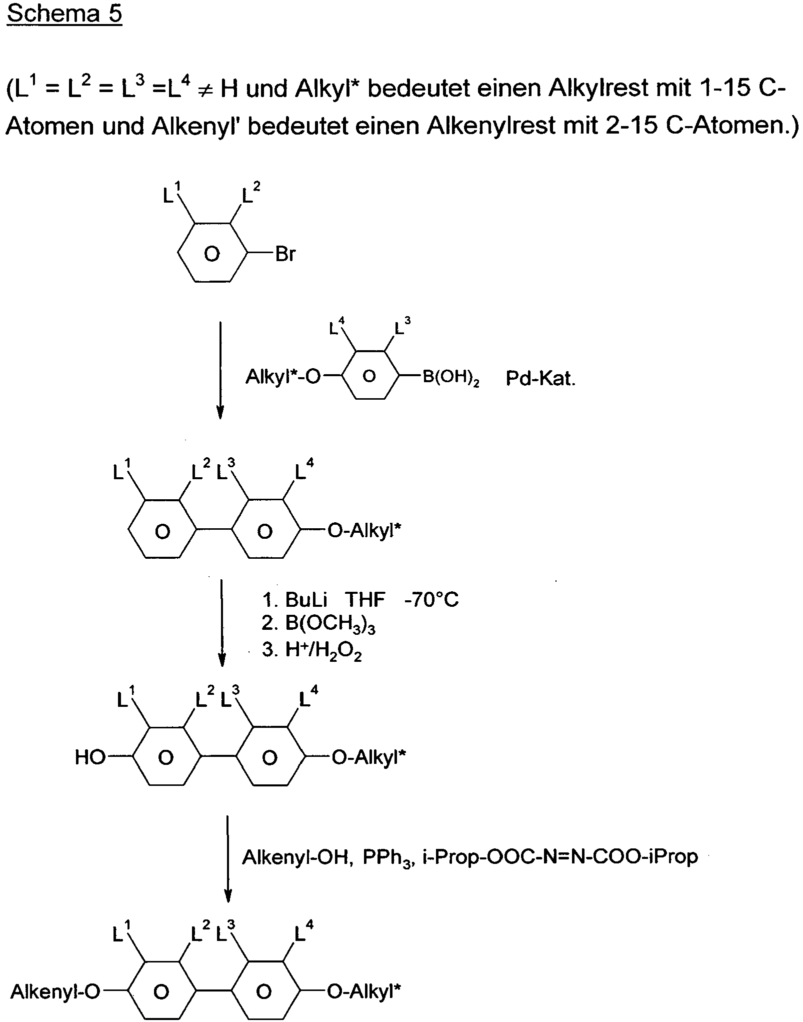

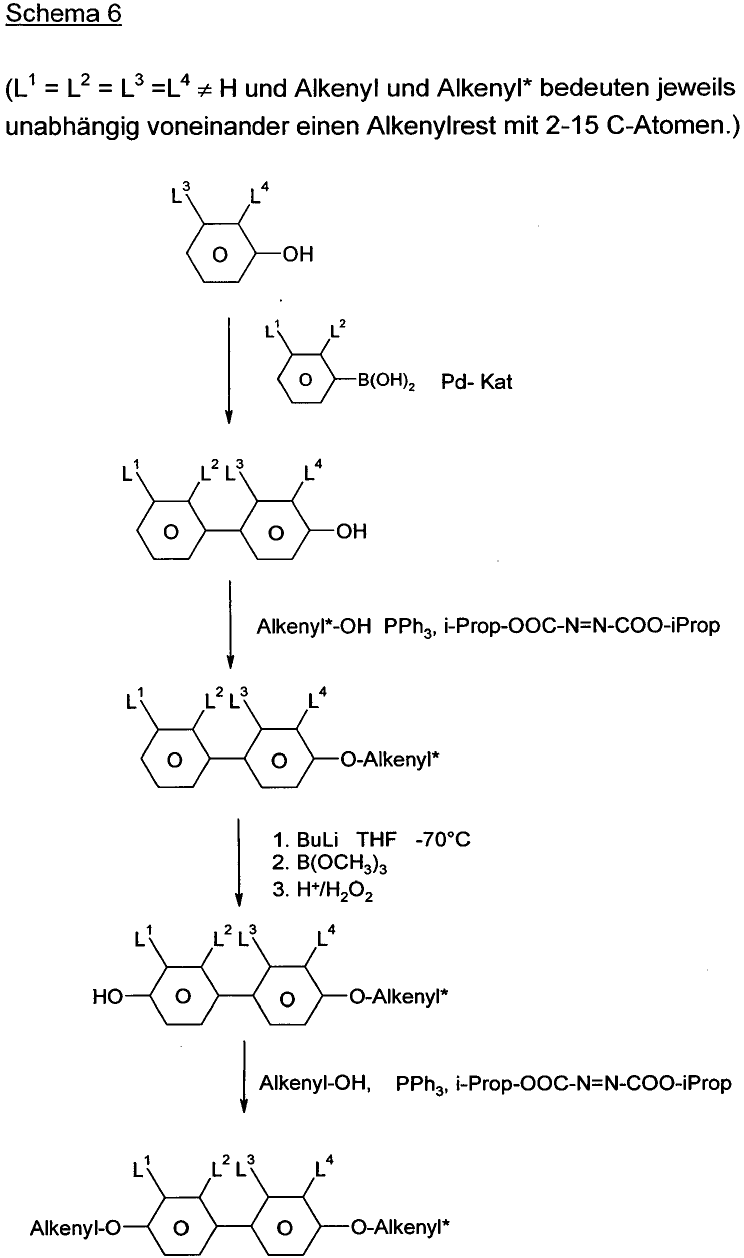

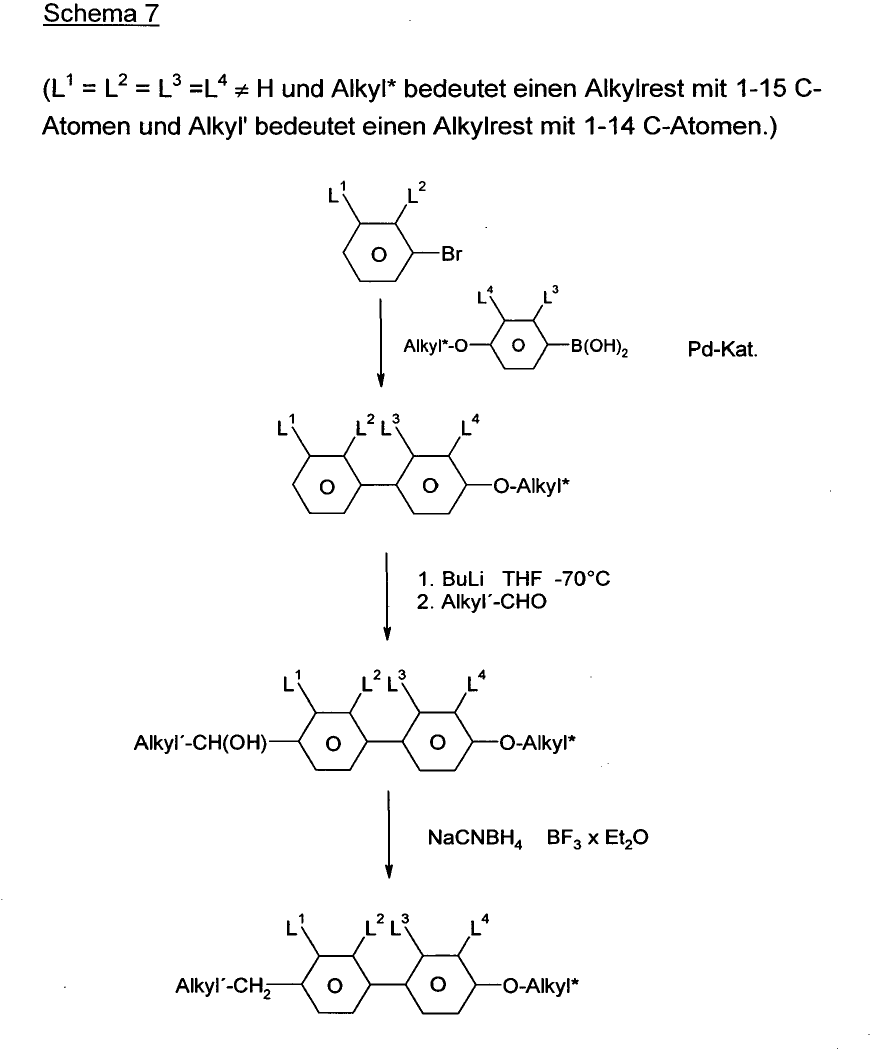

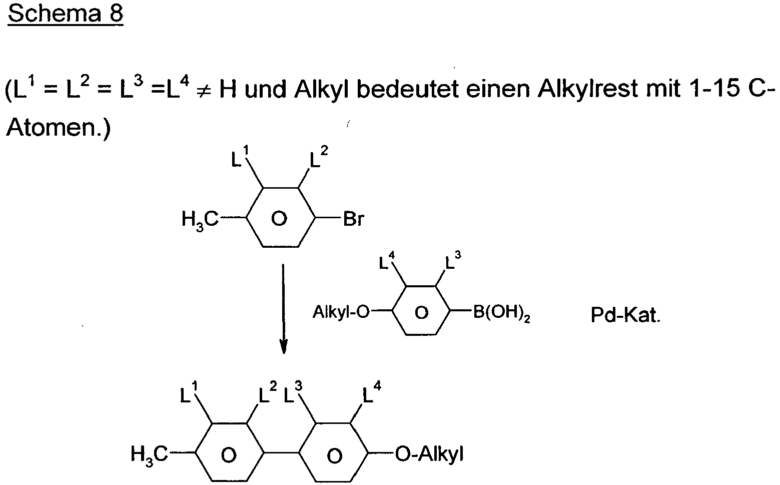

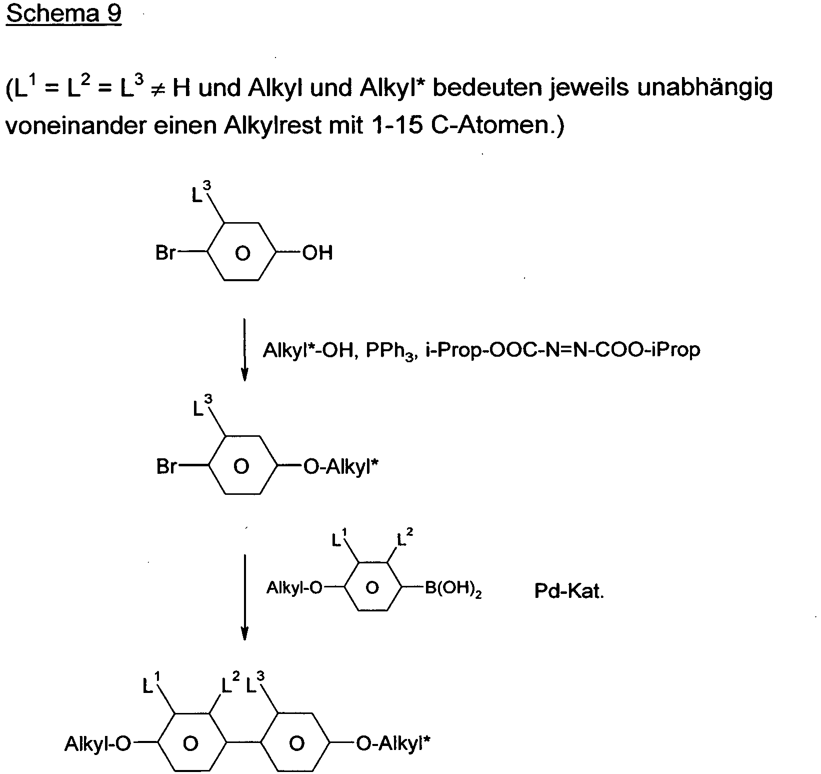

Besonders bevorzugte Verbindungen der Formeln I-1 bis I-31 werden z.B. wie folgt hergestellt:

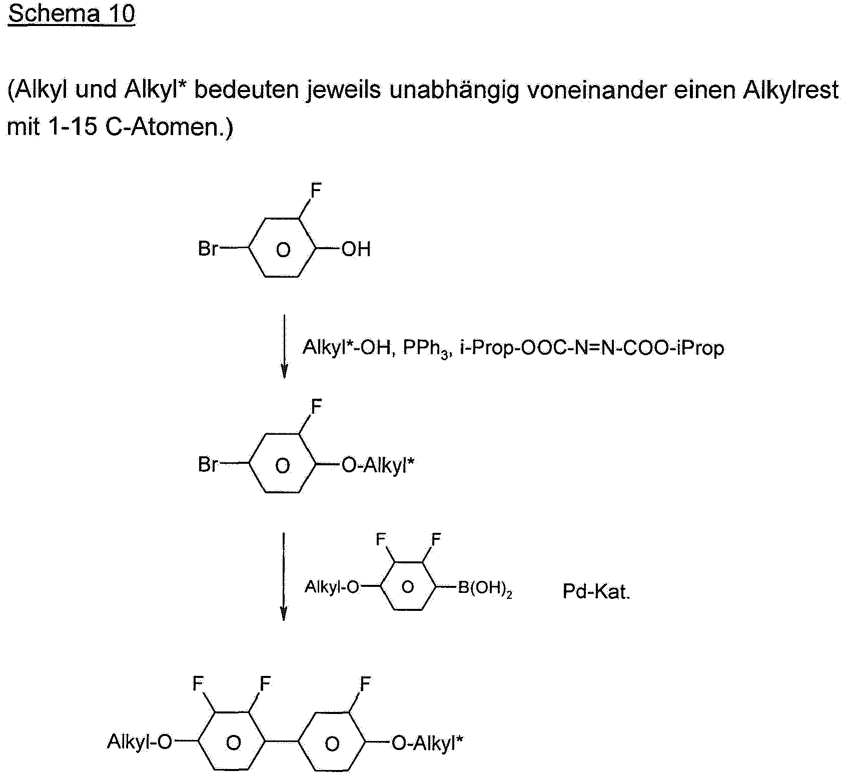

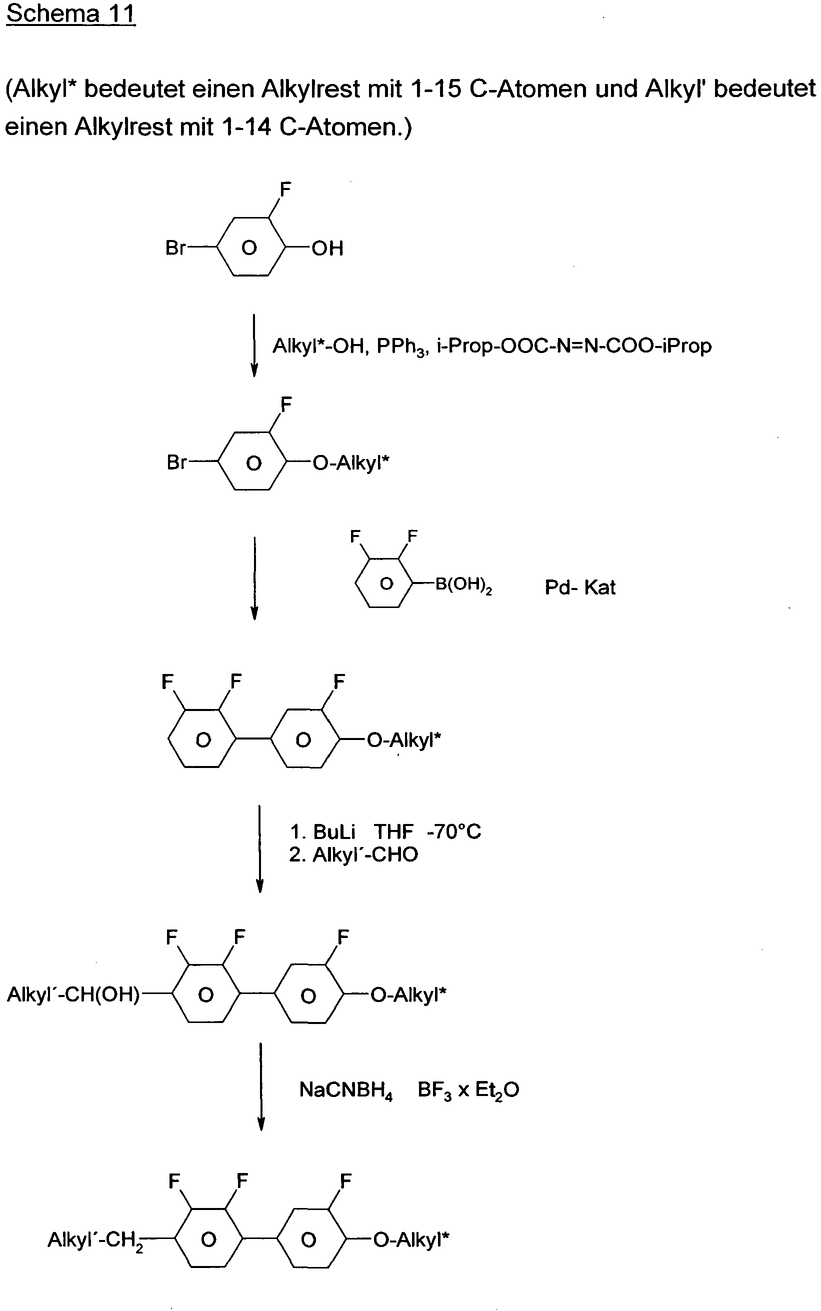

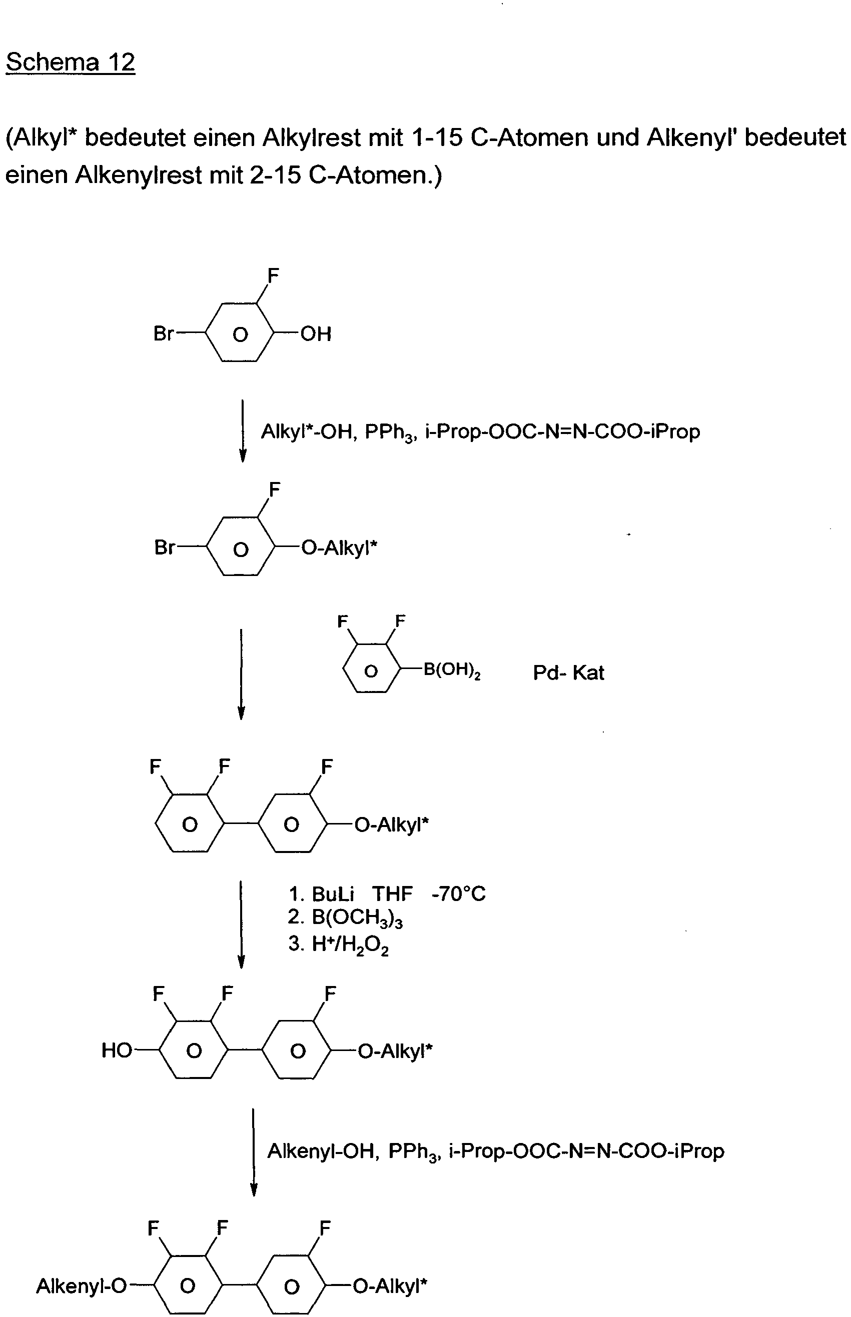

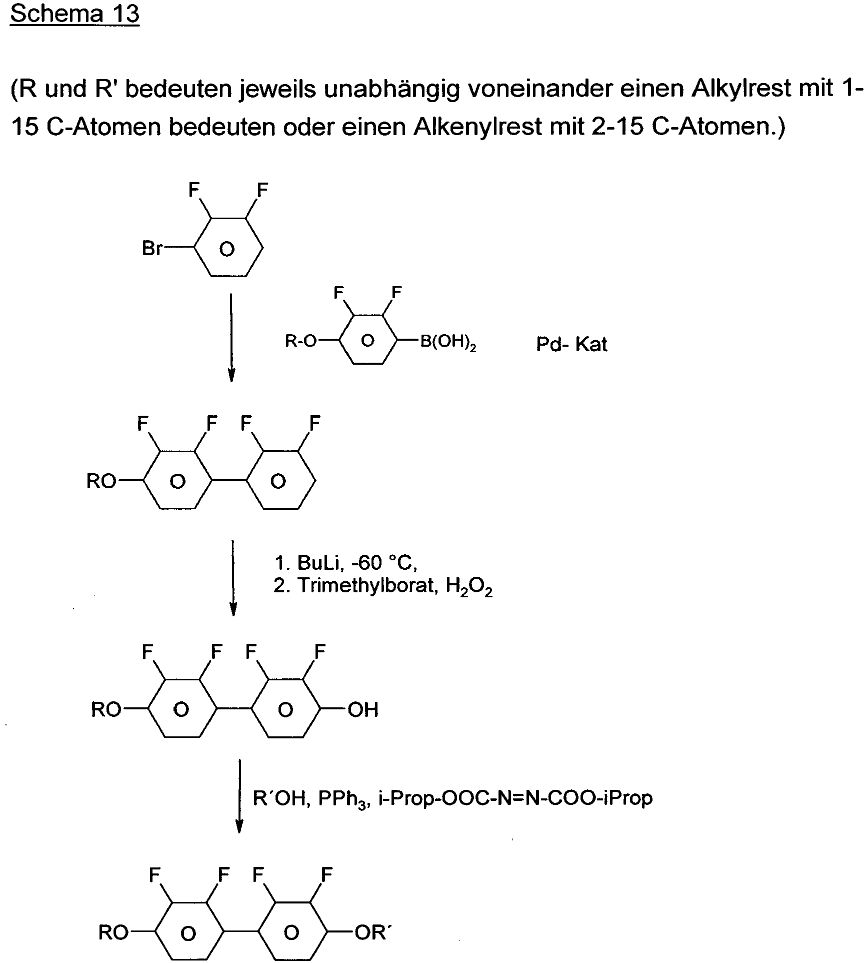

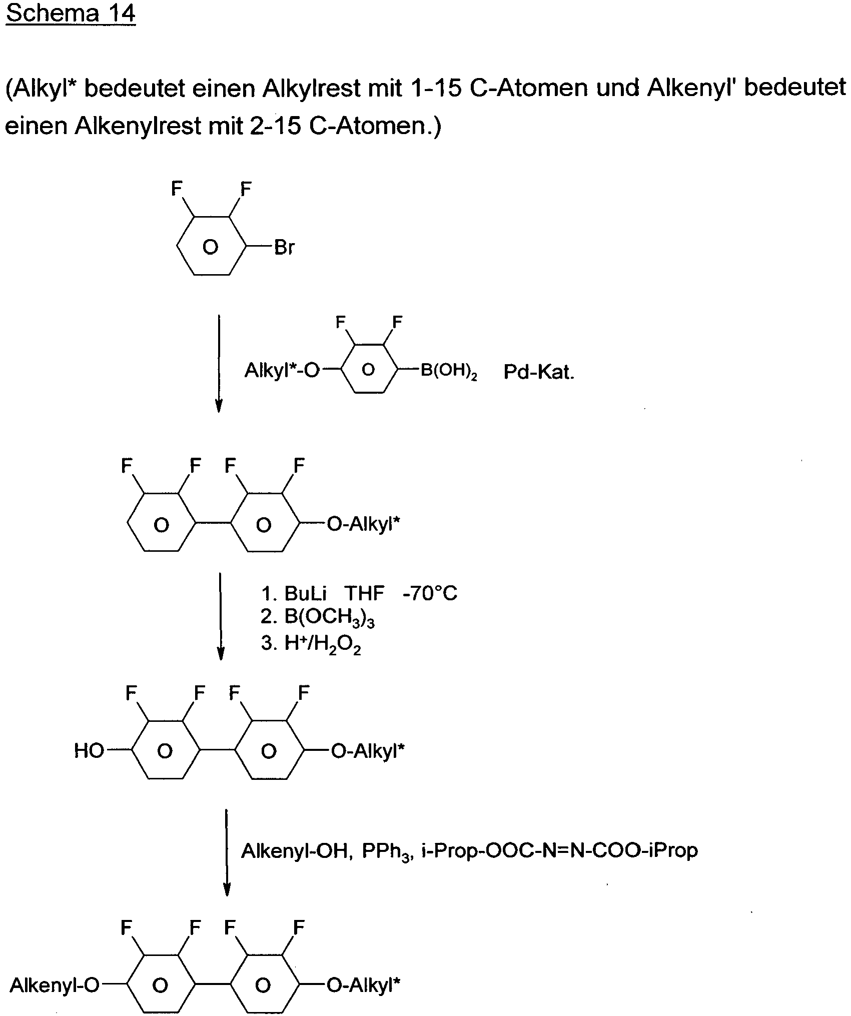

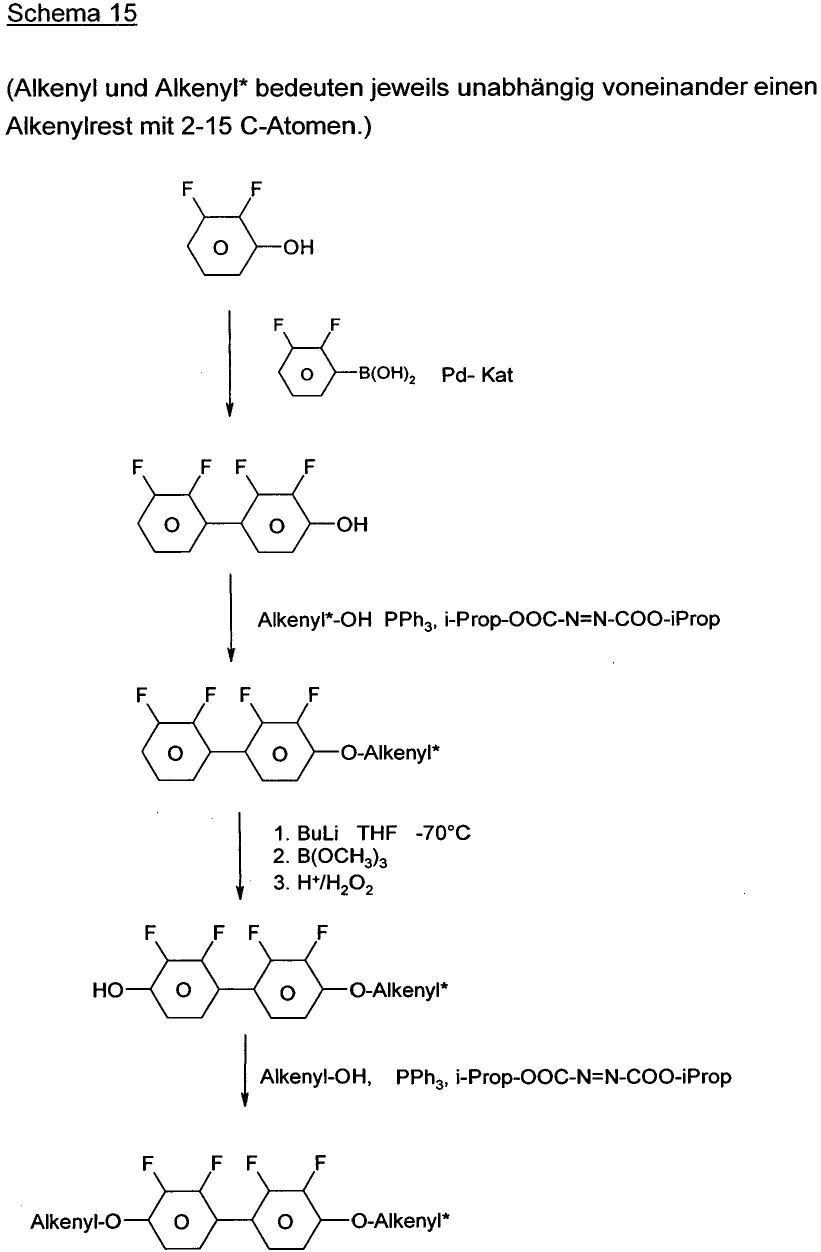

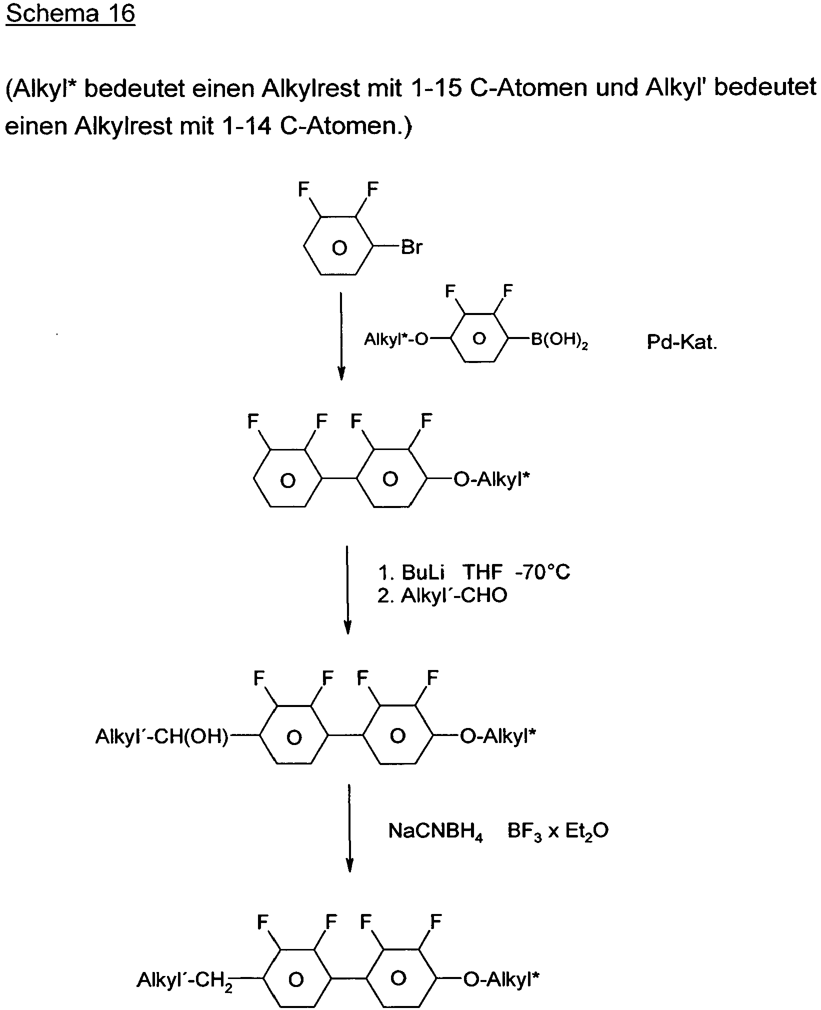

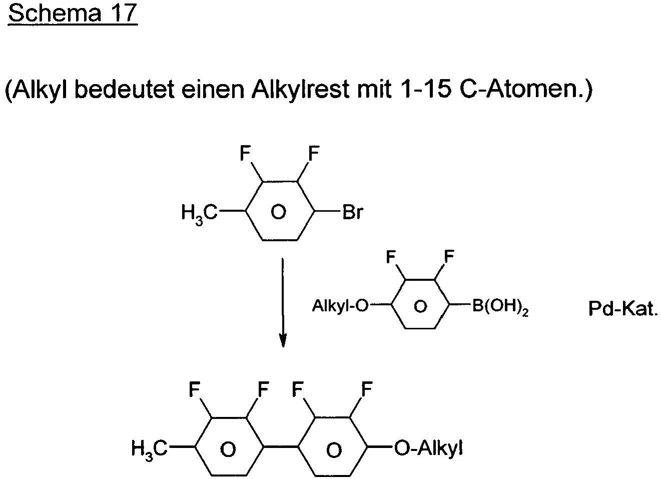

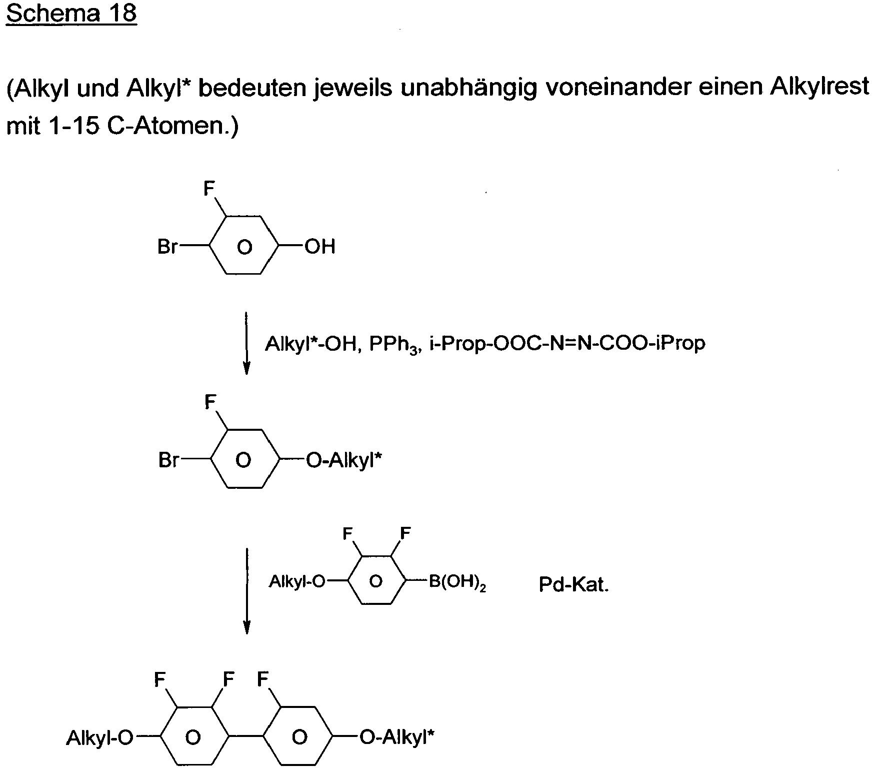

Gegenstand der vorliegenden Erfindung sind ebenfalls die Verbindungen der Formel I.

Die erfindungsgemäßen Medien enthalten vorzugsweise ein, zwei, drei, vier oder mehr, vorzugsweise ein, zwei oder drei, Verbindungen der Formel I.

Die Verbindungen der Formel I-6 werden vorzugsweise im flüssigkristallinen Medium in Mengen von ≥ 1, vorzugsweise ≥ 3 Gew.%, bezogen auf das Gesamtgemisch, eingesetzt. Insbesondere bevorzugt sind flüssigkristalline Medien, die 1 - 30 Gew.%, ganz besonders bevorzugt 2 - 15 Gew.% einer oder mehrerer Verbindungen der Formel I-6 enthalten.

Im Folgenden werden bevorzugte Ausführungsformen für das erfindungsgemäße flüssigkristalline Medium angeführt:
a) Flüssigkristallines Medium, welches zusätzlich eine oder mehrere Verbindungen ausgewählt aus der Gruppe der Verbindungen der Formeln IIA, IIB und IIC enthält, 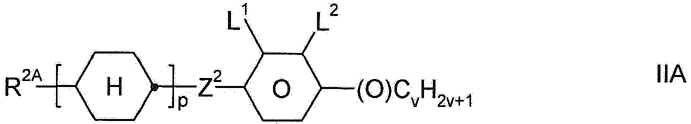 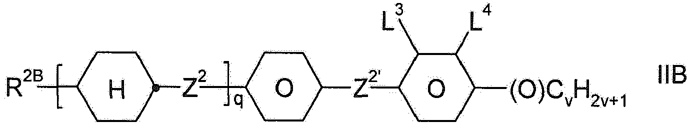 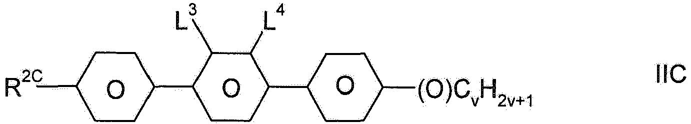 worin
   - R^{2A}, R^{2B} und R^{2C}: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 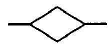 , -C≡C-, -CH=CH-, -CF₂O-, -OCF₂-, -OC-O- oder -O-CO- so ersetzt sein können, dass O-Atome nicht direkt miteinander verknüpft sind,
   - L¹⁻⁴: jeweils unabhängig voneinander F, Cl, CF₃ oder CHF₂,
   - Z² und Z^{2'}: jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
   - p: 0, 1 oder 2,
   - q: 0 oder 1, und
   - v: 1 bis 6
   bedeuten.
   In den Verbindungen der Formeln IIA und IIB können Z² gleiche oder unterschiedliche Bedeutungen haben. In den Verbindungen der Formel IIB können Z² und Z^{2'} gleiche oder verschiedene Bedeutungen aufweisen.
   In den Verbindungen der Formeln IIA, IIB und IIC bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.
   In den Verbindungen der Formeln IIA und IIB bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln IIA und IIB vorzugsweise jeweils unabhängig voneinander eine Einfachbindung, ferner eine -C₂H₄-Brücke.
   Sofern in der Formel IIB Z² = -C₂H₄- oder -CH₂O- ist, ist Z^{2'} vorzugsweise eine Einfachbindung bzw. falls Z^{2'} = -C₂H₄- oder -CH₂O- bedeutet, ist Z² vorzugsweise eine Einfachbindung. In den Verbindungen der Formeln IIA und IIB bedeutet (O)CᵥH₂ᵥ₊₁ vorzugsweise OCᵥH₂ᵥ₊₁, ferner CᵥH₂ᵥ₊₁. In den Verbindungen der Formel IIC bedeutet (O)CᵥH₂ᵥ₊₁ vorzugsweise CᵥH₂ᵥ₊₁. In den Verbindungen der Formel IIC bedeuten L³ und L⁴ vorzugsweise jeweils F.
   Bevorzugte Verbindungen der Formeln IIA, IIB und IIC werden nachfolgend genannt: 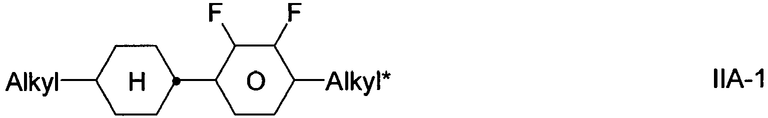 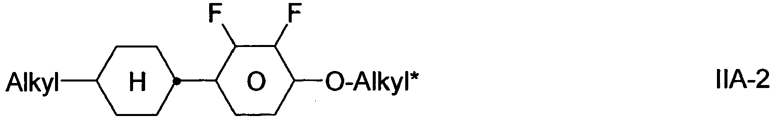 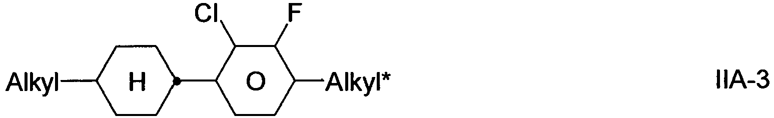 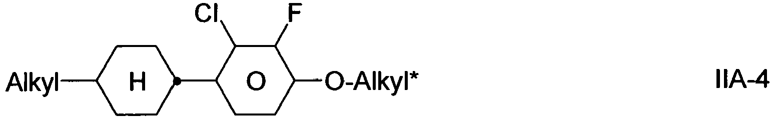 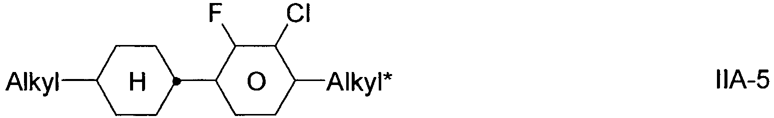 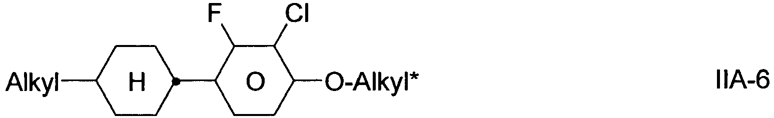 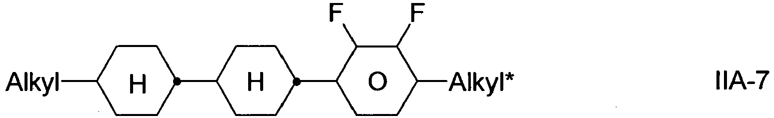 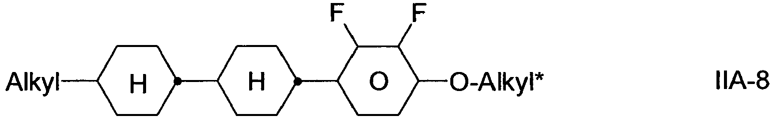 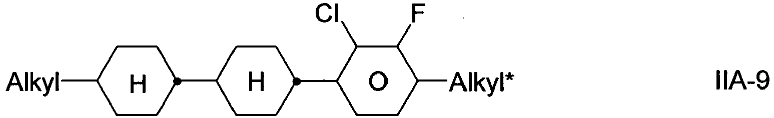 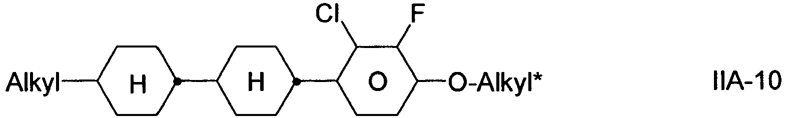 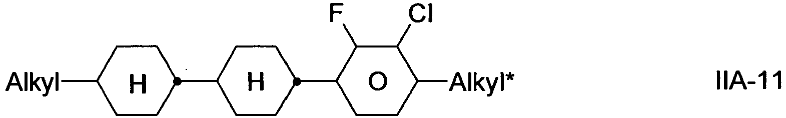 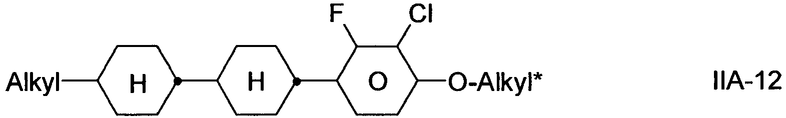 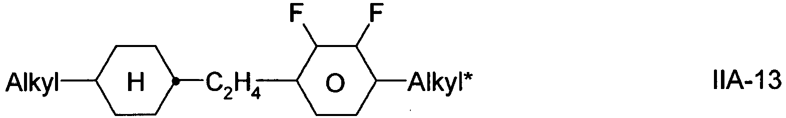 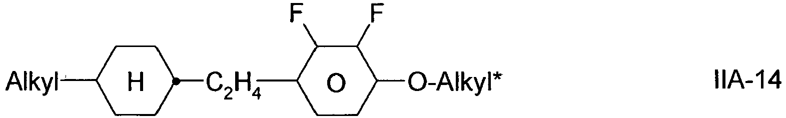 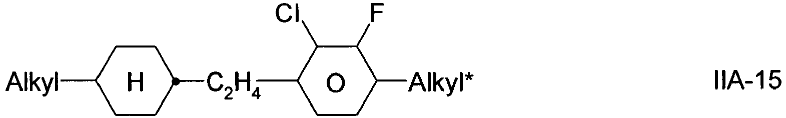 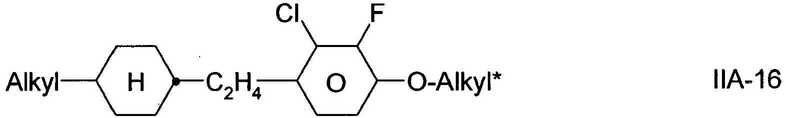 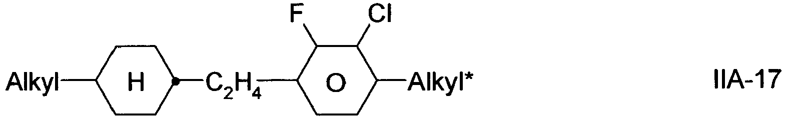 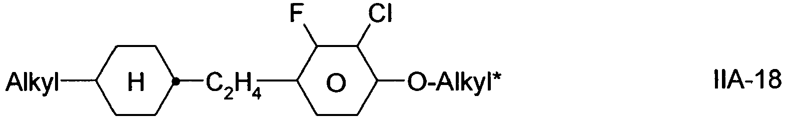 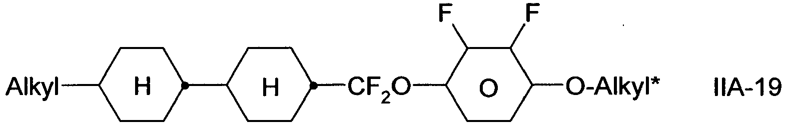 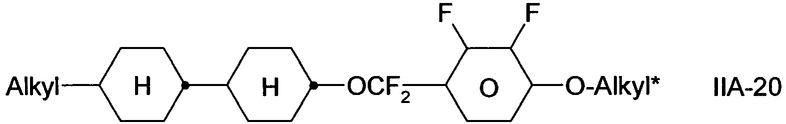 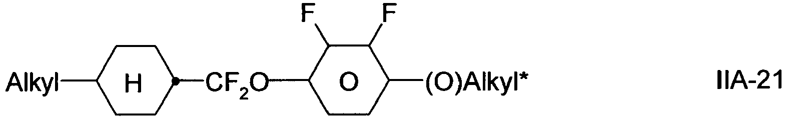 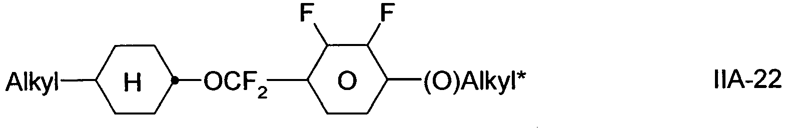 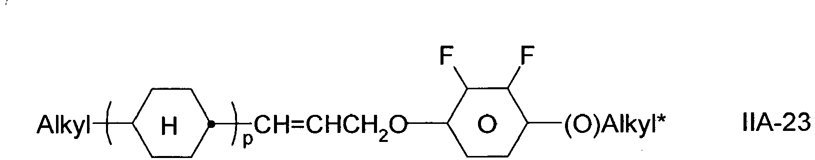 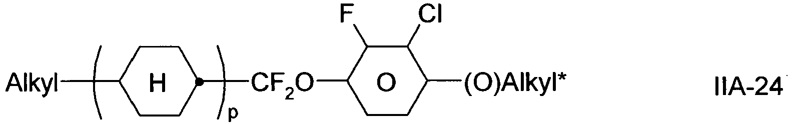 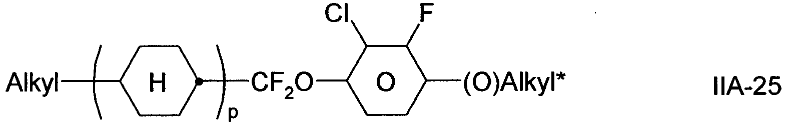 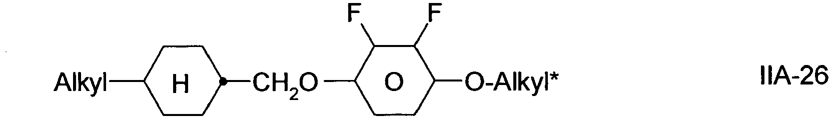 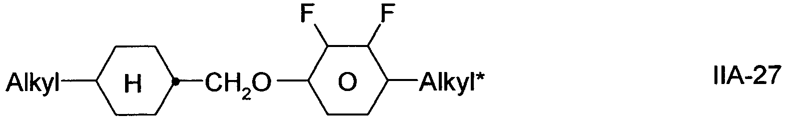 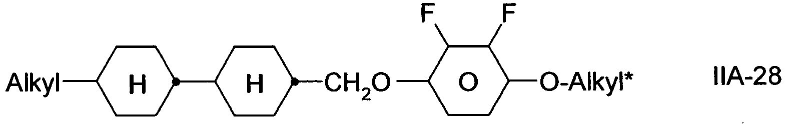 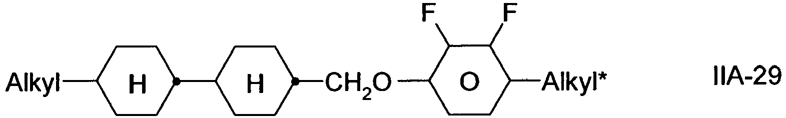 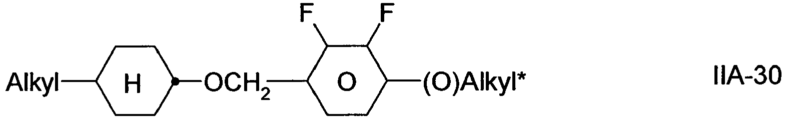 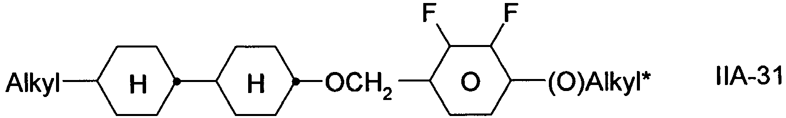 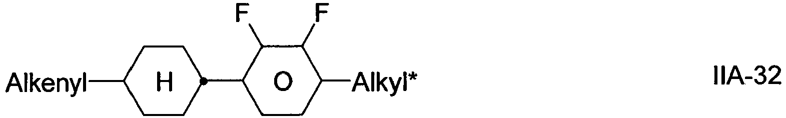 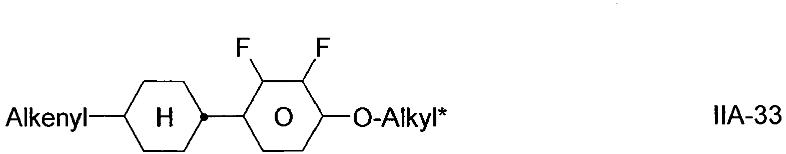 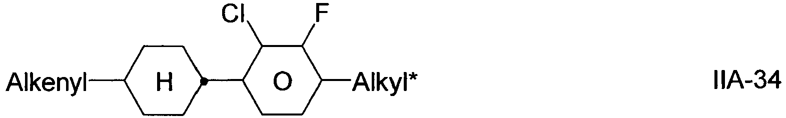 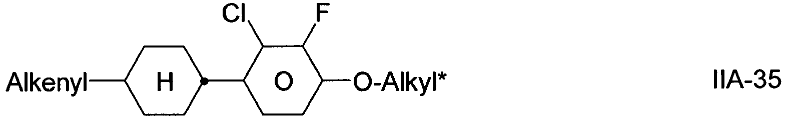 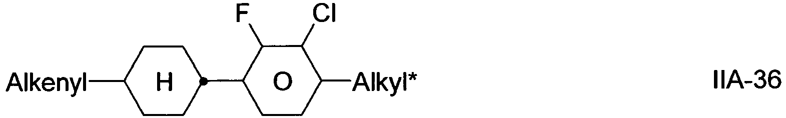 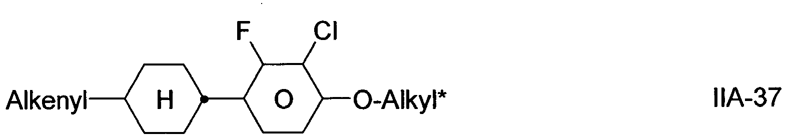 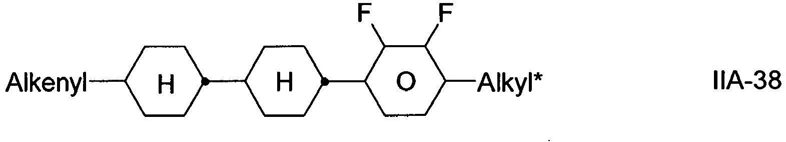 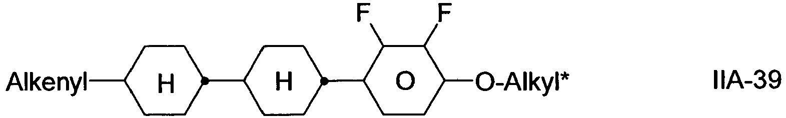 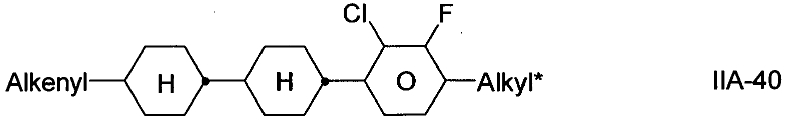 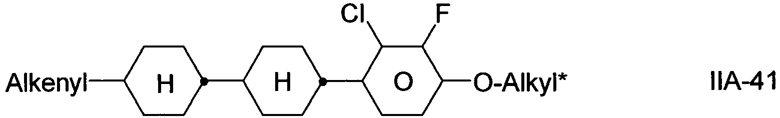 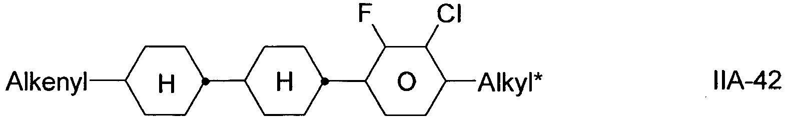 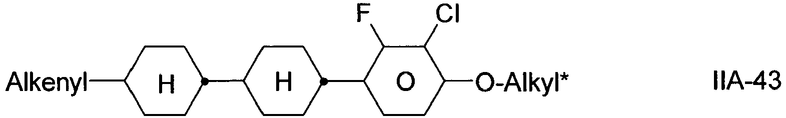 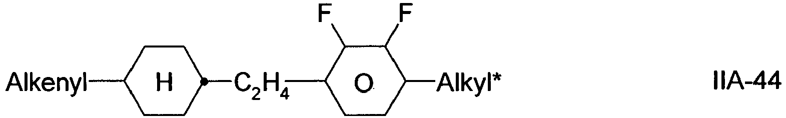 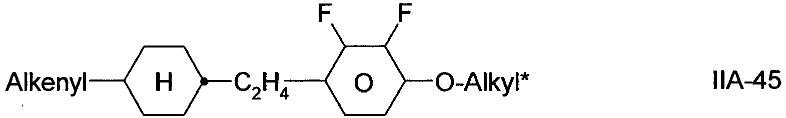 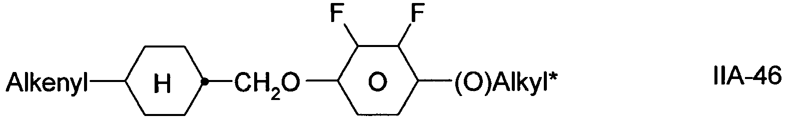 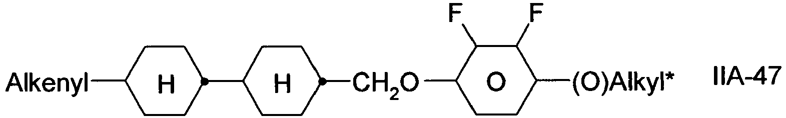 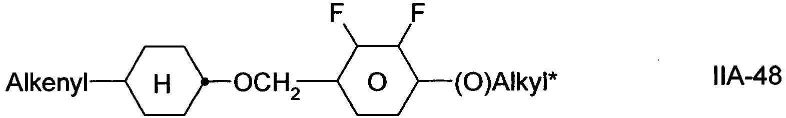 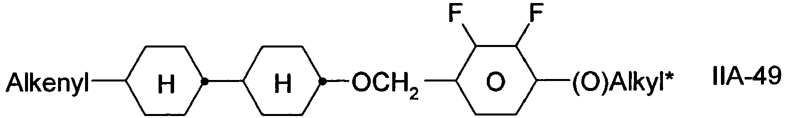 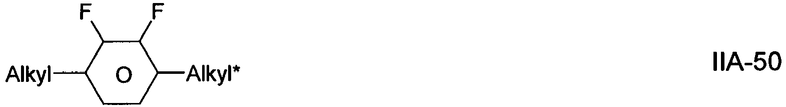 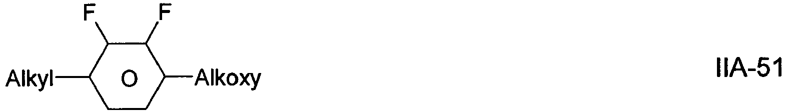 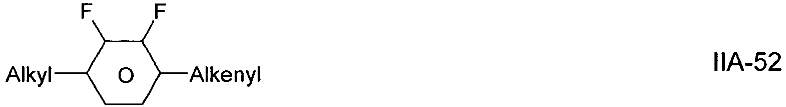 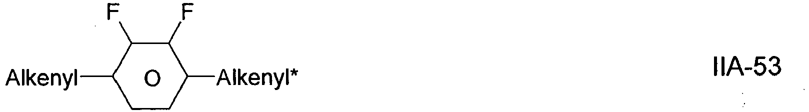 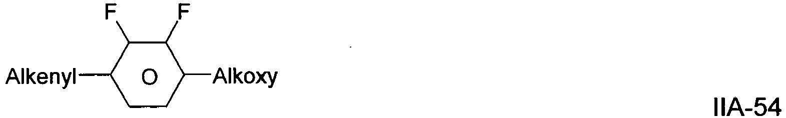 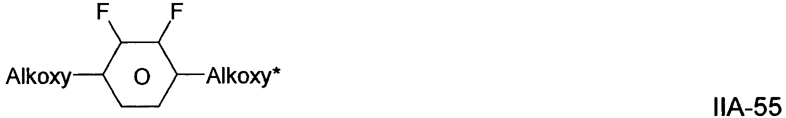 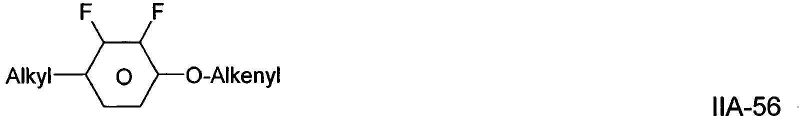 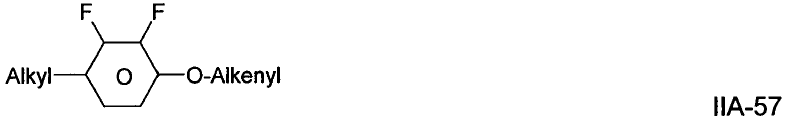 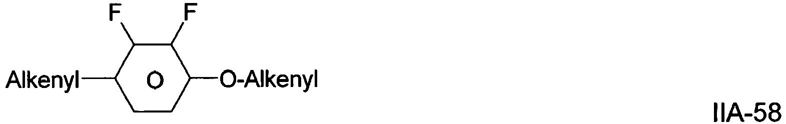 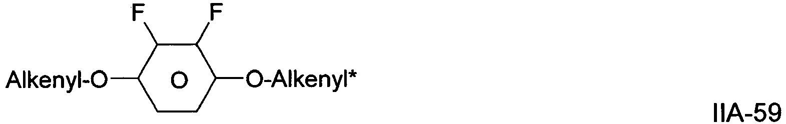 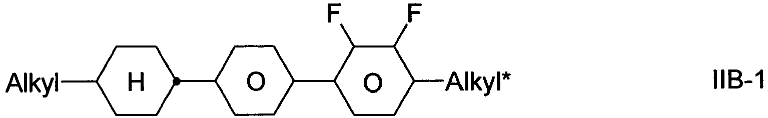 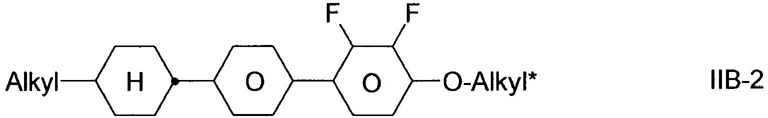 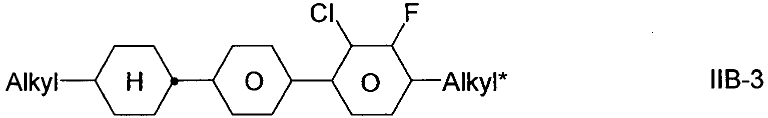 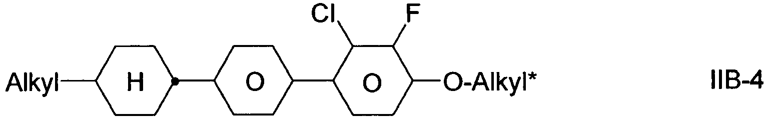 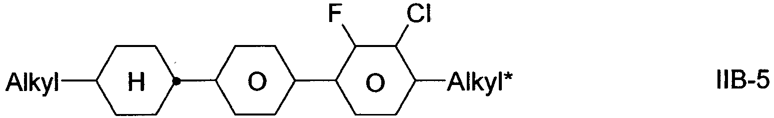 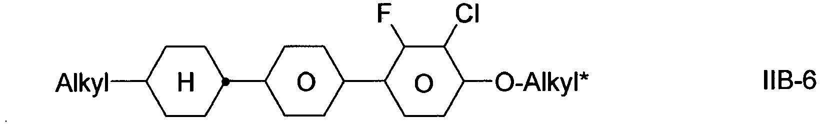 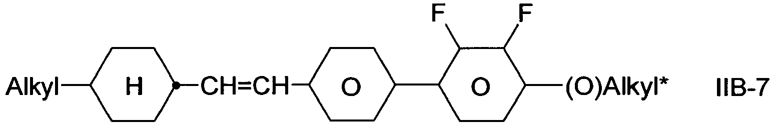 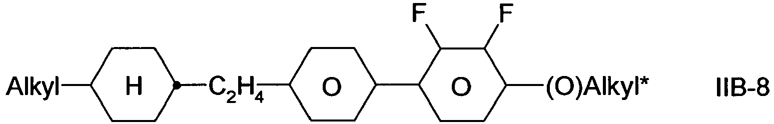 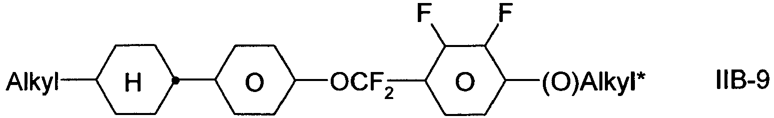 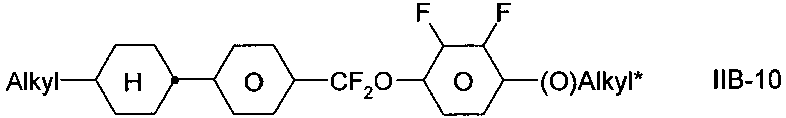 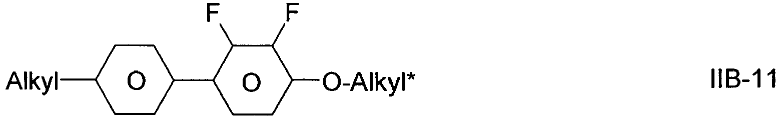 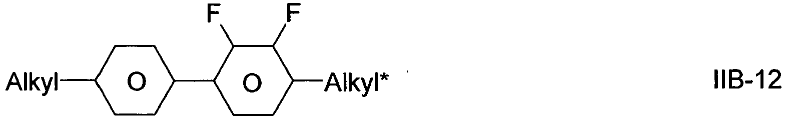 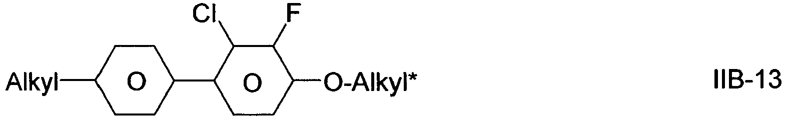 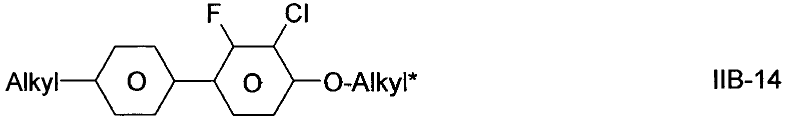 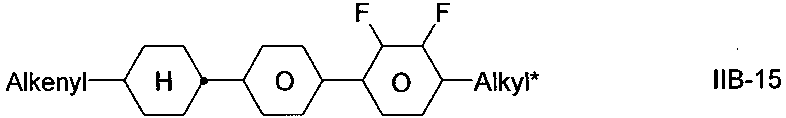 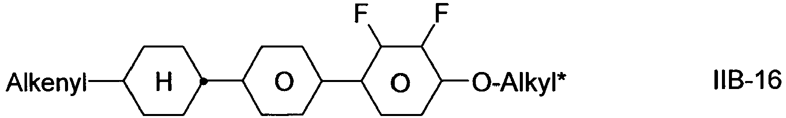 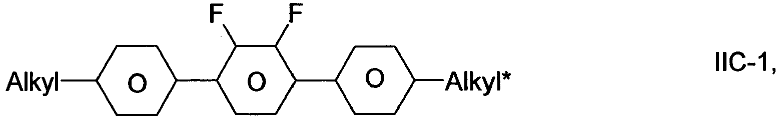 worin Alkyl und Alkyl* jeweils unabhängig voneinander einen geradkettigen Alkylrest mit 1-6 C-Atomen bedeuten.
   Besonders bevorzugte erfindungsgemäße Mischungen enthalten eine oder mehrere Verbindungen der Formeln IIA-2, IIA-8, IIA-14, IIA-26, II-28, IIA-33, IIA-39, IIA-45, IIA-46, IIA-47, IIA-55, IIB-2, IIB-11, IIB-16 und IIC-1.
   Vorzugsweise beträgt der Anteil an Verbindungen der Formeln IIA und/oder IIB im Gesamtgemisch mindestens 20 Gew.%.
   Besonders bevorzugte erfindungsgemäße Medien enthalten mindestens eine Verbindung der Formel IIC-1, 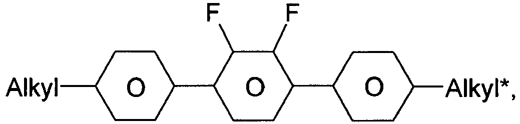 worin Alkyl und Alkyl*' die oben angegebenen Bedeutungen haben, vorzugsweise in Mengen von > 3 Gew.%, insbesondere > 5 Gew.% und besonders bevorzugt von 5-25 Gew.%.
b) Flüssigkristallines Medium, welches zusätzlich eine oder mehrere Verbindungen der Formel III 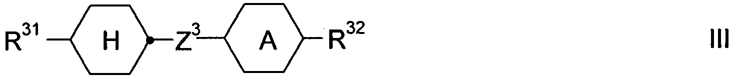 enthält,
   worin
   - R³¹ und R³²: jeweils unabhängig voneinander einen geradkettigen Alkyl-, Alkoxyalkyl- oder Alkoxyrest mit bis zu 12 C-Atomen, und 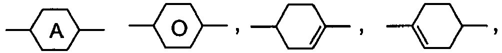 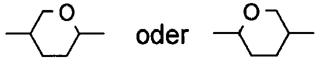
   - Z³: Einfachbindung, -CH₂CH₂-, -CH=CH-, -CF₂O-, -OCF₂-, -CH₂O-, -OCH₂-, -COO-, -OCO-, -C₂F₄-, -C₄H₈-, -CF=CF-
   bedeuten.
   Bevorzugte Verbindungen der Formel III werden nachfolgend genannt, 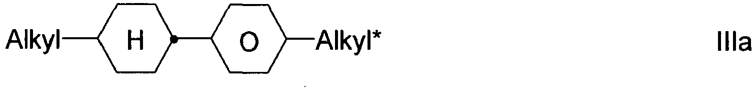 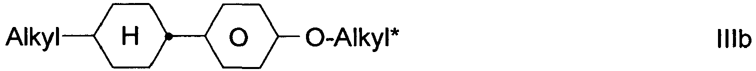 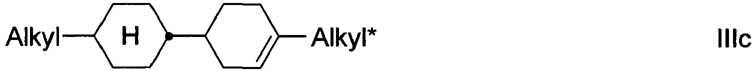 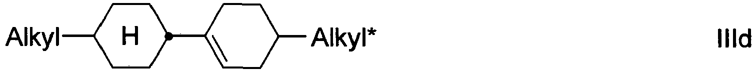 worin
   - Alkyl und Alkyl*: jeweils unabhängig voneinander einen geradkettigen Alkylrest mit 1-6 C-Atomen
   bedeuten.
   Vorzugsweise enthält das erfindungsgemäße Medium mindestens eine Verbindung der Formel IIIa und/oder Formel Illb.
   Der Anteil an Verbindungen der Formel III im Gesamtgemisch beträgt vorzugsweise mindestens 5 Gew.%.
c) Flüssigkristallines Medium enthaltend zusätzlich mindestens eine Verbindung ausgewählt aus der Gruppe der Verbindungen der Formeln 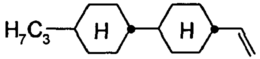 und/oder 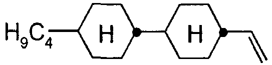 und/oder 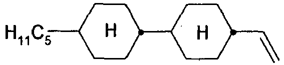 und/oder 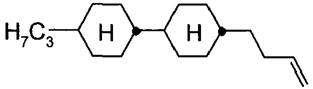 und/oder 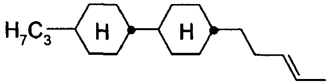 vorzugsweise in Gesamtmengen von ≥ 5 Gew.%, insbesondere von ≥ 10 Gew.%.
   Weiterhin bevorzugt sind erfindungsgemäße Mischungen enthaltend die Verbindung CC-3-V1 und/oder CC-V-V, 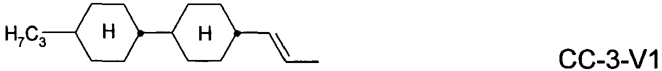 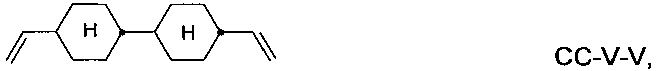 vorzugsweise CC-3-V1 in Mengen von 3 - 15 % und vorzugsweise CC-V-V in Mengen von 5 - 60 %.
   Bevorzugte Mischungen enthalten 5-60 Gew.%, vorzugsweise 10-55 Gew.%, insbesondere 20-50 Gew.% der Verbindung der Formel 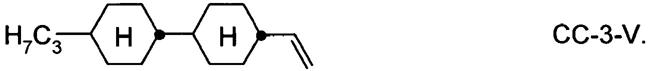 Weiterhin bevorzugt sind Mischungen, die die Verbindung CC-3-V 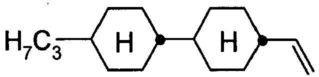 und die Verbindung CC-3-V1 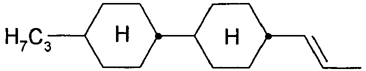 enthalten, vorzugsweise in Mengen von insgesamt 3-60 Gew.%.
d) Flüssigkristallines Medium, welches zusätzlich eine oder mehrere Vierkernverbindungen der Formeln, 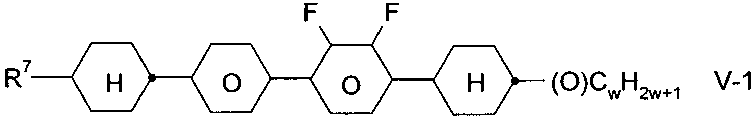 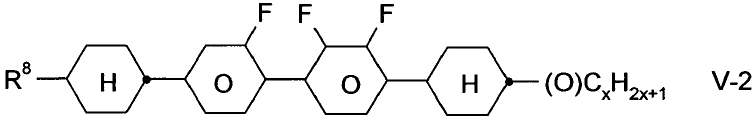 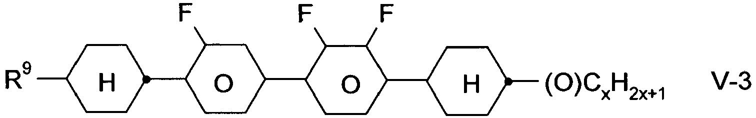 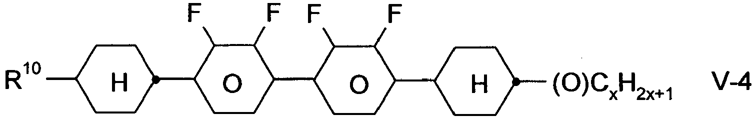 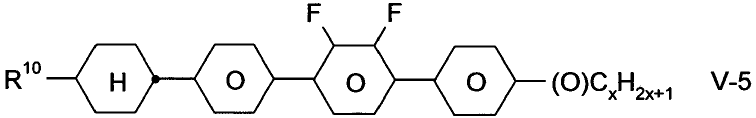 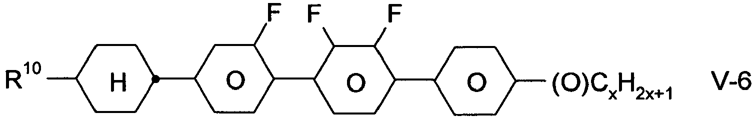 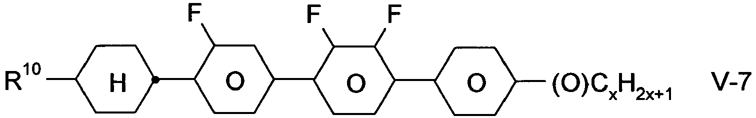 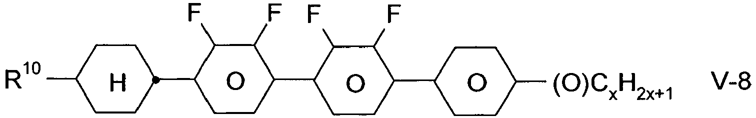 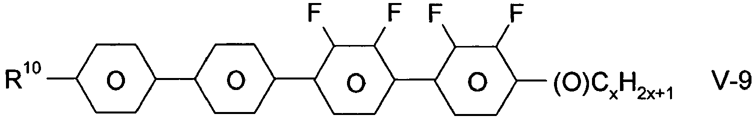 worin
   - R⁷⁻¹⁰: jeweils unabhängig voneinander eine der in Anspruch 3 für R^{2A} angegebenen Bedeutung haben, und
   - w und x: jeweils unabhängig voneinander 1 bis 6,
   bedeuten,
   enthält.
   Insbesondere bevorzugt sind Mischungen enthaltend mindestens eine Verbindung der Formel V-9.
e) Flüssigkristallines Medium, welches zusätzlich eine oder mehrere Verbindungen der Formeln Y-1 bis Y-6, 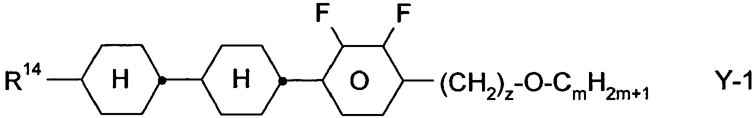 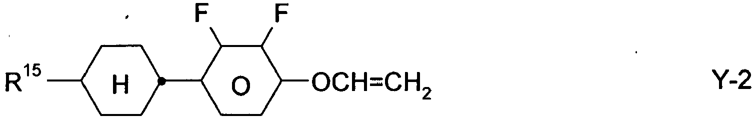 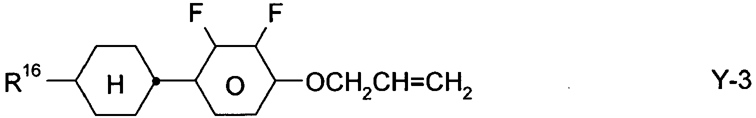 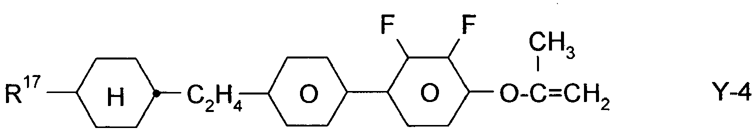 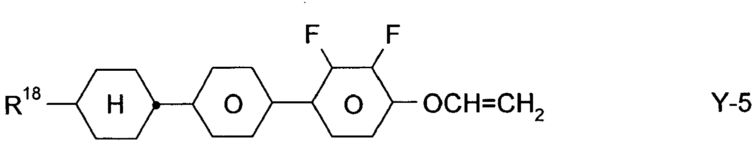 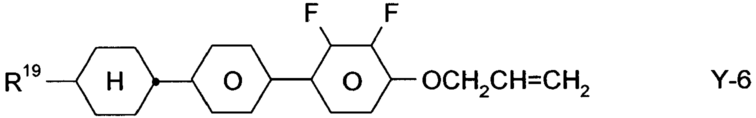 enthält,
   worin R¹⁴-R¹⁹ jeweils unabhängig voneinander einen Alkyl- oder Alkoxyrest mit 1-6 C-Atomen bedeuten; z und m bedeuten jeweils unabhängig voneinander 1-6; x bedeutet 0, 1, 2 oder 3.
   Insbesondere bevorzugt enthält das erfindungsgemäße Medium eine oder mehrere Verbindungen der Formel Y-1 bis Y-6, vorzugsweise in Mengen von ≥ 5 Gew.%.
f) Flüssigkristallines Medium enthaltend zusätzlich ein oder mehrere fluorierte Terphenyle der Formeln T-1 bis T-21, 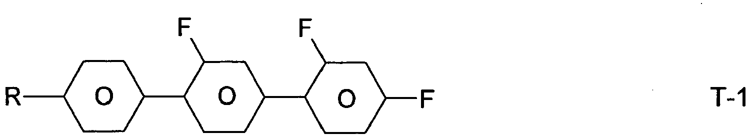 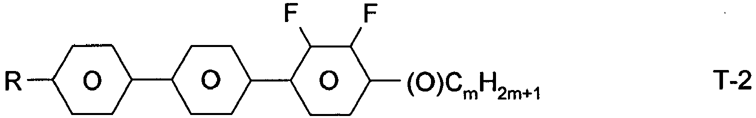 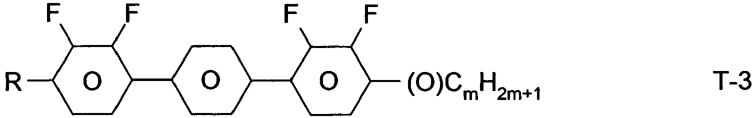 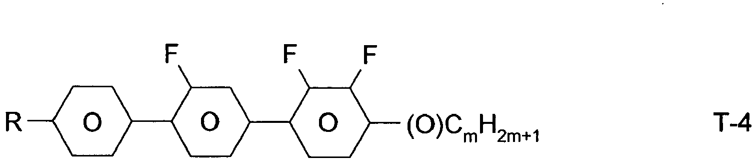 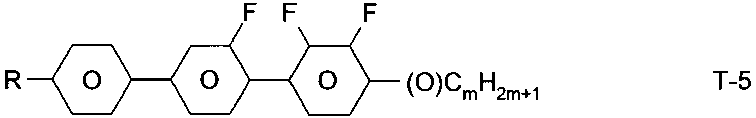 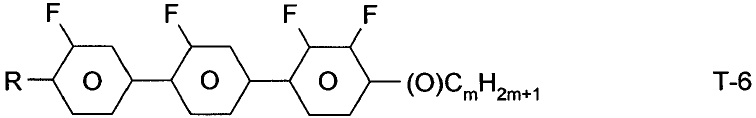 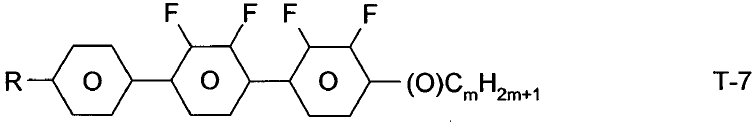 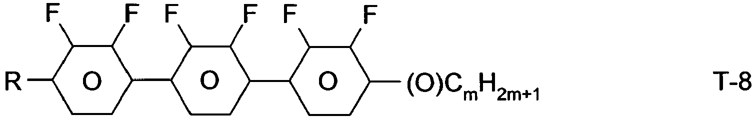 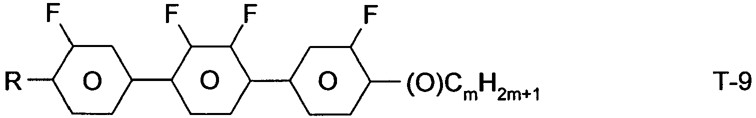 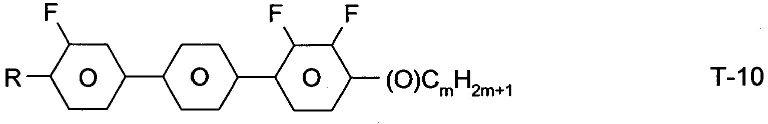 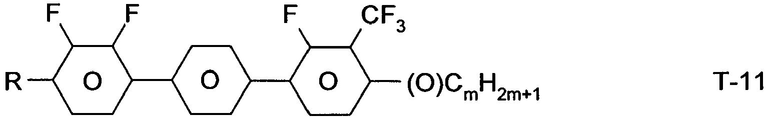 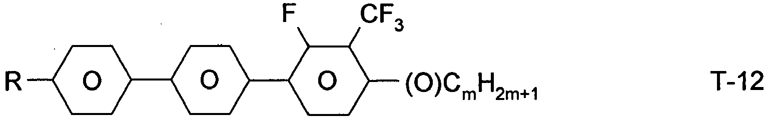 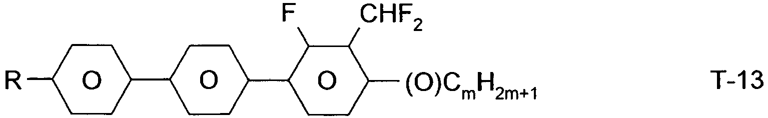 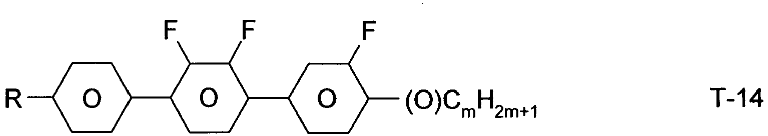 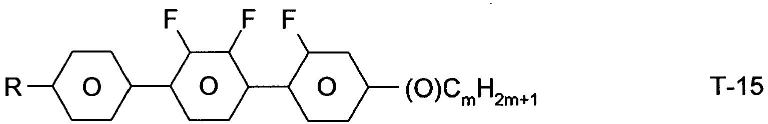 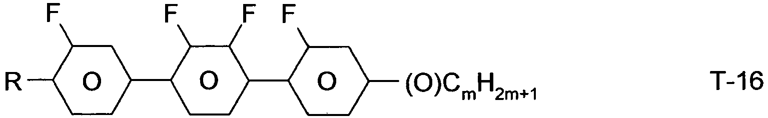 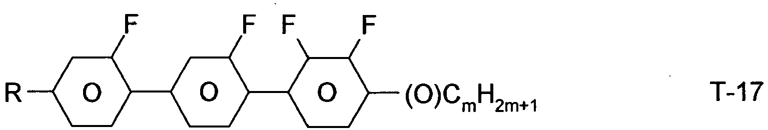 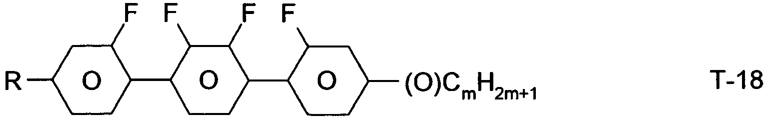 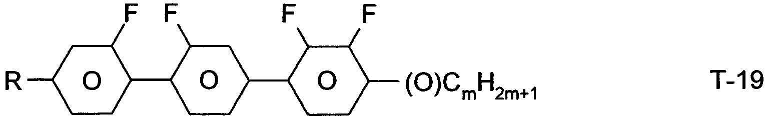 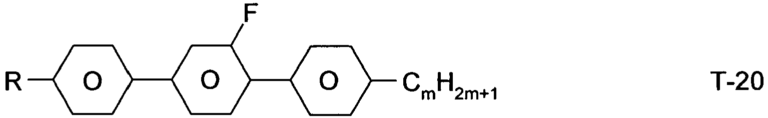 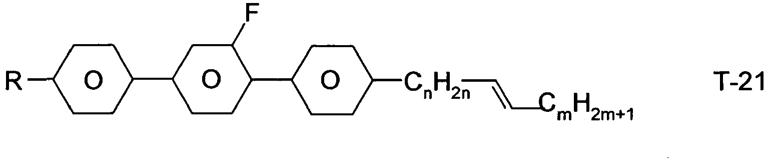 worin
   R geradkettiger Alkyl- oder Alkoxyrest mit 1-7 C-Atomen bedeutet, und m = 0, 1, 2, 3, 4, 5 oder 6 und n 0, 1, 2, 3 oder 4 bedeuten,
   enthält.
   Vorzugsweise bedeutet R Methyl, Ethyl, Propyl, Butyl, Pentyl, Hexyl Methoxy, Ethoxy, Propoxy, Butoxy, Pentoxy.
   Das erfindungsgemäße Medium enthält die Terphenyle der Formeln T-1 bis T-21 vorzugsweise in Mengen von 2-30 Gew.%, insbesondere von 5-20 Gew.%.
   Besonders bevorzugt sind Verbindungen der Formeln T-1, T-2, T-20 und T-21. In diesen Verbindungen bedeutet R vorzugsweise Alkyl, ferner Alkoxy jeweils mit 1-5 C-Atomen. In den Verbindungen der Formel T-20 bedeutet R vorzugsweise Alkyl oder Alkenyl, insbesondere Alkyl. In der Verbindung der Formel T-21 bedeutet R vorzugsweise Alkyl.
   Vorzugsweise werden die Terphenyle in den erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen ausgewählt aus der Gruppe der Verbindungen T-1 bis T-21.
g) Flüssigkristallines Medium enthaltend zusätzlich ein oder mehrere Biphenyle der Formeln B-1 bis B-4, 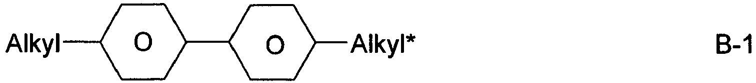 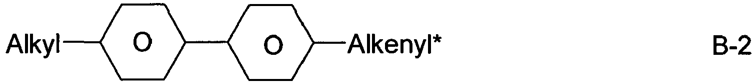 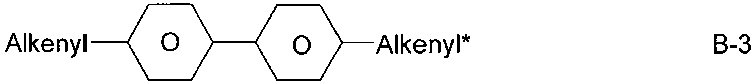 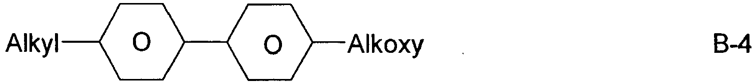 worin
   - Alkyl und Alkyl*: jeweils unabhängig voneinander einen geradkettigen Alkylrest mit 1-6 C-Atomen,
   - Alkenyl und Alkenyl*: jeweils unabhängig voneinander einen geradkettigen Alkenylrest mit 2-6 C-Atomen, und
   - Alkoxy: einen geradkettigen Alkoxyrest mit 1-6 C-Atomen,
   bedeuten.
   Der Anteil der Biphenyle der Formeln B-1 bis B-4 in der Gesamtmischung beträgt vorzugsweise mindestens 3 Gew.%, insbesondere ≥ 5 Gew.%.
   Von den Verbindungen der Formeln B-1 bis B-4 sind die Verbindungen der Formel B-2 insbesondere bevorzugt.
   Besonders bevorzugte Biphenyle sind 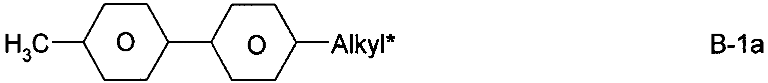 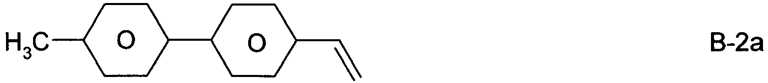 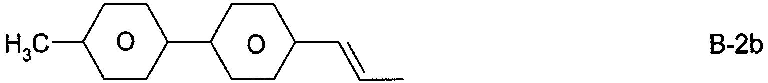 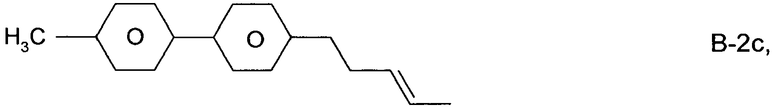 worin Alkyl* einen Alkylrest mit 1-6 C-Atomen bedeutet. Insbesondere bevorzugt enthält das erfindungsgemäße Medium eine oder mehrere Verbindungen der Formeln B-1a und/oder B-2c.
h) Flüssigkristallines Medium enthaltend mindestens eine Verbindung der Formeln Z-1 bis Z-8, 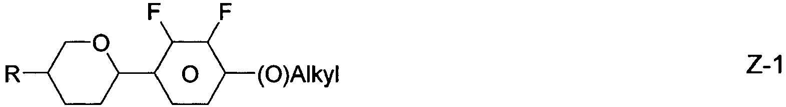 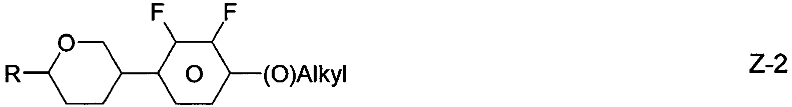 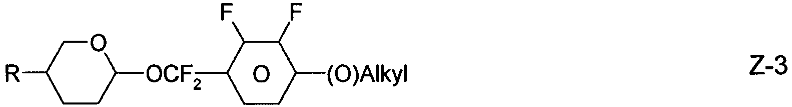 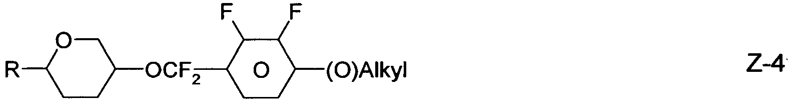 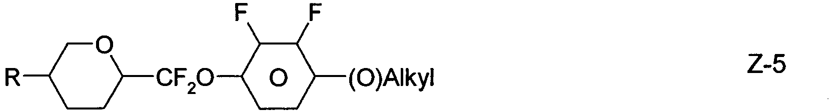 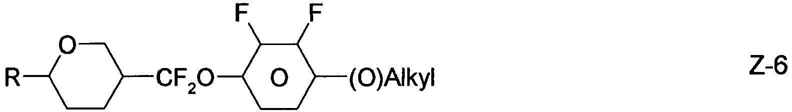 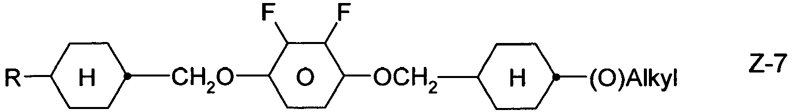 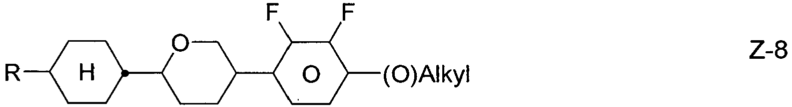 worin R und Alkyl die oben angegebenen Bedeutungen haben.
i) Flüssigkristallines Medium enthaltend mindestens eine Verbindung der Formeln O-1 bis O-17, 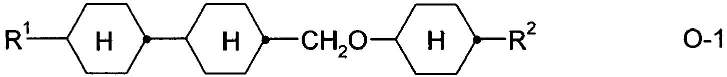 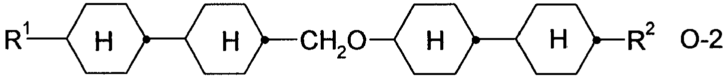 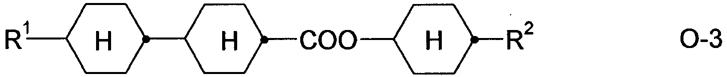 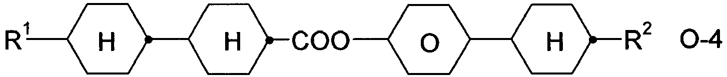 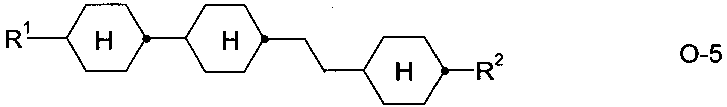 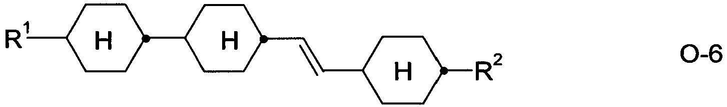 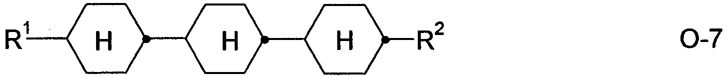 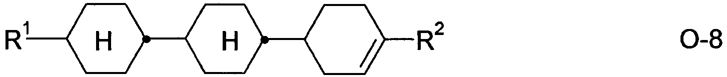 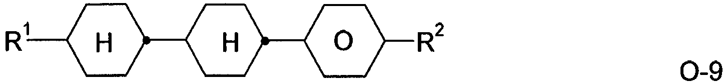 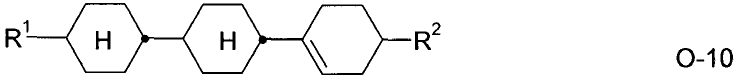 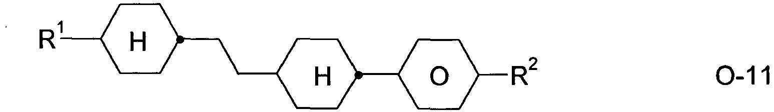 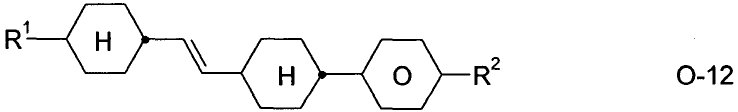 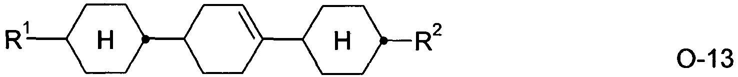 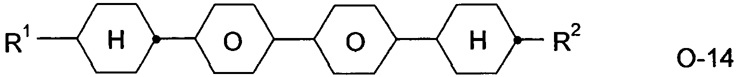 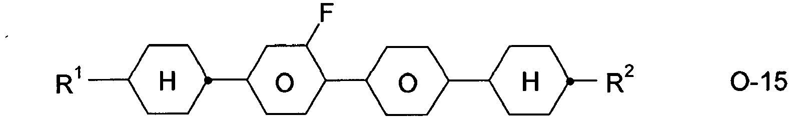 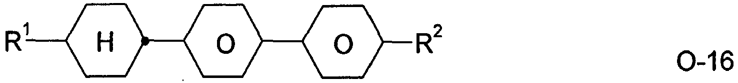 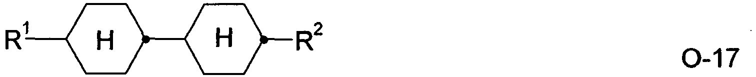 worin R¹ und R² die für R^{2A} angegebenen Bedeutungen haben. Vorzugsweise bedeuten R¹ und R² jeweils unabhängig voneinander geradkettiges Alkyl.
   Bevorzugte Medien enthalten eine oder mehrere Verbindungen der Formeln O-1, O-3, O-4, O-5, O-9, O-12, O-14, O-15, O-16 und/oder O-17.
   Erfindungsgemäße Mischungen enthalten ganz besonders bevorzugt die Verbindungen der Formel O-9, O-12, O-16 und/oder O-17, inbesondere in Mengen von 5-30 %.
   Bevorzugte Verbindungen der Formeln O-9 und O-17 werden nachfolgend genannt: 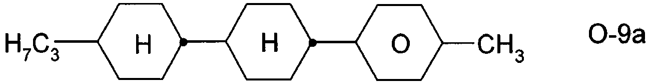 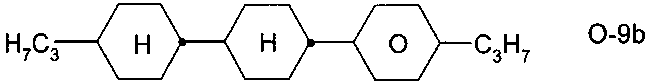 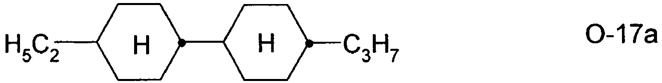 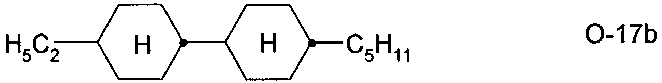 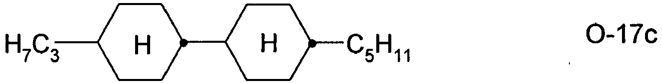 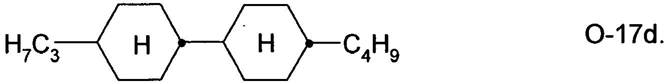 Besonders bevorzugt enthält das erfindungsgemäße Medium die Dreikern-Verbindungen der Formel O-9a und/oder der Formel O-9b in Kombination mit einer oder mehreren Zweikern-Verbindungen der Formeln O-17a bis O-17d. Vorzugsweise beträgt der Gesamtanteil der Verbindungen der Formel O-9a und/oder O-9b in Kombination mit einer oder mehreren Verbindungen ausgewählt aus den Zweikern-verbindungen der Formeln O-17a bis O-167 5-40 %, ganz besonders bevorzugt 15-35 %.
   Ganz besonders bevorzugte Mischungen enthalten die Verbindungen O-9a und O-17a: 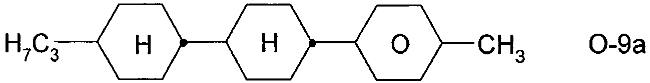 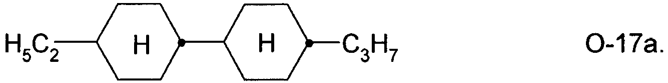 Vorzugsweise sind die Verbindungen O-9a und O-17a in der Mischung in einer Konzentration von 15-35 %, besonders bevorzugt von 15-25 % und insbesondere bevorzugt von 18-22 % bezogen auf die Gesamtmischung, enthalten.
   Ganz besonders bevorzugte Mischungen enthalten die Verbindungen O-9b und O-17a: 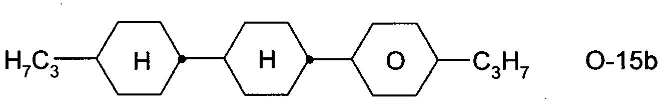 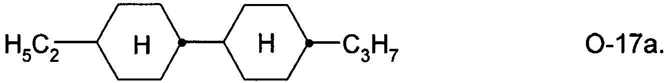 Vorzugsweise sind die Verbindungen O-9b und O-17a in der Mischung in einer Konzentration von 15-35 %, besonders bevorzugt von 15-25 % und insbesondere bevorzugt von 18-22 % bezogen auf die Gesamtmischung, enthalten.
   Ganz besonders bevorzugte Mischungen enthalten folgende drei Verbindungen: 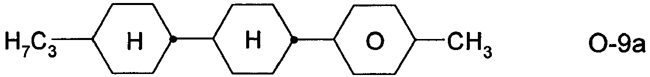 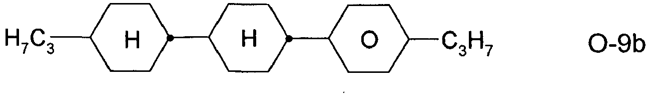 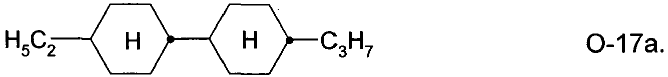 Vorzugsweise sind die Verbindungen O-9a, O-9b und O-17a in der Mischung in einer Konzentration von 15-35 %, besonders bevorzugt von 15-25 % und insbesondere bevorzugt von 18-22 % bezogen auf die Gesamtmischung, enthalten.
j) Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5, 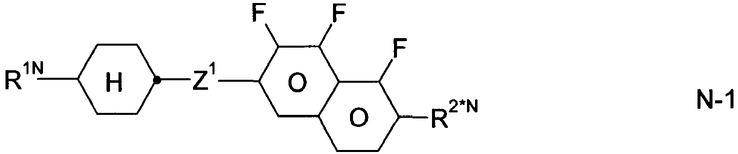 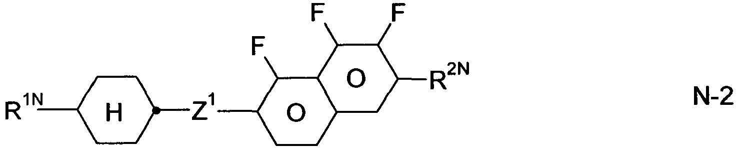 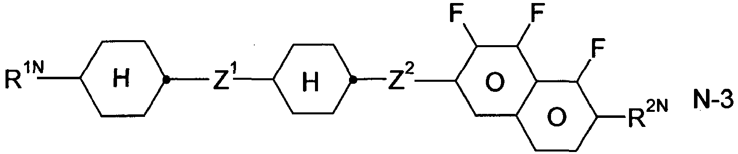 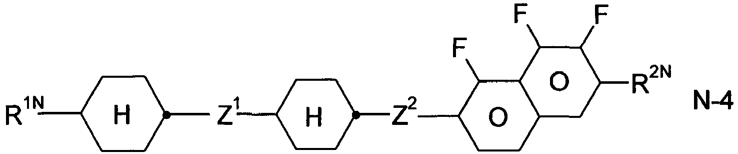 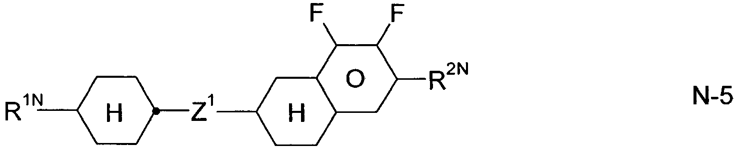 worin R^{1N} und R^{2N} jeweils unabhängig voneinander die für R^{2A} angegebenen Bedeutungen haben, vorzugsweise geradkettiges Alkyl, geradkettiges Alkoxy oder geradkettiges Alkenyl bedeuten, und
   Z¹ und Z² jeweils unabhängig voneinander -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- oder eine Einfachbindung
   bedeuten.
k) Bevorzugte Mischungen enthalten eine oder mehrere Verbindungen ausgewählt aus der Gruppe der Difluordibenzochroman-Verbindungen der Formel BC, Chromane der Formeln CR, fluorierte Phenanthrene der Formeln PH-1 und PH-2, fluorierte Dibenzofurane der Formeln BF-1 und BF-2, 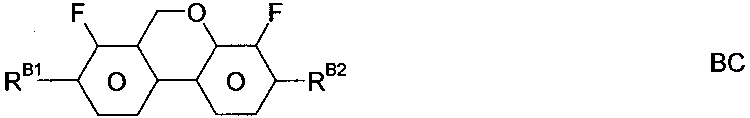 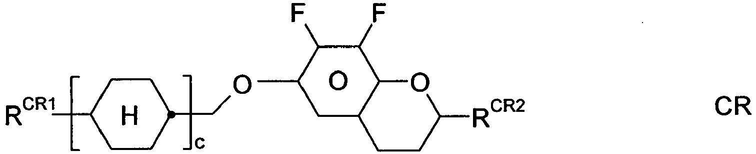 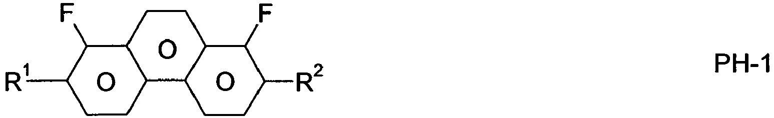 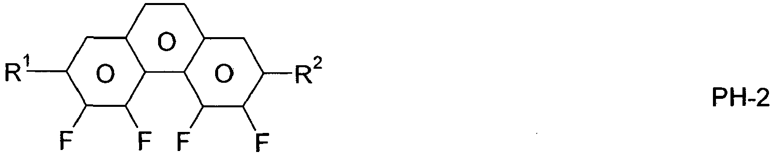 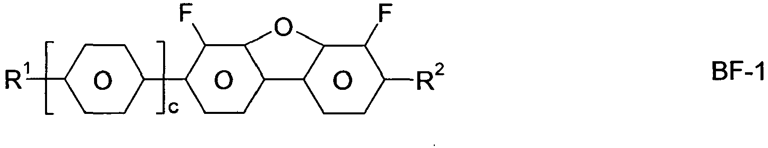 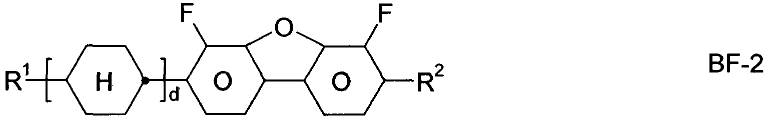 worin
   R^{B1}, R^{B2}, R^{CR1}, R^{CR2}, R¹, R² jeweils unabhängig voneinander die Bedeutung von R^{2A} aufweisen. c ist 0, 1 oder 2. d ist 1 oder 2. R¹ und R² bedeuten vorzugsweise unabhängig voneinander Alkyl, Alkoxy oder Alkenyloxy mit 1 bis 6 C-Atomen.
   Die erfindungsgemäßen Mischungen enthalten die Verbindungen der Formeln BC, CR, PH-1, PH-2, BF-1 und/oder BF-2 vorzugsweise in Mengen von 3 bis 20 Gew.%, insbesondere in Mengen von 3 bis 15 Gew.%.
   Besonders bevorzugte Verbindungen der Formeln BC und CR sind die Verbindungen BC-1 bis BC-7, CR-1 bis CR-5, BF-1a und BF-1b, 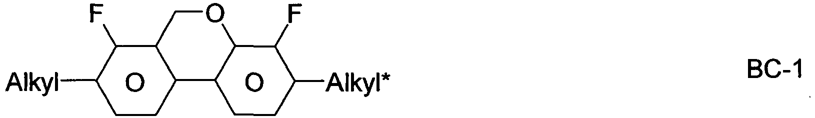 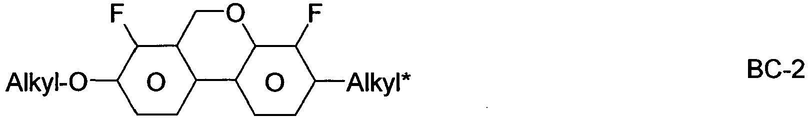 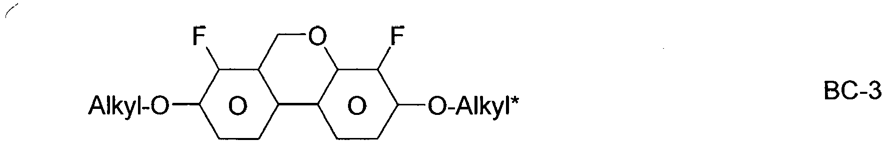 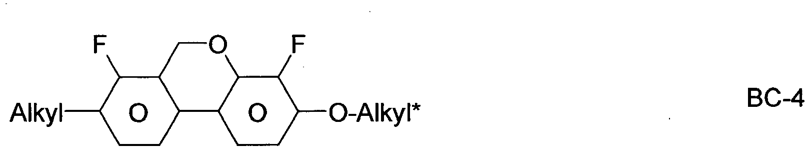 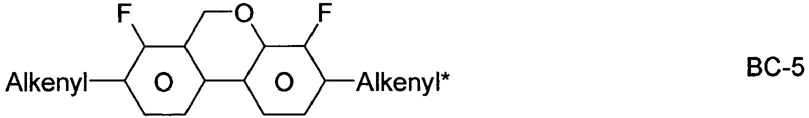 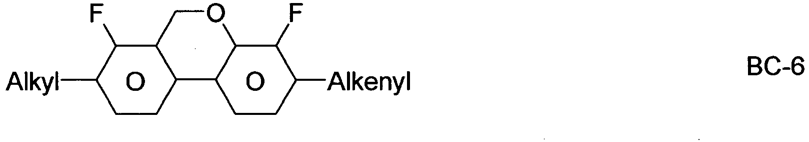 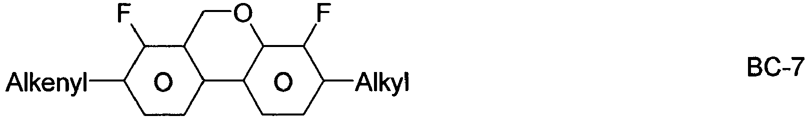 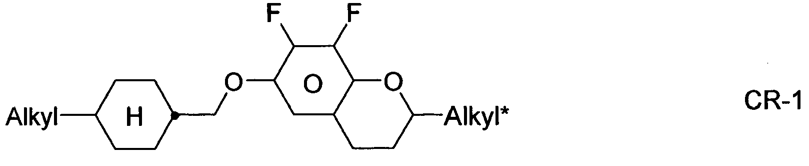 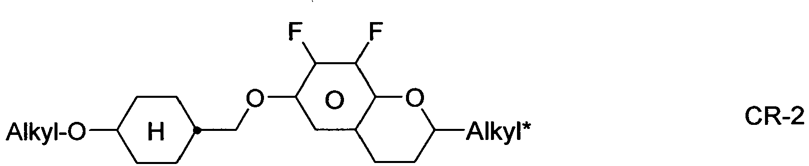 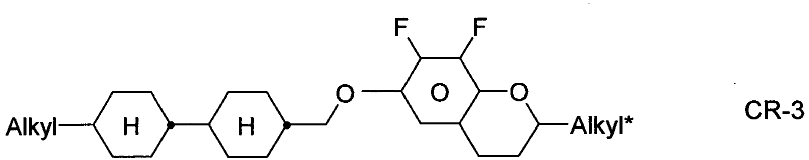 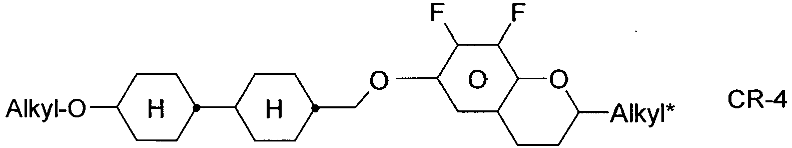 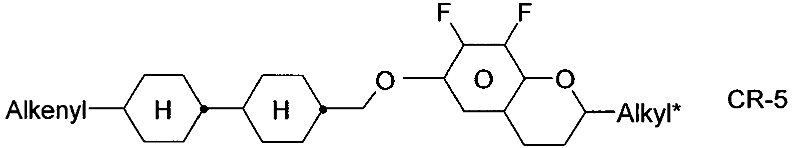 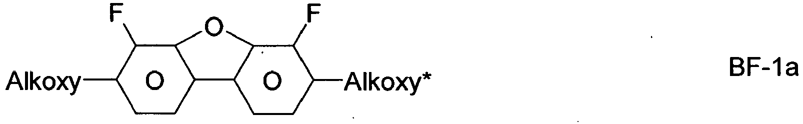 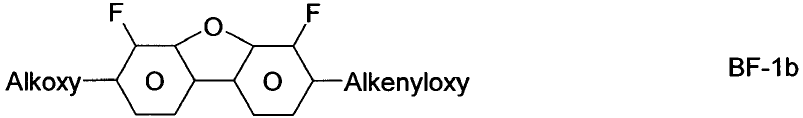 worin
   - Alkyl und Alkyl*: jeweils unabhängig voneinander einen geradkettigen Alkylrest mit 1-6 C-Atomen,
   - Alkoxy und Alkoxy*: jeweils unabhängig voneinander einen geradkettigen Alkoxyrest mit 1-6 C-Atomen,
   - Alkenyl und Alkenyl*: jeweils unabhängig voneinander einen geradkettigen Alkenylrest mit 2-6 C-Atomen, und
   - Alkenyloxy: einen geradkettigen Alkenyloxyrest mit 2-6 C-Atomen
   bedeuten.
   Ganz besonders bevorzugt sind Mischungen enthaltend eine, zwei oder drei Verbindungen der Formel BC-2 und/oder BF-1a.
l) Bevorzugte Mischungen enthalten eine oder mehrere Indan-Verbindungen der Formeln In, 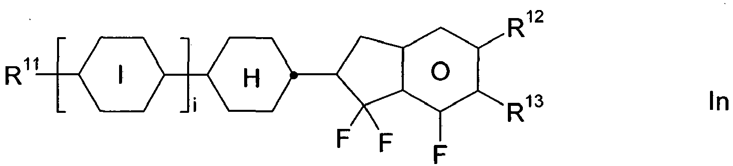 worin
   - R¹¹ , R¹², R¹³: jeweils unabhängig voneinander einen geradkettigen Alkyl-, oder Alkoxy-, Alkoxyalkyl-, Alkenylrest mit 1-6 C-Atomen,
   - R¹² und R¹³: zusätzlich Halogen, vorzugsweise F, 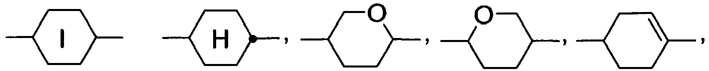 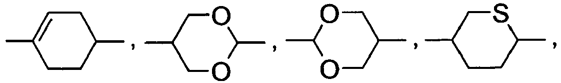 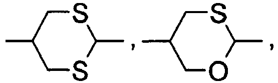
   - i: 0, 1 oder 2
   bedeuten.
   Bevorzugte Verbindungen der Formel In sind die nachfolgend genannten Verbindungen der Formeln In-1 bis In-16, 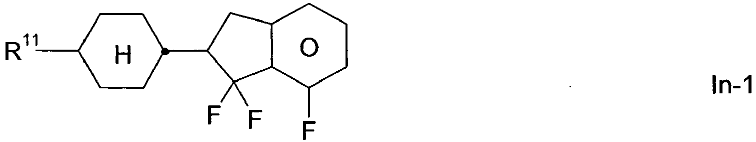 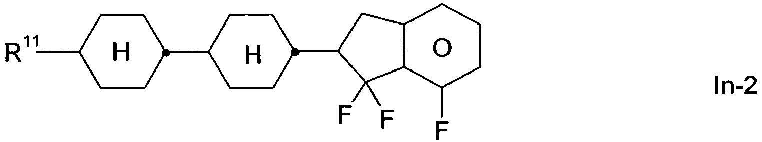 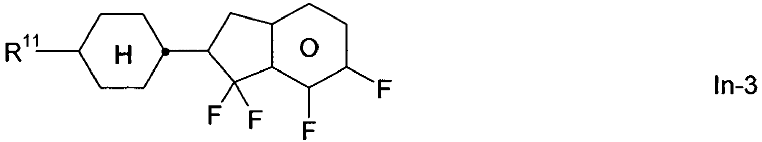 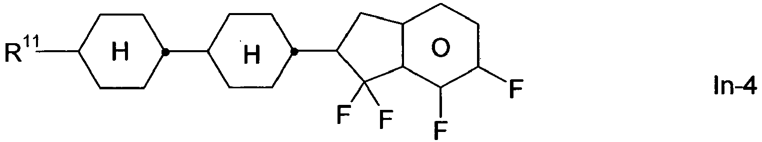 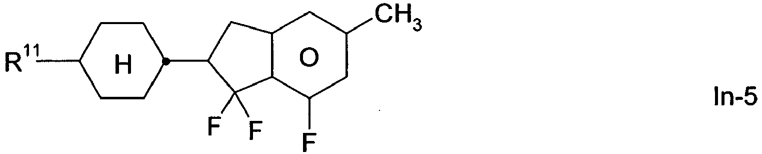 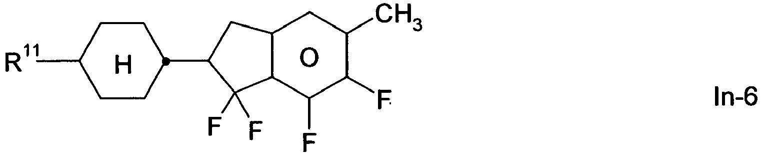 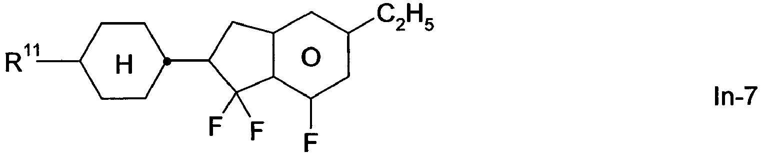 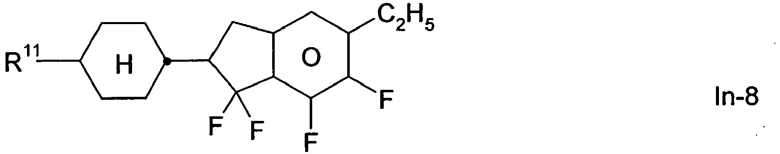 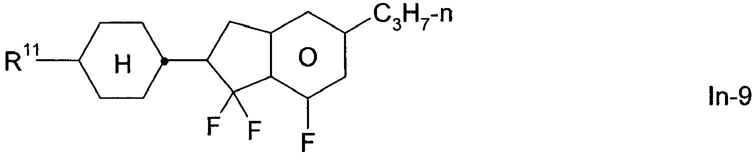 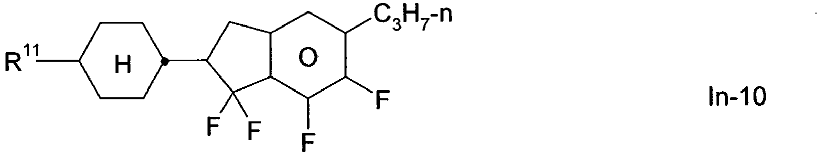 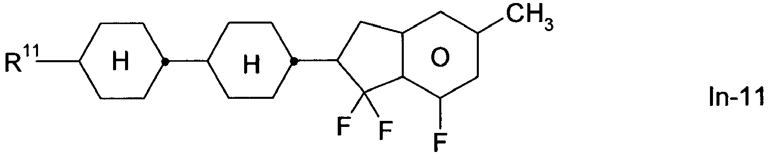 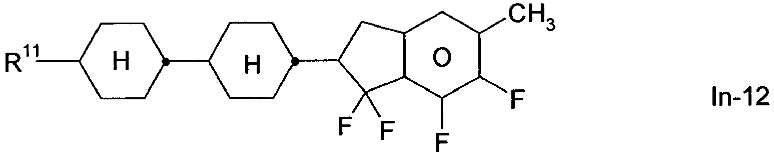 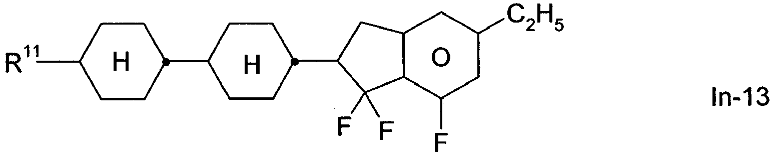 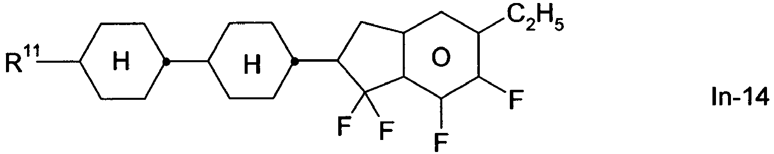 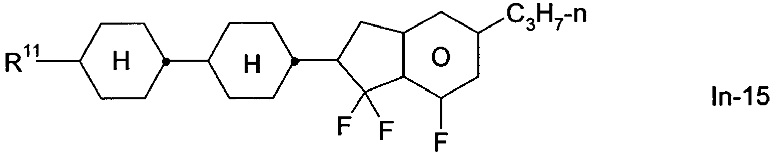 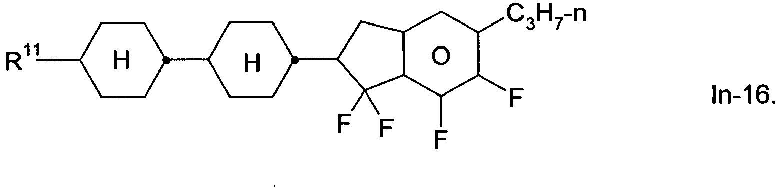 Besonders bevorzugt sind die Verbindungen der Formeln In-1, In-2, In-3 und In-4.
   Die Verbindungen der Formeln In und der Unterformeln In-1 bis In-16 werden vorzugsweise in Konzentrationen ≥ 5 Gew.%, insbesondere 5 - 30 Gew.% und ganz besonders bevorzugt 5 - 25 Gew.% in den erfindungsgemäßen Mischungen eingesetzt.
m) Bevorzugte Mischungen enthalten zusätzlich eine oder mehrere Verbindungen der Formeln L-1 bis L-11, 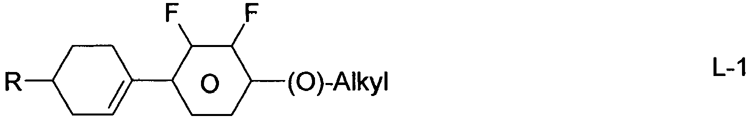 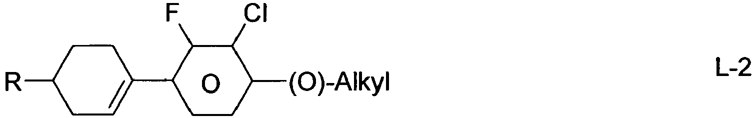 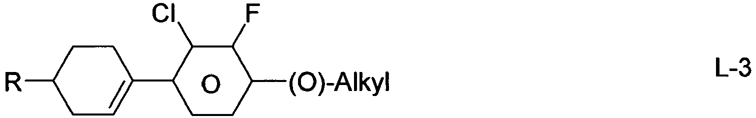 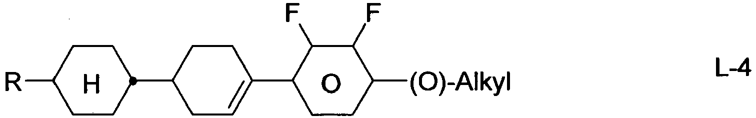 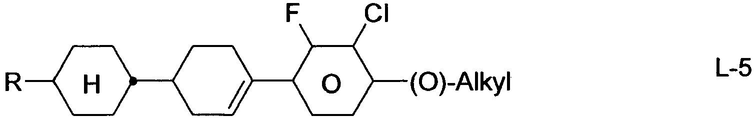 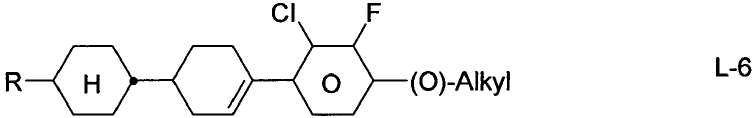 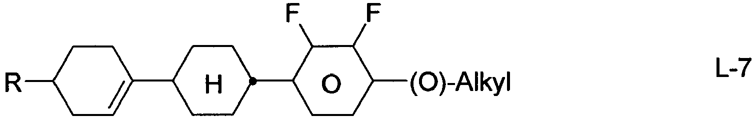 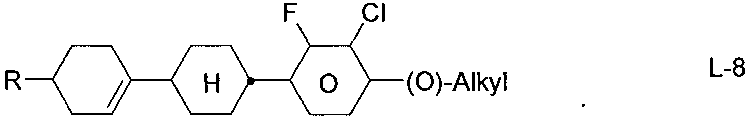 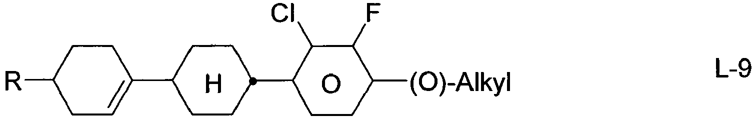 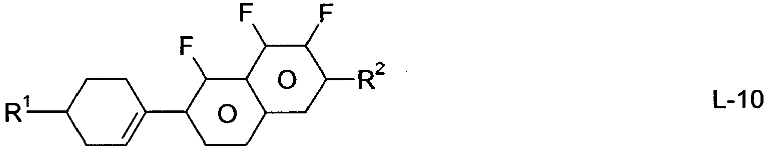 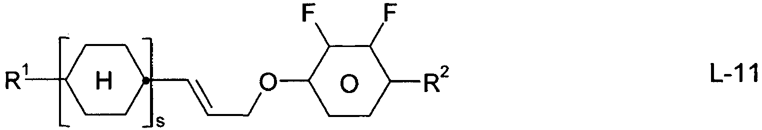 worin
   R, R¹ und R² jeweils unabhängig voneinander die für R^{2A} in Anspruch 3 angegebenen Bedeutungen haben und Alkyl ein Alkylrest mit 1-6 C-Atomen bedeutet. s bedeutet 1 oder 2.
   Besonders bevorzugt sind die Verbindungen der Formeln L-1 und L-4, insbesondere L-4.
   Die Verbindungen der Formeln L-1 bis L-11 werden vorzugsweise in Konzentrationen von 5 - 50 Gew.%, insbesondere 5 - 40 Gew.% und ganz besonders bevorzugt 10 - 40 Gew.% eingesetzt.

Besonders bevorzugte Mischungskonzepte werden nachfolgend genannt: (Die verwendeten Acronyme sind in Tabelle A erklärt. n und m bedeuten hier jeweils unabhängig voneinander 1-6.)

Die erfindungsgemäßen Mischungen enthalten vorzugsweise
- die Verbindung der Formel I, worin L¹ = L² = L³ =F, L³ = H und R¹ = R^{1*} = Alkoxy bedeuten,
- CPY-n-Om, insbesondere CPY-2-O2, CPY-3-O2 und/oder CPY-5-O2, vorzugsweise in Konzentrationen > 5 %, insbesondere 10-30 %, bezogen auf die Gesamtmischung,
   und/oder
- CY-n-Om, vorzugsweise CY-3-O2, CY-3-O4, CY-5-O2 und/oder CY-5-O4, vorzugsweise in Konzentrationen > 5 %, insbesondere 15-50 %, bezogen auf die Gesamtmischung,
   und/oder
- CCY-n-Om, vorzugsweise CCY-4-O2, CCY-3-O2, CCY-3-O3, CCY-3-O1 und/oder CCY-5-O2, vorzugsweise in Konzentrationen > 5 %, insbesondere 10-30 %, bezogen auf die Gesamtmischung,
   und/oder
- CLY-n-Om, vorzugsweise CLY-2-O4, CLY-3-O2 und/oder CLY-3-O3, vorzugsweise in Konzentrationen > 5 %, insbesondere 10-30 %, bezogen auf die Gesamtmischung,
   und/oder
- CK-n-F, vorzugsweise CK-3-F, CK-4-F und/oder CK-5-F, vorzugsweise > 5 %, insbesondere 5-25 %, bezogen auf die Gesamtmischung.

Weiterhin bevorzugt sind erfindungsgemäße Mischungen, die folgende Mischungskonzepte enthalten:
(n und m bedeuten jeweils unabhängig voneinander 1-6.)
- CPY-n-Om und CY-n-Om, vorzugsweise in Konzentrationen von 10-80 % bezogen auf die Gesamtmischung,
   und/oder

- CPY-n-Om und CK-n-F, vorzugsweise in Konzentrationen von 10-70 % bezogen auf die Gesamtmischung,
   und/oder
- CPY-n-Om und PY-n-Om, vorzugsweise CPY-2-O2 und/oder CPY-3-O2 und PY-3-O2, vorzugsweise in Konzentrationen von 10 - 40 % bezogen auf die Gesamtmischung,
   und/oder
- CPY-n-Om und CLY-n-Om, vorzugsweise in Konzentrationen von 10-80 % bezogen auf die Gesamtmischung
   und/oder
   CC-3-V, vorzugsweise in Konzentrationen von 5-60 Gew.%, bezogen auf die Gesamtmischung
   und/oder
   CC-V-V, vorzugsweise in Konzentrationen von 5-60 Gew.% bezogen auf die Gesamtmischung
   und/oder
   CC-3-V und CC-V-V, vorzugsweise in einer Gesamtkonzentration von 5-60 Gew.%, bezogen auf die Gesamtmischung.
   und/oder
   CCVC-3-V und/oder CC-3-2V1, vorzugsweise in Kombination mit CC-3-V
   und/oder
   mindestens eine Verbindung der Formel Y-nO-Om.

Ein weiterer Gegenstand der Erfindung ist eine elektrooptische Anzeige mit einer Aktivmatrix-Adressierung basierend auf dem ECB-, VA-, PS-VA, PVA-, PM-VA, IPS-, PS-IPS-, FFS- oder PS-FFS-Effekt, dadurch gekennzeichnet, dass sie als Dielektrikum ein flüssigkristallines Medium nach einem oder mehreren der Ansprüche 1 bis 12 enthält.

Das erfindungsgemäße flüssigkristalline Medium weist bevorzugt eine nematische Phase von ≤ -20 °C bis ≥ 70 °C, besonders bevorzugt von ≤ -30 °C bis ≥ 80 °C, ganz besonders bevorzugt von ≤ -40 °C bis ≥ 90 °C auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20 °C in einer entsprechenden Testzelle 1.000 h oder mehr beträgt, wird das Medium als bei dieser Temperatur stabil bezeichnet. Bei Temperaturen von -30 °C bzw. -40 °C betragen die entsprechenden Zeiten 500 h bzw. 250 h. Bei hohen Temperaturen wird der Klärpunkt nach üblichen Methoden in Kapillaren gemessen.

Vorzugsweise weist die Flüssigkristallmischung einen nematischen Phasenbereich von mindestens 60 K und eine Fließviskosität ν₂₀ von maximal 30 mm² · s⁻¹ bei 20 °C auf.

Die Werte der Doppelbrechung Δn in der Flüssigkristallmischung liegen in der Regel zwischen 0,07 und 0,16, vorzugsweise zwischen 0,08 und 0,13.

Die erfindungsgemäße Flüssigkristallmischung weist ein Δε von -0,5 bis -8,0, insbesondere von -2,5 bis -6,0 auf, wobei Δε die dielektrische Anisotropie bedeutet. Die Rotationsviskosität γ₁ bei 20 °C ist vorzugsweise ≤ 150 mPa·s, insbesondere ≤ 120 mPa·s.

Die erfindungsgemäßen Flüssigkristallmedien weisen relativ kleine Werte für die Schwellenspannung (V₀) auf. Vorzugsweise sind sie im Bereich von 1,7 V bis 3,0 V, besonders bevorzugt ≤ 2,5 V und ganz besonders bevorzugt ≤ 2,3 V.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Außerdem weisen die erfindungsgemäßen Flüssigkristallmedien hohe Werte für die Voltage Holding Ratio in Flüssigkristallzellen auf.

In der Regel zeigen dabei Flüssigkristallmedien mit einer geringen Ansteuerspannung bzw. Schwellenspannung eine geringere Voltage Holding Ratio als solche mit einer größeren Ansteuerspannung bzw. Schwellenspannung und umgekehrt.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Alle angegebenen Werte für Temperaturen für die vorliegende Erfindung sind in °C.

Die erfindungsgemäßen Mischungen sind für alle VA-TFT-Anwendungen geeignet, wie z.B. VAN, MVA, (S)-PVA, ASV, PSA (polymer sustained VA), SA-VA (surface aligned VA), SS-VA (surface stabilized VA) und PS-VA (polymer stabilized VA). Weiterhin sind sie für IPS (In plane switching) und FFS (Fringe field switching) mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält bevorzugt neben einer oder mehreren Verbindungen der Formel I, die Verbindungen der Formeln IIA, IIB und/oder IIC, ferner Verbindungen der Formeln III.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm^{2·}s⁻¹, vorzugsweise nicht mehr als 25 mm^{2·}s⁻¹, bei 20 °C auf.

Dem Fachmann sind aus der Literatur eine Vielzahl geeigneter Materialien bekannt. Besonders bevorzugt sind Verbindungen der Formel III.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm^{2·}s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Optional kann die Mischung auch eine Komponente C enthalten, wobei es sich um Verbindungen mit einer dielektrischen Anisotropie von Δε ≥1,5 handelt. Diese sogenannten positiven Verbindungen sind in der Regel in einer Mischung mit negativer dielektrischer Anisotropie in Mengen von ≤ 20 Gew.% bezogen auf die Gesamtmischung enthalten.

Sofern die erfindungsgemäße Mischung eine oder mehrere Verbindungen mit einer dielektrischen Anisotropie von Δε ≥1,5 enthält, handelt es sich vorzugsweise um eine oder mehrere Verbindungen der Formeln P-1 und/oder P-2, 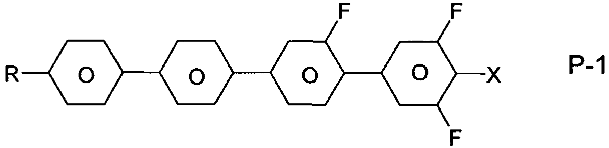 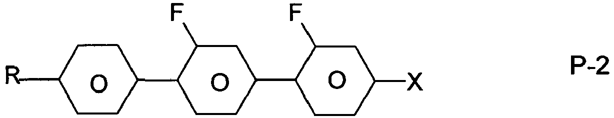 worin
- R: geradkettiges Alkyl, Alkoxy oder Alkenyl mit jeweils 1 bzw. 2 bis 6 C-Atomen, und
- X: F, Cl, CF₃, OCF₃, OCHFCF₃ oder CCF₂CHFCF₃, vorzugsweise F oder OCF₃
bedeuten.

Vorzugsweise werden die Verbindungen P-1 und/oder P-2 in Konzentrationen von 0,5-10 Gew.%, inbesondere 0,5-8 Gew.% in den erfindungsgemäßen Mischungen eingesetzt.

Besonders bevorzugt ist die Verbindung der Formel, 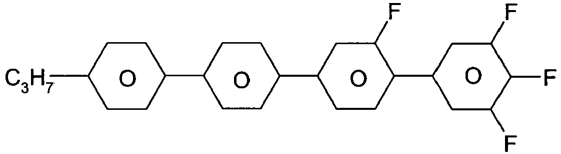 die vorzugsweise in Mengen von 0,5-3 Gew.%. eingesetzt wird.

Daneben können diese Flüssigkristallphasen auch mehr als 18 Komponenten, vorzugsweise 18 bis 25 Komponenten, enthalten.

Vorzugsweise enthalten die Phasen neben einer oder mehreren Verbindungen der Formel I, 4 bis 15, insbesondere 5 bis 12, und besonders bevorzugt < 10, Verbindungen der Formeln IIA, IIB und/oder IIC und optional III.

Neben Verbindungen der Formeln I und den Verbindungen der Formeln IIA, IIB und/oder IIC und optional III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbenen, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R²⁰ -L-G-E-R²¹ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor oder -CN, und R²⁰ und R²¹ jeweils Alkyl, Alkenyl, Alkoxy, Alkoxyalkyl oder Alkoxycarbonyloxy mit bis zu 18, vorzugsweise bis zu 8 Kohlenstoffatomen, oder einer dieser Reste auch CN, NC, NO₂, NCS, CF₃, SF₅, OCF₃, F, Cl oder Br bedeuten.

Bei den meisten dieser Verbindungen sind R²⁰ und R²¹ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS- oder FFS- Mischung auch Verbindungen enthalten kann, worin beispielsweise H, N, O, Cl, F durch die entsprechenden Isotope ersetzt sind.

Den erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,01 - 5 Gew.%, besonders bevorzugt 0,2 - 2 % bezogen auf die Mischung, zugesetzt werden. Optional können diese Mischungen auch einen Initiator enthalten, wie beispielsweise in der U.S 6,781,665 beschrieben. Der Initiator, z.B. Irganox-1076 der Fa. BASF, wird vorzugsweise der Mischung enthaltend polymerisierbare Verbindungen in Mengen von 0-1 % zugesetzt. Derartige Mischungen können für sogenannte Polymer Stabilized VA-Modes (PS-VA) oder PSA (Polymer sustained VA), bei denen eine Polymerisierung der reaktiven Mesogene in der flüssigkristallinen Mischung erfolgen soll, verwendet werden. Voraussetzung hierfür ist, dass die flüssigkristallinen Verbindungen des LC Hosts unter den Polymerisationsbedingungen der reaktiven Mesogene, d.h. in der Regel unter UV-Belichtung im Wellenlängenbereich von 320-360 nm, nicht reagieren. Flüssigkristalline Verbindungen mit einer Alkenylseitenkette, wie z.B. CC-3-V, zeigen unter den genannten Polymerisationsbedingungen (UV-Polymerisation) für die RMs keine Reaktion.

In einer bevorzugten Ausführungsform der Erfindung sind die polymerisierbaren Verbindungen ausgewählt aus den Verbindungen der Formel M

R^{Ma}-A^{M1}-(Z^{M1}-A^{M2})ₘ₁-R^{Mb} M

worin die einzelnen Reste folgende Bedeutung haben:
- R^{Ma} und R^{Mb}: jeweils unabhängig voneinander P, P-Sp-, H, Halogen, SF₅, NO₂, eine Alkyl-, Alkenyl- oder Alkinylgruppe, wobei bevorzugt mindestens einer der Reste R^{Ma} und R^{Mb} eine Gruppe P oder P-Sp- bedeutet oder enthält,
- P: eine polymerisierbare Gruppe,
- Sp: eine Abstandsgruppe oder eine Einfachbindung,
- A^{M1} und A^{M2}: jeweils unabhängig voneinander eine aromatische, heteroaromatische, alicyclische oder heterocyclische Gruppe, vorzugsweise mit 4 bis 25 Ringatomen, bevorzugt C-Atomen, welche auch anellierte Ringe umfasst oder enthalten kann, und die optional ein- oder mehrfach durch L substitutiert sein kann,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können, bevorzugt P, P-Sp-, H, OH, CH₂OH, Halogen, SF₅, NO₂, eine Alkyl-, Alkenyl- oder Alkinylgruppe,
- Y¹: Halogen,
- Z^{M1}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C=C-, -CH=CH-, -COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
- m1: 0, 1, 2, 3 oder 4 und
- n1: 1, 2, 3 oder 4,
wobei mindestens einer, bevorzugt einer, zwei oder drei, besonders bevorzugt einer oder zwei, aus der Gruppe R^{Ma}, R^{Mb} und der vorhandenen Substituenten L eine Gruppe P oder P-Sp- bedeutet oder mindestens eine Gruppe P oder P-Sp- enthält.

Besonders bevorzugte Verbindungen der Formel M sind solche, worin
- R^{Ma} und R^{Mb}: jeweils unabhängig voneinander P, P-Sp-, H, F, Cl, Br, I, -CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Sp- ersetzt sein können, wobei bevorzugt mindestens einer der Reste R^{Ma} und R^{Mb} eine Gruppe P oder P-Sp- bedeutet oder enthält,
- A^{M1} und A^{M2}: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂, -NCO, -NCS,-OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F, Cl, P oder P-Sp- ersetzt sein können,
- P: eine polymerisierbare Gruppe,
- Y¹: Halogen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Ganz besonders bevorzugt sind Verbindungen der Formel M, worin einer von R^{Ma} und R^{Mb} oder beide P oder P-Sp- bedeuten.

Geeignete und bevorzugte RMs für die Verwendung in erfindungsgemäßen flüssigkristallinen Medien und PS-VA-, PS-IPS-, PS-FFS-Anzeigen oder PSA-Anzeigen, sind beispielsweise ausgewählt aus den folgenden Formeln: 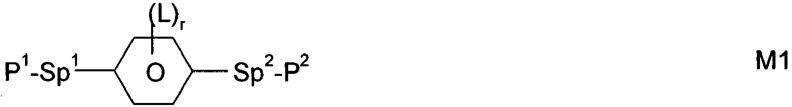 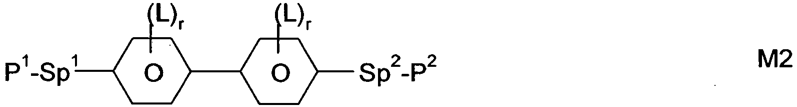 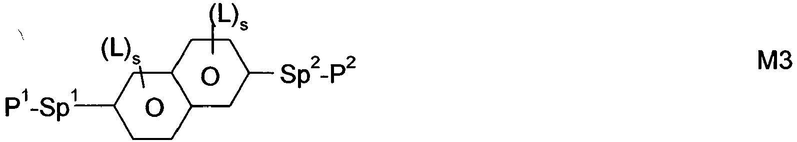 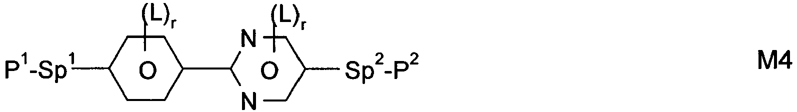 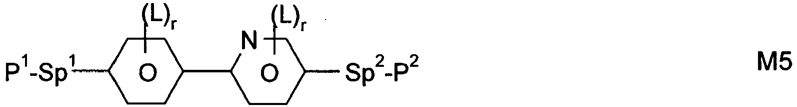 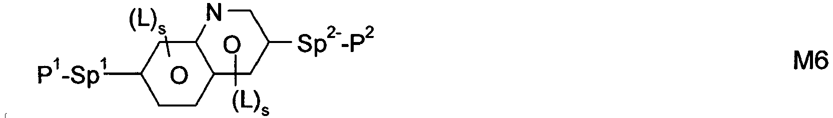 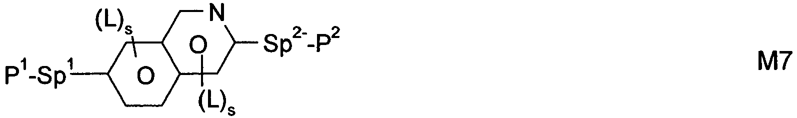 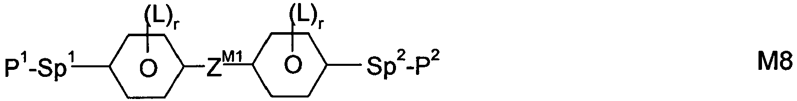 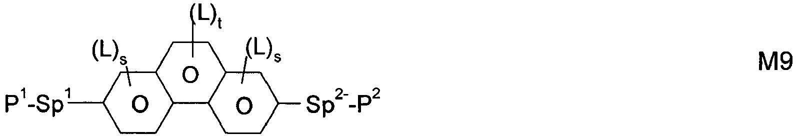 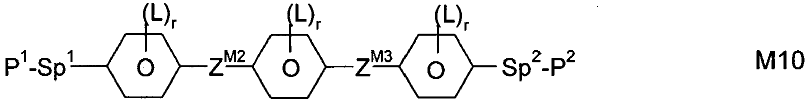 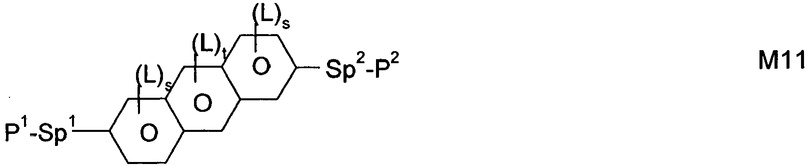 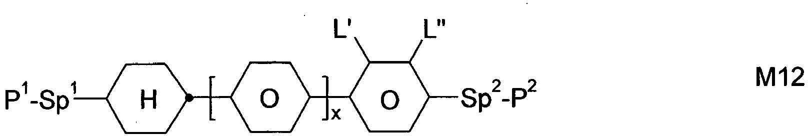 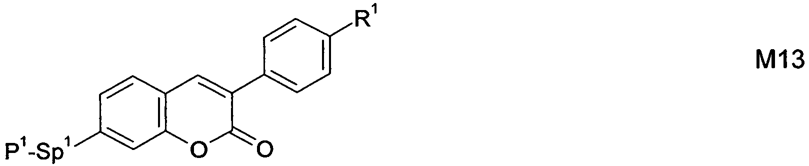 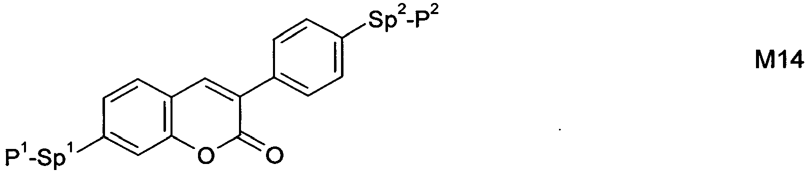 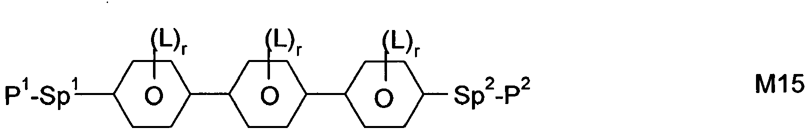 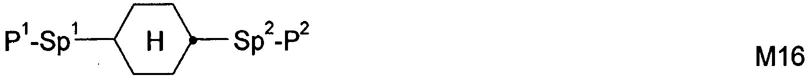 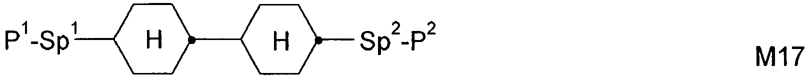 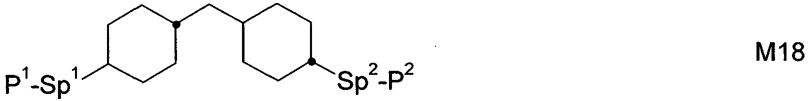 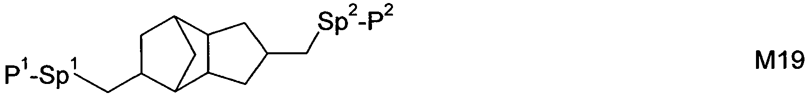 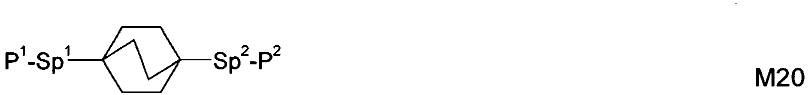 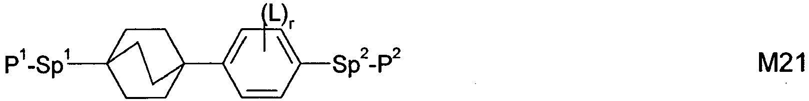 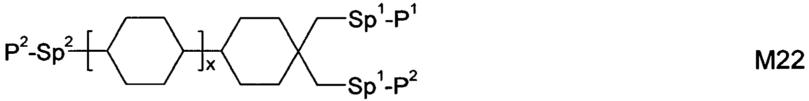 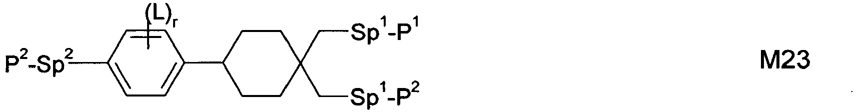 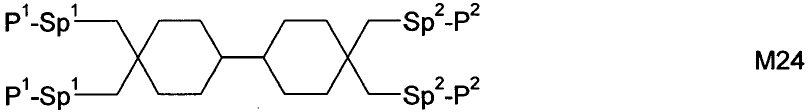 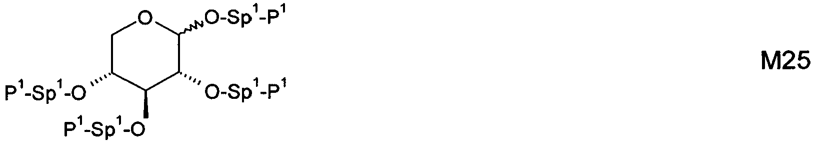 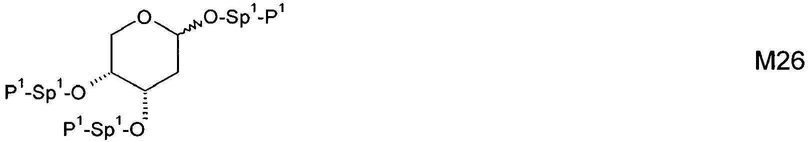 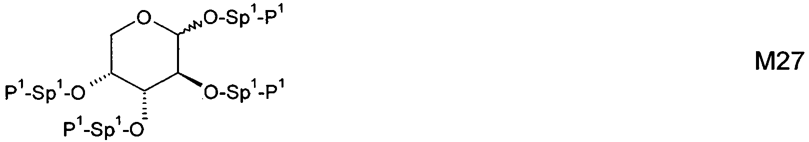 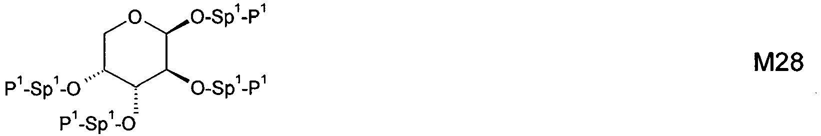 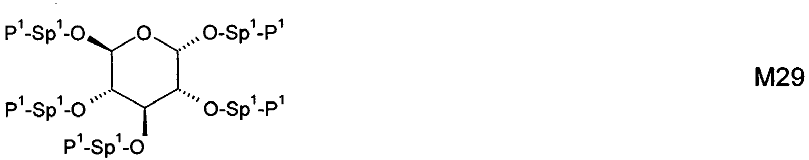 worin die einzelnen Reste folgende Bedeutung besitzen:
- P¹ und P²: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
- Sp¹ und Sp²: jeweils unabhängig voneinander eine Einfachbindung oder eine Abstandsgruppe, vorzugsweise mit einer der vor- und nachstehend für Sp angegebenen Bedeutungen, und besonders bevorzugt -(CH₂)ₚ₁-, -(CH₂)ₚ₁-O-, -(CH₂)ₚ₁-CO-O- oder -(CH₂)ₚ₁-O-CO-O- bedeuten, worin p1 eine ganze Zahl von 1 bis 12 ist, und wobei in den letztgenannten Gruppen die Verknüpfung zur benachbarten Ring über das O-Atom erfolgt, wobei einer der Reste P¹-Sp¹- und P²-Sp²- auch R^{aa} bedeuten kann,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-,-O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹-ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- Z^{M1}: -O-, -CO-, -C(R^{y}R^{z})-,oder -CF₂CF₂-,
- Z^{M2} und Z^{M3}: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, oder geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2, und
- x: 0 oder 1.

Geeignete polymerisierbare Verbindungen sind beispielsweise in Tabelle E gelistet.

Bevorzugt enthalten die flüssigkristallinen Medien gemäß der vorliegenden Anmeldung insgesamt 0,1 bis 10 %, bevorzugt 0,2 bis 4,0 %, besonders bevorzugt 0,2 bis 2,0 %, an polymerisierbaren Verbindungen.

Insbesondere bevorzugt sind die polymerisierbaren Verbindungen der Formel M und der Formeln RM-1 bis RM-95.

Die erfindungsgemäßen Mischungen können weiterhin übliche Zusätze oder Additive enthalten, wie z.B. Stabilisatoren, Antioxidantien, UV-Absorber, Nanopartikel, Mikropartikel, etc.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

In der gesamten Patentanmeldung werden 1,4-Cyclohexylenringe und 1,4-Phenylenringe wie folgt dargestellt:

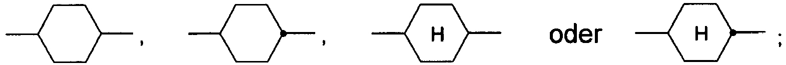

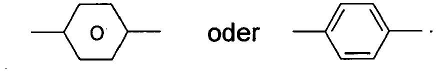

Bei den Cyclohexylenringen handelt es sich um trans-1,4-Cyclohexylenringe.

Vorzugsweise enthalten die erfindungsgemäßen Mischungen neben den Verbindungen der Formel I-6 eine oder mehrere Verbindungen der nachfolgend genannten Verbindungen aus der Tabelle A.

**Tabelle A**

| Folgende Abkürzungen werden verwendet: (n, m, m', z: jeweils unabhängig voneinander 1, 2, 3, 4, 5 oder 6; (O)CmH₂ₘ₊₁ bedeutet OCₘH₂ₘ₊₁ oder CₘH_{2M+1}) |
|---|
| 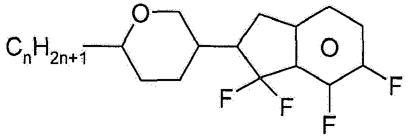 |
| **-AIK-n-F** |
| 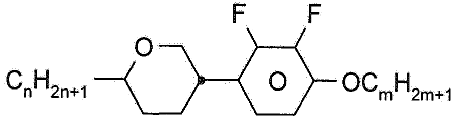 |
| **AIY-n-Om** |
| 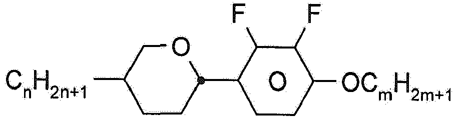 |
| **AY-n-Om** |
| 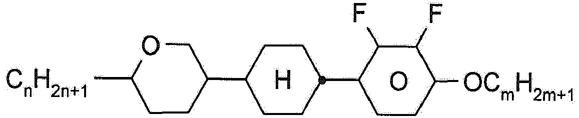 |
| **AICY-n-Om** |
| 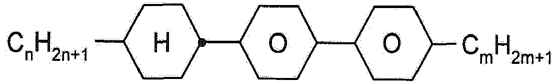 |
| **BCH-nm** |
| 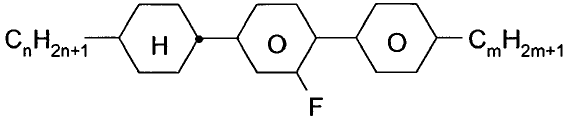 |
| **BCH-nmF** |
| 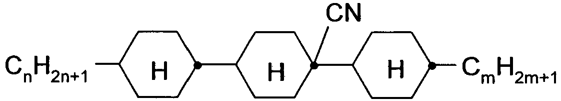 |
| **BCN-nm** |
| 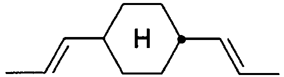 |
| **C-1V-V1** |
| 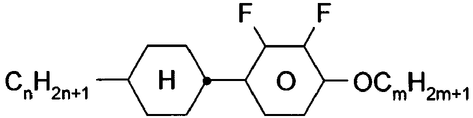 |
| **CY-n-Om** |
| 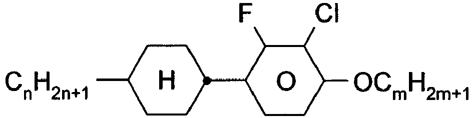 |
| **CY(F,Cl)-n-Om** |
| 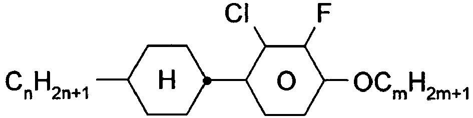 |
| **CY(Cl,F)-n-Om** |
| 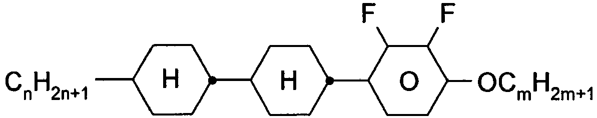 |
| **CCY-n-Om** |
| 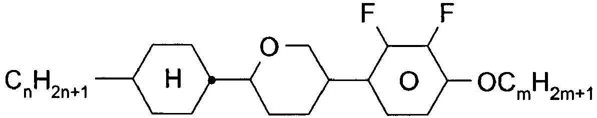 |
| **CAIY-n-Om** |
| 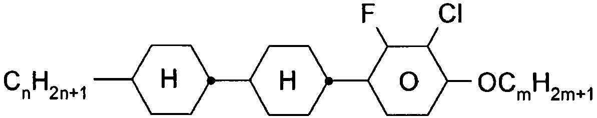 |
| **CCY(F,Cl)-n-Om** |
| 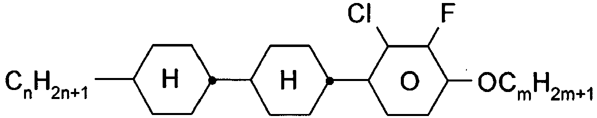 |
| **CCY(Cl,F)-n-Om** |
| 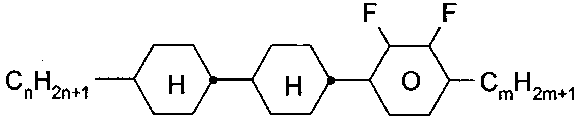 |
| **CCY-n-m** |
| 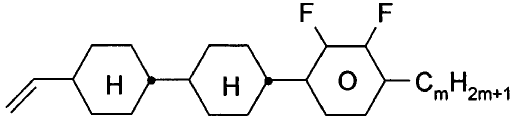 |
| **CCY-V-m** |
| 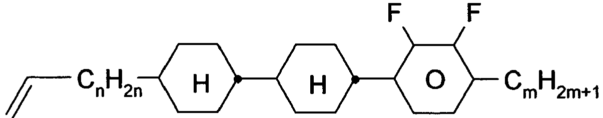 |
| **CCY-Vn-m** |
| 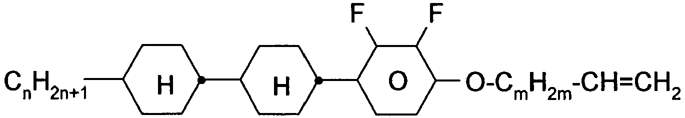 |
| **CCY-n-OmV** |
| 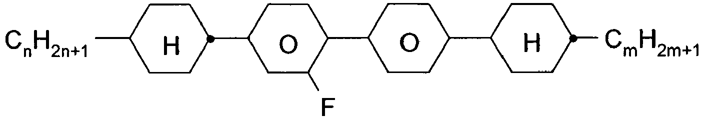 |
| **CBC-nmF** |
| 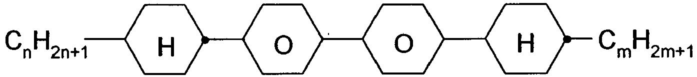 |
| **CBC-nm** |
| 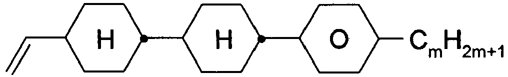 |
| **CCP-V-m** |
| 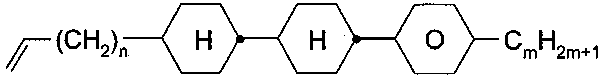 |
| **CCP-Vn-m** |
| 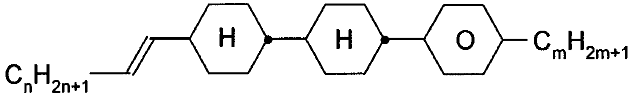 |
| **CCP-nV-m** |
| 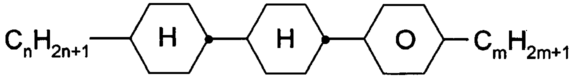 |
| **CCP-n-m** |
| 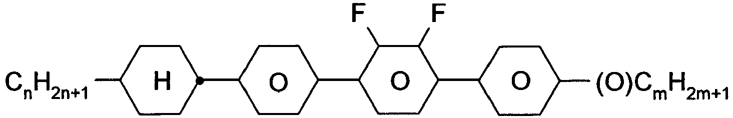 |
| **CPYP-n-(O)m** |
| 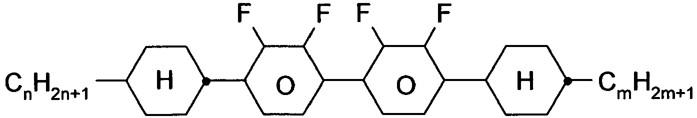 |
| **CYYC-n-m** |
| 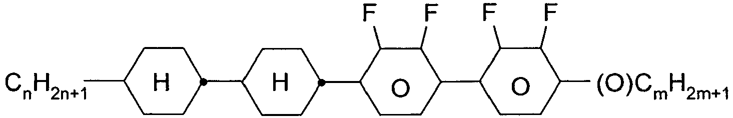 |
| **CCYY-n-(O)m** |
| 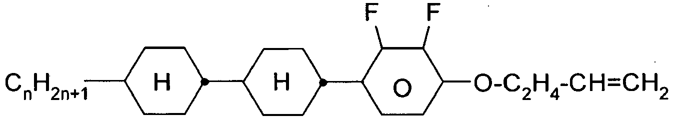 |
| **CCY-n-O2V** |
| 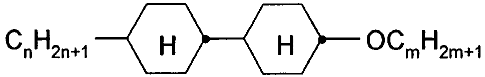 |
| **CCH-nOm** |
| 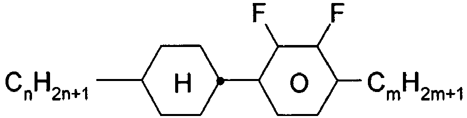 |
| **CY-n-m** |
| 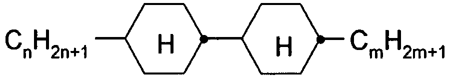 |
| **CCH-nm** |
| 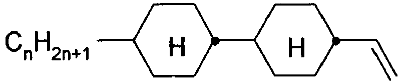 |
| **CC-n-V** |
| 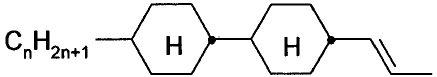 |
| **CC-n-V1** |
| 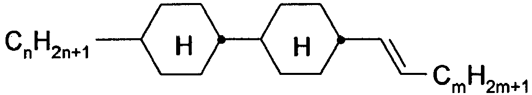 |
| **CC-n-Vm** |
| 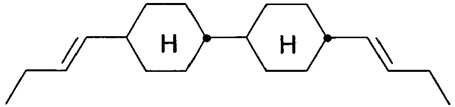 |
| **CC-2V-V2** |
| 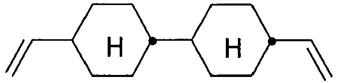 |
| **CC-V-V** |
| 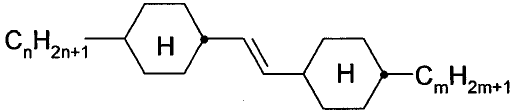 |
| **CVC-n-m** |
| 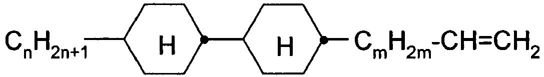 |
| **CC-n-mV** |
| 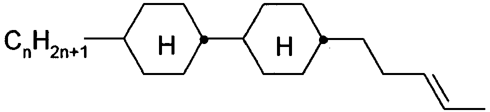 |
| **CC-n-2V1** |
| 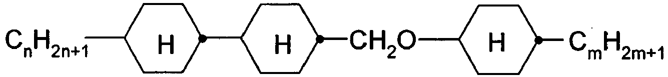 |
| **CCOC-n-m** |
| 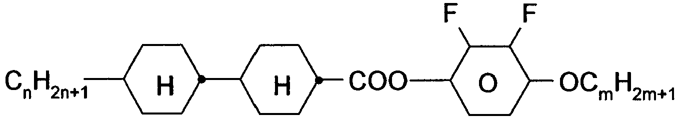 |
| **CP-nOmFF** |
| 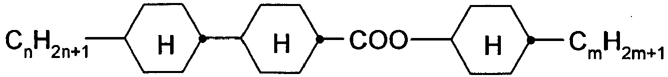 |
| **CH-nm** |
| 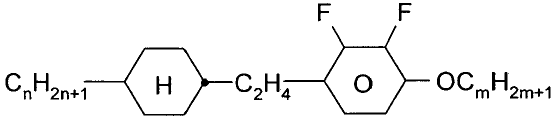 |
| **CEY-n-Om** |
| 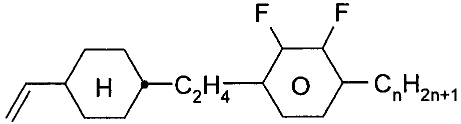 |
| **CEY-V-n** |
| 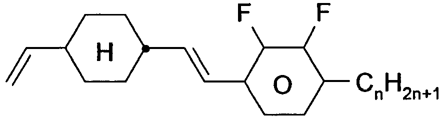 |
| **CVY-V-n** |
| 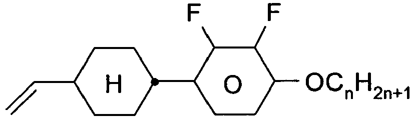 |
| **CY-V-On** |
| 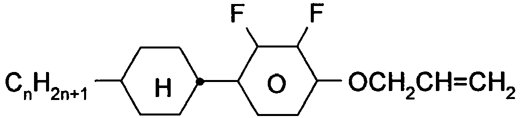 |
| **CY-n-O1V** |
| 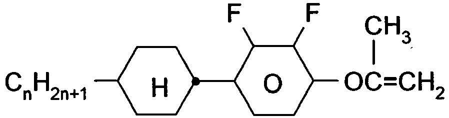 |
| **CY-n-OC(CH₃)=CH₂** |
| 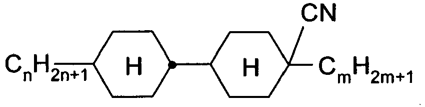 |
| **CCN-nm** |
| 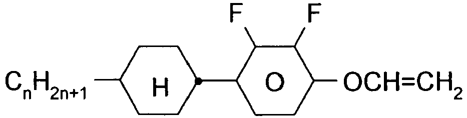 |
| **CY-n-OV** |
| 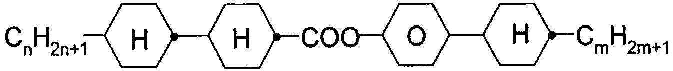 |
| **CCPC-nm** |
| 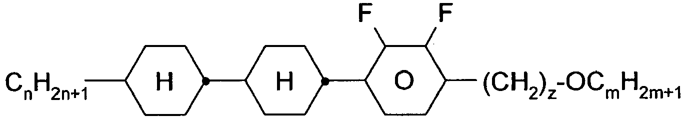 |
| **CCY-n-zOm** |
| 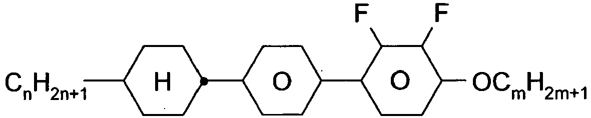 |
| **CPY-n-Om** |
| 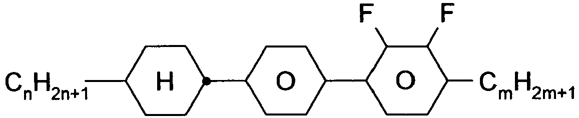 |
| **CPY-n-m** |
| 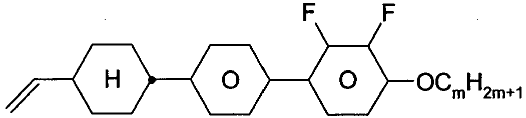 |
| **CPY-V-Om** |
| 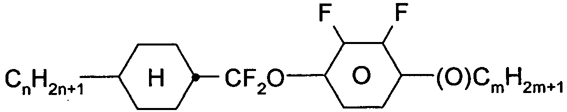 |
| **CQY-n-(O)m** |
| 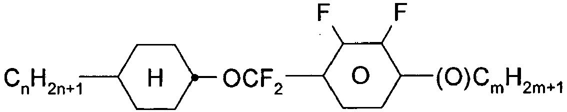 |
| **CQIY-n-(O)m** |
| 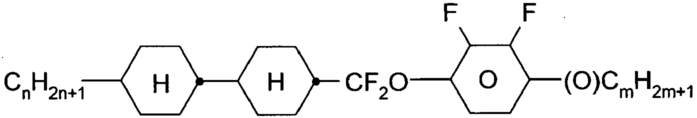 |
| **CCQY-n-(O)m** |
| 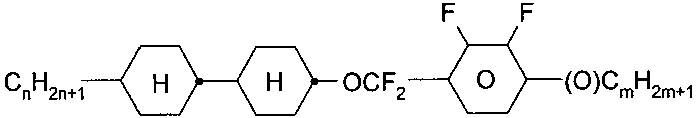 |
| **CCQIY-n-(O)m** |
| 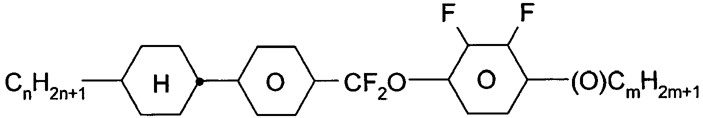 |
| **CPQY-n-(O)m** |
| 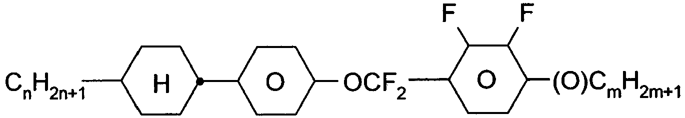 |
| **CPQIY-n-(O)m** |
| 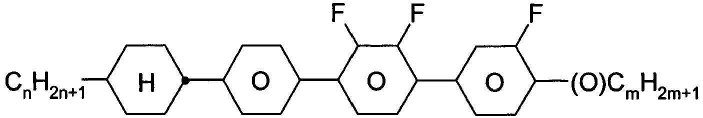 |
| **CPYG-n-(O)m** |
| 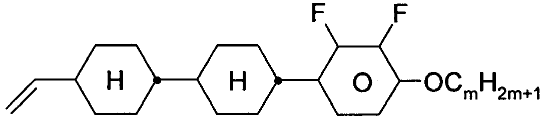 |
| **CCY-V-Om** |
| 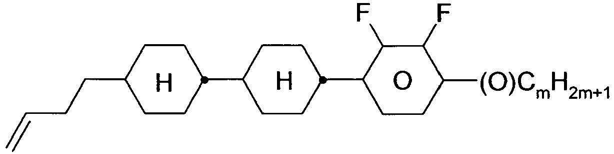 |
| **CCY-V2-(O)m** |
| 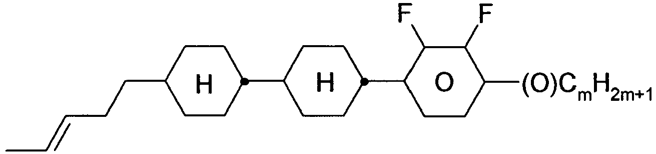 |
| **CCY-1V2-(O)m** |
| 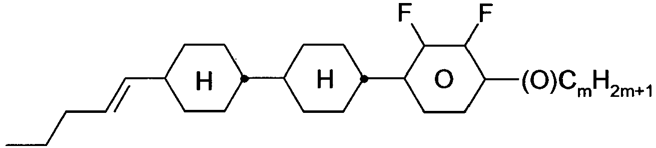 |
| **CCY-3V-(O)m** |
| 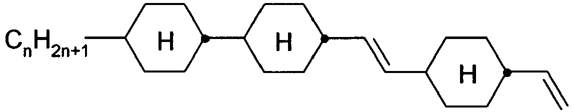 |
| **CCVC-n-V** |
| 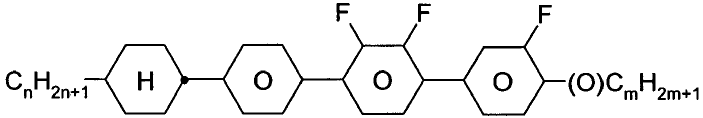 |
| **CPYG-n-(O)m** |
| 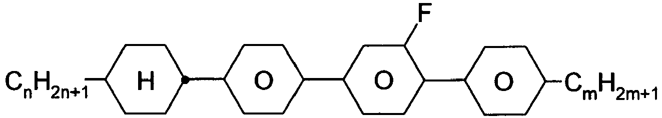 |
| **CPGP-n-m** |
| 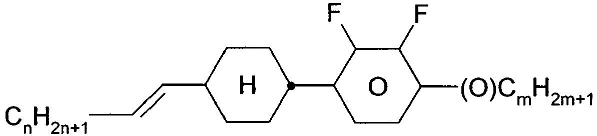 |
| **CY-nV-(O)m** |
| 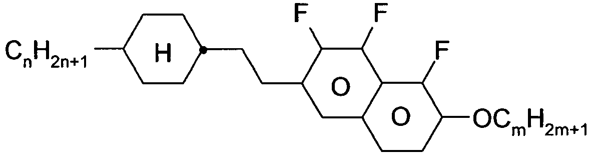 |
| **CENaph-n-Om** |
| 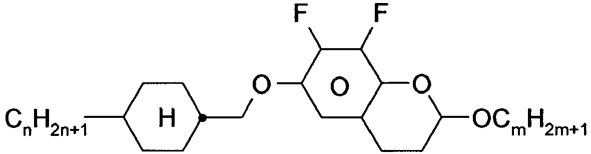 |
| **COChrom-n-Om** |
| 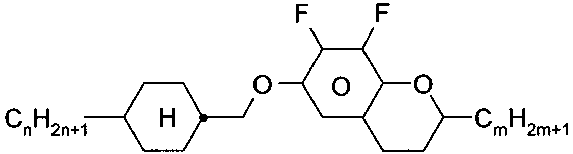 |
| **COChrom-n-m** |
| 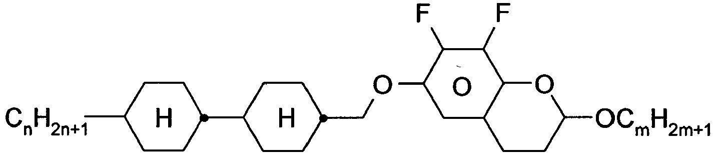 |
| **CCOChrom-n-Om** |
| 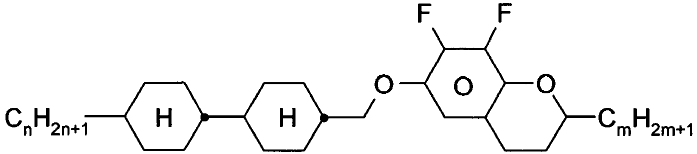 |
| **CCOChrom-n-m** |
| 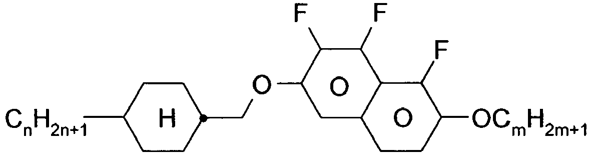 |
| **CONaph-n-Om** |
| 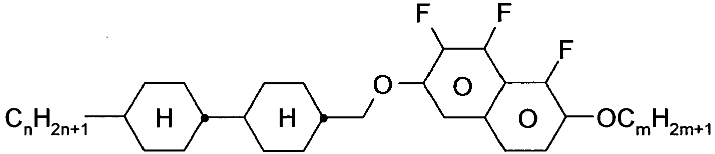 |
| **CCONaph-n-Om** |
| 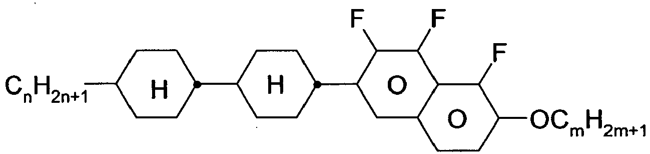 |
| **CCNaph-n-Om** |
| 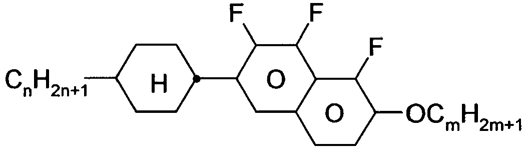 |
| **CNaph-n-Om** |
| 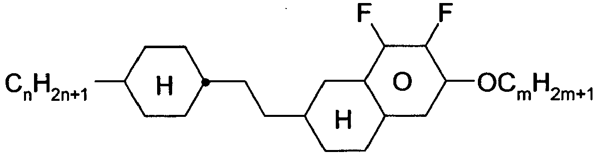 |
| **CETNaph-n-Om** |
| 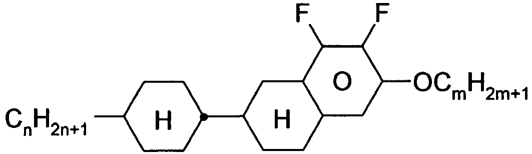 |
| **CTNaph-n-Om** |
| 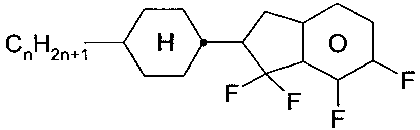 |
| **CK-n-F** |
| 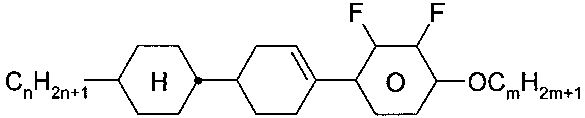 |
| **CLY-n-Om** |
| 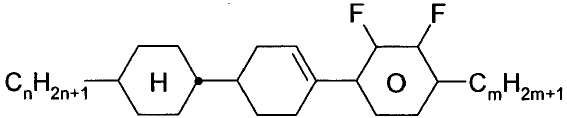 |
| **CLY-n-m** |
| 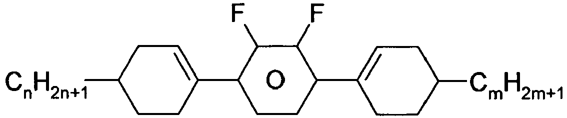 |
| **LYLI-n-m** |
| 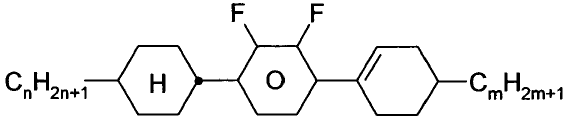 |
| **CYLI-n-m** |
| 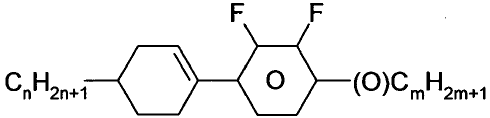 |
| **LY-n-(O)m** |
| 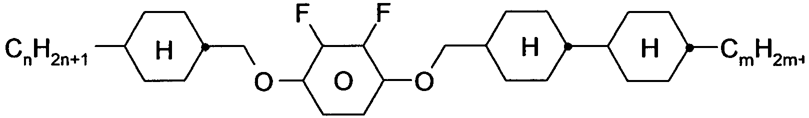 |
| **COYOICC-n-m** |
| 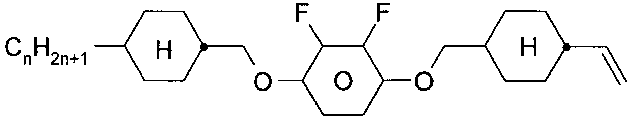 |
| **COYOIC-n-V** |
| 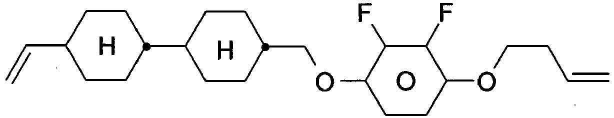 |
| **CCOY-V-O2V** |
| 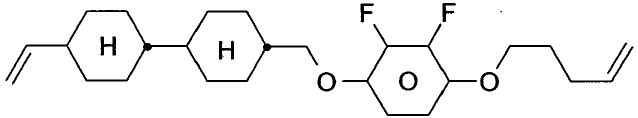 |
| **CCOY-V-O3V** |
| 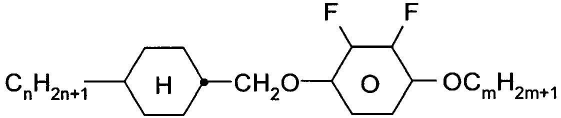 |
| **COY-n-Om** |
| 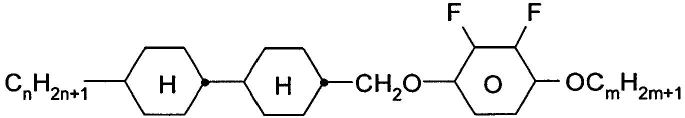 |
| **CCOY-n-Om** |
| 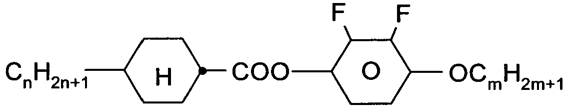 |
| **D-nOmFF** |
| 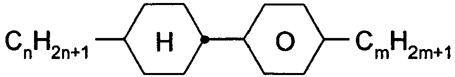 |
| **PCH-nm** |
| 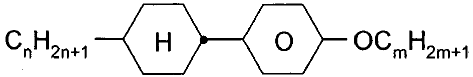 |
| **PCH-nOm** |
| 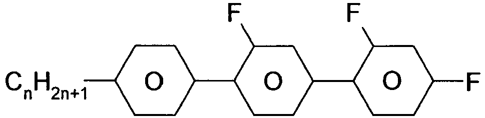 |
| **PGIGI-n-F** |
| 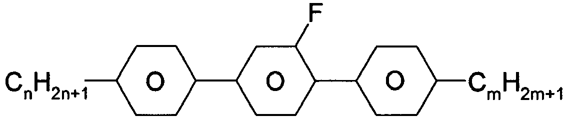 |
| **PGP-n-m** |
| 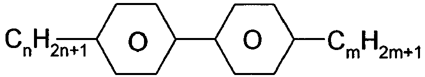 |
| **PP-n-m** |
| 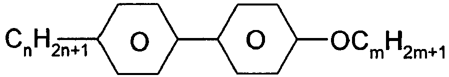 |
| **PP-n-Om** |
| 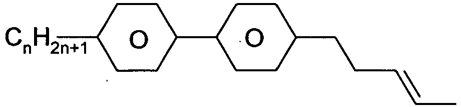 |
| **PP-n-2V1** |
| 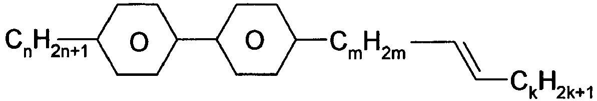 |
| **PP-n-mVk** |
| 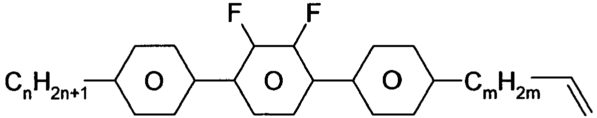 |
| **PYP-n-mV** |
| 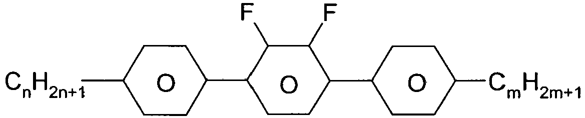 |
| **PYP-n-m** |
| 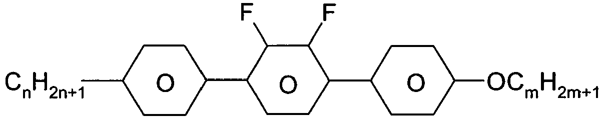 |
| **PYP-n-Om** |
| 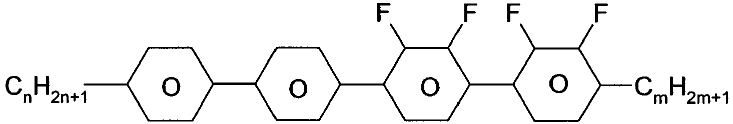 |
| **PPYY-n-m** |
| 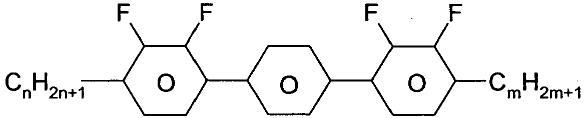 |
| **YPY-n-m** |
| 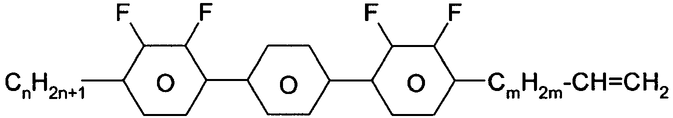 |
| **YPY-n-mV** |
| 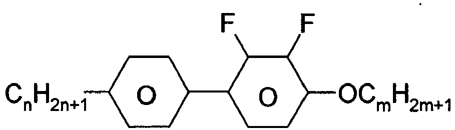 |
| **PY-n-Om** |
| 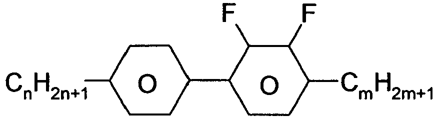 |
| **PY-n-m** |
| 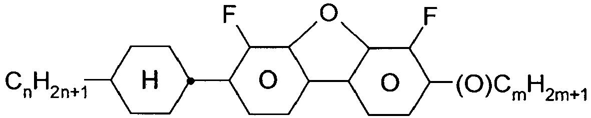 |
| **C-DFDBF-n-(O)m** |
| 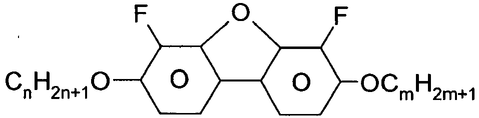 |
| **B-nO-Om** |
| 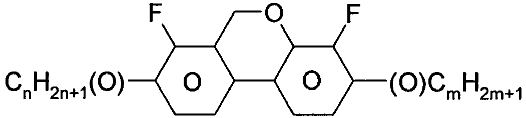 |
| **DFDBC-n(O)-(O)m** |
| 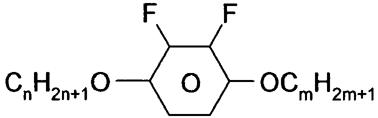 |
| **Y-nO-Om** |
| 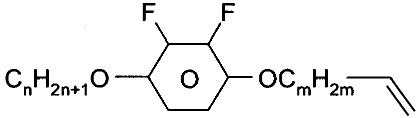 |
| **Y-nO-OmV** |
| 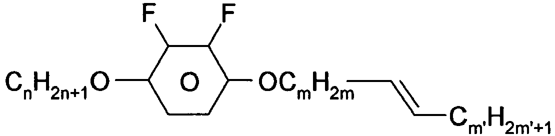 |
| **Y-nO-OmVm'** |
| 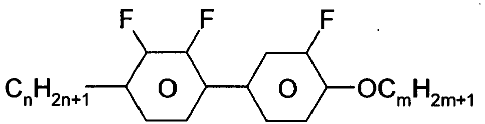 |
| **YG-n-Om** |
| 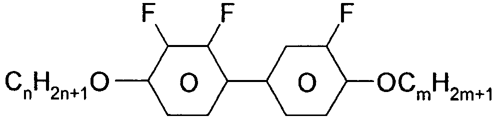 |
| **YG-nO-Om** |
| 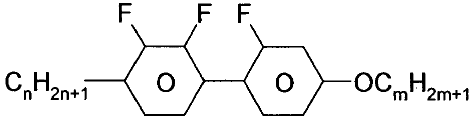 |
| **YGI-n-Om** |
| 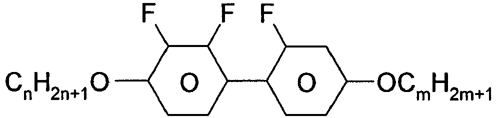 |
| **YGI-nO-Om** |
| 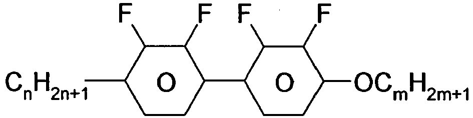 |
| **YY-n-Om** |
| 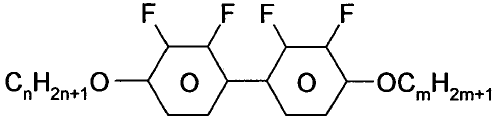 |
| **YY-nO-Om** |
| 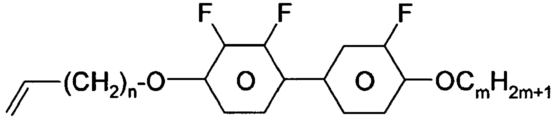 |
| **YG-VnO-Om** |
| 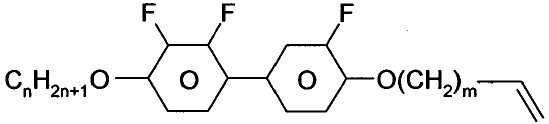 |
| **YG-nO-OmV** |
| 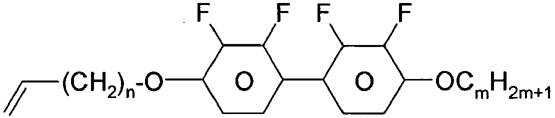 |
| **YY-VnO-Om** |

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA LCD-Anzeige einsetzbar sind.

Die Dielektrika können auch weitere, dem Fachmann bekannte und in der Literatur beschriebene Additive, wie z. B. UV-Absorber, Antioxidantien, Nanoteilchen, Radikalfänger, enthalten. Beispielsweise können 0-15 % pleochroitische Farbstoffe, Stabilisatoren oder chirale Dotierstoffe zugesetzt werden. Geeignete Stabilisatoren für die erfindungsgemäßen Mischungen sind insbesondere solche die in Tabelle D gelistet sind.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle B werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

**Tabelle C**

| In der Tabelle C werden mögliche Dotierstoffe angegeben, die in der Regel den erfindungsgemäßen Mischungen zugesetzt werden. Vorzugsweise enthalten die Mischungen 0-10 Gew.%, insbesondere 0,01-5 Gew.% und besonders bevorzugt 0,01-3 Gew.% an Dotierstoffen. | |
|---|---|
| 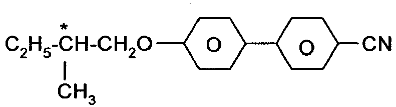 | 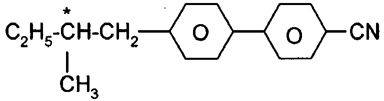 |
| **C 15** | **CB 15** |
| 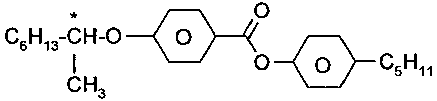 | 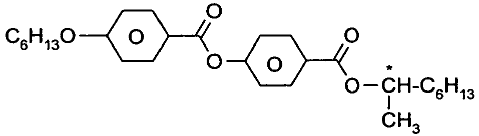 |
| **CM 21** | **R/S-811** |
| 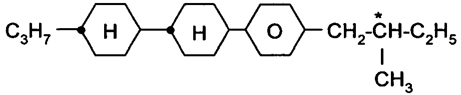 | 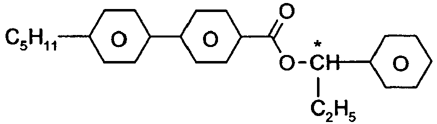 |
| **CM 44** | **CM 45** |
| 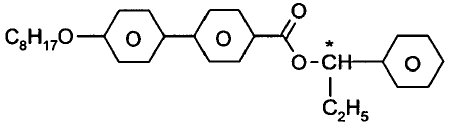 | 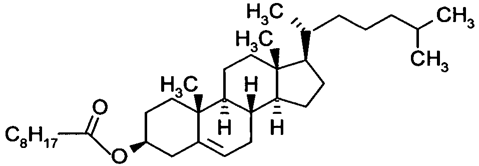 |
| **CM 47** | **CN** |
| 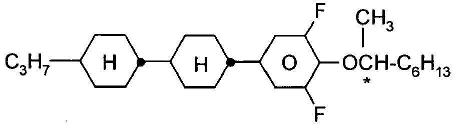 | 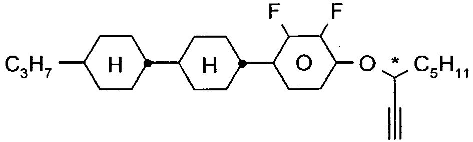 |
| **R/S-2011** | **R/S-3011** |
| 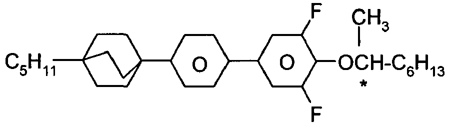 | 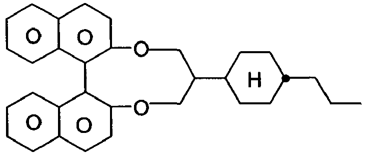 |
| **R/S-4011** | **R/S-5011** |
| 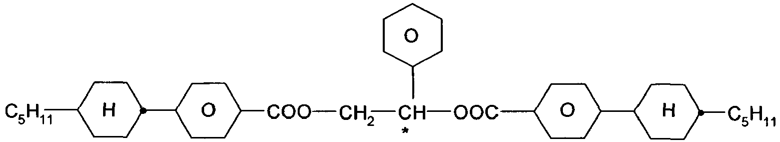 | |
| **R/S-1011** | |

**Tabelle D**

| Stabilisatoren, die beispielsweise den erfindungsgemäßen Mischungen in Mengen von 0-10 Gew.% zugesetzt werden können, werden nachfolgend genannt. | |
|---|---|
| 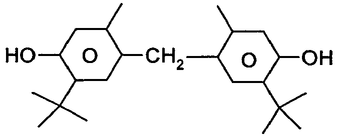 | 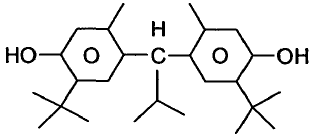 |
| 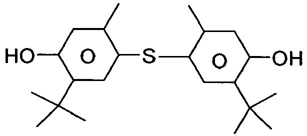 | 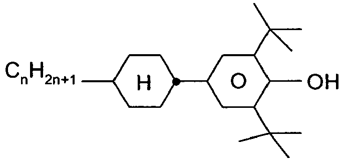 |
| | n = 1, 2, 3, 4, 5, 6 oder 7 |
| 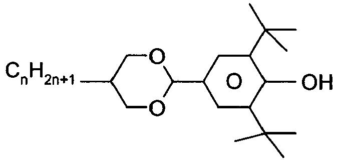 | |
| n = 1, 2, 3, 4, 5, 6 oder 7 | |
| 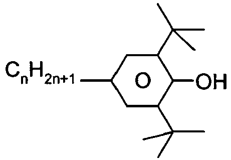 | 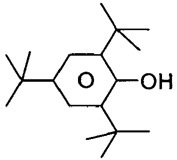 |
| n = 1, 2, 3, 4, 5, 6 oder 7 | |
| 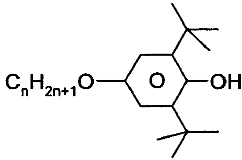 | 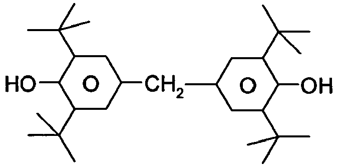 |
| 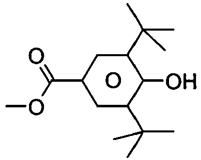 | 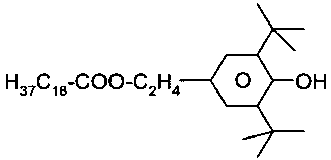 |
| 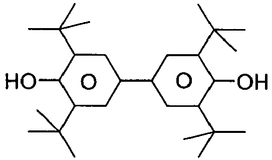 | 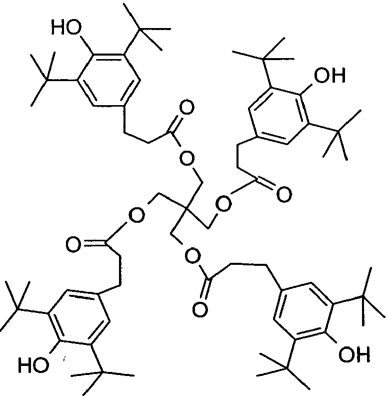 |
| 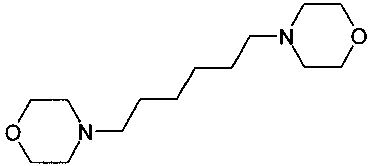 | |
| 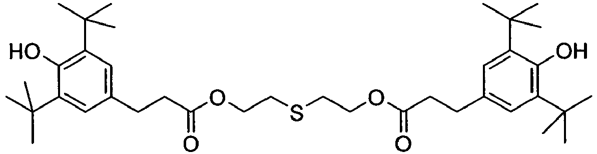 | |
| 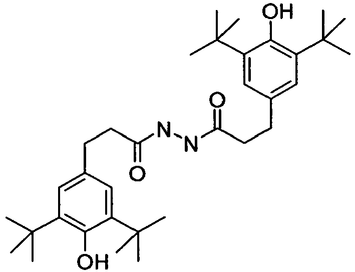 | 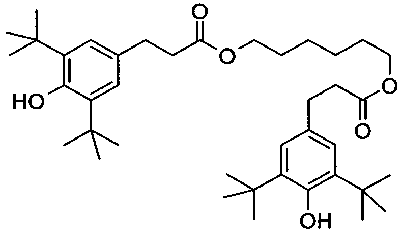 |
| 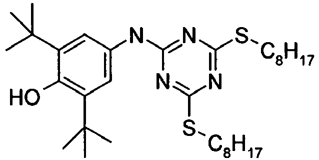 | 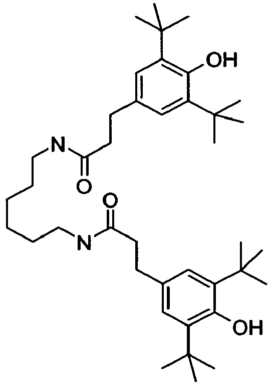 |
| 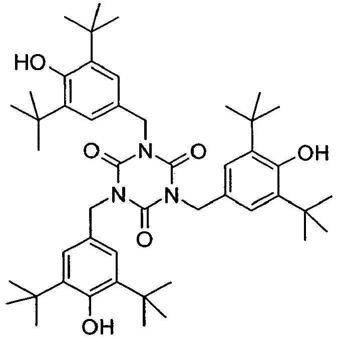 | 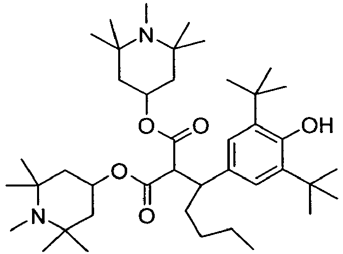 |
| 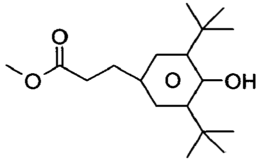 | 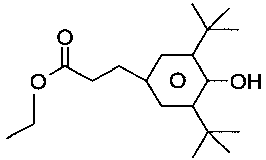 |
| 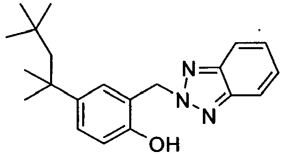 | 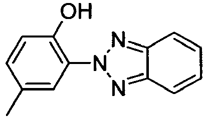 |
| 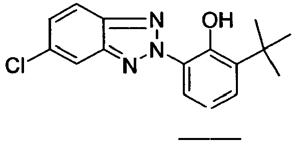 | 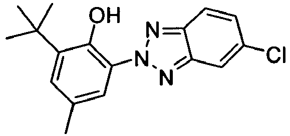 |
| 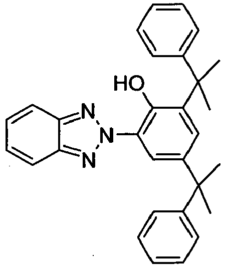 | 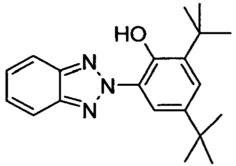 |
| 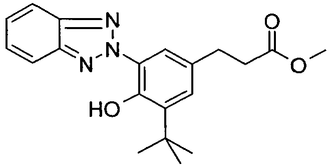 | 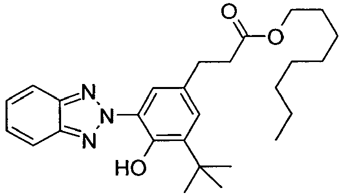 |
| 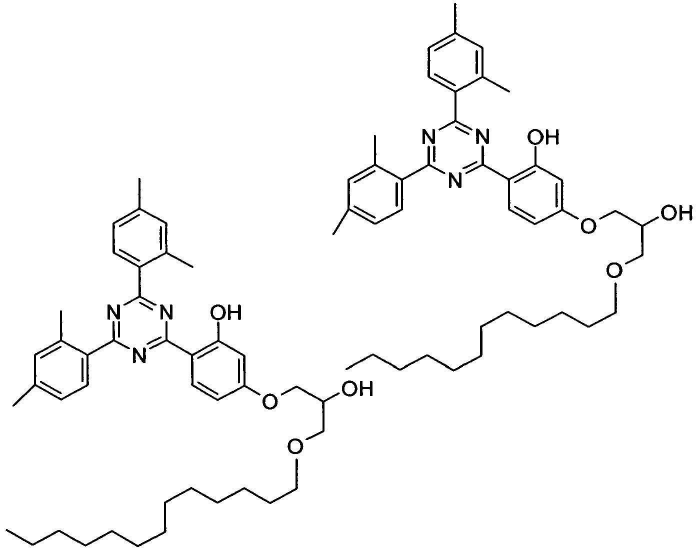 | |
| 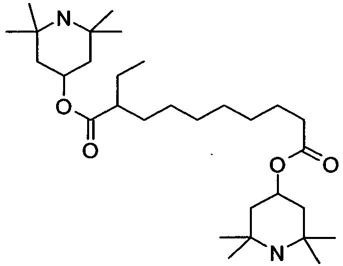 | |
| 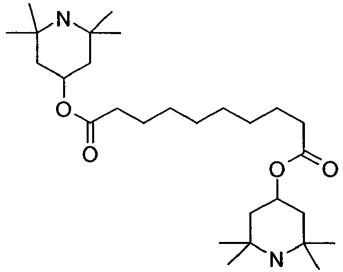 | 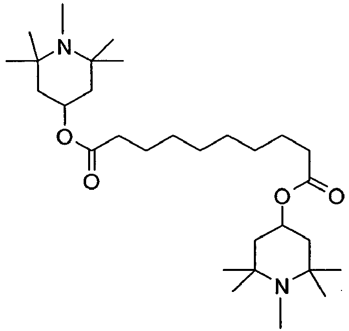 |
| 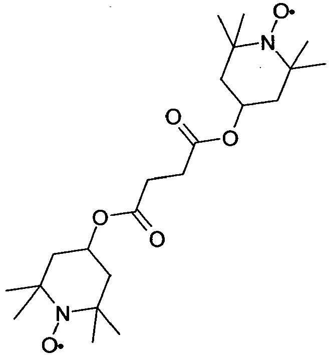 | 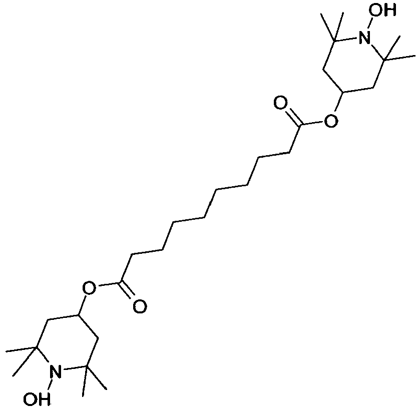 |

**Tabelle E**

| In der Tabelle E sind Beispielverbindungen zusammengestellt, die in den FK-Medien gemäß der vorliegenden Erfindung vorzugsweise als reaktive mesogene Verbindungen verwendet werden können. Sofern die erfindungsgemäßen Mischungen ein oder mehrere reaktive Verbindungen enthalten, werden sie vorzugsweise in Mengen von 0,01-5 Gew.% eingesetzt. Gegebenenfalls muss für die Polymerisation noch ein Initiator oder ein Gemisch aus zwei oder mehr Initiatoren zugesetzt werden. Der Initiator oder das Initiatorgemisch wird vorzugsweise in Mengen von 0,001-2 Gew.% bezogen auf die Mischung zugesetzt. Ein geeigneter Initiator ist z. B. Irgacure (Fa. BASF) oder Irganox (Fa. BASF). | |
|---|---|
| 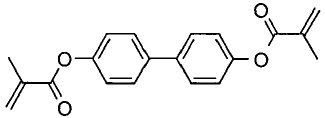 | RM-1 |
| 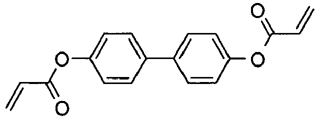 | RM-2 |
| 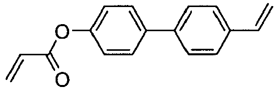 | RM-3 |
| 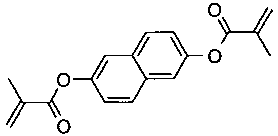 | RM-4 |
| 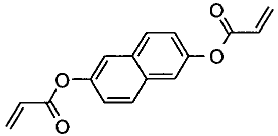 | RM-5 |
| 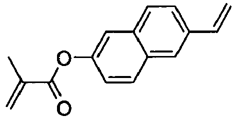 | RM-6 |
| 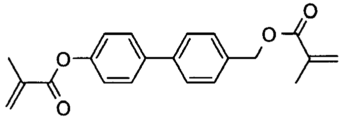 | RM-7 |
| 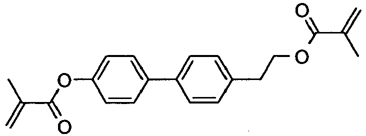 | RM-8 |
| 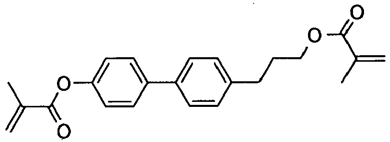 | RM-9 |
| 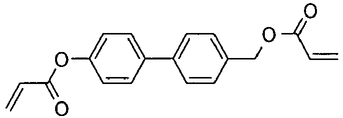 | RM-10 |
| 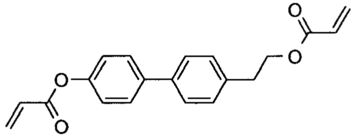 | RM-11 |
| 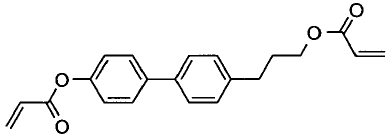 | RM-12 |
| 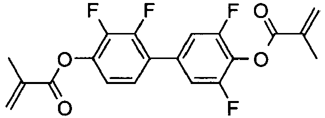 | RM-13 |
| 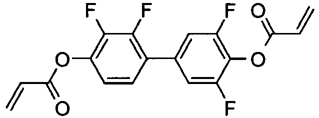 | RM-14 |
| 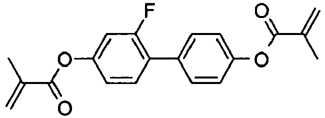 | RM-15 |
| 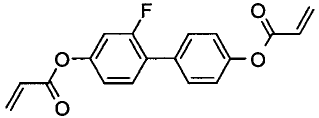 | RM-16 |
| 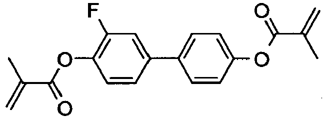 | RM-17 |
| 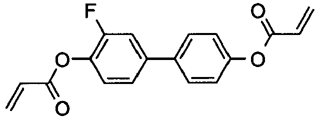 | RM-18 |
| 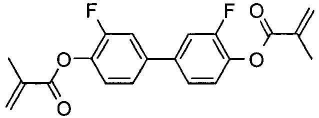 | RM-19 |
| 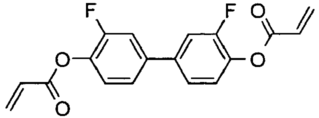 | RM-20 |
| 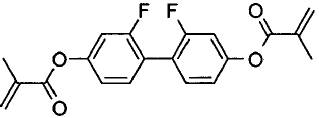 | RM-21 |
| 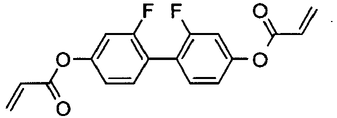 | RM-22 |
| 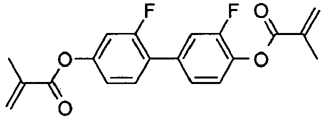 | RM-23 |
| 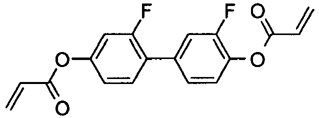 | RM-24 |
| 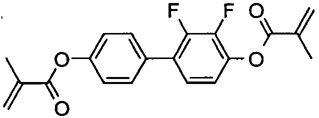 | RM-25 |
| 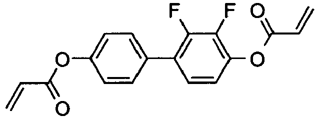 | RM-26 |
| 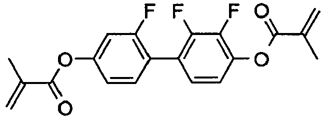 | RM-27 |
| 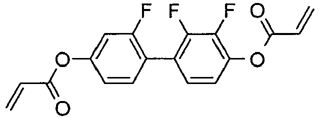 | RM-28 |
| 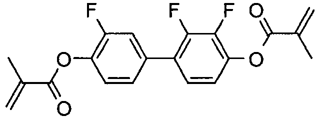 | RM-29 |
| 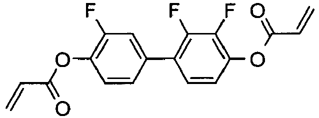 | RM-30 |
| 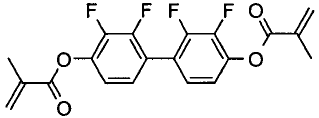 | RM-31 |
| 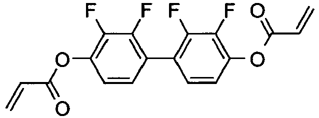 | RM-32 |
| 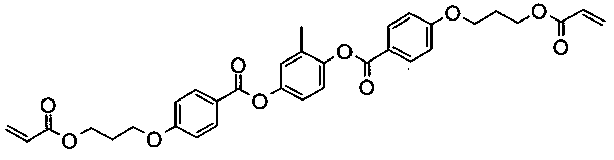 | RM-33 |
| 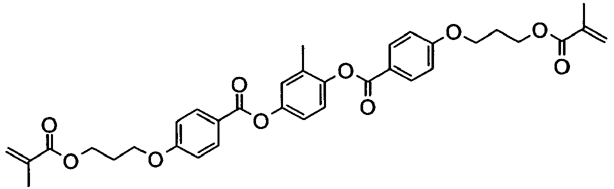 | RM-34 |
| 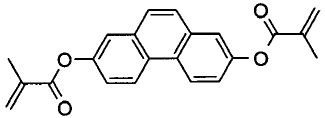 | RM-35 |
| 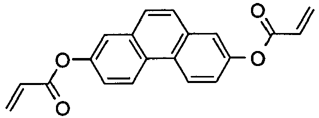 | RM-36 |
| 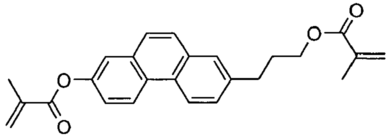 | RM-37 |
| 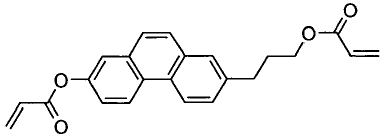 | RM-38 |
| 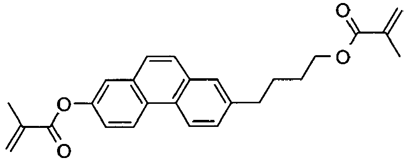 | RM-39 |
| 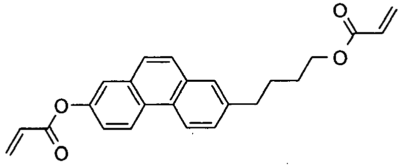 | RM-40 |
| 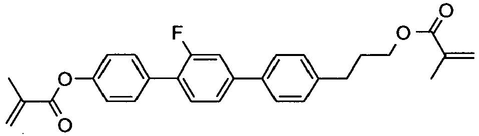 | RM-41 |
| 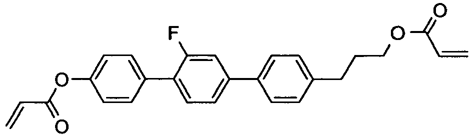 | RM-42 |
| 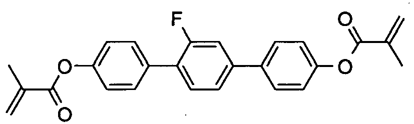 | RM-43 |
| 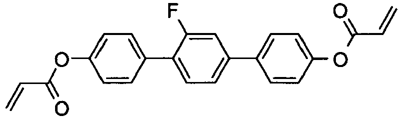 | RM-44 |
| 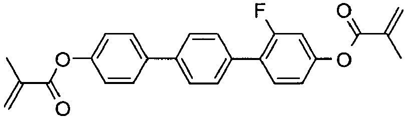 | RM-45 |
| 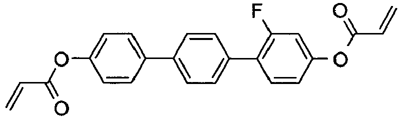 | RM-46 |
| 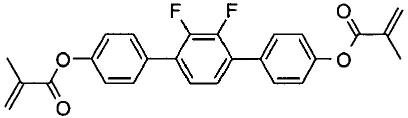 | RM-47 |
| 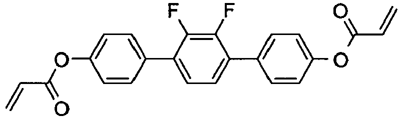 | RM-48 |
| 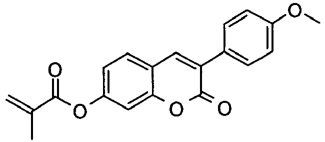 | RM-49 |
| 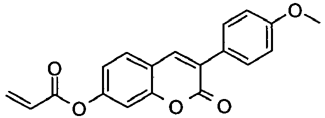 | RM-50 |
| 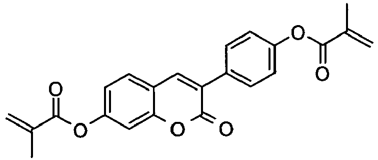 | RM-51 |
| 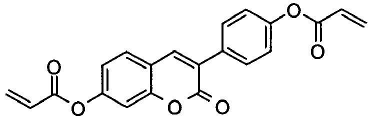 | RM-52 |
| 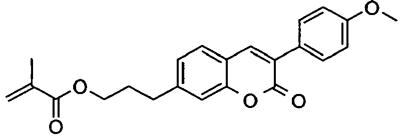 | RM-53 |
| 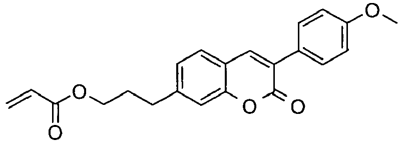 | RM-54 |
| 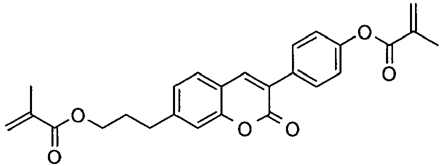 | RM-55 |
| 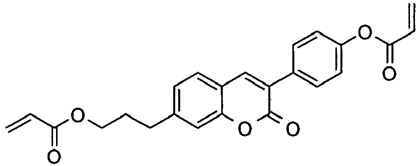 | RM-56 |
| 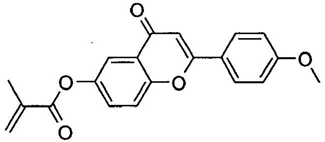 | RM-57 |
| 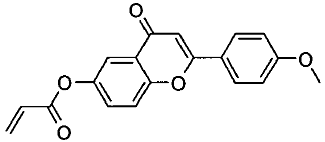 | RM-58 |
| 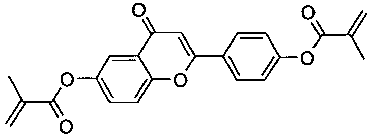 | RM-59 |
| 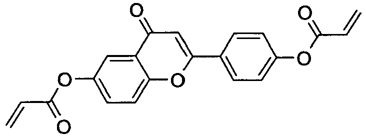 | RM-60 |
| 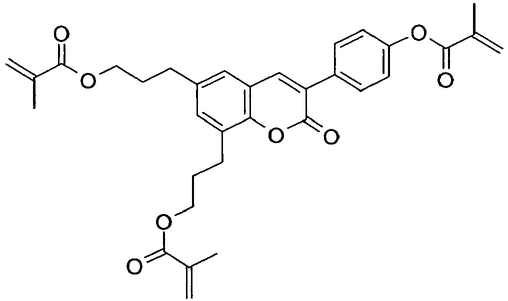 | RM-61 |
| 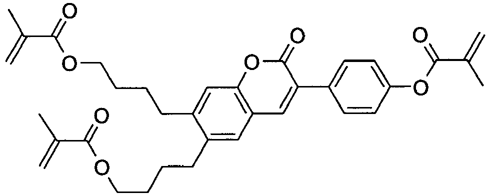 | RM-62 |
| 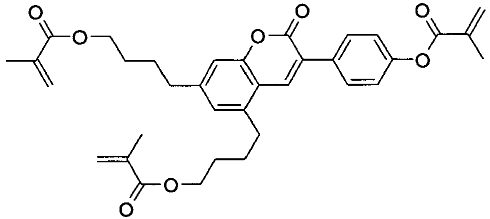 | RM-63 |
| 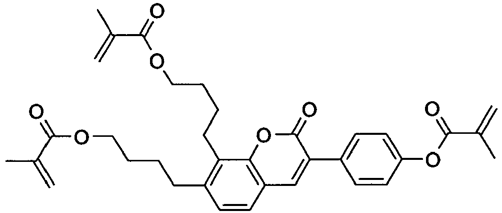 | RM-64 |
| 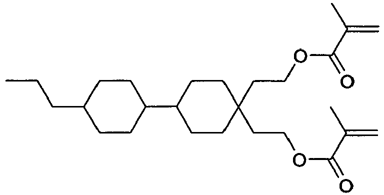 | RM-65 |
| 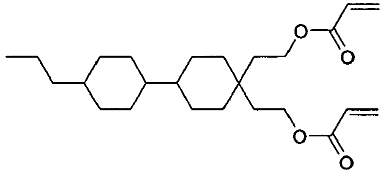 | RM-66 |
| 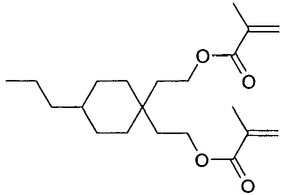 | RM-67 |
| 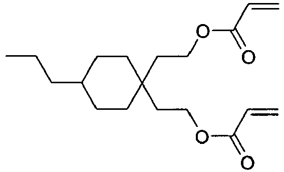 | RM-68 |
| 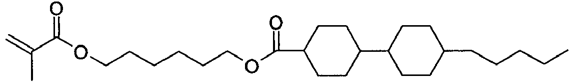 | RM-69 |
| 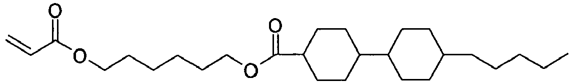 | RM-70 |
| 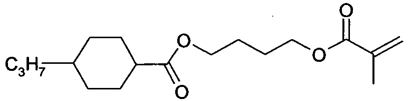 | RM-71 |
| 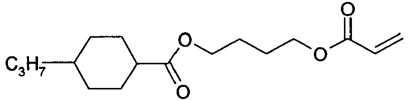 | RM-72 |
| 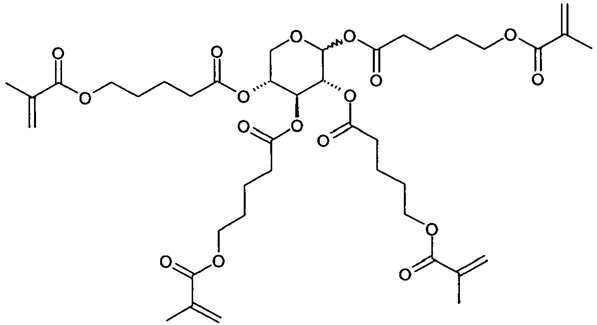 | RM-73 |
| 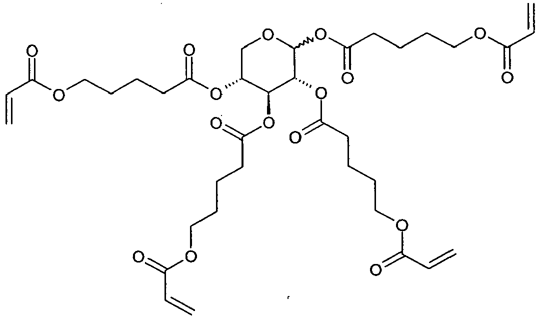 | RM-74 |
| 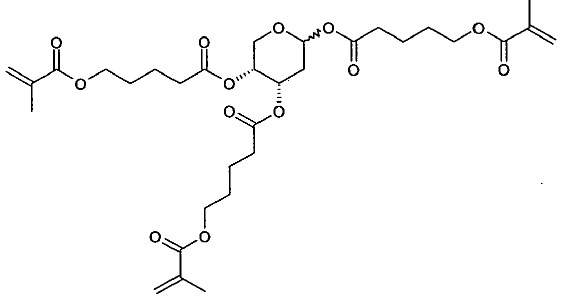 | RM-75 |
| 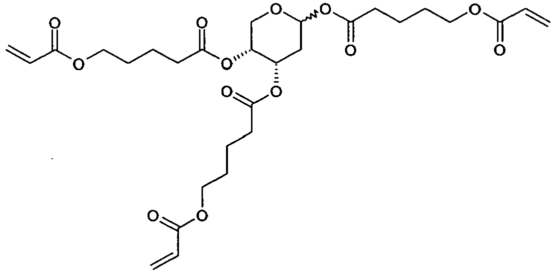 | RM-76 |
| 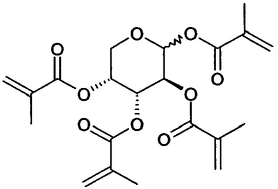 | RM-77 |
| 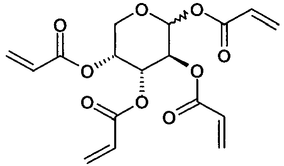 | RM-78 |
| 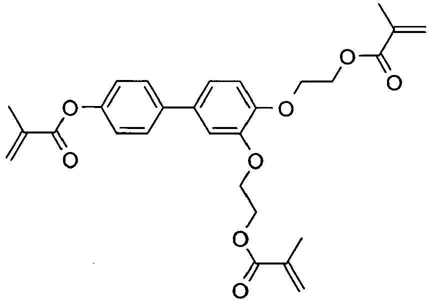 | RM-79 |
| 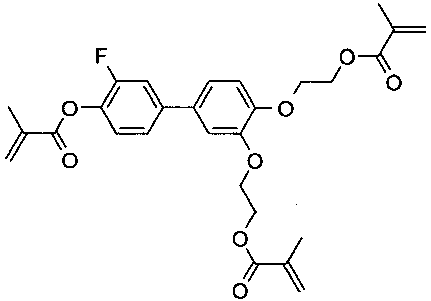 | RM-80 |
| 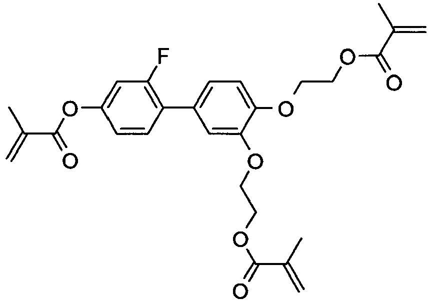 | RM-81 |
| 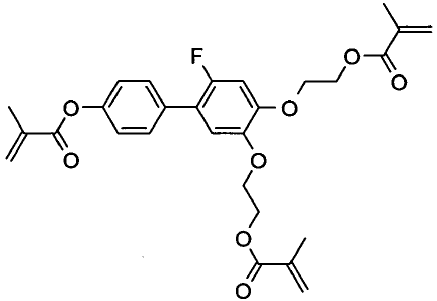 | RM-82 |
| 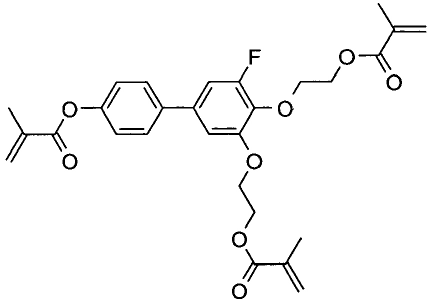 | RM-83 |
| 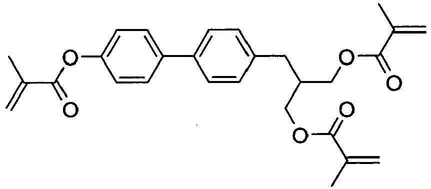 | RM-84 |
| 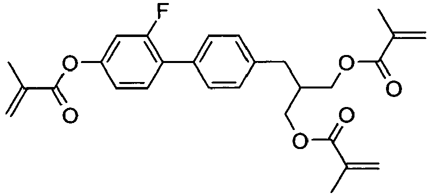 | RM-85 |
| 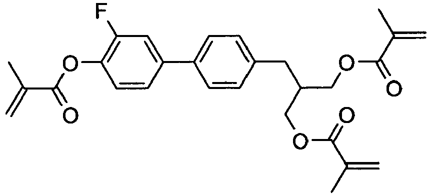 | RM-86 |
| 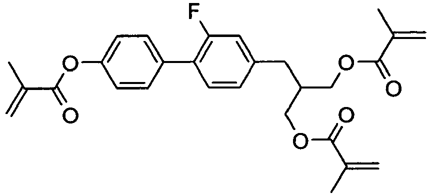 | RM-87 |
| 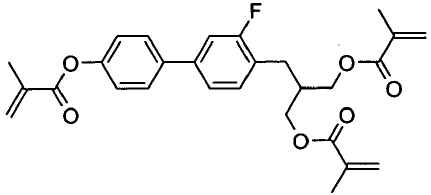 | RM-88 |
| 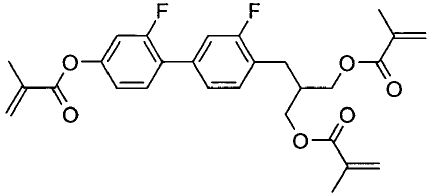 | RM-89 |
| 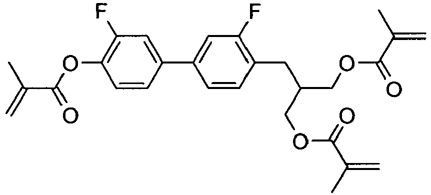 | RM-90 |
| 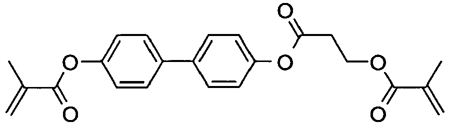 | RM-91 |
| 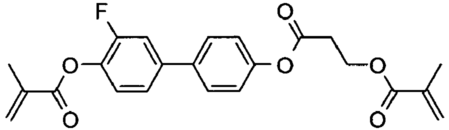 | RM-92 |
| 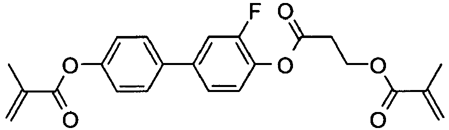 | RM-93 |
| 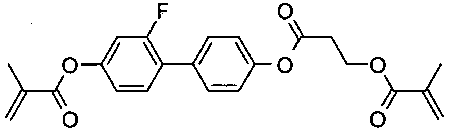 | RM-94 |
| 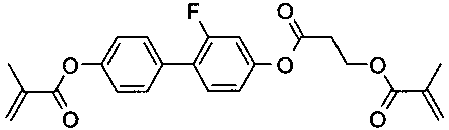 | RM-95 |

In einer bevorzugten Ausführungsform enthalten die erfindungsgemäßen Mischungen eine oder mehrere polymerisierbare Verbindungen, vorzugsweise ausgewählt aus den polymerisierbaren Verbindungen der Formeln RM-1 bis RM-95. Derartige Medien sind insbesondere für PS-VA, PSA, PS-FFS- und PS-IPS-Anwendungen geeignet. Von den in der Tabelle E genannten reaktiven Mesogenen sind die Verbindungen RM-1, RM-2, RM-3, RM-4, RM-5, RM-9, RM-17, RM-35, RM-41, RM-61, RM-79, RM-80 und RM-91 insbesondere bevorzugt.

### Ausführungsbeispiele:

Die folgenden Beispiele sollen die Erfindung erläutern, ohne sie zu begrenzen. In den Beispielen bedeuten F. den Schmelzpunkt und K den Klärpunkt einer flüssigkristallinen Substanz in Grad Celsius; Siedetemperaturen sind mit Kp. bezeichnet. Es bedeuten ferner: K: kristallin-fester Zustand, S: smektische Phase (der Index bezeichnet den Phasentyp), N: nematischer Zustand, Ch: cholesterische Phase, I: isotrope Phase, T_{g}: Glastemperatur. Die zwischen zwei Symbolen stehende Zahl gibt die Umwandlungstemperatur in Grad Celsius an.

Als Hostmischung zur Bestimmung der optischen Anisotropie Δn der Verbindungen der Formeln I-1 bis I-31 wird die Verkaufsmischung ZLI-4792 (Fa. Merck KGaA) verwendet. Für die Bestimmung der dielektrischen Anisotropie Δε wird die Verkaufsmischung ZLI-2857 verwendet. Aus der Änderung der Dielektrizitätskonstanten der Hostmischung nach Zugabe der zu untersuchenden Verbindung und Extrapolation auf 100 % der eingesetzten Verbindung werden die physikalischen Daten der zu untersuchenden Verbindung erhalten. Die zu untersuchende Verbindung wird in Abhängigkeit der Löslichkeit in der Regel zu 10 % in der Hostmischung gelöst.

Sofern nichts anderes angegeben ist, bedeuten Angaben von Teilen oder Prozent Gewichtsteile bzw. Gewichtsprozent.

Die nachfolgend genannten Verbindungen der Formel 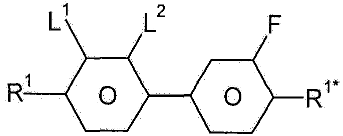 werden gemäß der Schemata 10-18 hergestellt:

| **R¹** | **R^{1*}** | **L¹** | **L²** | |
|---|---|---|---|---|
| CH₃O | OCH₃ | F | F | K 139 I |
| CH₃O | OC₂H₅ | F | F | K 77 I; Δn = 0,1806; Δε = -10,2; γ₁ = 141 |
| CH₃O | OC₃H₇ | F | F | K 84 I; Δn = 0,1649; Δε = -8,3; γ₁ = 186 |
| CH₃O | OC₄H₉ | F | F | |
| CH₃O | OC₅H₁₁ | F | F | |
| CH₃O | OC₆H₁₃ | F | F | |
| CH₃O | OCH₃ | F | Cl | |
| CH₃O | OC₂H₅ | F | Cl | |
| CH₃O | OC₃H₇ | F | Cl | |
| CH₃O | OC₄H₉ | F | Cl | |
| CH₃O | OC₅H₁₁ | F | Cl | |
| CH₃O | OC₆H₁₃ | F | Cl | |
| CH₃O | OCH₃ | Cl | F | |
| CH₃O | OC₂H₅ | Cl | F | |
| CH₃O | OC₃H₇ | Cl | F | |
| CH₃O | OC₄H₉ | Cl | F | |
| CH₃O | OC₅H₁₁ | Cl | F | |
| CH₃O | OC₆H₁₃ | Cl | F | |
| C₂H₅O | OCH₃ | F | F | K 81 I; Δn = 0,1748; Δε = -9,8; γ₁ = 164 |
| C₂H₅O | OC₂H₅ | F | F | K 81 I; Δn = 0,1772; Δε = -9,0; γ₁ = 148 |
| C₂H₅O | OC₃H₇ | F | F | K 67 I; Δn = 0,1672; Δε = -9,4; γ₁ = 165 |
| C₂H₅O | OC₄H₉ | F | F | K 50 I; Δn = 0,1630; Δε = -9,2; γ₁ = 160 |
| C₂H₅O | OC₅H₁₁ | F | F | K 47 I; Δn = 0,1613; Δε = -8,8; γ₁ = 163 |
| C₂H₅O | OC₆H₁₃ | F | F | K 42 I; Δn = 0,1601; Δε = -8,7; γ₁ = 185 |
| C₂H₅O | OCH₃ | F | Cl | |
| C₂H₅O | OC₂H₅ | F | Cl | |
| C₂H₅O | OC₃H₇ | F | Cl | |
| C₂H₅O | OC₄H₉ | F | Cl | |
| C₂H₅O | OC₅H₁₁ | F | Cl | |
| C₂H₅O | OC₆H₁₃ | F | Cl | |
| C₂H₅O | OCH₃ | Cl | F | |
| C₂H₅O | OC₂H₅ | Cl | F | |
| C₂H₅O | OC₃H₇ | Cl | F | |
| C₂H₅O | OC₄H₉ | Cl | F | |
| C₂H₅O | OC₅H₁₁ | Cl | F | |
| C₂H₅O | OC₆H₁₃ | Cl | F | |
| C₃H₇O | OCH₃ | F | F | K 89 I; Δn = 0,1689; Δε = -8,2; γ₁ = 174 |
| C₃H₇O | OC₂H₅ | F | F | K 54 I; Δn = 0,1709; Δε = -9,1; γ₁ = 158 |
| C₃H₇O | OC₃H₇ | F | F | K 70 I; Δn = 0,1607; Δε = -7,6; γ₁ = 158 |
| C₃H₇O | OC₄H₉ | F | F | K 47 I; Δn = 0,1640; Δε = -8,5; γ₁ = 126 |
| C₃H₇O | OC₅H₁₁ | F | F | |
| C₃H₇O | OC₆H₁₃ | F | F | |
| C₃H₇O | OCH₃ | Cl | F | |
| C₃H₇O | OC₂H₅ | Cl | F | |
| C₃H₇O | OC₃H₇ | Cl | F | |
| C₃H₇O | OC₄H₉ | Cl | F | |
| C₃H₇O | OC₅H₁₁ | Cl | F | |
| C₃H₇O | OC₆H₁₃ | Cl | F | |
| C₃H₇O | OCH₃ | F | Cl | |
| C₃H₇O | OC₂H₅ | F | Cl | |
| C₃H₇O | OC₃H₇ | F | Cl | |
| C₃H₇O | OC₄H₉ | F | Cl | |
| C₃H₇O | OC₅H₁₁ | F | Cl | |
| C₃H₇O | OC₆H₁₃ | F | Cl | |
| C₄H₉O | OCH₃ | F | F | |
| C₄H₉O | OC₂H₅ | F | F | K 45 N (24) I; Δn = 0,1649; Δε = -10,2; γ₁ = 132 |
| C₄H₉O | OC₃H₇ | F | F | K 50 I; Δn = 0,1671; Δε = -9,2; γ₁ = 131 |
| C₄H₉O | OC₄H₉ | F | F | K47 I; Δn = 0,1589; Δε = -9,1; γ₁ = 134 |
| C₄H₉O | OC₅H₁₁ | F | F | |
| C₄H₉O | OC₆H₁₃ | F | F | |
| C₄H₉O | OCH₃ | Cl | F | |
| C₄H₉O | OC₂H₅ | Cl | F | |
| C₄H₉O | OC₃H₇ | Cl | F | |
| C₄H₉O | OC₄H₉ | Cl | F | |
| C₄H₉O | OC₅H₁₁ | Cl | F | |
| C₄H₉O | OC₆H₁₃ | Cl | F | |
| C₄H₉O | OCH₃ | F | Cl | |
| C₄H₉O | OC₂H₅ | F | Cl | |
| C₄H₉O | OC₃H₇ | F | Cl | |
| C₄H₉O | OC₄H₉ | F | Cl | |
| C₄H₉O | OC₅H₁₁ | F | Cl | |
| C₄H₉O | OC₆H₁₃ | F | Cl | |
| C₅H₁₁O | OCH₃ | F | F | |
| C₅H₁₁O | OC₂H₅ | F | F | K 36 S_{B} (19) N (19) I, Δn = 0,1625; Δε = -9,5; γ₁ = 135 |
| C₅H₁₁O | OC₃H₇ | F | F | K 43 I; Δn = 0,1540; Δε = -9,2; γ₁ = 132 |
| C₅H₁₁O | OC₄H₉ | F | F | K 39 I; Δn = 0,1486; Δε = -8,6; γ₁ = 136 |
| C₅H₁₁O | OC₅H₁₁ | F | F | |
| C₅H₁₁O | OC₆H₁₃ | F | F | |
| C₅H₁₁O | OCH₃ | Cl | F | |
| C₅H₁₁O | OC₂H₅ | Cl | F | |
| C₅H₁₁O | OC₃H₇ | Cl | F | |
| C₅H₁₁O | OC₄H₉ | Cl | F | |
| C₅H₁₁O | OC₅H₁₁ | Cl | F | |
| C₅H₁₁O | OC₆H₁₃ | Cl | F | |
| C₅H₁₁O | OCH₃ | F | Cl | |
| C₅H₁₁O | OC₂H₅ | F | Cl | |
| C₅H₁₁O | OC₃H₇ | F | Cl | |
| C₅H₁₁O | OC₄H₉ | F | Cl | |
| C₅H₁₁O | OC₅H₁₁ | F | Cl | |
| C₅H₁₁O | OC₆H₁₃ | F | Cl | |
| C₆H₁₃O | OCH₃ | F | F | |
| C₆H₁₃O | OC₂H₅ | F | F | |
| C₆H₁₃O | OC₃H₇ | F | F | |
| C₆H₁₃O | OC₄H₉ | F | F | |
| C₆H₁₃O | OC₅H₁₁ | F | F | |
| C₆H₁₃O | OC₆H₁₃ | F | F | |
| C₆H₁₃O | OCH₃ | Cl | F | |
| C₆H₁₃O | OC₂H₅ | Cl | F | |
| C₆H₁₃O | OC₃H₇ | Cl | F | |
| C₆H₁₃O | OC₄H₉ | Cl | F | |
| C₆H₁₃O | OC₅H₁₁ | Cl | F | |
| C₆H₁₃O | OC₆H₁₃ | Cl | F | |
| C₆H₁₃O | OCH₃ | F | Cl | |
| C₆H₁₃O | OC₂H₅ | F | Cl | |
| C₆H₁₃O | OC₃H₇ | F | Cl | |
| C₆H₁₃O | OC₄H₉ | F | Cl | |
| C₆H₁₃O | OC₅H₁₁ | F | Cl | |
| C₆H₁₃O | OC₆H₁₃ | F | Cl | |

Analog werden die folgenden Verbindungen der Formel 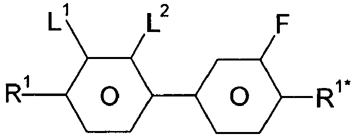 hergestellt:

| **R¹** | **R^{1*}** | **L¹** | **L²** | |
|---|---|---|---|---|
| CH₃ | CH₃ | F | F | K 49 I; Δn = 0,1679; Δε = -3,3; γ₁ = 38 |
| CH₃ | C₂H₅ | F | F | |
| CH₃ | C₃H₇ | F | F | |
| CH₃ | C₄H₉ | F | F | |
| CH₃ | C₅H₁₁ | F | F | |
| CH₃ | C₆H₁₃ | F | F | |
| CH₃ | CH₃ | F | Cl | |
| CH₃ | C₂H₅ | F | Cl | |
| CH₃ | C₃H₇ | F | Cl | |
| CH₃ | C₄H₉ | F | Cl | |
| CH₃ | C₅H₁₁ | F | Cl | |
| CH₃ | C₆H₁₃ | F | Cl | |
| CH₃ | CH₃ | Cl | F | |
| CH₃ | C₂H₅ | Cl | F | |
| CH₃ | C₃H₇ | Cl | F | |
| CH₃ | C₄H₉ | Cl | F | |
| CH₃ | C₅H₁₁ | Cl | F | |
| CH₃ | C₆H₁₃ | Cl | F | |
| C₂H₅ | CH₃ | F | F | |
| C₂H₅ | C₂H₅ | F | F | |
| C₂H₅ | C₃H₇ | F | F | |
| C₂H₅ | C₄H₉ | F | F | |
| C₂H₅ | C₅H₁₁ | F | F | |
| C₂H₅ | C₆H₁₃ | F | F | |
| C₂H₅ | CH₃ | F | Cl | |
| C₂H₅ | C₂H₅ | F | Cl | |
| C₂H₅ | C₃H₇ | F | Cl | |
| C₂H₅ | C₄H₉ | F | Cl | |
| C₂H₅ | C₅H₁₁ | F | Cl | |
| C₂H₅ | C₆H₁₃ | F | Cl | |
| C₂H₅ | CH₃ | Cl | F | |
| C₂H₅ | C₂H₅ | Cl | F | |
| C₂H₅ | C₃H₇ | Cl | F | |
| C₂H₅ | C₄H₉ | Cl | F | |
| C₂H₅ | C₅H₁₁ | Cl | F | |
| C₂H₅ | C₆H₁₃ | Cl | F | |
| C₃H₇ | CH₃ | F | F | |
| C₃H₇ | C₂H₅ | F | F | |
| C₃H₇ | C₃H₇ | F | F | |
| C₃H₇ | C₄H₉ | F | F | |
| C₃H₇ | C₅H₁₁ | F | F | |
| C₃H₇ | C₆H₁₃ | F | F | |
| C₃H₇ | CH₃ | Cl | F | |
| C₃H₇ | C₂H₅ | Cl | F | |
| C₃H₇ | C₃H₇ | Cl | F | |
| C₃H₇ | C₄H₉ | Cl | F | |
| C₃H₇ | C₅H₁₁ | Cl | F | |
| C₃H₇ | C₆H₁₃ | Cl | F | |
| C₃H₇ | CH₃ | F | Cl | |
| C₃H₇ | C₂H₅ | F | Cl | |
| C₃H₇ | C₃H₇ | F | Cl | |
| C₃H₇ | C₄H₉ | F | Cl | |
| C₃H₇ | C₅H₁₁ | F | Cl | |
| C₃H₇ | C₆H₁₃ | F | Cl | |
| C₄H₉ | CH₃ | F | F | |
| C₄H₉ | C₂H₅ | F | F | |
| C₄H₉ | C₃H₇ | F | F | |
| C₄H₉ | C₄H₉ | F | F | |
| C₄H₉ | C₅H₁₁ | F | F | |
| C₄H₉ | C₆H₁₃ | F | F | |
| C₄H₉ | CH₃ | Cl | F | |
| C₄H₉ | C₂H₅ | Cl | F | |
| C₄H₉ | C₃H₇ | Cl | F | |
| C₄H₉ | C₄H₉ | Cl | F | |
| C₄H₉ | C₅H₁₁ | Cl | F | |
| C₄H₉ | C₆H₁₃ | Cl | F | |
| C₄H₉ | CH₃ | F | Cl | |
| C₄H₉ | C₂H₅ | F | Cl | |
| C₄H₉ | C₃H₇ | F | Cl | |
| C₄H₉ | C₄H₉ | F | Cl | |
| C₄H₉ | C₅H₁₁ | F | Cl | |
| C₄H₉ | C₆H₁₃ | F | Cl | |
| C₅H₁₁ | CH₃ | F | F | |
| C₅H₁₁ | C₂H₅ | F | F | |
| C₅H₁₁ | C₃H₇ | F | F | |
| C₅H₁₁ | C₄H₉ | F | F | |
| C₅H₁₁ | C₅H₁₁ | F | F | |
| C₅H₁₁ | C₆H₁₃ | F | F | |
| C₅H₁₁ | CH₃ | Cl | F | |
| C₅H₁₁ | C₂H₅ | Cl | F | |
| C₅H₁₁ | C₃H₇ | Cl | F | |
| C₅H₁₁ | C₄H₉ | Cl | F | |
| C₅H₁₁ | C₅H₁₁ | Cl | F | |
| C₅H₁₁ | C₆H₁₃ | Cl | F | |
| C₅H₁₁ | CH₃ | F | Cl | |
| C₅H₁₁ | C₂H₅ | F | Cl | |
| C₅H₁₁ | C₃H₇ | F | Cl | |
| C₅H₁₁ | C₄H₉ | F | Cl | |
| C₅H₁₁ | C₅H₁₁ | F | Cl | |
| C₅H₁₁ | C₆H₁₃ | F | Cl | |
| C₆H₁₃ | CH₃ | F | F | |
| C₆H₁₃ | C₂H₅ | F | F | |
| C₆H₁₃ | C₃H₇ | F | F | |
| C₆H₁₃ | C₄H₉ | F | F | |
| C₆H₁₃ | C₅H₁₁ | F | F | |
| C₆H₁₃ | C₆H₁₃ | F | F | |
| C₆H₁₃ | CH₃ | Cl | F | |
| C₆H₁₃ | C₂H₅ | Cl | F | |
| C₆H₁₃ | C₃H₇ | Cl | F | |
| C₆H₁₃ | C₄H₉ | Cl | F | |
| C₆H₁₃ | C₅H₁₁ | Cl | F | |
| C₆H₁₃ | C₆H₁₃ | Cl | F | |
| C₆H₁₃ | CH₃ | F | Cl | |
| C₆H₁₃ | C₂H₅ | F | Cl | |
| C₆H₁₃ | C₃H₇ | F | Cl | |
| C₆H₁₃ | C₄H₉ | F | Cl | |
| C₆H₁₃ | C₅H₁₁ | F | Cl | |
| C₆H₁₃ | C₆H₁₃ | F | Cl | |

Analog werden die folgenden Verbindungen der Formel 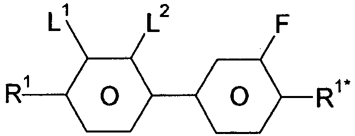 hergestellt:

| **R¹** | **R^{1*}** | **L¹** | **L²** | |
|---|---|---|---|---|
| CH₃ | OCH₃ | F | F | |
| CH₃ | OC₂H₅ | F | F | K 59 I; Δn = 0,1770; Δε = -5,4 γ₁ = 89 |
| CH₃ | OC₃H₇ | F | F | |
| CH₃ | OC₄H₉ | F | F | K 40 I; Δn= 0,1643; Δε = -5,4; γ₁ = 110 |
| CH₃ | OC₅H₁₁ | F | F | |
| CH₃ | OC₆H₁₃ | F | F | |
| CH₃ | OCH₃ | F | Cl | |
| CH₃ | OC₂H₅ | F | Cl | |
| CH₃ | OC₃H₇ | F | Cl | |
| CH₃ | OC₄H₉ | F | Cl | |
| CH₃ | OC₅H₁₁ | F | Cl | |
| CH₃ | OC₆H₁₃ | F | Cl | |
| CH₃ | OCH₃ | Cl | F | |
| CH₃ | OC₂H₅ | Cl | F | |
| CH₃ | OC₃H₇ | Cl | F | |
| CH₃ | OC₄H₉ | Cl | F | |
| CH₃ | OC₅H₁₁ | Cl | F | |
| CH₃ | OC₆H₁₃ | Cl | F | |
| C₂H₅ | OCH₃ | F | F | |
| C₂H₅ | OC₂H₅ | F | F | K 15 I; Δn = 0,1674; Δε = -5,5; γ₁ = 85 |
| c₂H₅ | OC₃H₇ | F | F | |
| C₂H₅ | OC₄H₉ | F | F | T_{G} -70 K 3 I; Δn = 0,1513; Δε = -5,2; γ₁ = 95 |
| C₂H₅ | OC₅H₁₁ | F | F | |
| C₂H₅ | OC₆H₁₃ | F | F | |
| C₂H₅ | OCH₃ | F | Cl | |
| C₂H₅ | OC₂H₅ | F | Cl | |
| C₂H₅ | OC₃H₇ | F | Cl | |
| C₂H₅ | OC₄H₉ | F | Cl | |
| C₂H₅ | OC₅H₁₁ | F | Cl | |
| C₂H₅ | OC₆H₁₃ | F | Cl | |
| C₂H₅ | OCH₃ | Cl | F | |
| C₂H₅ | OC₂H₅ | Cl | F | |
| C₂H₅ | OC₃H₇ | Cl | F | |
| C₂H₅ | OC₄H₉ | Cl | F | |
| C₂H₅ | OC₅H₁₁ | Cl | F | |
| C₂H₅ | OC₆H₁₃ | Cl | F | |
| C₃H₇ | OCH₃ | F | F | |
| C₃H₇ | OC₂H₅ | F | F | |
| C₃H₇ | OC₃H₇ | F | F | |
| C₃H₇ | OC₄H₉ | F | F | |
| C₃H₇ | OC₅H₁₁ | F | F | |
| C₃H₇ | OC₆H₁₃ | F | F | |
| C₃H₇ | OCH₃ | Cl | F | |
| C₃H₇ | OC₂H₅ | Cl | F | |
| C₃H₇ | OC₃H₇ | Cl | F | |
| C₃H₇ | OC₄H₉ | Cl | F | |
| C₃H₇ | OC₅H₁₁ | Cl | F | |
| C₃H₇ | OC₆H₁₃ | Cl | F | |
| C₃H₇ | OCH₃ | F | Cl | |
| C₃H₇ | OC₂H₅ | F | Cl | |
| C₃H₇ | OC₃H₇ | F | Cl | |
| C₃H₇ | OC₄H₉ | F | Cl | |
| C₃H₇ | OC₅H₁₁ | F | Cl | |
| C₃H₇ | OC₆H₁₃ | F | Cl | |
| C₄H₉ | OCH₃ | F | F | |
| C₄H₉ | OC₂H₅ | F | F | |
| C₄H₉ | OC₃H₇ | F | F | |
| C₄H₉ | OC₄H₉ | F | F | |
| C₄H₉ | OC₅H₁₁ | F | F | |
| C₄H₉ | OC₆H₁₃ | F | F | |
| C₄H₉ | OCH₃ | Cl | F | |
| C₄H₉ | OC₂H₅ | Cl | F | |
| C₄H₉ | OC₃H₇ | Cl | F | |
| C₄H₉ | OC₄H₉ | Cl | F | |
| C₄H₉ | OC₅H₁₁ | Cl | F | |
| C₄H₉ | OC₆H₁₃ | Cl | F | |
| C₄H₉ | OCH₃ | F | Cl | |
| C₄H₉ | OC₂H₅ | F | Cl | |
| C₄H₉ | OC₃H₇ | F | Cl | |
| C₄H₉ | OC₄H₉ | F | Cl | |
| C₄H₉ | OC₅H₁₁ | F | Cl | |
| C₄H₉ | OC₆H₁₃ | F | Cl | |
| C₅H₁₁ | OCH₃ | F | F | |
| C₅H₁₁ | OC₂H₅ | F | F | |
| C₅H₁₁ | OC₃H₇ | F | F | |
| C₅H₁₁ | OC₄H₉ | F | F | |
| C₅H₁₁ | OC₅H₁₁ | F | F | |
| C₅H₁₁ | OC₆H₁₃ | F | F | |
| C₅H₁₁ | OCH₃ | Cl | F | |
| C₅H₁₁ | OC₂H₅ | Cl | F | |
| C₅H₁₁ | OC₃H₇ | Cl | F | |
| C₅H₁₁ | OC₄H₉ | Cl | F | |
| C₅H₁₁ | OC₅H₁₁ | Cl | F | |
| C₅H₁₁ | OC₆H₁₃ | Cl | F | |
| C₅H₁₁ | OCH₃ | F | Cl | |
| C₅H₁₁ | OC₂H₅ | F | Cl | |
| C₅H₁₁ | OC₃H₇ | F | Cl | |
| C₅H₁₁ | OC₄H₉ | F | Cl | |
| C₅H₁₁ | OC₅H₁₁ | F | Cl | |
| C₅H₁₁ | OC₆H₁₃ | F | Cl | |
| C₆H₁₃ | OCH₃ | F | F | |
| C₆H₁₃ | OC₂H₅ | F | F | |
| C₆H₁₃ | OC₃H₇ | F | F | |
| C₆H₁₃ | OC₄H₉ | F | F | |
| C₆H₁₃ | OC₅H₁₁ | F | F | |
| C₆H₁₃ | OC₅H₁₃ | F | F | |
| C₆H₁₃ | OCH₃ | Cl | F | |
| C₆H₁₃ | OC₂H₅ | Cl | F | |
| C₆H₁₃ | OC₃H₇ | Cl | F | |
| C₆H₁₃ | OC₄H₉ | Cl | F | |
| C₆H₁₃ | OC₅H₁₁ | Cl | F | |
| C₆H₁₃ | OC₅H₁₃ | Cl | F | |
| C₆H₁₃ | OCH₃ | F | Cl | |
| C₆H₁₃ | OC₂H₅ | F | Cl | |
| C₆H₁₃ | OC₃H₇ | F | Cl | |
| C₆H₁₃ | OC₄H₉ | F | Cl | |
| C₆H₁₃ | OC₅H₁₁ | F | Cl | |
| C₆H₁₃ | OC₅H₁₃ | F | Cl | |

Analog werden die folgenden Verbindungen der Formel 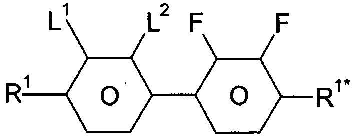 hergestellt:

| **R¹** | **R¹*** | **L¹** | **L²** | |
|---|---|---|---|---|
| CH₃O | OCH₃ | F | F | |
| CH₃O | OC₂H₅ | F | F | |
| CH₃O | OC₃H₇ | F | F | |
| CH₃O | OC₄H₉ | F | F | |
| CH₃O | OC₅H₁₁ | F | F | |
| CH₃O | OC₆H₁₃ | F | F | |
| CH₃O | OCH₃ | F | Cl | |
| CH₃O | OC₂H₅ | F | Cl | |
| CH₃O | OC₃H₇ | F | Cl | |
| CH₃O | OC₄H₉ | F | Cl | |
| CH₃O | OC₅H₁₁ | F | Cl | |
| CH₃O | OC₆H₁₃ | F | Cl | |
| CH₃O | OCH₃ | Cl | F | |
| CH₃O | OC₂H₅ | Cl | F | |
| CH₃O | OC₃H₇ | Cl | F | |
| CH₃O | OC₄H₉ | Cl | F | |
| CH₃O | OC₅H₁₁ | Cl | F | |
| CH₃O | OC₆H₁₃ | Cl | F | |
| C₂H₅O | OC₂H₅ | F | F | |
| C₂H₅O | OC₃H₇ | F | F | K 79 I; Δn = 0,1582; Δε = -13.0; |
| C₂H₅O | OC₄H₉ | F | F | K 63 I; Δn = 0,1631; Δε = -13,9; γ₁=251 |
| C₂H₅O | OC₅H₁₁ | F | F | K 63 I; Δn = 0,1446; Δε = -12,9; γ₁=259 |
| C₂H₅O | OC₆H₁₃ | F | F | |
| C₂H₅O | OC₂H₅ | F | Cl | |
| C₂H₅O | OC₃H₇ | F | Cl | |
| C₂H₅O | OC₄H₉ | F | Cl | |
| C₂H₅O | OC₅H₁₁ | F | Cl | |
| C₂H₅O | OC₆H₁₃ | F | Cl | |
| C₂H₅O | OC₂H₅ | Cl | F | |
| C₂H₅O | OC₃H₇ | Cl | F | |
| C₂H₅O | OC₄H₉ | Cl | F | |
| C₂H₅O | OC₅H₁₁ | Cl | F | |
| C₂H₅O | OC₆H₁₃ | Cl | F | |
| C₃H₇O | OC₃H₇ | F | F | K 87 I; Δn = 0,1494; Δε = -11,7 |
| C₃H₇O | OC₄H₉ | F | F | K 67 I; Δn = 0,1525; Δε = -12,8; γ₁=275 |
| C₃H₇O | OC₅H₁₁ | F | F | K 57 I; Δn = 0,1381; Δε = -11,9; γ₁=254 |
| C₃H₇O | OC₆H₁₃ | F | F | |
| C₃H₇O | OC₃H₇ | Cl | F | |
| C₃H₇O | OC₄H₉ | Cl | F | |
| C₃H₇O | OC₅H₁₁ | Cl | F | |
| C₃H₇O | OC₆H₁₃ | Cl | F | |
| C₃H₇O | OC₃H₇ | F | Cl | |
| C₃H₇O | OC₄H₉ | F | Cl | |
| C₃H₇O | OC₅H₁₁ | F | Cl | |
| C₃H₇O | OC₆H₁₃ | F | Cl | |
| C₄H₉O | OC₄H₉ | F | F | K 75 I; Δn = 0,1503; Δε = -12,2 |
| C₄H₉O | OC₅H₁₁ | F | F | |
| C₄H₉O | OC₆H₁₃ | F | F | |
| C₄H₉O | OC₄H₉ | Cl | F | |
| C₄H₉O | OC₅H₁₁ | Cl | F | |
| C₄H₉O | OC₆H₁₃ | Cl | F | |
| C₄H₉O | OC₄H₉ | F | Cl | |
| C₄H₉O | OC₅H₁₁ | F | Cl | |
| C₄H₉O | OC₆H₁₃ | F | Cl | |
| C₅H₁₁O | OC₅H₁₁ | F | F | |
| C₅H₁₁O | OC₆H₁₃ | F | F | |
| C₅H₁₁O | OC₅H₁₁ | Cl | F | |
| C₅H₁₁O | OC₆H₁₃ | Cl | F | |
| C₅H₁₁O | OC₅H₁₁ | F | Cl | |
| C₅H₁₁O | OC₆H₁₃ | F | Cl | |
| C₆H₁₃O | OC₆H₁₃ | F | F | |
| C₆H₁₃O | OC₆H₁₃ | Cl | F | |
| C₆H₁₃O | OC₆H₁₃ | F | Cl | |

Analog werden die folgenden Verbindungen der Formel 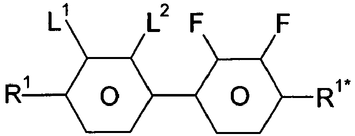 hergestellt:

| **R¹** | **R¹*** | **L¹** | **L²** | |
|---|---|---|---|---|
| CH₃ | OCH₃ | F | F | |
| CH₃ | OC₂H₅ | F | F | K 116 I |
| CH₃ | OC₃H₇ | F | F | K 64 I; Δn = 0,1494; Δε = -10,2; γ₁ = 161 |
| CH₃ | OC₄H₉ | F | F | K 40 I; Δn = 0,1471; Δε = -10,3; γ₁ = 177 |
| CH₃ | OC₅H₁₁ | F | F | |
| CH₃ | OC₆H₁₃ | F | F | |
| CH₃ | OCH₃ | F | Cl | |
| CH₃ | OC₂H₅ | F | Cl | |
| CH₃ | OC₃H₇ | F | Cl | |
| CH₃ | OC₄H₉ | F | Cl | |
| CH₃ | OC₅H₁₁ | F | Cl | |
| CH₃ | OC₆H₁₃ | F | Cl | |
| CH₃ | OCH₃ | Cl | F | |
| CH₃ | OC₂H₅ | Cl | F | |
| CH₃ | OC₃H₇ | Cl | F | |
| CH₃ | OC₄H₉ | Cl | F | |
| CH₃ | OC₅H₁₁ | Cl | F | |
| CH₃ | OC₆H₁₃ | Cl | F | |
| C₂H₅ | OCH₃ | F | F | |
| C₂H₅ | OC₂H₅ | F | F | K 75 I; Δn = 0,1597; Δε = -10,2; γ₁ = 119 |
| C₂H₅ | OC₃H₇ | F | F | K 36 I; Δn = 0,1452; Δε = -9,2 |
| C₂H₅ | OC₄H₉ | F | F | K 28 I; Δn = 0,1485; Δε = -9,7; γ₁ = 151 |
| C₂H₅ | OC₅H₁₁ | F | F | |
| C₂H₅ | OC₆H₁₃ | F | F | |
| C₂H₅ | OCH₃ | F | Cl | |
| C₂H₅ | OC₂H₅ | F | Cl | |
| C₂H₅ | OC₃H₇ | F | Cl | |
| C₂H₅ | OC₄H₉ | F | Cl | |
| C₂H₅ | OC₅H₁₁ | F | Cl | |
| C₂H₅ | OC₆H₁₃ | F | Cl | |
| C₂H₅ | OCH₃ | Cl | F | |
| C₂H₅ | OC₂H₅ | Cl | F | |
| C₂H₅ | OC₃H₇ | Cl | F | |
| C₂H₅ | OC₄H₉ | Cl | F | |
| C₂H₅ | OC₅H₁₁ | Cl | F | |
| C₂H₅ | OC₆H₁₃ | Cl | F | |
| C₃H₇ | OCH₃ | F | F | |
| C₃H₇ | OC₂H₅ | F | F | K 68 I; Δn = 0,1633; Δε = -9,9; γ₁ = 105 |
| C₃H₇ | OC₃H₇ | F | F | |
| C₃H₇ | OC₄H₉ | F | F | |
| C₃H₇ | OC₅H₁₁ | F | F | |
| C₃H₇ | OC₆H₁₃ | F | F | |
| C₃H₇ | OCH₃ | Cl | F | |
| C₃H₇ | OC₂H₅ | Cl | F | |
| C₃H₇ | OC₃H₇ | Cl | F | |
| C₃H₇ | OC₄H₉ | Cl | F | |
| C₃H₇ | OC₅H₁₁ | Cl | F | |
| C₃H₇ | OC₆H₁₃ | Cl | F | |
| C₃H₇ | OCH₃ | F | Cl | |
| C₃H₇ | OC₂H₅ | F | Cl | |
| C₃H₇ | OC₃H₇ | F | Cl | |
| C₃H₇ | OC₄H₉ | F | Cl | |
| C₃H₇ | OC₅H₁₁ | F | Cl | |
| C₃H₇ | OC₆H₁₃ | F | Cl | |
| C₄H₉ | OCH₃ | F | F | |
| C₄H₉ | OC₂H₅ | F | F | |
| C₄H₉ | OC₃H₇ | F | F | |
| C₄H₉ | OC₄H₉ | F | F | |
| C₄H₉ | OC₅H₁₁ | F | F | |
| C₄H₉ | OC₆H₁₃ | F | F | |
| C₄H₉ | OCH₃ | Cl | F | |
| C₄H₉ | OC₂H₅ | Cl | F | |
| C₄H₉ | OC₃H₇ | Cl | F | |
| C₄H₉ | OC₄H₉ | Cl | F | |
| C₄H₉ | OC₅H₁₁ | Cl | F | |
| C₄H₉ | OC₆H₁₃ | Cl | F | |
| C₄H₉ | OCH₃ | F | Cl | |
| C₄H₉ | OC₂H₅ | F | Cl | |
| C₄H₉ | OC₃H₇ | F | Cl | |
| C₄H₉ | OC₄H₉ | F | Cl | |
| C₄H₉ | OC₅H₁₁ | F | Cl | |
| C₄H₉ | OC₆H₁₃ | F | Cl | |
| C₅H₁₁ | OCH₃ | F | F | |
| C₅H₁₁ | OC₂H₅ | F | F | |
| C₅H₁₁ | OC₃H₇ | F | F | |
| C₅H₁₁ | OC₄H₉ | F | F | |
| C₅H₁₁ | OC₅H₁₁ | F | F | |
| C₅H₁₁ | OC₆H₁₃ | F | F | |
| C₅H₁₁ | OCH₃ | Cl | F | |
| C₅H₁₁ | OC₂H₅ | Cl | F | |
| C₅H₁₁ | OC₃H₇ | Cl | F | |
| C₅H₁₁ | OC₄H₉ | Cl | F | |
| C₅H₁₁ | OC₅H₁₁ | Cl | F | |
| C₅H₁₁ | OC₆H₁₃ | Cl | F | |
| C₅H₁₁ | OCH₃ | F | Cl | |
| C₅H₁₁ | OC₂H₅ | F | Cl | |
| C₅H₁₁ | OC₃H₇ | F | Cl | |
| C₅H₁₁ | OC₄H₉ | F | Cl | |
| C₅H₁₁ | OC₅H₁₁ | F | Cl | |
| C₅H₁₁ | OC₆H₁₃ | F | Cl | |
| C₆H₁₃ | OCH₃ | F | F | |
| C₆H₁₃ | OC₂H₅ | F | F | |
| C₆H₁₃ | OC₃H₇ | F | F | |
| C₆H₁₃ | OC₄H₉ | F | F | |
| C₆H₁₃ | OC₅H₁₁ | F | F | |
| C₆H₁₃ | OC₆H₁₃ | F | F | |
| C₆H₁₃ | OCH₃ | Cl | F | |
| C₆H₁₃ | OC₂H₅ | Cl | F | |
| C₆H₁₃ | OC₃H₇ | Cl | F | |
| C₆H₁₃ | OC₄H₉ | Cl | F | |
| C₆H₁₃ | OC₅H₁₁ | Cl | F | |
| C₆H₁₃ | OC₅H₁₃ | Cl | F | |
| C₆H₁₃ | OCH₃ | F | Cl | |
| C₆H₁₃ | OC₂H₅ | F | Cl | |
| C₆H₁₃ | OC₃H₇ | F | Cl | |
| C₆H₁₃ | OC₄H₉ | F | Cl | |
| C₆H₁₃ | OC₅H₁₁ | F | Cl | |
| C₆H₁₃ | OC₆H₁₃ | F | Cl | |

Analog werden die folgenden Verbindungen der Formel 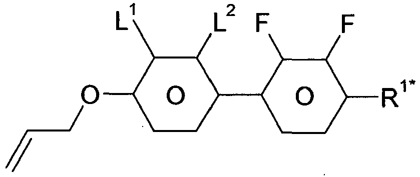 hergestellt:

| **R¹*** | **L¹** | **L²** | |
|---|---|---|---|
| OCH₃ | F | F | |
| OC₂H₅ | F | F | |
| OC₃H₇ | F | F | |
| OC₄H₉ | F | F | K 68 I; Δn = 0,1631; Δε = -13,0; γ₁ = 146 |
| OC₅H₁₁ | F | F | |
| OC₆H₁₃ | F | F | |
| OCH₃ | F | Cl | |
| OC₂H₅ | F | Cl | |
| OC₃H₇ | F | Cl | |
| OC₄H₉ | F | Cl | |
| OC₅H₁₁ | F | Cl | |
| OC₆H₁₃ | F | Cl | |
| OCH₃ | Cl | F | |
| OC₂H₅ | Cl | F | |
| OC₃H₇ | Cl | F | |
| OC₄H₉ | Cl | F | |
| OC₅H₁₁ | Cl | F | |
| OC₆H₁₃ | Cl | F | |

Analog werden die folgenden Verbindungen der Formel 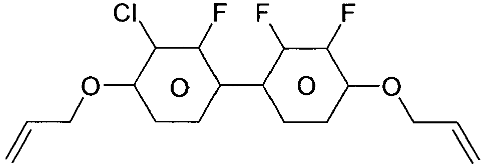 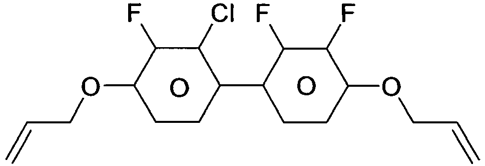 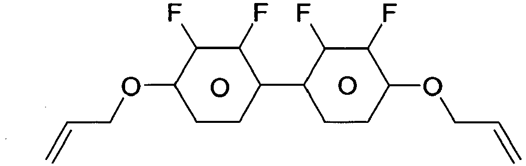 K 85 I; Δn = 0,1819; Δε = -12,8
hergestellt:
Vor- und nachstehend bedeuten
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- K₁: elastische Konstante, "Splay"-Deformation bei 20 °C, [pN]
- K₃: elastische Konstante, "Bend"-Deformation bei 20 °C, [pN]
- γ₁: Rotationsviskosität gemessen bei 20 °C [mPa·s], bestimmt nach dem Rotationsverfahren in einem magnetischen Feld
- LTS: Tieftemperaturstabilität [Low temperature stability (nematische Phase)], bestimmt in Testzellen.

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homeotrope Orientierung der Flüssigkristalle bewirken.

Alle Konzentrationen in dieser Anmeldung, soweit nicht explizit anders angegeben, beziehen sich auf die entsprechende Mischung oder Mischungskomponente. Alle physikalischen Eigenschaften werden nach "Merck Liquid Crystals, Physical Properties of Liquid Crystals", Status November 1997, Merck KGaA, Deutschland bestimmt und gelten für eine Temperatur von 20 °C, sofern nicht explizit anders angegeben.

### Mischungsbeispiele

### Beispiel M1

| | | | |
|---|---|---|---|
| CC-3-V | 41,00 % | Klärpunkt [°C]: | 73,5 |
| CCY-3-O1 | 6,00 % | Δn [589 nm, 20 °C]: | 0,1007 |
| CCY-3-O2 | 11,00 % | Δε [1 kHz, 20 °C]: | -3,6 |
| CCY-4-O2 | 4,00 % | ε_{∥} [1 kHz, 20 °C]: | 3,7 |
| CPY-2-O2 | 6,00 % | K₁ [pN, 20 °C]: | 13,1 |
| CPY-3-O2 | 10,00 % | K₃ [pN, 20 °C]: | 14,8 |
| CY-3-O2 | 5,00 % | γ₁ [mPa·s, 20 °C]: | 89 |
| PY-3-O2 | 11,00 % | V₀ [20 °C, V]: | 2,16 |
| YG-2O-O2 | 3,00 % | | |
| YG-2O-O3 | 3,00 % | | |

### Beispiel M2

| | | | |
|---|---|---|---|
| CC-3-V | 39,00 % | Klärpunkt [°C]: | 74,0 |
| CCY-3-O1 | 7,00 % | Δn [589 nm, 20 °C]: | 0,1006 |
| CCY-3-O2 | 11,00 % | Δε [1 kHz, 20 °C]: | -3,7 |
| CCY-4-O2 | 4,00 % | ε_{∥} [1 kHz, 20 °C]: | 3,7 |
| CPY-2-O2 | 6,00 % | K₁ [pN, 20 °C]: | 13,0 |
| CPY-3-O2 | 10,00 % | K₃ [pN, 20 °C]: | 14,9 |
| CY-3-O2 | 7,00 % | γ₁ [mPa·s, 20 °C]: | 92 |
| PY-3-O2 | 12,00 % | V₀ [20 °C, V]: | 2,13 |
| YG-2O-O2 | 2,00 % | | |
| YG-2O-O3 | 2,00 % | | |

### Beispiel M3

| | | | |
|---|---|---|---|
| CC-3-V | 40,00 % | Klärpunkt [°C]: | 73,5 |
| CCY-3-O1 | 4,50 % | Δn [589 nm, 20 °C]: | 0,1001 |
| CCY-3-O2 | 11,00 % | Δε [1 kHz, 20 °C]: | -3,6 |
| CCY-4-O2 | 4,50 % | ε_{∥} [1 kHz, 20 °C]: | 3,7 |
| CPY-2-O2 | 7,50 % | K₁ [pN, 20°C]: | 12,9 |
| CPY-3-O2 | 10,00 % | K₃ [pN, 20 °C]: | 14,7 |
| CY-3-O2 | 7,00 % | γ₁ [mPa·s, 20 °C]: | 89 |
| PY-3-O2 | 11,50 % | V₀ [20 °C, V]: | 2,15 |
| YG-2O-O4 | 4,00 % | | |

### Beispiel M4

| | | | |
|---|---|---|---|
| CC-3-V | 40,00 % | Klärpunkt [°C]: | 73,5 |
| CCY-3-O1 | 4,50 % | Δn [589 nm, 20 °C]: | 0,0999 |
| CCY-3-O2 | 11,00 % | Δε [1 kHz, 20 °C]: | -3,5 |
| CCY-4-O2 | 4,50 % | ε_{∥} [1 kHz, 20 °C]: | 3,7 |
| CPY-2-O2 | 7,50 % | K₁ [pN, 20 °C]: | 12,8 |
| CPY-3-O2 | 10,00 % | K₃ [pN, 20 °C]: | 14,5 |
| CY-3-O2 | 7,00 % | γ₁ [mPa·s, 20 °C]: | 89 |
| PY-3-O2 | 11,50 % | V₀ [20 °C, V]: | 2,14 |
| YG-2O-O5 | 4,00 % | | |

### Beispiel M5

| | | | |
|---|---|---|---|
| CC-3-V | 41,00 % | Klärpunkt [°C]: | 72,5 |
| CCY-3-O1 | 4,00 % | Δn [589 nm, 20 °C]: | 0,0998 |
| CCY-3-O2 | 11,00 % | Δε [1 kHz, 20 °C]: | -3,5 |
| CCY-4-O2 | 5,00 % | ε_{∥} [1 kHz, 20 °C]: | 3,6 |
| CPY-2-O2 | 6,50 % | K₁ [pN, 20 °C]: | 12,8 |
| CPY-3-O2 | 10,00 % | K₃ [pN, 20 °C]: | 14,3 |
| CY-3-O2 | 5,00 % | γ₁ [mPa·s, 20 °C]: | 87 |
| PY-3-O2 | 11,50 % | V₀ [20 °C, V]: | 2,14 |
| YG-2O-O5 | 6,00 % | | |

### Beispiel M6

Zur Herstellung einer PS-VA-Mischung werden 99,7 % der Mischung gemäß Beispiel M1 mit 0,3 % der polymerisierbaren Verbindung der Formel 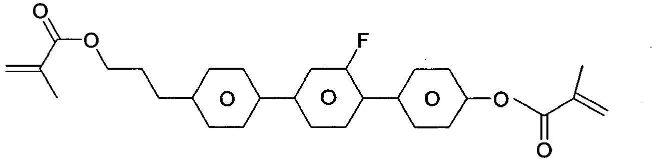 versetzt.

### Beispiel M7

Zur Herstellung einer PS-VA-Mischung werden 99,75 % der Mischung gemäß Beispiel M1 mit 0,25 % der polymerisierbaren Verbindung der Formel 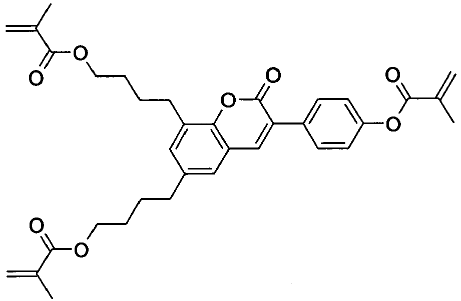 versetzt.

### Beispiel M8

Zur Herstellung einer PS-VA-Mischung werden 99,8 % der Mischung gemäß Beispiel M1 mit 0,2 % der polymerisierbaren Verbindung der Formel 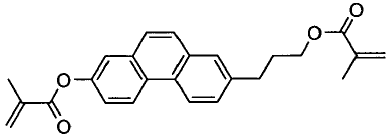 versetzt.

### Beispiel M9

Zur Herstellung einer PS-VA-Mischung werden 99,75 % der Mischung gemäß Beispiel M1 mit 0,25 % der polymerisierbaren Verbindung der Formel 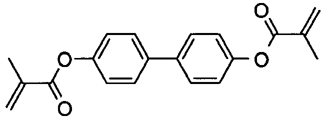 versetzt.

### Beispiel M10

Zur Herstellung einer PS-VA-Mischung werden 99,75 % der Mischung gemäß Beispiel M1 mit 0,25 % der polymerisierbaren Verbindung der Formel 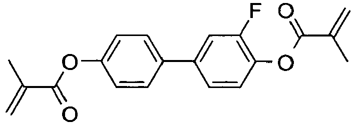 versetzt.

### Beispiel M11

Zur Herstellung einer PS-VA-Mischung werden 99,75 % der Mischung gemäß Beispiel M1 mit 0,25 % der polymerisierbaren Verbindung der Formel 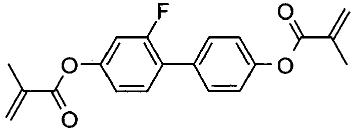 versetzt.

### Beispiel M12

Zur Herstellung einer PS-VA-Mischung werden 99,8 % der Mischung gemäß Beispiel M1 mit 0,2 % der polymerisierbaren Verbindung der Formel 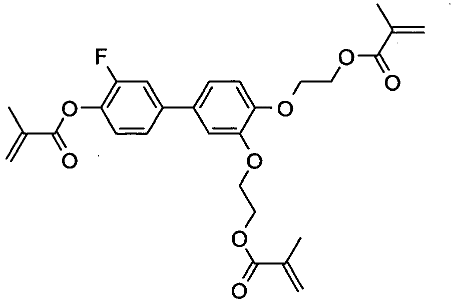 versetzt.

### Beispiel M13

Zur Herstellung einer PS-VA-Mischung werden 99,8 % der Mischung gemäß Beispiel M1 mit 0,2 % der polymerisierbaren Verbindung der Formel 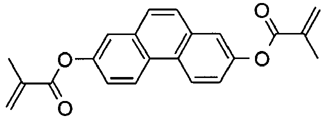 versetzt.

### Beispiel M14

Zur Herstellung einer PS-VA-Mischung werden 99,75 % der Mischung gemäß Beispiel M2 mit 0,25 % der polymerisierbaren Verbindung der Formel 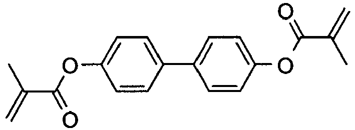 versetzt.

### Beispiel M15

Zur Herstellung einer PS-VA-Mischung werden 99,7 % der Mischung gemäß Beispiel M2 mit 0,3 % der polymerisierbaren Verbindung der Formel 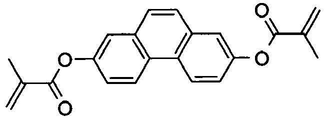 versetzt.

### Beispiel M16

Zur Herstellung einer PS-VA-Mischung werden 99,7 % der Mischung gemäß Beispiel M2 mit 0,3 % der polymerisierbaren Verbindung der Formel 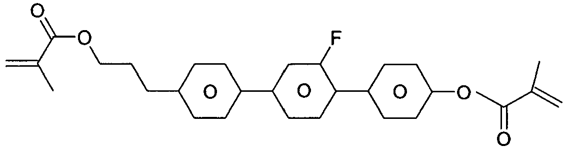 versetzt.

### Beispiel M17

Zur Herstellung einer PS-VA-Mischung werden 99,75 % der Mischung gemäß Beispiel M2 mit 0,25 % der polymerisierbaren Verbindung der Formel 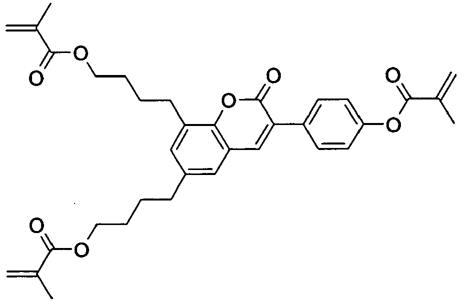 versetzt.

### Beispiel M18

Zur Herstellung einer PS-VA-Mischung werden 99,7 % der Mischung gemäß Beispiel M2 mit 0,3 % der polymerisierbaren Verbindung der Formel 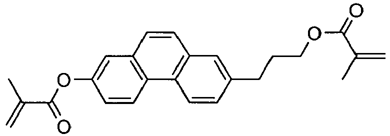 versetzt.

### Beispiel M19

Zur Herstellung einer PS-VA-Mischung werden 99,75 % der Mischung gemäß Beispiel M2 mit 0,25 % der polymerisierbaren Verbindung der Formel 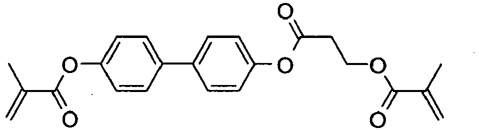 versetzt.

### Beispiel M20

Zur Herstellung einer PS-VA-Mischung werden 99,75 % der Mischung gemäß Beispiel M2 mit 0,25 % der polymerisierbaren Verbindung der Formel 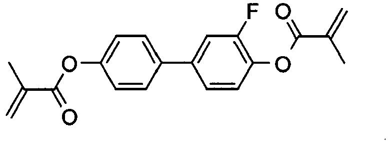 versetzt.

### Beispiel M21

Zur Herstellung einer PS-VA-Mischung werden 99,75 % der Mischung gemäß Beispiel M2 mit 0,25 % der polymerisierbaren Verbindung der Formel 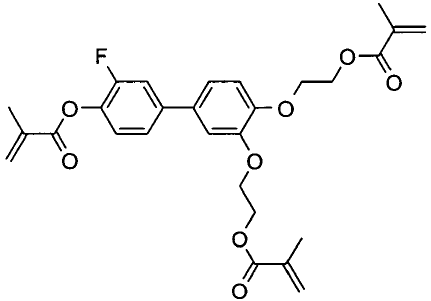 versetzt.

### Beispiel M22

Zur Herstellung einer PS-VA-Mischung werden 99,75 % der Mischung gemäß Beispiel M3 mit 0,25 % der polymerisierbaren Verbindung der Formel 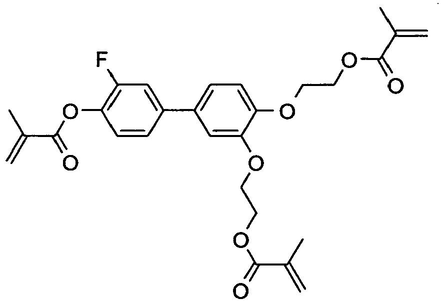 versetzt.

### Beispiel M23

Zur Herstellung einer PS-VA-Mischung werden 99,8 % der Mischung gemäß Beispiel M3 mit 0,2 % der polymerisierbaren Verbindung der Formel 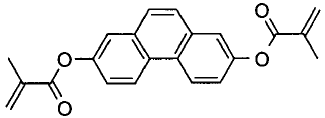 versetzt.

### Beispiel M24

Zur Herstellung einer PS-VA-Mischung werden 99,7 % der Mischung gemäß Beispiel M3 mit 0,3 % der polymerisierbaren Verbindung der Formel 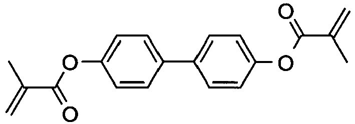 versetzt.

### Beispiel M25

Zur Herstellung einer PS-VA-Mischung werden 99,7 % der Mischung gemäß Beispiel M3 mit 0,3 % der polymerisierbaren Verbindung der Formel 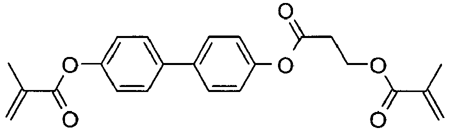 versetzt.

### Beispiel M26

Zur Herstellung einer PS-VA-Mischung werden 99,7 % der Mischung gemäß Beispiel M3 mit 0,3 % der polymerisierbaren Verbindung der Formel 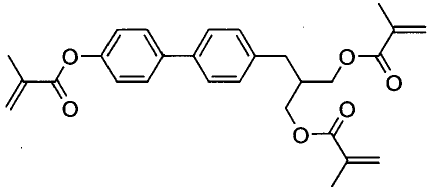 versetzt.

### Beispiel M27

Zur Herstellung einer PS-VA-Mischung werden 99,7 % der Mischung gemäß Beispiel M3 mit 0,3 % der polymerisierbaren Verbindung der Formel 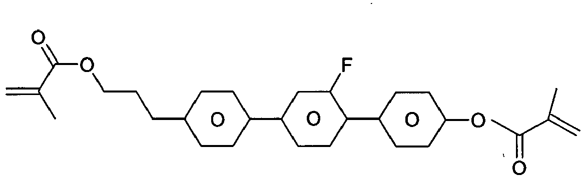 versetzt.

### Beispiel M28

Zur Herstellung einer PS-VA-Mischung werden 99,7 % der Mischung gemäß Beispiel M4 mit 0,3 % der polymerisierbaren Verbindung der Formel 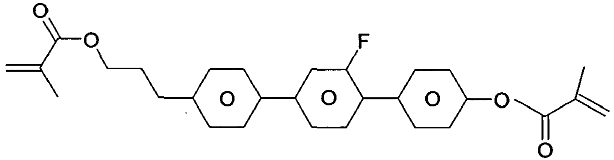 versetzt.

### Beispiel M29

Zur Herstellung einer PS-VA-Mischung werden 99,75 % der Mischung gemäß Beispiel M4 mit 0,25 % der polymerisierbaren Verbindung der Formel 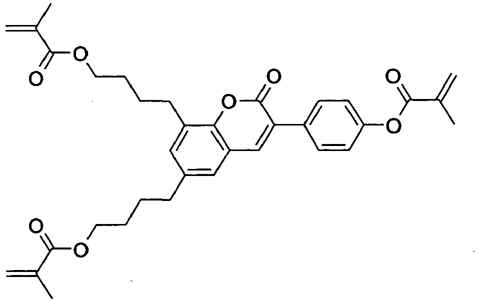 versetzt.

### Beispiel M30

Zur Herstellung einer PS-VA-Mischung werden 99,75 % der Mischung gemäß Beispiel M4 mit 0,25 % der polymerisierbaren Verbindung der Formel 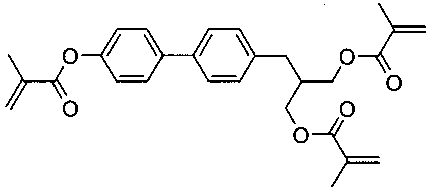 versetzt.

### Beispiel M31

Zur Herstellung einer PS-VA-Mischung werden 99,7 % der Mischung gemäß Beispiel M4 mit 0,3 % der polymerisierbaren Verbindung der Formel 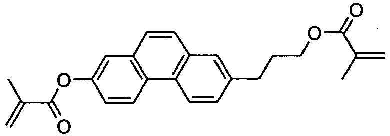 versetzt.

### Beispiel M32

Zur Herstellung einer PS-VA-Mischung werden 99,75 % der Mischung gemäß Beispiel M4 mit 0,25 % der polymerisierbaren Verbindung der Formel 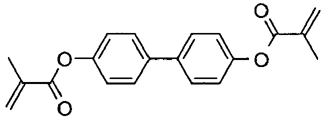 versetzt.

### Beispiel M33

Zur Herstellung einer PS-VA-Mischung werden 99,75 % der Mischung gemäß Beispiel M4 mit 0,25 % der polymerisierbaren Verbindung der Formel 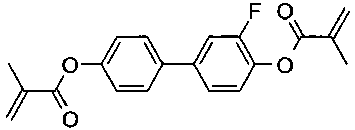 versetzt.

### Beispiel M34

Zur Herstellung einer PS-VA-Mischung werden 99,7 % der Mischung gemäß Beispiel M5 mit 0,3 % der polymerisierbaren Verbindung der Formel 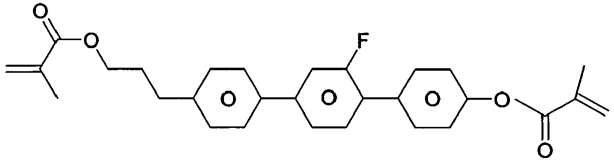 versetzt.

### Beispiel M35

Zur Herstellung einer PS-VA-Mischung werden 99,75 % der Mischung gemäß Beispiel M5 mit 0,25 % der polymerisierbaren Verbindung der Formel 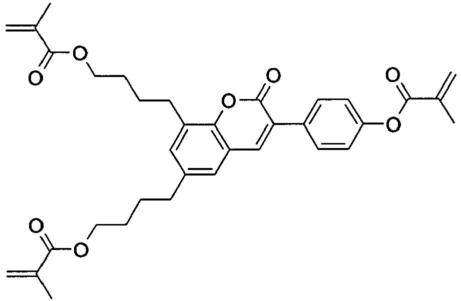 versetzt.

### Beispiel M36

Zur Herstellung einer PS-VA-Mischung werden 99,8 % der Mischung gemäß Beispiel M5 mit 0,2 % der polymerisierbaren Verbindung der Formel 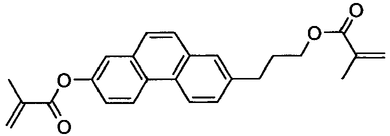 versetzt.

### Beispiel M37

Zur Herstellung einer PS-VA-Mischung werden 99,75 % der Mischung gemäß Beispiel M5 mit 0,25 % der polymerisierbaren Verbindung der Formel 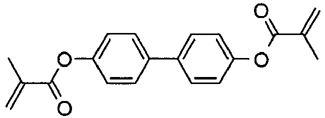 versetzt.

### Beispiel M38

Zur Herstellung einer PS-VA-Mischung werden 99,75 % der Mischung gemäß Beispiel M5 mit 0,25 % der polymerisierbaren Verbindung der Formel 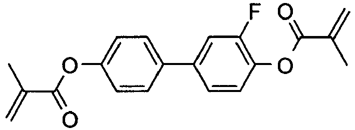 versetzt.

### Beispiel M39

Zur Herstellung einer PS-VA-Mischung werden 99,75 % der Mischung gemäß Beispiel M5 mit 0,25 % der polymerisierbaren Verbindung der Formel 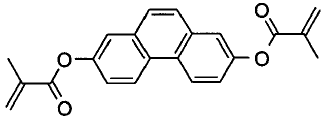 versetzt.

### Beispiel M40

Zur Herstellung einer PS-VA-Mischung werden 99,75 % der Mischung gemäß Beispiel M5 mit 0,25 % der polymerisierbaren Verbindung der Formel 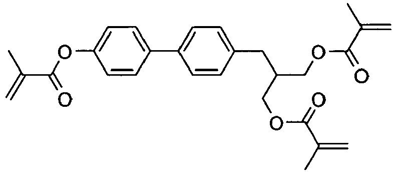 versetzt.

### Beispiel M41

| | | | |
|---|---|---|---|
| CC-3-V | 35,50 % | Klärpunkt [°C]: | 75,0 |
| CC-3-V1 | 8,00 % | Δn [589 nm, 20 °C]: | 0,1078 |
| CCY-3-O1 | 6,00 % | Δε [1 kHz, 20 °C]: | -2,9 |
| CCY-3-O2 | 10,00 % | ε_{∥} [1 kHz, 20 °C]: | 3,5 |
| CCY-4-O2 | 3,50 % | K₁ [pN, 20 °C]: | 13,9 |
| CPY-3-O2 | 11,50 % | K₃ [pN, 20 °C]: | 15,5 |
| PY-3-O2 | 12,50 % | γ₁ [mPa·s, 20 °C]: | 86 |
| PYP-2-3 | 5,00 % | V₀ [20 °C, V]: | 2,45 |
| PP-1-2V1 | 2,00 % | | |
| YG-2O-O5 | 6,00 % | | |

### Beispiel M42

| | | | |
|---|---|---|---|
| CC-3-V | 35,50 % | Klärpunkt [°C]: | 75,5 |
| CC-3-V1 | 8,00 % | Δn [589 nm, 20 °C]: | 0,1085 |
| CCY-3-O1 | 6,00 % | Δε [1 kHz, 20 °C]: | -2,9 |
| CCY-3-O2 | 10,00 % | ε_{∥} [1 kHz, 20 °C]: | 3,5 |
| CCY-4-O2 | 3,50 % | K₁ [pN, 20 °C]: | 14,2 |
| CPY-3-O2 | 11,50 % | K₃ [pN, 20 °C]: | 15,8 |
| PY-3-O2 | 12,50 % | γ₁ [mPa·s, 20 °C]: | 87 |
| PYP-2-3 | 5,00 % | V₀ [20 °C, V]: | 2,45 |
| PP-1-2V1 | 2,00 % | | |
| YG-4O-O2 | 6,00 % | | |

### Beispiel M43

| | | | |
|---|---|---|---|
| CC-3-V | 35,50 % | Klärpunkt [°C]: | 75,0 |
| CC-3-V1 | 8,00 % | Δn [589 nm, 20 °C]: | 0,1077 |
| CCY-3-O1 | 6,00 % | Δε [1 kHz, 20 °C]: | -2,9 |
| CCY-3-O2 | 10,00 % | ε_{∥} [1 kHz, 20 °C]: | 3,5 |
| CCY-4-O2 | 3,50 % | K₁ [pN, 20 °C]: | 14,1 |
| CPY-3-O2 | 11,50 % | K₃ [pN, 20 °C]: | 15,5 |
| PY-3-O2 | 12,50 % | γ₁ [mPa·s, 20 °C]: | 86 |
| PYP-2-3 | 5,00 % | V₀ [20 °C, V]: | 2,45 |
| PP-1-2V1 | 2,00 % | | |
| YG-5O-O2 | 6,00 % | | |

### Vergleichsbeispiel 1

| | | | |
|---|---|---|---|
| CC-3-V1 | 8,00 % | Klärpunkt [°C]: | 75,0 |
| CCH-23 | 19,00 % | Δn [589 nm, 20 °C]: | 0,0968 |
| CCH-34 | 4,00 % | Δε [1 kHz, 20 °C]: | -3,4 |
| CCH-35 | 7,00 % | ε_{∥} [1 kHz, 20 °C]: | 3,6 |
| CCP-3-1 | 5,50 % | K₁ [pN, 20 °C]: | 15,4 |
| CCY-3-O2 | 11,50 % | K₃ [pN, 20 °C]: | 16,0 |
| CCY-3-O1 | 8,00 % | γ₁ [mPa·s, 20 °C]: | 106 |
| CPY-3-O2 | 9,50 % | V₀ [20 °C, V]: | 2,28 |
| CY-3-O2 | 9,00 % | | |
| PY-3-O2 | 15,50 % | | |
| YG-2O-O5 | 3,00 % | | |

### Vergleichsbeispiel 2

| | | | |
|---|---|---|---|
| CC-3-V | 41,50 % | Klärpunkt [°C]: | 74,5 |
| CCY-3-O1 | 5,00 % | Δn [589 nm, 20 °C]: | 0,1000 |
| CCY-3-O2 | 9,50 % | Δε [1 kHz, 20 °C]: | -3,6 |
| CCY-4-O2 | 6,50 % | ε_{∥} [1 kHz, 20 °C]: | 3,7 |
| CPY-2-O2 | 7,50 % | K₁ [pN, 20 °C]: | 13,0 |
| CPY-3-O2 | 10,00 % | K₃ [pN, 20 °C]: | 14,7 |
| CY-3-O2 | 3,00 % | γ₁ [mPa·s, 20 °C]: | 91 |
| PY-3-O2 | 12,00 % | V₀ [20 °C, V]: | 2,12 |
| YY-V1O-O4 | 5,00 % | | |

### Beispiel M44

| | | | |
|---|---|---|---|
| CC-3-V | 36,50 % | Klärpunkt [°C]: | 80,0 |
| CY-3-O2 | 5,00 % | Δn [589 nm, 20 °C]: | 0,1082 |
| CCY-3-O1 | 5,00 % | Δε [1 kHz, 20 °C]: | -3,7 |
| CCY-3-O2 | 10,00 % | ε_{∥} [1 kHz, 20 °C]: | 3,7 |
| CCY-4-O2 | 7,50 % | K₁ [pN, 20 °C]: | 13,7 |
| CPY-2-O2 | 6,00 % | K₃ [pN, 20 °C]: | 14,9 |
| CPY-3-O2 | 10,00 % | γ₁ [mPa·s, 20 °C]: | 109 |
| PYP-2-3 | 5,00 % | V₀ [20 °C, V]: | 2,12 |
| PY-3-O2 | 7,00 % | | |
| YG-2O-O5 | 8,00 % | | |

### Vergleichsbeispiel 3

| | | | |
|---|---|---|---|
| CC-3-V | 33,50 % | Klärpunkt [°C]: | 75,0 |
| CC-3-V1 | 8,00 % | Δn [589 nm, 20 °C]: | 0,1079 |
| CCY-3-O1 | 6,00 % | Δε [1 kHz, 20 °C]: | -3,0 |
| CCY-3-O2 | 11,00 % | ε_{∥} [1 kHz, 20 °C]: | 3,5 |
| CCY-4-O2 | 5,00 % | K₁ [pN, 20 °C]: | 13,9 |
| CPY-3-O2 | 11,50 % | K₃ [pN, 20 °C]: | 16,0 |
| PY-3-O2 | 10,50 % | γ₁ [mPa·s, 20 °C]: | 91 |
| PYP-2-3 | 5,00 % | V₀ [20 °C, V]: | 2,43 |
| PP-1-2V1 | 3,50 % | | |
| YY-3-O2 | 6,00 % | | |

### Vergleichsbeispiel 4

| | | | |
|---|---|---|---|
| CC-3-V | 38,00 % | Klärpunkt [°C]: | 73,0 |
| CCY-3-O1 | 6,00 % | Δn [589 nm, 20 °C]: | 0,0998 |
| CCY-3-O2 | 11,00 % | Δε [1 kHz, 20 °C]: | -3,7 |
| CCY-4-O2 | 4,50 % | ε_{∥} [1 kHz, 20 °C]: | 3,8 |
| CPY-2-O2 | 8,00 % | K₁ [pN, 20 °C]: | 12,4 |
| CPY-3-O2 | 10,50 % | K₃ [pN, 20 °C]: | 14,3 |
| CY-3-O2 | 7,00 % | γ₁ [mPa·s, 20 °C]: | 94 |
| PY-3-O2 | 11,00 % | V₀ [20 °C, V]: | 2,06 |
| YY-2-O3 | 4,00 % | | |

### Vergleichsbeispiel 5

| | | | |
|---|---|---|---|
| CC-3-V | 35,00 % | Klärpunkt [°C]: | 75,5 |
| CC-3-V1 | 8,00 % | Δn [589 nm, 20 °C]: | 0,1077 |
| CCY-3-O1 | 6,00 % | Δε [1 kHz, 20 °C]: | -3,0 |
| CCY-3-O2 | 10,00 % | ε_{∥} [1 kHz, 20 °C]: | 3,5 |
| CCY-4-O2 | 4,50 % | K₁ [pN, 20 °C]: | 14,0 |
| CPY-3-O2 | 11,50 % | K₃ [pN, 20 °C]: | 15,8 |
| PY-3-O2 | 10,00 % | γ₁ [mPa·s, 20 °C]: | 90 |
| PYP-2-3 | 5,00 % | V₀ [20 °C, V]: | 2,42 |
| PP-1-2V1 | 4,00 % | | |
| YY-4O-O3 | 6,00 % | | |

### Vergleichsbeispiel 6

Zur Herstellung einer PS-VA-Mischung werden 99,75 % der Mischung gemäß Vergleichsbeispiel 2 mit 0,25 % der polymerisierbaren Verbindung der Formel 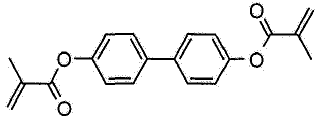 versetzt.

### Vergleichsbeispiel 7

Zur Herstellung einer PS-VA-Mischung werden 99,7 % der Mischung gemäß Vergleichsbeispiel 4 mit 0,3 % der polymerisierbaren Verbindung der Formel 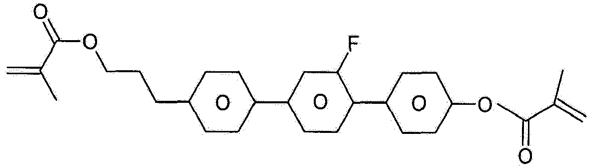 versetzt.

### Vergleichsbeispiel 8

Zur Herstellung einer PS-VA-Mischung werden 99,75 % der Mischung gemäß Vergleichsbeispiel 5 mit 0,25 % der polymerisierbaren Verbindung der Formel 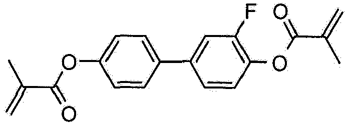 versetzt.

### Beispiel M45

| | | | |
|---|---|---|---|
| CC-3-V | 35,50 % | Klärpunkt [°C]: | 80,0 |
| CY-3-O2 | 7,50 % | Δn [589 nm, 20 °C]: | 0,1077 |
| CCY-3-O1 | 5,00 % | Δε [1 kHz, 20 °C]: | -3,8 |
| CCY-3-O2 | 10,00 % | ε_{∥} [1 kHz, 20 °C]: | 3,7 |
| CCY-4-O2 | 7,50 % | ε_{⊥} [1 kHz, 20°C]: | 7,4 |
| CPY-2-O2 | 6,50 % | K₁ [pN, 20 °C]: | 13,5 |
| CPY-3-O2 | 10,00 % | K₃ [pN, 20 °C]: | 15,1 |
| PYP-2-3 | 5,00 % | γ₁ [mPa·s, 20 °C]: | 110 |
| PY-3-O2 | 7,00 % | V₀ [20 °C, V]: | 2,12 |
| YG-2O-O5 | 6,00 % | | |

### Beispiel M46

| | | | |
|---|---|---|---|
| CC-3-V | 33,00 % | Klärpunkt [°C]: | 79,5 |
| CCY-3-O1 | 5,00 % | Δn [589 nm, 20 °C]: | 0,1020 |
| CCY-3-O2 | 10,00 % | Δε [1 kHz, 20 °C]: | -4,4 |
| CLY-3-O2 | 7,00 % | ε_{∥} [1 kHz, 20 °C]: | 3,8 |
| CLY-3-O3 | 3,00 % | ε_{⊥} [1 kHz, 20°C]: | 8,2 |
| CPY-2-O2 | 6,00 % | K₁ [pN, 20 °C]: | 13,9 |
| CPY-3-O2 | 11,00 % | K₃ [pN, 20°C]: | 15,8 |
| CY-3-O2 | 13,00 % | γ₁ [mPa·s, 20 °C]: | 119 |
| PY-3-O2 | 4,00 % | V₀ [20 °C, V]: | 1,99 |
| YG-2O-O5 | 8,00 % | | |

### Beispiel M47

| | | | |
|---|---|---|---|
| CY-3-O2 | 21,00 % | Klärpunkt [°C]: | 85,0 |
| CCY-3-O1 | 9,00 % | Δn [589 nm, 20 °C]: | 0,1013 |
| CCY-3-O2 | 11,00 % | Δε [1 kHz, 20 °C]: | -5,1 |
| CCY-4-O2 | 9,50 % | ε_{∥} [1 kHz, 20 °C]: | 4,0 |
| CPY-2-O2 | 6,00 % | ε_{⊥} [1 kHz, 20°C]: | 9,2 |
| CPY-3-O2 | 12,00 % | K₁ [pN, 20 °C]: | 14,9 |
| CC-3-V | 26,00 % | K₃ [pN, 20 °C]: | 16,7 |
| YG-2O-O5 | 5,50 % | γ₁ [mPa·s, 20 °C]: | 150 |
| | | V₀ [20 °C, V]: | 1,91 |

### Beispiel M48

Zur Herstellung einer PS-VA-Mischung werden 99,75 % der Mischung gemäß Beispiel M45 mit 0,25 % der polymerisierbaren Verbindung der Formel 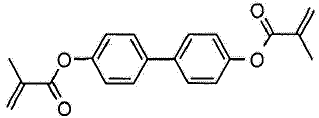 versetzt.

### Beispiel M49

Zur Herstellung einer PS-VA-Mischung werden 99,7 % der Mischung gemäß Beispiel M45 mit 0,3 % der polymerisierbaren Verbindung der Formel 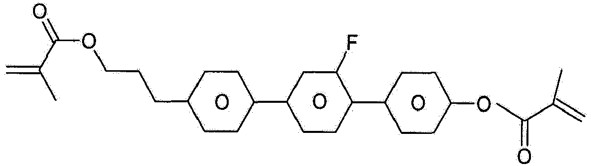 versetzt.

### Beispiel M50

Zur Herstellung einer PS-VA- oder PS-FFS-Mischung werden 99,75 % der Mischung gemäß Beispiel M46 mit 0,25 % der polymerisierbaren Verbindung der Formel 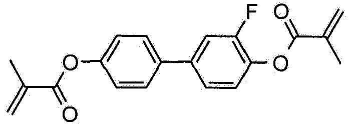 versetzt.

### Vergleichsbeispiel 9

| | | | |
|---|---|---|---|
| CC-3-V | 25,00 % | Klärpunkt [°C]: | 75,0 |
| CCP-3-1 | 6,50 % | Δn [589 nm, 20 °C]: | 0,0993 |
| CCY-3-O1 | 8,00 % | Δε [1 kHz, 20 °C]: | -3,2 |
| CCY-3-O2 | 11,00 % | ε_{∥} [1 kHz, 20 °C]: | 3,6 |
| CPY-3-O2 | 11,00 % | ε_{⊥} [1 kHz, 20°C]: | 6,8 |
| CPY-2-O2 | 4,00 % | K₁ [pN, 20 °C]: | 12,2 |
| B-2O-O5 | 4,00 % | K₃ [pN, 20 °C]: | 14,8 |
| YY-VL1O-O4 | 2,00 % | γ₁ [mPa·s, 20 °C]: | 73 |
| CC-V-V | 18,50 % | V₀ [20 °C, V]: | 2,28 |
| PY-1-O2 | 5,00 % | | |
| PY-2-O2 | 5,00 % | | |

### Vergleichsbeispiel 10

Zur Herstellung einer PS-VA- oder PS-FFS-Mischung werden 99,75 % der Mischung gemäß Vergleichsbeispiel 9 mit 0,25 % der polymerisierbaren Verbindung der Formel 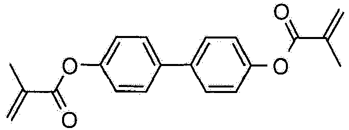 versetzt.

### Vergleichsbeispiel 11

Zur Herstellung einer PS-VA- oder PS-FFS-Mischung werden 99,75 % der Mischung gemäß Vergleichsbeispiel 9 mit 0,25 % der polymerisierbaren Verbindung der Formel 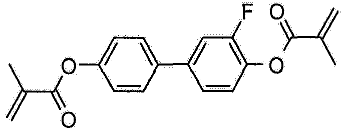 versetzt.

### Beispiel M51

Zur Herstellung einer PS-VA- oder PS-FFS-Mischung werden 99,75 % der Mischung gemäß Beispiel M6 mit 0,3 % der polymerisierbaren Verbindung der Formel 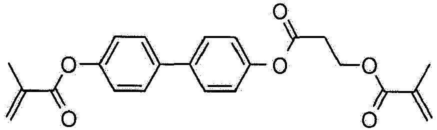 versetzt.

Die oben genannten Mischungsbeispiele für PS-VA-Anwendungen sind selbstverständlich auch geeignet für SS-VA-, PS-FFS- und PS-IPS-Anwendungen.

Zur Stabilisierung der Mischungen gemäß der Beispiele M1 bis M66 können den Mischungen ein oder zwei der nachfolgend genannten Stabilisatoren a) bis h)
a) 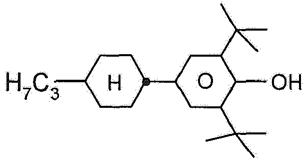
b) 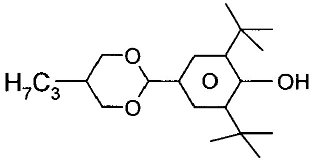
c) 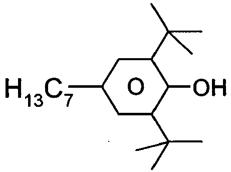
d) 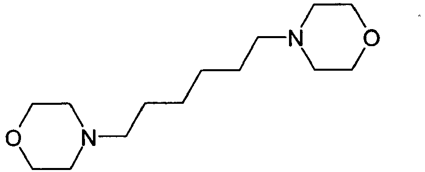
e) 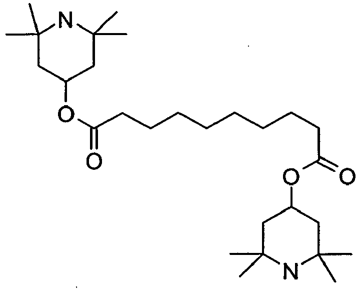
f) 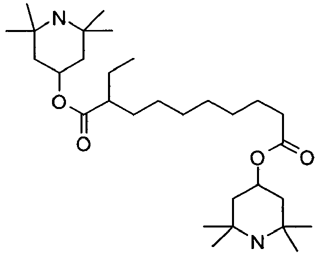
g) 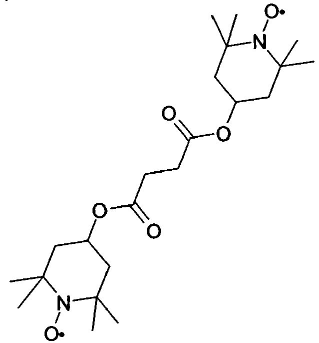
h) 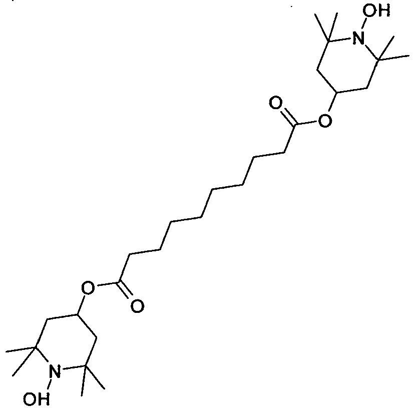 in Mengen von jeweils 0,015 % bezogen auf die Mischung zugesetzt werden.

## Patentansprüche

1. Flüssigkristallines Medium auf der Basis eines Gemisches von polaren Verbindungen, **dadurch gekennzeichnet, dass** es mindestens eine Verbindung der Formel I-6, 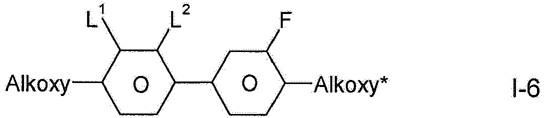 worin
Alkoxy und Alkoxy* jeweils unabhängig voneinander einen geradkettigen Alkoxyrest mit 1-6 C-Atomen, und
L¹ und L² jeweils unabhängig voneinander F oder Cl
bedeuten, und 20-50 Gew.% der Verbindung der Formel 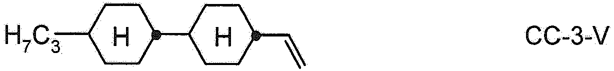 enthält.

2. Flüssigkristallines Medium nach Anspruch 1, **dadurch gekennzeichnet, dass** das Medium mindestens eine Verbindung der Formeln I-1 bis I-5 und I-7 bis I-11, 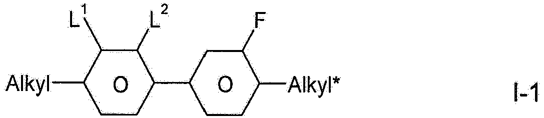 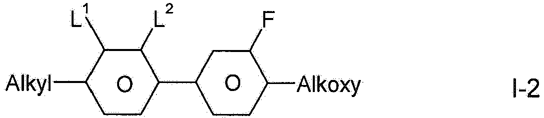 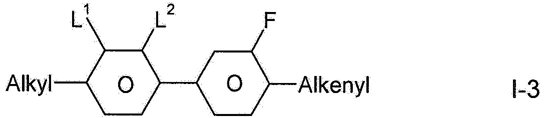 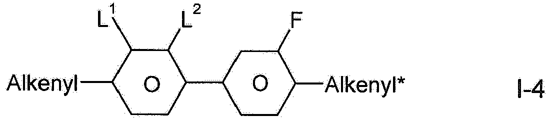 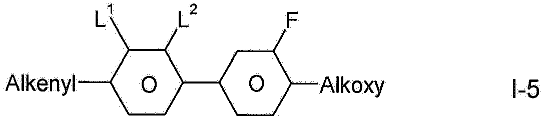 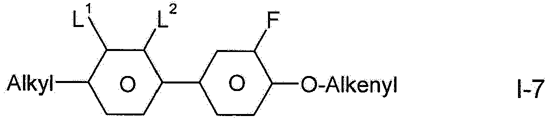 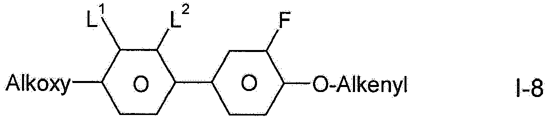 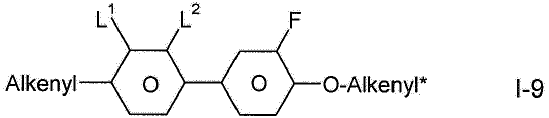 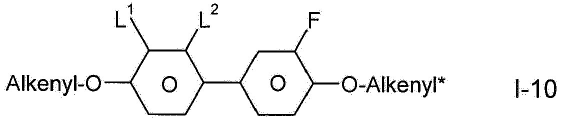 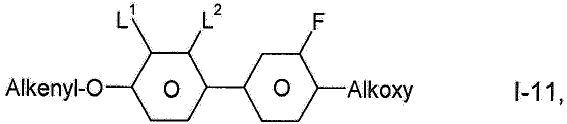 worin
Alkyl und Alkyl* jeweils unabhängig voneinander einen geradkettigen Alkylrest mit 1-6 C-Atomen,
Alkenyl und Alkenyl* jeweils unabhängig voneinander einen geradkettigen Alkenylrest mit 2-6 C-Atomen,
Alkoxy und Alkoxy* jeweils unabhängig voneinander einen geradkettigen Alkoxyrest mit 1-6 C-Atomen, und
L¹ und L² jeweils unabhängig voneinander F oder Cl
bedeuten,
enthält.

3. Flüssigkristallines Medium nach Anspruch 1 oder 2, **dadurch gekennzeichnet, dass** es zusätzlich eine oder mehrere Verbindungen ausgewählt aus der Gruppe der Verbindungen der Formeln IIA, IIB und IIC, 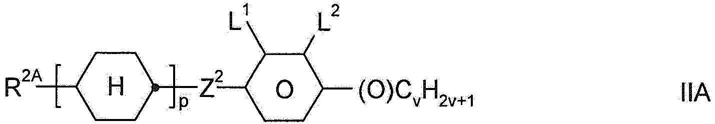 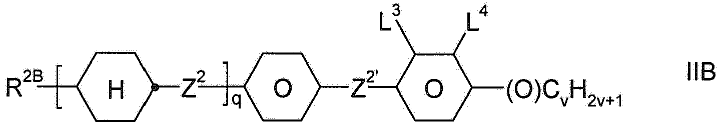 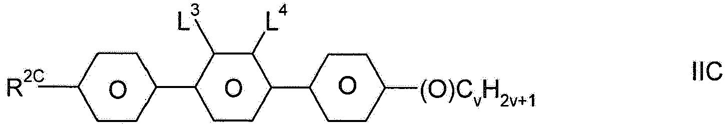 worin
R^{2A}, R^{2B} und R^{2C} jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 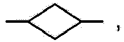 -C≡C-, -CH=CH-
, -CF₂O-, -OCF₂-, -OC-O- oder -O-CO- so ersetzt sein können, dass O-Atome nicht direkt miteinander verknüpft sind,
L¹⁻⁴ jeweils unabhängig voneinander F oder Cl,
Z² und Z^{2'} jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p 0, 1 oder 2,
q 0 oder 1,
(O)CᵥH₂ᵥ₊₁ CᵥH₂ᵥ₊₁ oder OCᵥH₂ᵥ₊₁, und
v 1 bis 6
bedeuten,
enthält.

4. Flüssigkristallines Medium nach einem oder mehreren der Ansprüche 1 bis 3, **dadurch gekennzeichnet, dass** das Medium zusätzlich eine oder mehrere Verbindungen der Formel III, 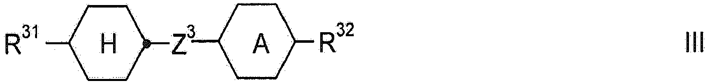 worin
R³¹ und R³² jeweils unabhängig voneinander einen geradkettigen Alkyl-, Alkoxyalkyl- oder Alkoxyrest mit bis zu 12 C-Atomen, 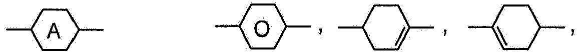 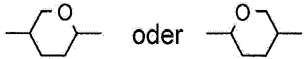
Z³ Einfachbindung, -CH₂CH₂-, -CH=CH-, -CF₂O-, -OCF₂-, -CH₂O-, -OCH₂-, -COO-, -OCO-, -C₂F₄-, -C₄H₉-, -CF=CF-
bedeuten,
enthält.

5. Flüssigkristallines Medium nach einem oder mehreren der Ansprüche 1 bis 4, **dadurch gekennzeichnet, dass** das Medium zusätzlich eine oder mehrere Verbindungen der Formeln L-1 bis L-11, 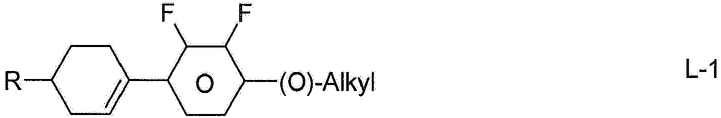 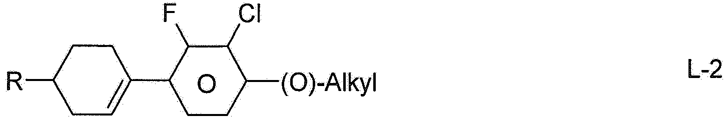 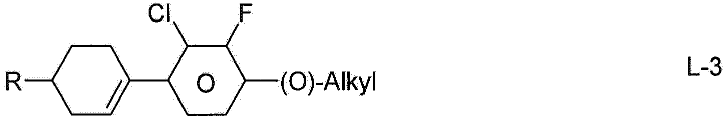 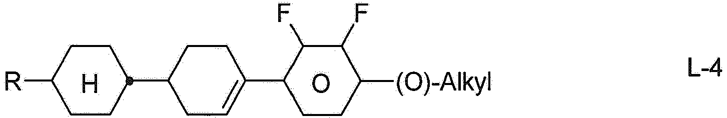 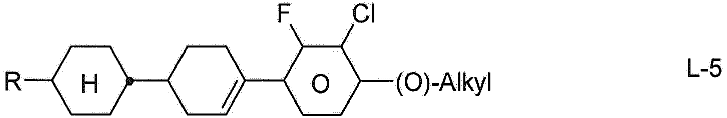 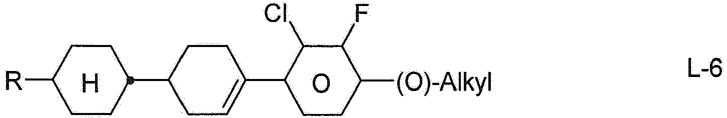 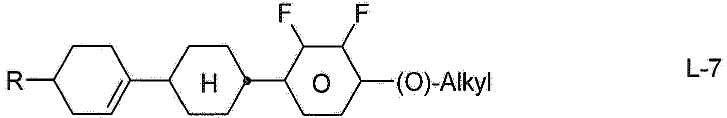 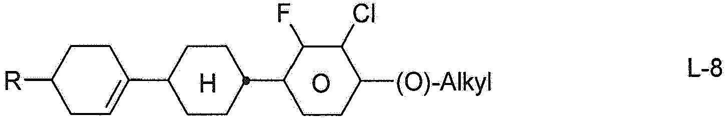 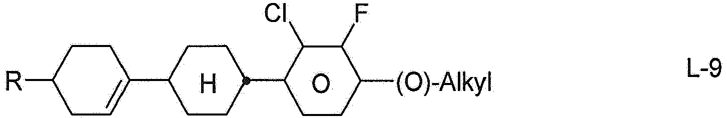 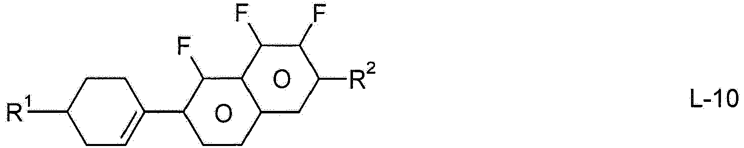 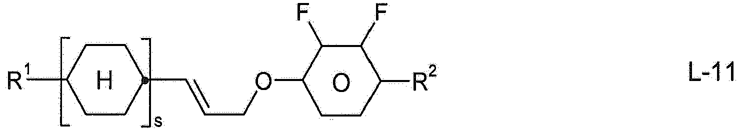 worin
R, R¹ und R² jeweils unabhängig voneinander die für R^{2A} in Anspruch 3 angegebenen Bedeutungen haben und Alkyl ein Alkylrest mit 1-6 C-Atomen,
(O)-Alkyl Alkyl oder O-Alkyl,
Alkyl Alkylrest mit 1-6 C-Atomen, und
s 1 oder 2
bedeuten,
enthält.

6. Flüssigkristallines Medium nach einem oder mehreren der Ansprüche 1 bis 5, **dadurch kennzeichnet, dass** das Medium zusätzlich eine oder mehrere Terphenyle der Formeln T-1 bis T-21, 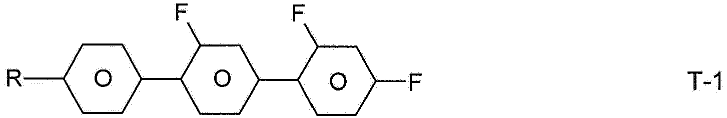 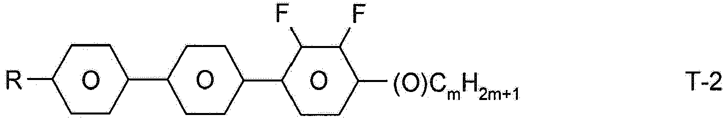 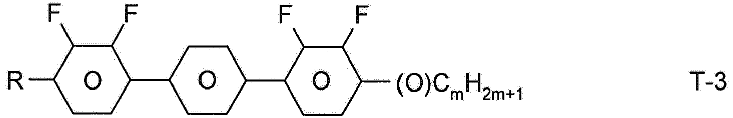 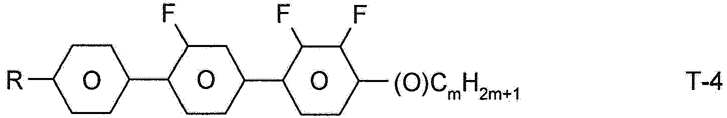 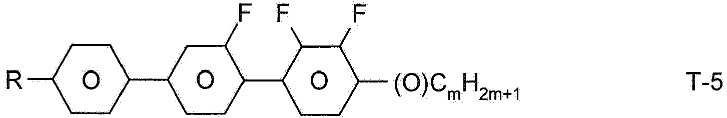 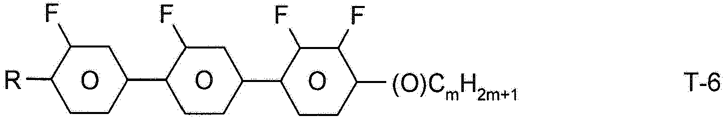 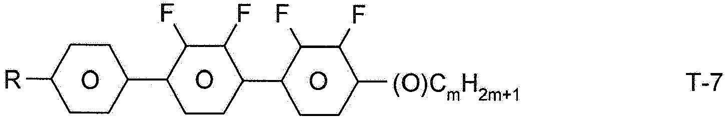 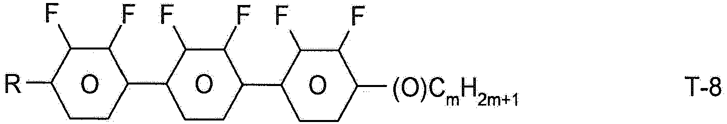 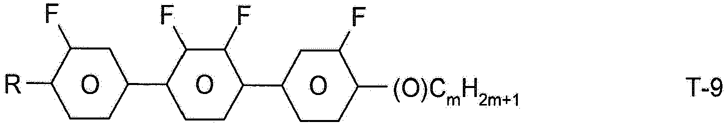 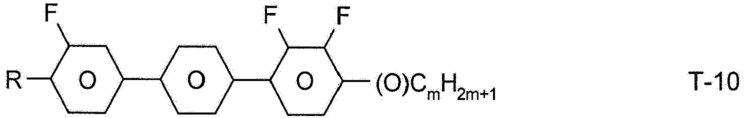 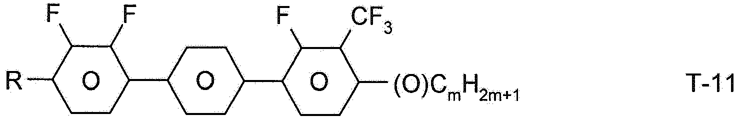 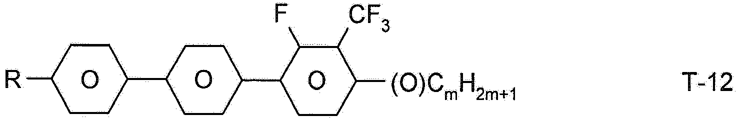 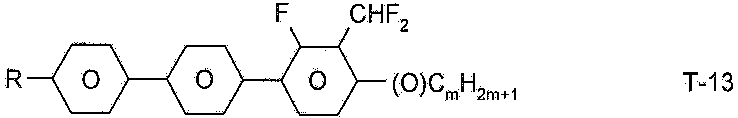 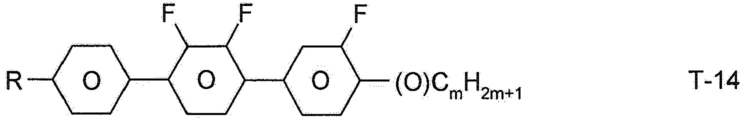 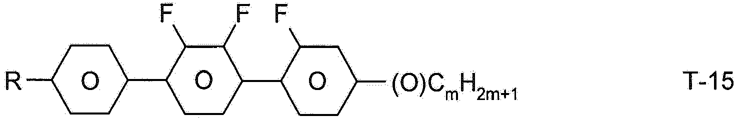 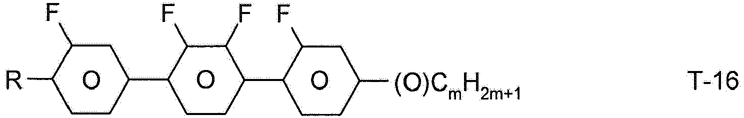 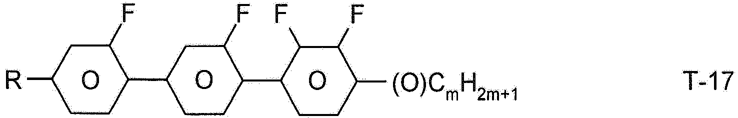 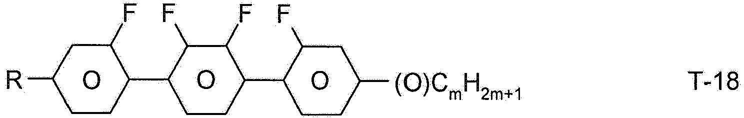 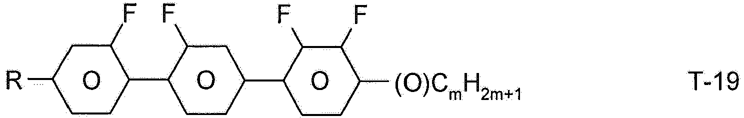 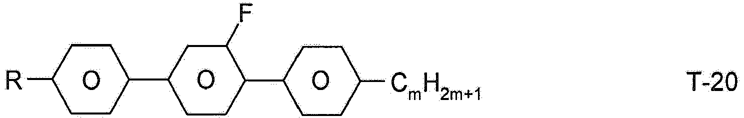 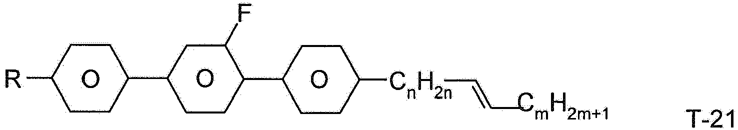 worin
R geradkettiger Alkyl- oder Alkoxyrest mit 1-7 C-Atomen,
(O)CₘH₂ₘ₊₁ CₘH₂ₘ₊₁ oder OCₘH₂ₘ₊₁
m 0, 1, 2, 3, 4, 5 oder 6
n 0, 1, 2, 3 oder 4,
bedeuten,
enthält.

7. Flüssigkristallines Medium nach einem oder mehreren der Ansprüche 1 bis 6, **dadurch gekennzeichnet, dass** das Medium zusätzlich eine oder mehrere Verbindungen der Formeln O-1 bis O-17, 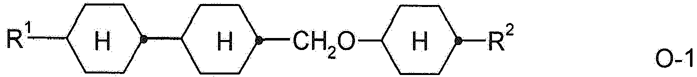 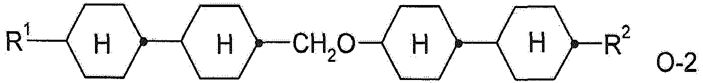 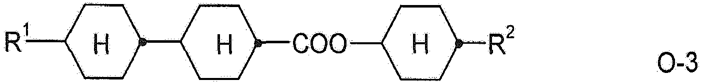 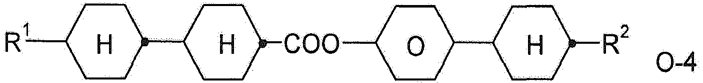 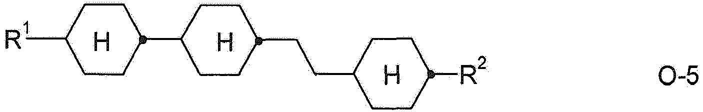 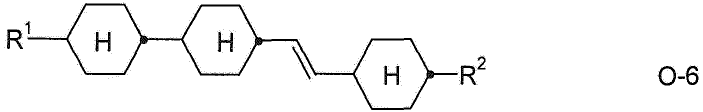 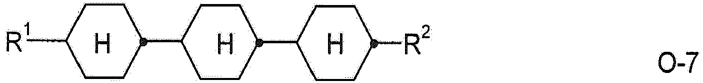 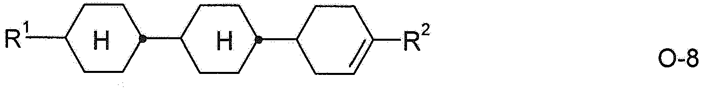 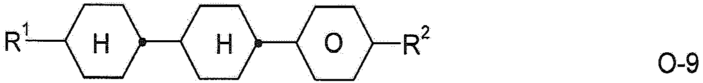 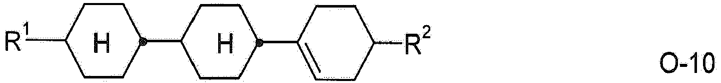 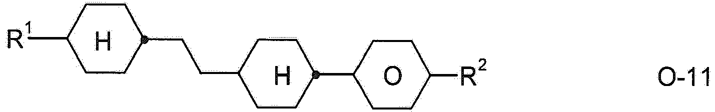 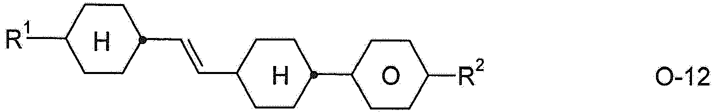 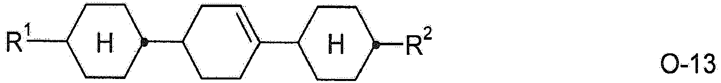 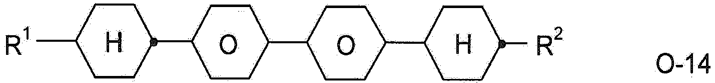 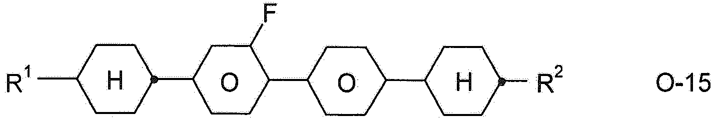 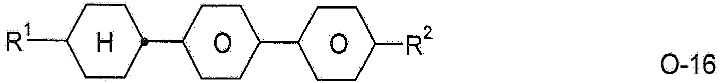 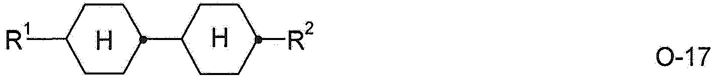 worin
R¹ und R² jeweils unabhängig voneinander die für R^{2A} in Anspruch 3 angegebenen Bedeutungen haben,
enthält.

8. Flüssigkristallines Medium nach einem oder mehreren der Ansprüche 1 bis 7, **dadurch gekennzeichnet, dass** das Medium zusätzlich eine oder mehrere Indan-Verbindungen der Formel In, 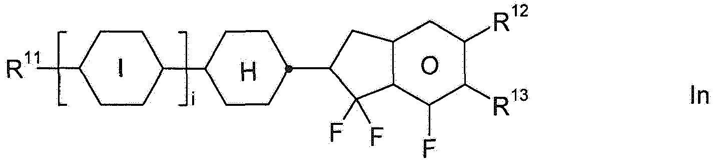 worin
R¹¹, R¹², R¹³ ein geradkettiger Alkyl-, oder Alkoxy-, Alkoxyalkyl-, Alkenylrest und 1-5 C-Atomen,
R¹² und R¹³ zusätzlich auch Halogen, 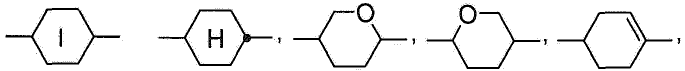 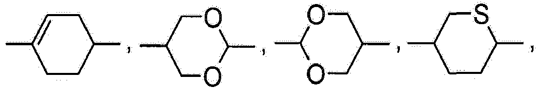 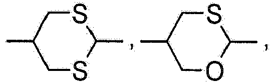
i 0, 1 oder 2
bedeuten,
enthält.

9. Flüssigkristallines Medium nach einem oder mehreren der Ansprüche 1 bis 8, **dadurch gekennzeichnet, dass** es zusätzlich eine oder mehrere Verbindungen aus der Gruppe der Verbindungen der Formeln 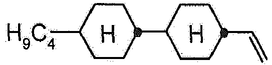 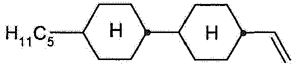 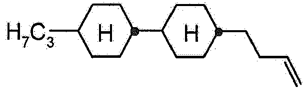 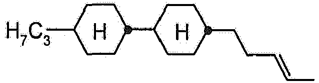 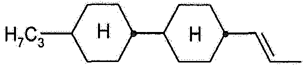 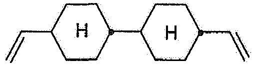 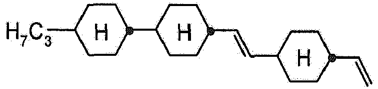 enthält.

10. Flüssigkristallines Medium nach einem oder mehreren der Ansprüche 1 bis 9, **dadurch gekennzeichnet, dass** das Medium mindestens eine polymerisierbare Verbindung (reaktives Mesogen) enthält.

11. Flüssigkristallines Medium nach einem oder mehreren der Ansprüche 1 bis 10, **dadurch gekennzeichnet, dass** das Medium ein oder mehrere Additive enthält.

12. Flüssigkristallines Medium nach einem oder mehreren der Ansprüche 1 bis 11, **dadurch gekennzeichnet, dass** das Additiv ausgewählt ist aus der Gruppe Radikalfänger, Antioxidans und/oder UV-Stabilisator.

13. Verfahren zur Herstellung eines flüssigkristallinen Mediums nach einem oder mehreren der Ansprüche 1 bis 12, **dadurch gekennzeichnet, dass** man mindestens eine Verbindung der Formel I-6 mit mindestens einer weiteren flüssigkristallinen Verbindung mischt und gegebenenfalls ein oder mehrere Additive und gegebenfalls mindestens eine polymerisierbare Verbindung (reaktives Mesogen) zusetzt.

14. Verwendung des flüssigkristallinen Mediums nach einem oder mehreren der Ansprüche 1 bis 12 in elektrooptischen Anzeigen.

15. Elektrooptische Anzeige mit einer Aktivmatrix-Addressierung, **dadurch gekennzeichnet, dass** sie als Dielektrikum ein flüssigkristallines Medium nach einem oder mehreren der Ansprüche 1 bis 12 enthält.

16. Elektrooptische Anzeige nach Anspruch 15, **dadurch gekennzeichnet, dass** es sich um eine VA-, PSA-, PS-VA-, PALC-, IPS-, PS-IPS-, PM-VA, SA-VA-, SS-VA-, FFS-, PS-FFS-Anzeige handelt.

## Claims

1. Liquid-crystalline medium based on a mixture of polar compounds, **characterised in that** it comprises at least one compound of the formula I-6, 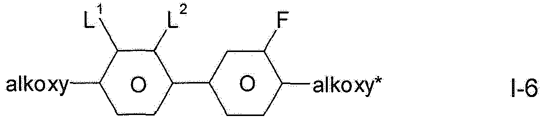 in which
alkoxy and alkoxy* each, independently of one another, denote a straight-chain alkoxy radical having 1-6 C atoms, and
L¹ and L² each, independently of one another, denote For Cl,
and 20-50% by weight of the compound of the formula

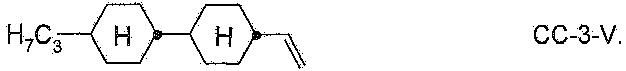

2. Liquid-crystalline medium according to Claim 1, **characterised in that** the medium comprises at least one compound of the formulae I-1 to I-5 and I-7 to I-11, 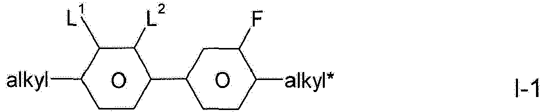 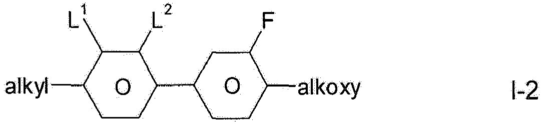 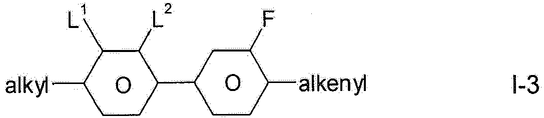 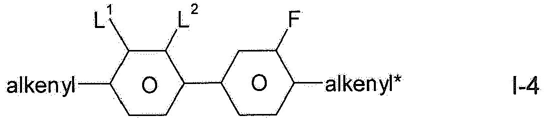 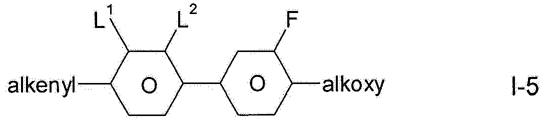 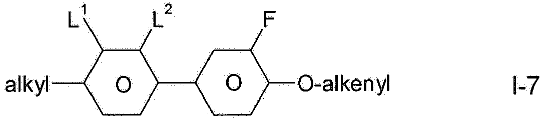 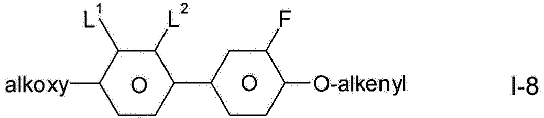 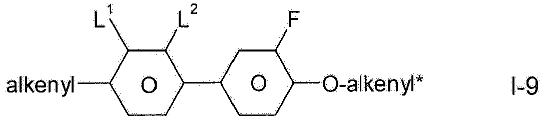 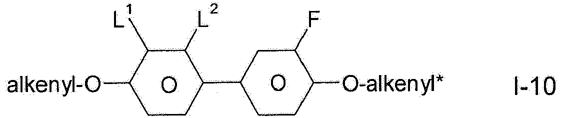 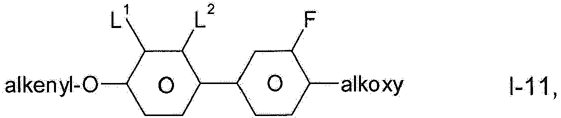 in which
alkyl and alkyl* each, independently of one another, denote a straight-chain alkyl radical having 1-6 C atoms,
alkenyl and alkenyl* each, independently of one another, denote a straight-chain alkenyl radical having 2-6 C atoms,
alkoxy and alkoxy* each, independently of one another, denote a straight-chain alkoxy radical having 1-6 C atoms, and
L¹ and L² each, independently of one another, denote F or Cl.

3. Liquid-crystalline medium according to Claim 1 or 2, **characterised in that** it additionally comprises one or more compounds selected from the group of the compounds of the formulae IIA, IIB and IIC, 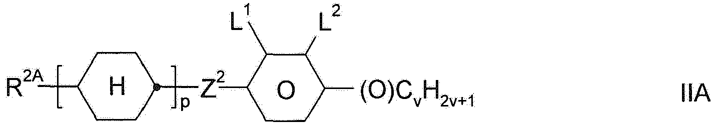 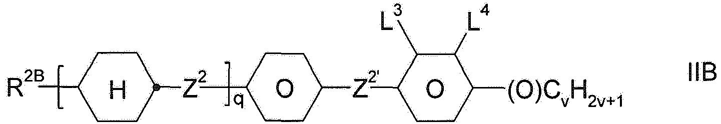 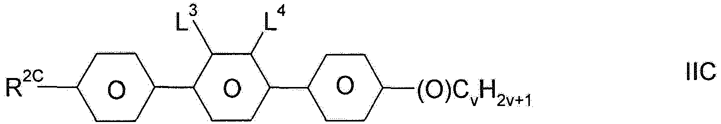 in which
R^{2A}, R^{2B} and R^{2C} each, independently of one another, denote H, an alkyl radical having up to 15 C atoms which is un-substituted, monosubstituted by CN or CF₃ or at least monosubstituted by halogen, where, in addition, one or more CH₂ groups in these radicals may be replaced by -O-, -S-, 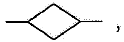 -C≡C-, -CH=CH-, -CF₂O-, -OCF₂-, -OC-O- or -O-CO- in such a way that O atoms are not linked directly to one another,
L¹⁻⁴ each, independently of one another, denote F or Cl,
Z² and Z^{2'} each, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p denotes 0, 1 or 2,
q denotes 0 or 1,
(O)CᵥH₂ᵥ₊₁ denotes CᵥH₂ᵥ₊₁ or OCᵥH₂ᵥ₊₁, and
v denotes 1 to 6.

4. Liquid-crystalline medium according to one or more of Claims 1 to 3, **characterised in that** the medium additionally comprises one or more compounds of the formula III, 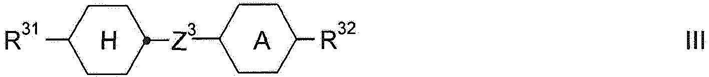 in which
R³¹ and R³² each, independently of one another, denote a straight-chain alkyl, alkoxyalkyl or alkoxy radical having up to 12 C atoms, 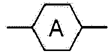 denotes 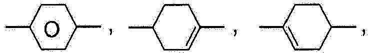 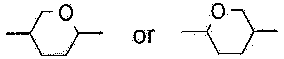
Z³ denotes a single bond, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

5. Liquid-crystalline medium according to one or more of Claims 1 to 4, **characterised in that** the medium additionally comprises one or more compounds of the formulae L-1 to L-11, 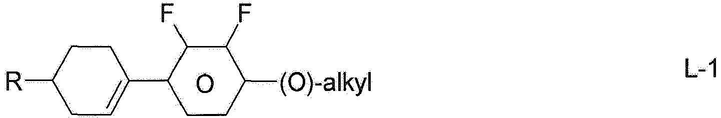 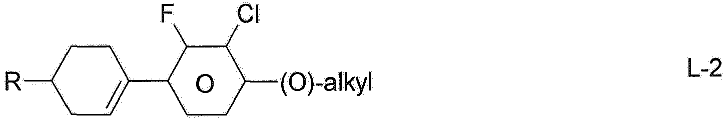 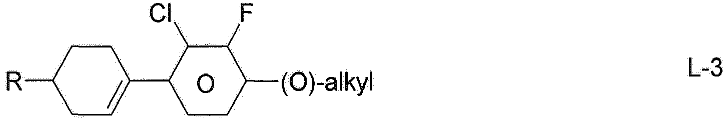 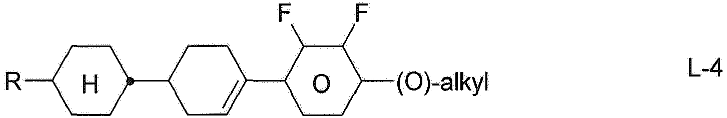 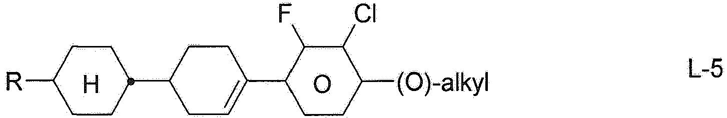 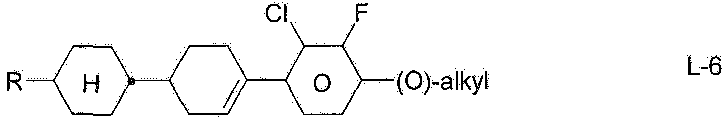 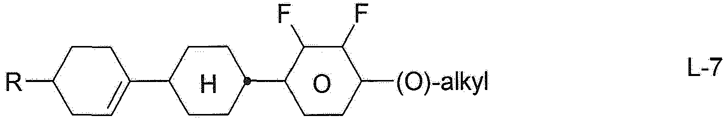 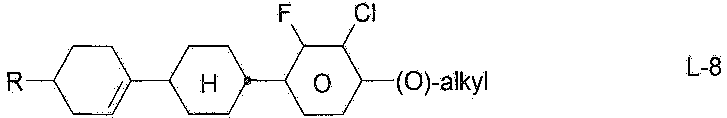 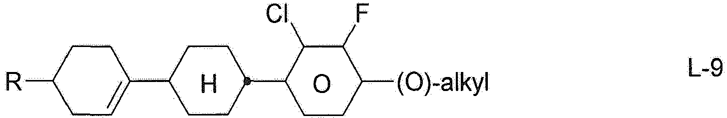 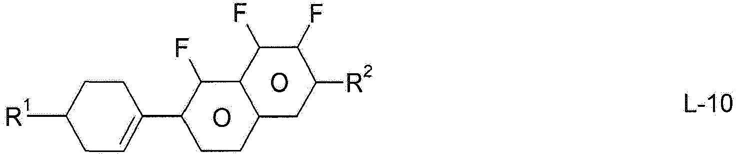 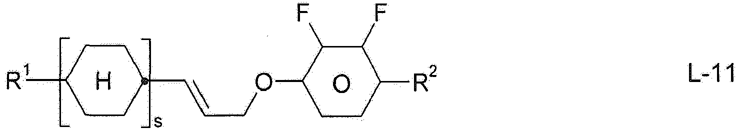 in which
R, R¹ and R² each, independently of one another, have the meanings indicated for R^{2A} in Claim 3 and alkyl denotes an alkyl radical having 1-6 C atoms,
(O)-alkyl denotes alkyl or O-alkyl,
alkyl denotes an alkyl radical having 1-6 C atoms, and
s denotes 1 or 2.

6. Liquid-crystalline medium according to one or more of Claims 1 to 5, **characterised in that** the medium additionally comprises one or more terphenyls of the formulae T-1 to T-21, 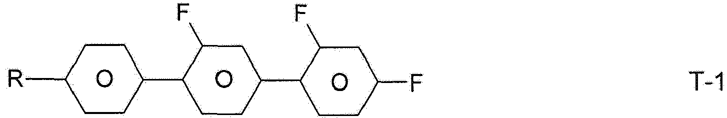 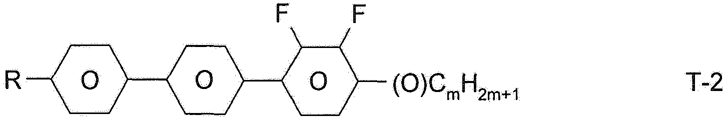 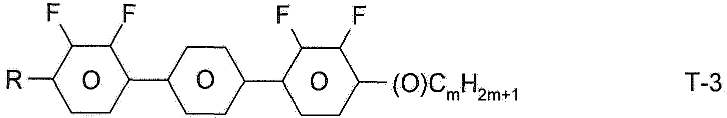 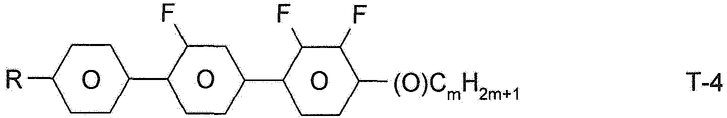 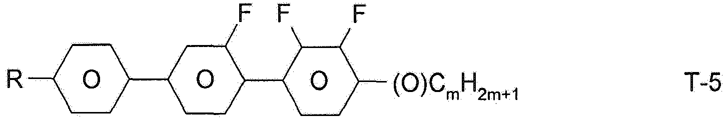 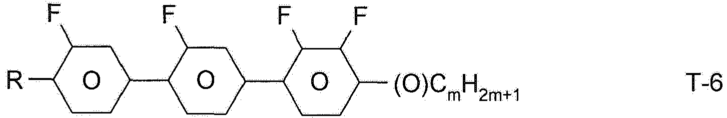 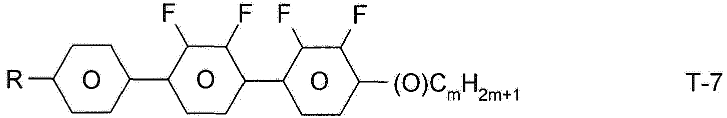 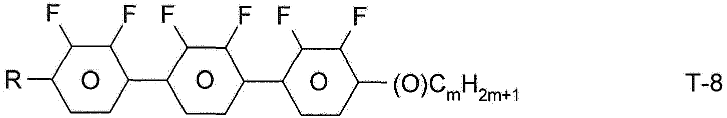 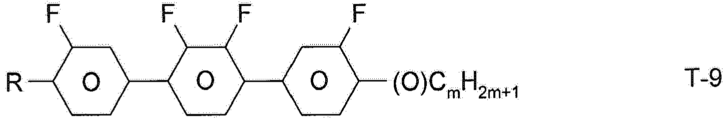 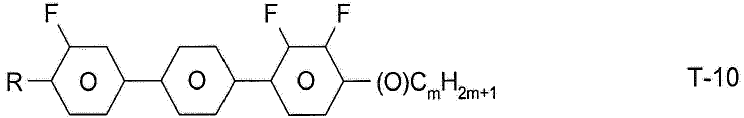 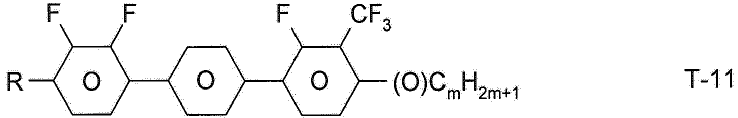 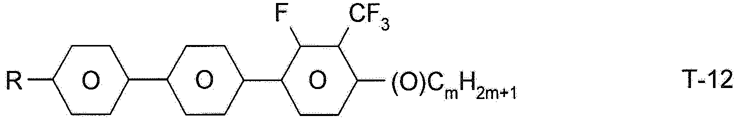 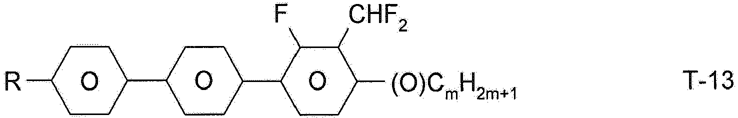 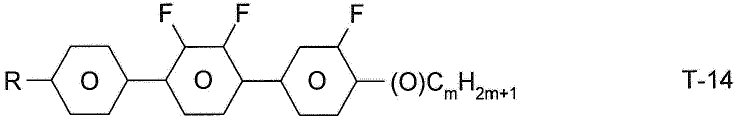 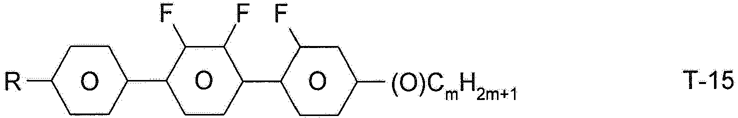 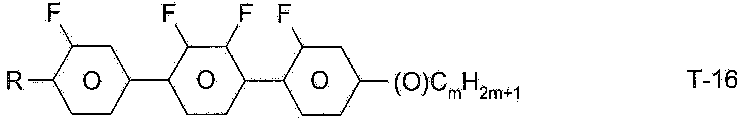 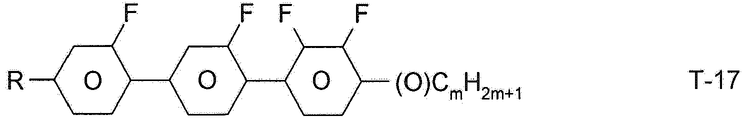 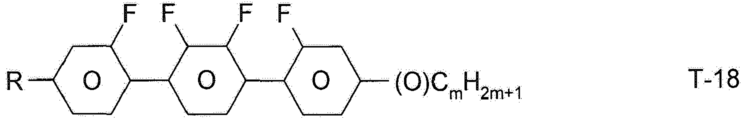 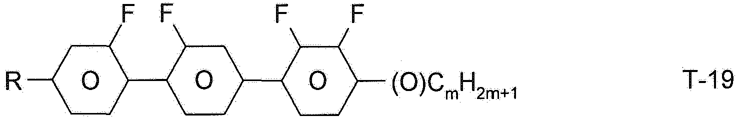 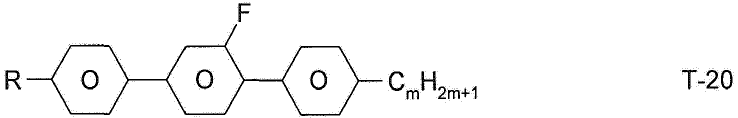 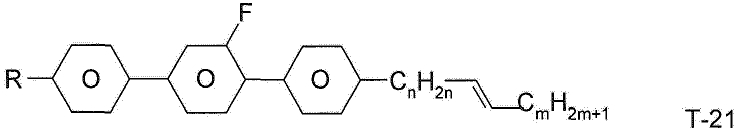 in which
R denotes a straight-chain alkyl or alkoxy radical having 1-7 C atoms,
(O)CₘH₂ₘ₊₁ denotes CₘH₂ₘ₊₁ or OCₘH₂ₘ₊₁
m denotes 0, 1, 2, 3, 4, 5 or 6,
n denotes 0, 1, 2, 3 or 4.

7. Liquid-crystalline medium according to one or more of Claims 1 to 6, **characterised in that** the medium additionally comprises one or more compounds of the formulae 0-1 to 0-17, 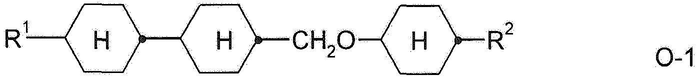 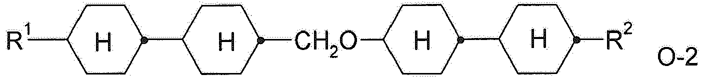 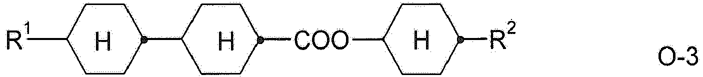 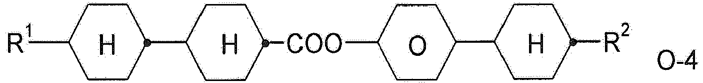 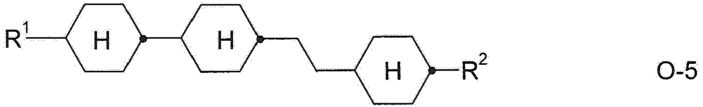 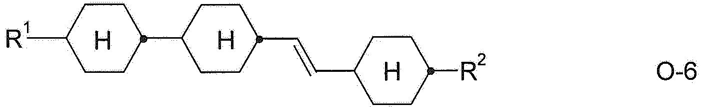 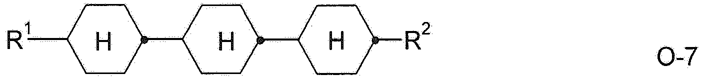 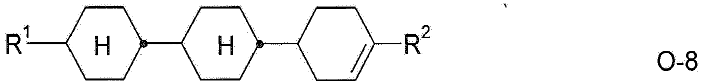 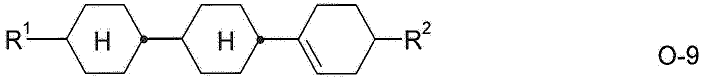 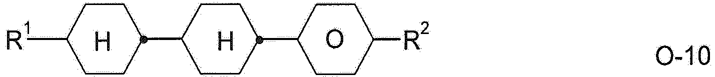 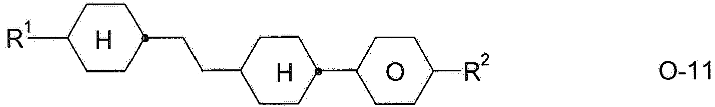 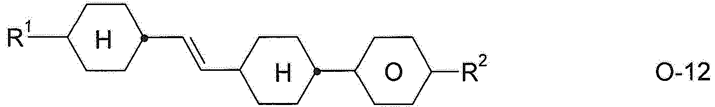 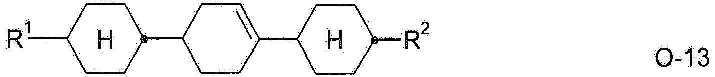 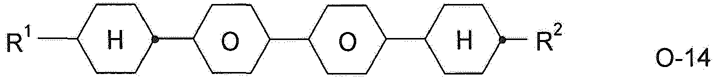 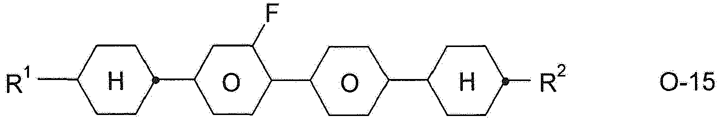 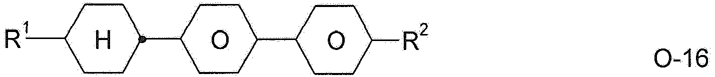 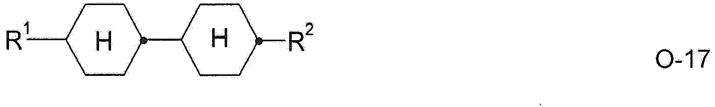 in which
R¹ and R² each, independently of one another, have the meanings indicated for R^{2A} in Claim 3.

8. Liquid-crystalline medium according to one or more of Claims 1 to 7, **characterised in that** the medium additionally comprises one or more indane compounds of the formula In, 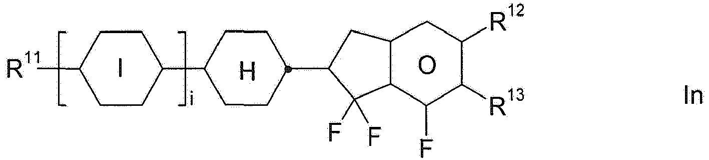 in which
R¹¹, R¹², R¹³ denote a straight-chain alkyl, alkoxy, alkoxyalkyl or alkenyl radical having 1-5 C atoms,
R¹² and R¹³ additionally also denote halogen, 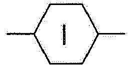 denotes 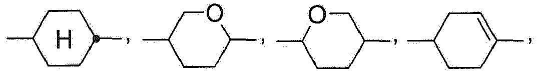 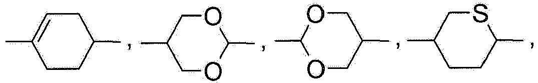 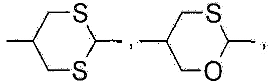
i denotes 0, 1 or 2.

9. Liquid-crystalline medium according to one or more of Claims 1 to 8, **characterised in that** it additionally comprises one or more compounds from the group of the compounds of the formulae

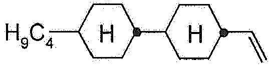

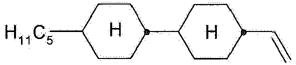

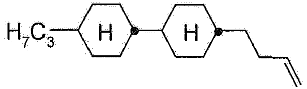

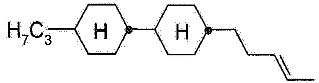

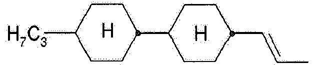

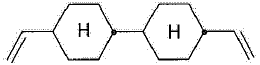

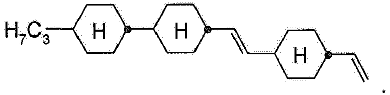

10. Liquid-crystalline medium according to one or more of Claims 1 to 9, **characterised in that** the medium comprises at least one polymerisable compound (reactive mesogen).

11. Liquid-crystalline medium according to one or more of Claims 1 to 10, **characterised in that** the medium comprises one or more additives.

12. Liquid-crystalline medium according to one or more of Claims 1 to 11, **characterised in that** the additive is selected from the group free-radical scavenger, antioxidant and/or UV stabiliser.

13. Process for the preparation of a liquid-crystalline medium according to one or more of Claims 1 to 12, **characterised in that** at least one compound of the formula I-6 is mixed with at least one further liquid-crystalline compound, and optionally one or more additives and optionally at least one polymerisable compound (reactive mesogen) are added.

14. Use of the liquid-crystalline medium according to one or more of Claims 1 to 12 in electro-optical displays.

15. Electro-optical display having active-matrix addressing, **characterised in that** it contains, as dielectric, a liquid-crystalline medium according to one or more of Claims 1 to 12.

16. Electro-optical display according to Claim 15, **characterised in that** it is a VA, PSA, PS-VA, PALC, IPS, PS-IPS, PM-VA, SA-VA, SS-VA, FFS, PS-FFS display.

## Revendications

1. Milieu cristallin liquide basé sur un mélange de composés polaires, **caractérisé en ce qu'**il comprend au moins un composé de la formule I-6 : 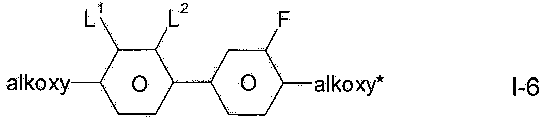 dans laquelle :
alkoxy et alkoxy* représentent chacun, de manière indépendante l'un de l'autre, un radical alcoxy en chaîne droite qui comporte de 1 à 6 atome(s) de C ; et
L¹ et L² représentent chacun, de manière indépendante l'un de l'autre, F ou Cl;
et 20 à 50 % en poids du composé de la formule :

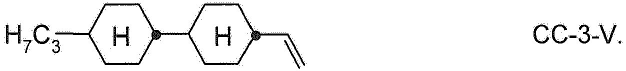

2. Milieu cristallin liquide selon la revendication 1, **caractérisé en ce que** le milieu comprend au moins un composé des formules I-1 à I-5 et I-7 à I-11 : 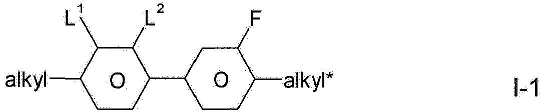 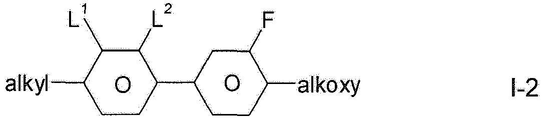 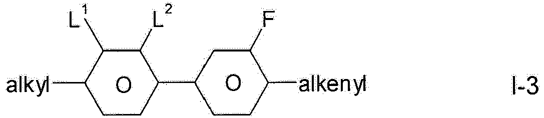 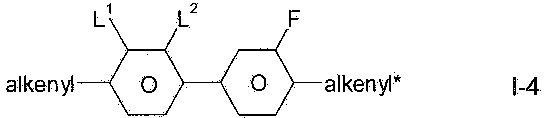 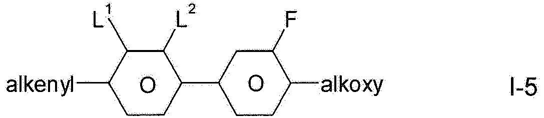 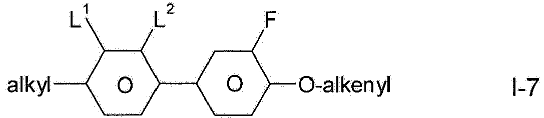 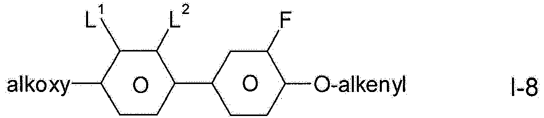 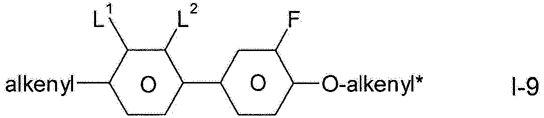 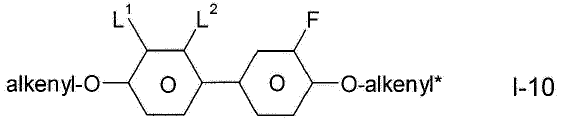 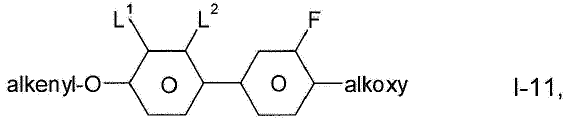 dans lesquelles :
alkyl et alkyl* représentent chacun, de manière indépendante l'un de l'autre, un radical alkyle en chaîne droite qui comporte de 1 à 6 atome(s) de C ;
alkenyl et alkenyl* représentent chacun, de manière indépendante l'un de l'autre, un radical alkényle en chaîne droite qui comporte de 2 à 6 atomes de C;
alkoxy et alkoxy* représentent chacun, de manière indépendante l'un de l'autre, un radical alcoxy en chaîne droite qui comporte de 1 à 6 atome(s) de C ; et
L¹ et L² représentent chacun, de manière indépendante l'un de l'autre, F ou Cl.

3. Milieu cristallin liquide selon la revendication 1 ou 2, **caractérisé en ce qu'**il comprend de façon additionnelle un ou plusieurs composé(s) qui est/sont sélectionné(s) parmi le groupe des composés des formules IIA, IIB et IIC : 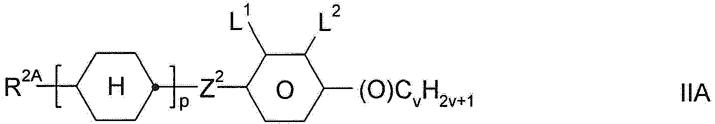 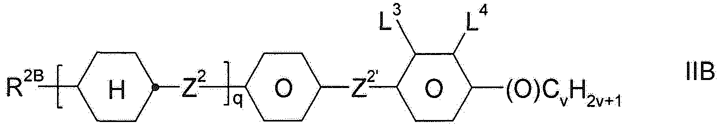 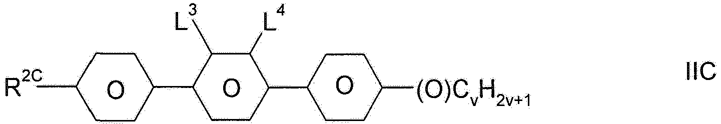 dans lesquelles :
R^{2A}, R^{2B} et R^{2C} représentent chacun, de manière indépendante les uns des autres, H, un radical alkyle qui comporte jusqu'à 15 atomes de C, lequel est non substitué, monosubstitué par CN ou par CF₃ ou au moins monosubstitué par halogène, où, en outre, un ou plusieurs groupe(s) CH₂ dans ces radicaux peut/peuvent être remplacé(s) par -O-, -S-, 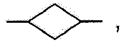 -C≡-, -CH=CH-, -CF₂O-, -OCF₂-, -OC-O- ou -O-CO- de telle sorte que des atomes de O ne soient pas liés directement les uns aux autres ;
L¹⁻⁴ représentent chacun, de manière indépendante les uns des autres, F ou Cl ;
Z² et Z^{2'} représentent chacun, de manière indépendante l'un de l'autre, une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O- ;
p représente 0, 1 ou 2 ;
q représente 0 ou 1 ;
(O)CᵥH₂ᵥ₊₁ représente CᵥH₂ᵥ₊₁ ou OCᵥH₂ᵥ₊₁ ; et
v représente 1 à 6.

4. Milieu cristallin liquide selon une ou plusieurs des revendications 1 à 3, **caractérisé en ce que** le milieu comprend de façon additionnelle un ou plusieurs composé(s) de la formule III : 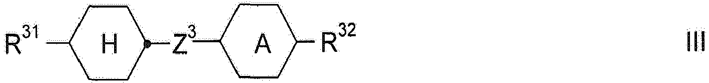 dans laquelle :
R³¹ et R³² représentent chacun, de manière indépendante l'un de l'autre, un radical alkyle, alcoxyalkyle ou alcoxy en chaîne droite qui comporte jusqu'à 12 atomes de C 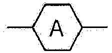 représente 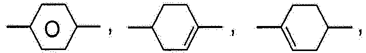 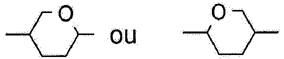
Z³ représente une liaison simple, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

5. Milieu cristallin liquide selon une ou plusieurs des revendications 1 à 4, **caractérisé en ce que** le milieu comprend de façon additionnelle un ou plusieurs composé(s) des formules L-1 à L-11 : 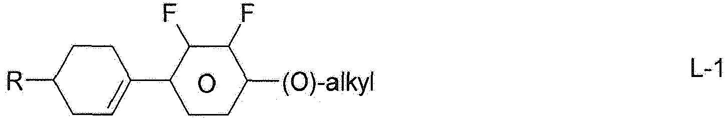 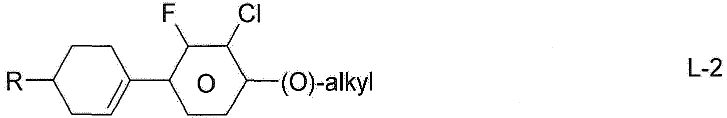 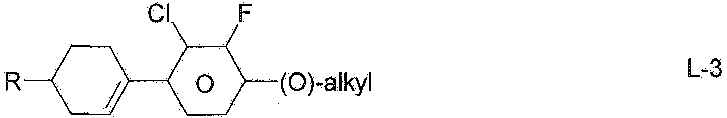 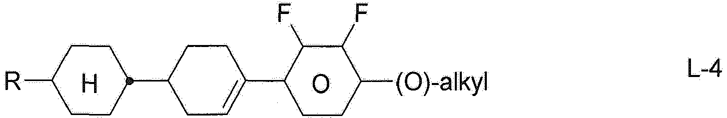 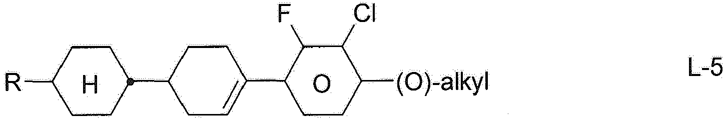 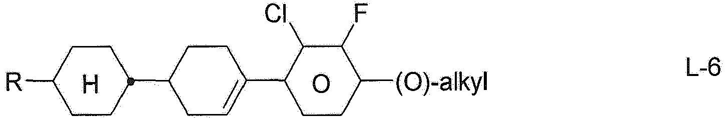 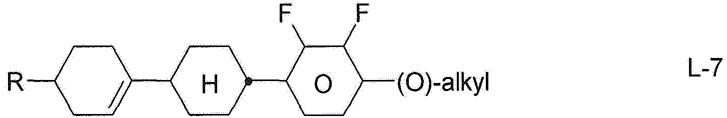 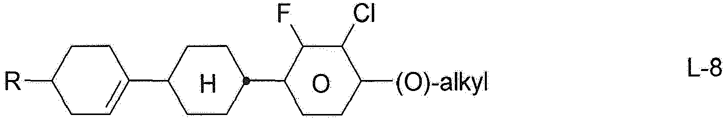 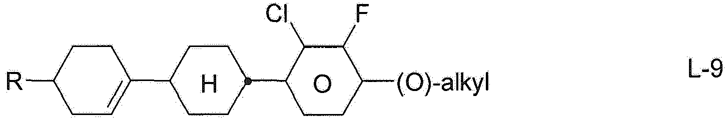 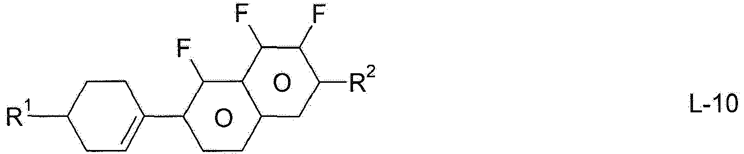 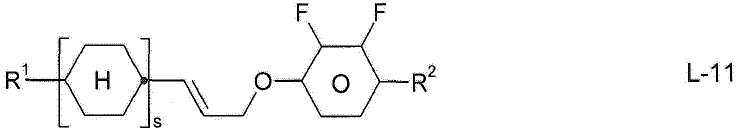 dans lesquelles :
R, R¹ et R² présentent chacun, de manière indépendante les uns des autres, les significations qui ont été indiquées pour R^{2A} selon la revendication 3 et alkyl représente un radical alkyle qui comporte de 1 à 6 atome(s) de C ;
(O)-alkyl représente alkyle ou O-alkyle ;
alkyl représente un radical alkyle qui comporte de 1 à 6 atome(s) de C ; et
s représente 1 ou 2.

6. Milieu cristallin liquide selon une ou plusieurs des revendications 1 à 5, **caractérisé en ce que** le milieu comprend de façon additionnelle un ou plusieurs terphényle(s) des formules T-1 à T-21 : 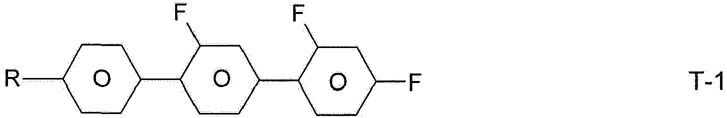 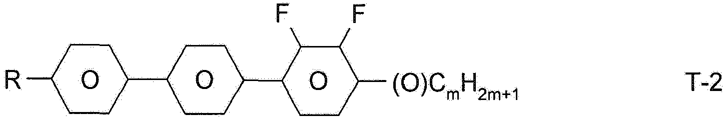 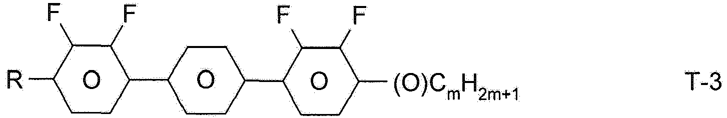 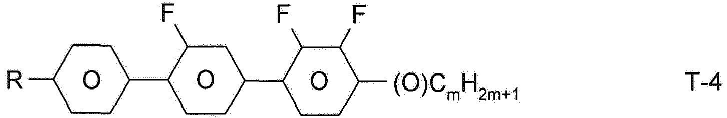 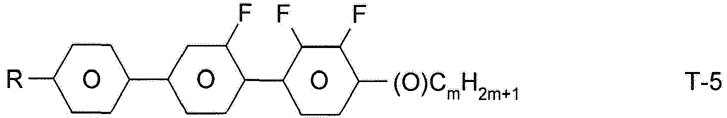 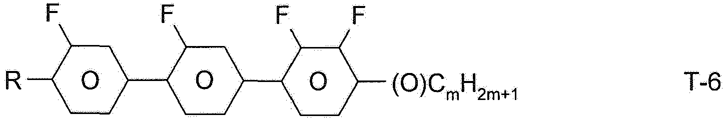 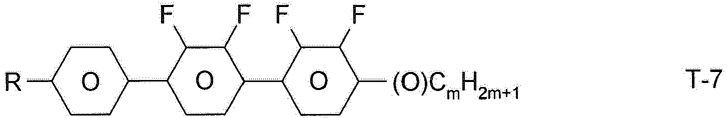 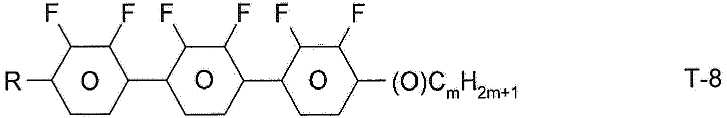 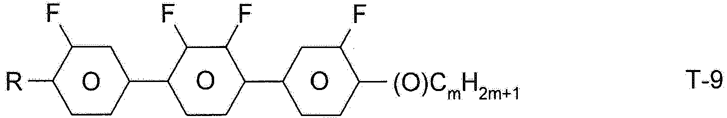 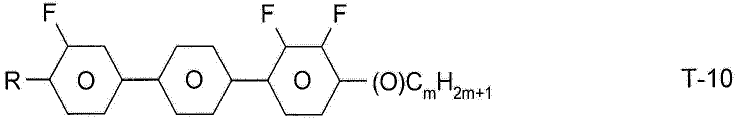 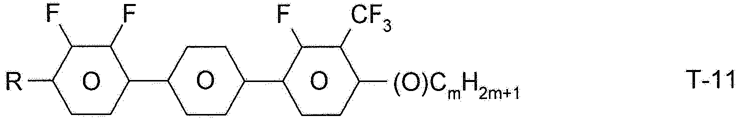 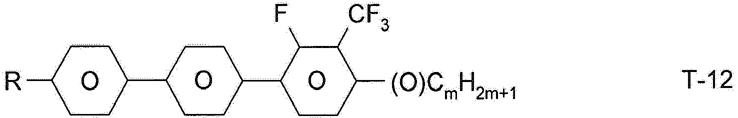 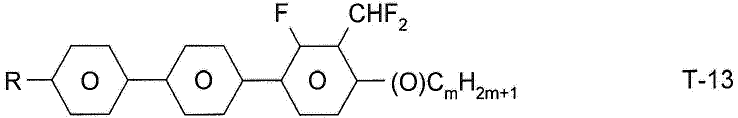 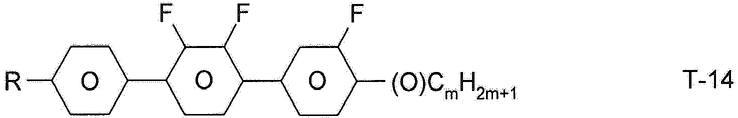 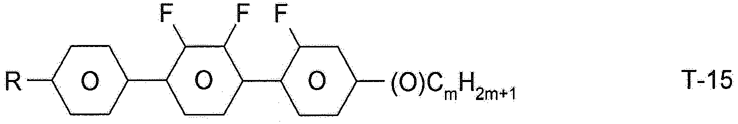 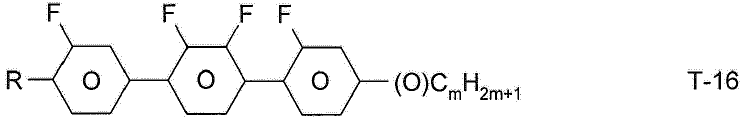 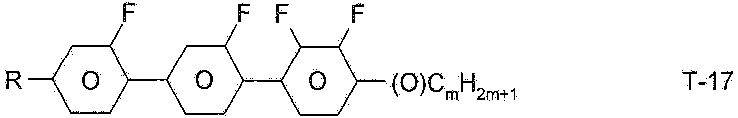 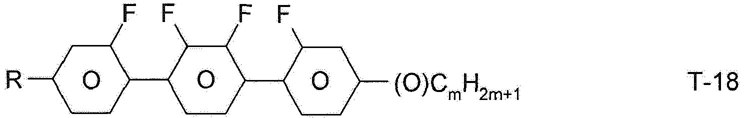 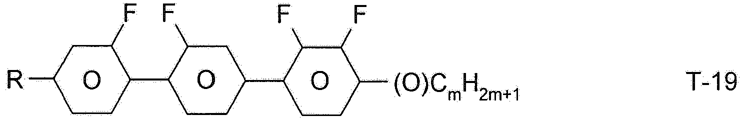 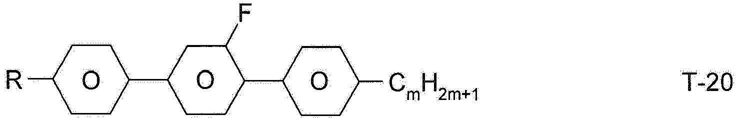 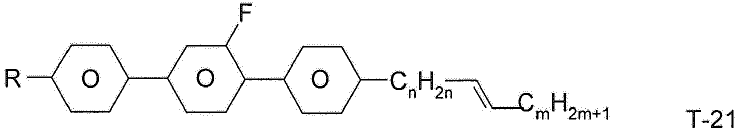 dans lesquelles :
R représente un radical alkyle ou alcoxy en chaîne droite qui comporte de 1 à 7 atome(s) de C ;
(O)CₘH₂ₘ₊₁ représente CₘH₂ₘ₊₁ ou OCₘH₂ₘ₊₁ ;
m représente 0, 1, 2, 3, 4, 5 ou 6,
n représente 0, 1, 2, 3 ou 4.

7. Milieu cristallin liquide selon une ou plusieurs des revendications 1 à 6, **caractérisé en ce que** le milieu comprend de façon additionnelle un ou plusieurs composé(s) des formules O-1 à O-17 : 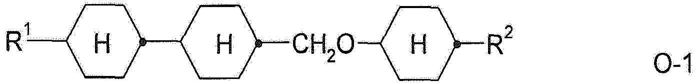 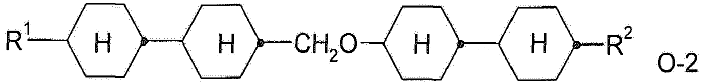 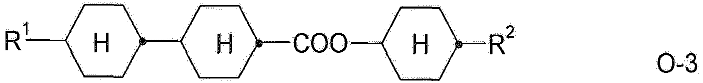 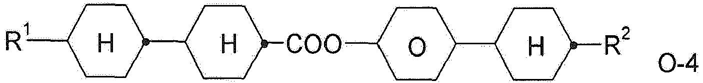 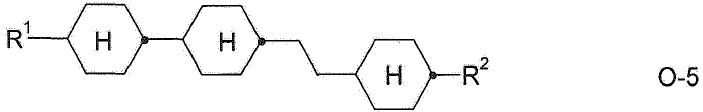 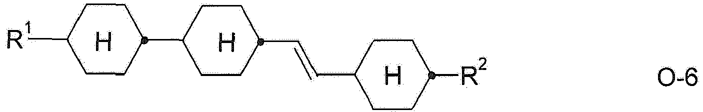 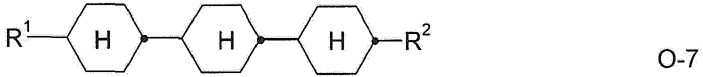 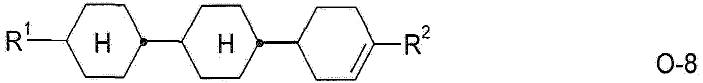 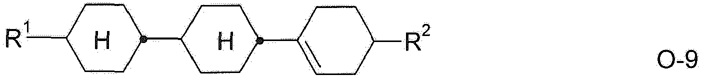 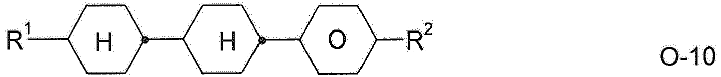 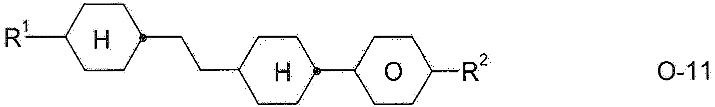 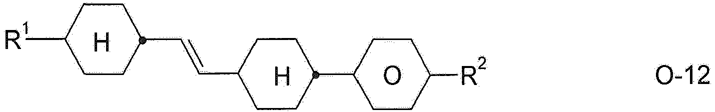 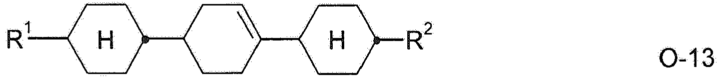 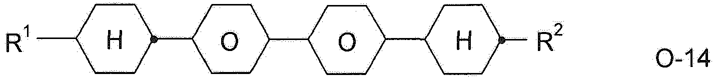 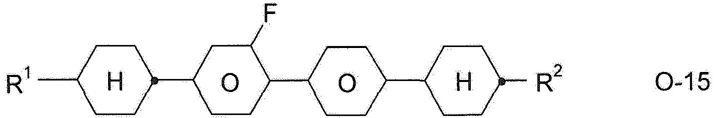 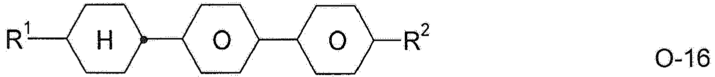 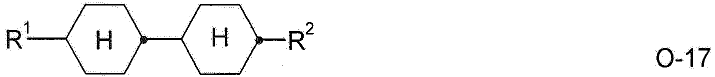 dans lesquelles :
R¹ et R² présentent chacun, de manière indépendante l'un de l'autre, les significations qui ont été indiquées pour R^{2A} selon la revendication 3.

8. Milieu cristallin liquide selon une ou plusieurs des revendications 1 à 7, **caractérisé en ce que** le milieu comprend de façon additionnelle un ou plusieurs composé(s) d'indane de la formule In : 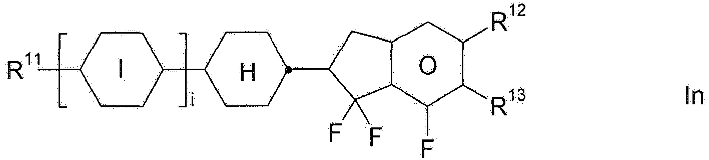 dans laquelle :
R¹¹, R¹², R¹³ représentent un radical alkyle, alcoxy, alcoxyalkyle ou alkényle en chaîne droite qui comporte de 1 à 5 atome(s) de C ;
R¹² et R¹³ représentent également de façon additionnelle halogène ; 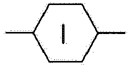 représente 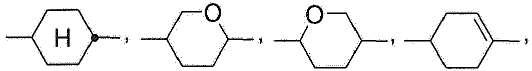 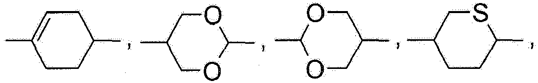 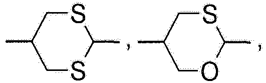
i représente 0, 1 ou 2.

9. Milieu cristallin liquide selon une ou plusieurs des revendications 1 à 8, **caractérisé en ce qu'**il comprend de façon additionnelle un ou plusieurs composé(s) pris parmi le groupe des composés des formules :

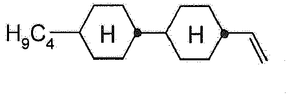

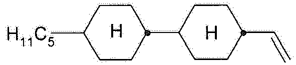

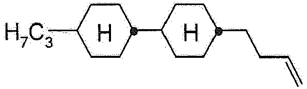

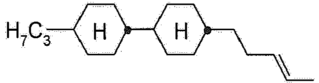

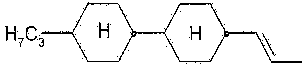

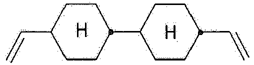

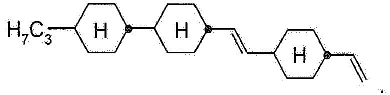

10. Milieu cristallin liquide selon une ou plusieurs des revendications 1 à 9, **caractérisé en ce que** le milieu comprend au moins un composé polymérisable (mésogène réactif).

11. Milieu cristallin liquide selon une ou plusieurs des revendications 1 à 10, **caractérisé en ce que** le milieu comprend un ou plusieurs additifs).

12. Milieu cristallin liquide selon une ou plusieurs des revendications 1 à 11, **caractérisé en ce que** l'additif est sélectionné parmi le groupe constitué par un épurateur de radicaux libres, un antioxydant et/ou un stabilisateur UV.

13. Procédé pour la préparation d'un milieu cristallin liquide selon une ou plusieurs des revendications 1 à 12, **caractérisé en ce qu'**au moins un composé de la formule I-6 est mélangé avec au moins un autre composé cristallin liquide et en option, un ou plusieurs additif(s) et en option au moins un composé polymérisable (mésogène réactif) sont ajoutés.

14. Utilisation du milieu cristallin liquide selon une ou plusieurs des revendications 1 à 12 dans les affichages électro-optiques.

15. Affichage électro-optique présentant un adressage par matrice active, **caractérisé en ce qu'**il contient, en tant que diélectrique, un milieu cristallin liquide selon une ou plusieurs des revendications 1 à 12.

16. Affichage électro-optique selon la revendication 15, **caractérisé en ce qu'**il s'agit d'un affichage VA, PSA, PS-VA, PALC, IPS, PS-IPS, PM-VA, SA-VA, SS-VA, FFS, PS-FFS.
